(19) Europäisches Patentamt
European Patent Office
Office européen des brevets

(11) EP 0 989 162 A1

(12) EUROPEAN PATENT APPLICATION
published in accordance with Art. 158(3) EPC

(43) Date of publication:
**29.03.2000 Bulletin 2000/13**

(21) Application number: **99910761.8**

(22) Date of filing: **30.03.1999**

(51) Int. Cl.[7]: **C08L 101/00**, C08L 57/06, C08K 5/49, C08K 5/10, C08K 3/36, C09J 201/00, C09J 7/02, B41M 1/30, B41M 5/00, C08F 246/00, C08F 230/08, C08F 265/00, C08F 291/10

(86) International application number:
**PCT/JP99/01613**

(87) International publication number:
**WO 99/50356 (07.10.1999 Gazette 1999/40)**

(84) Designated Contracting States:
**BE DE FR GB IT**

(30) Priority:
**31.03.1998 JP 8664998**
**14.04.1998 JP 12186998**
**20.04.1998 JP 10949598**
**20.04.1998 JP 10949298**
**21.04.1998 JP 11073398**
**10.09.1998 JP 27644698**
**28.09.1998 JP 27408898**
**28.09.1998 JP 27408998**
**28.09.1998 JP 27408798**
**26.10.1998 JP 30372298**
**26.10.1998 JP 30372398**
**26.10.1998 JP 30372498**
**26.10.1998 JP 30372598**
**28.12.1998 JP 37283198**
**28.12.1998 JP 37283298**
**28.12.1998 JP 37283398**
**25.01.1999 JP 1628999**

(71) Applicant:
**Daicel Chemical Industries, Ltd.**
**Osaka 590-8501 (JP)**

(72) Inventors:
- **MIZUMOTO, Kiyoharu**
**Aioi-shi Hyogo 678-0021 (JP)**
- **TAKAHASHI, Ikuo**
**Kobe-shi Hyogo 651-2136 (JP)**
- **NAKANISHI, Kazuhiro**
**Himeji-shi Hyogo 671-0211 (JP)**
- **OHMORI, Yasuhiro**
**Arai-shi Niigata 944-0081 (JP)**
- **TANABIKI, Fumio**
**Osaka-shi Osaka 559-0033 (JP)**
- **NAGASAWA, Masakatsu**
**Himeji-shi Hyogo 671-1241 (JP)**
- **INOKAMI, Kiyotaka**
**Takasago-shi Hyogo 671-0122 (JP)**
- **OHSHIMA, Hiroyuki**
**Himeji-shi Hyogo 671-1234 (JP)**
- **MIKI, Teruhiko**
**Himeji-shi Hyogo 672-8088 (JP)**
- **TAKEMOTO, Shin**
**Himeji-shi Hyogo 671-1262 (JP)**
- **KUDO, Masataka**
**Himeji-shi Hyogo 671-1234 (JP)**
- **BABA, Tsuneo**
**Ibo-gun Hyogo 671-1211 (JP)**
- **IDEHARA, Kenji**
**Himeji-shi Hyogo 671-1262 (JP)**

(74) Representative:
**Portal, Gérard et al**
**Cabinet Beau de Loménie**
**158, rue de l'Université**
**75340 Paris Cédex 07 (FR)**

# (54) THERMOPLASTIC RESIN COMPOSITION, WATER-BASED COMPOSITION, HEAT-SENSITIVE PRESSURE-SENSITIVE ADHESIVE, AND HEAT-SENSITIVE SHEET

(57) The thermoplastic resin composition of the present invention, which is a thermoplastic resin composition containing a thermoplastic resin and a solid plasticizer, is characterized in that the solid plasticizer is at least one compound selected from the group of three kinds of compounds (i) a multiester compound of (A)



Printed by Xerox (UK) Business Services
2.16.7/3.6

(Cont. next page)

(A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55 to 100°C, etc., and (iiia) a diester compound of (C) (c1) hydroquinone or lesorcinol wherein benzene ring may be substituted by an alkyl group, or (c2) catechol wherein benzene ring is substituted by an alkyl group with (D) an organic monobasic acid. Further, the thermoplastic resin composition of the present invention is high in safeness to human genital organs. The thermoplastic resin composition can be employed as a thermally- and pressure-sensitive adhesive, and there can be obtained a thermally- and pressure-sensitive adhesive sheet having an excellent blocking resistance by coating it over a base material sheet.

## Description

TECHNICAL FIELD

The present invention relates to a thermoplastic resin composition which is employed for a so-called delayed-tack label, a thermally-and pressure-sensitive adhesive, a thermally-sensitive sheet, and a method for the preparation thereof, and, in more detail, it relates to a thermoplastic resin composition, a thermally- and pressure-sensitive adhesive, a thermally- and pressure-sensitive adhesive sheet which do not show tackiness at ordinary temperatures and show tackiness by heating, and a method for the preparation thereof. Further, the present invention relates to a recording sheet on which a delayed-tack layer is formed, and which is useful for an ink-jet recording, and a method for the preparation thereof, and a shrink label on which a delayed tack layer is formed, and by which bottles are in contact covered by thermal shrinking.

Still further, the present invention relates to a water-based resin composition which is employed as an under coat, over coat, clear coat, and linings for various materials such as wooden materials, plastics, papers, and metals, and a water-based coating agent using the water-based resin composition. In addition, the present invention relates to a water-based coating composition. In more detail, the present invention relates to a water-based coating composition which is particularly excellent as a surface-treating agent for a porous plate such as a calcium silicate plate and an ALC plate, or an under-coating agent.

BACKGROUND ART

Heretofore, as a label for sticking on a vessel such as a glass bottle and a PET bottle, there have been employed a glue label in which a glue is coated on a base material for a label, and simultaneously stuck on a vessel, and an adhesive label, etc. in which a pressure-sensitive adhesive is coated on a base material for a label and a releasing paper is laminated on the pressure-sensitive adhesive.

However, in the existing circumstances, the glue label is not recently preferred so much because of necessity of a viscosity control for the pressure-sensitive adhesive and being troublesome in cleaning of a machine for coating the pressure-sensitive adhesive.

Also, an adhesive label on which a releasing paper is laminated is not preferred because of production of a large amount of the releasing paper which is a waste stripped from the label, being troublesome in disposal, and also from a viewpoint of saving of resources.

As a label for solving the problems, there has been known a label which is called a delayed-tack label.

In the delayed-tack label, a delayed-tack layer is formed on a base material for a label. Although the delayed-tack layer does not show an adhesive property at ordinary temperatures, it shows an adhesive property by heating and, a releasing paper is not required and, moreover, it has an advantage that it can be readily fitted on a bottle by only heating.

In the delayed-tack layer, particles of a solid plasticizer and, optionally, particles of a tackifier are usually dispersed on a thermoplastic resin having a glass transition temperature of 0-30°C or so, and the solid plasticizer is melted by heating, whereby, the thermoplastic resin is plasticized, resulting in that an adhesive property is produced.

As the above-described solid plasticizer, for example, dicyclohexyl phthalate is well known (JP-A-61009479, JP-A-07278521, JP-A-07145352, and JP-A-08333565 Official Gazettes).

The above-described delayed-tack label is often prepared through a heating process for drying after coating a pressure-sensitive thermally adhesive which is an emulsion type on a back surface of a base material. As heating temperature in the case, a low temperature of not more than 45°C is required in order to prevent manifestation of tackiness in dicyclohexyl phthalate at a stage of formation of a pressure-sensitive adhesive layer.

However, since the heating at such the low temperature requires a long time of period for a heating and drying process, there is a problem that there ends to lower productivity of the delayed-tack label. Further, as described hereinabove, since a releasing paper is not employed in the delayed-tack label, for example, if it is stored in a heaped state for a long time of period under a high temperature in the summer, there gradually occurs the plasticization of the thermoplastic resin by dicyclohexyl phthalate, resulting in that there is caused a so-called blocking that the labels are stuck each other. For that reason, there is a problem that a cooling apparatus is required in order to prevent the blocking. Still further, there is also a problem that adhesive strength and transparency are disappeared within a short time of period in a conventional delayed-tack label. In addition, there have been recently desired a thermoplastic resin containing a plasticizer, which do not adversely affect to natural circumstances, a thermally-and pressure-sensitive adhesive, and a thermally-and pressure-sensitive adhesive sheet, etc. with a rise of an interest in an environmental protection.

JP-A-08325535 Official Gazette discloses a thermally- and pressure-sensitive sheet in which dicyclohexyl phthalate having an average particle diameter of not more than 4 µm is employed together with a solid plasticizer such as N-cyclohexyl-p-toluene sulfone amide as a solid plasticizer. Also, JP-A-09067551 Official Gazette proposes the use

of two or more kinds of esters of benzene dicarboxylic acid which is solid at 25°C as a solid plasticizer in order to elevate a blocking resistance. And also, JP-A-09169870 Official Gazette proposes a retardant in crystallization such as tribenzyl trimerritate in order to improve a balance between a blocking resistance and an adhesive property in a conventional thermally-sensitive delayed-tack type adhesive thermoplastic resin composition. However, even though the solid plasticizers and the retardant in crystallization are employed, there is not always obtained a sufficiently satisfied result in view of the blocking resistance, adhesive strength, and durability of transparency.

JP-A-61009479 Official Gazette discloses a thermally-sensitive adhesive in which there is cured a layer composed of a composition comprising 100 parts by weight of an acrylic polymer, 20-100 parts by weight of a crystalline plasticizer, 5-50 parts by weight of an unsaturated vinyl monomer by irradiation of an electronic beam. JP-A-06017018 Official Gazette discloses an adhesive composition containing (A) (a) 4-25% by weight of an aliphatic conjugated diolefine-based monomer, (b) 1-15% by weight of an ethylenic unsaturated carboxylic acid, and (c) 60-95% by weight of other vinyl monomers, (B) a crystalline plasticizer, and (C) a tackifier. Also, JP-A-08269420 Official Gazette discloses an delayed-tack type pressure sensitive adhesive composition comprising (A) a solution containing a resin having a glass transition temperature of not less than 20°C obtained by copolymerizing (a) 3-60% by weight of an unsaturated monomer having carboxylic group, and (b) 40-97% by weight of a hydrophobic monomer, (c) other monomers, in which not less than 5% of the resin is solubilized and (B) an acrylic resin water-based emulsion comprising a resin having a glass transition temperature of not more than -30°C. The composition has the weight ratio of (A)/(B) of 15/85-50/50 in nonvolatile components in the above-described respective components. However, the pressure sensitive adhesives are not always sufficiently satisfied in view of an adhesive force, a holding power, and water resistance.

On the other hand, in a delayed-tack label in which the above-described pressure sensitive adhesives are employed, since stripping strength shows a tendency of increasing with a lapse of time after sticking by heating, the delayed-tack label ends to became incapable of being readily stripped in the case that removal is required after uses. As described hereinabove, difficulty of stripping causes a problem that it cannot be employed for bottles on the premise of reuse by recovery as in, for example, bottles for beer. Also, if those are stuck on PET bottles, those cannot be recycled after use, resulting in that it is not preferred from a viewpoint of saving of resources.

JP-A-06259016 Official Gazette discloses a thermally-and pressure-sensitive adhesive label in which a water-soluble or water-dispersible type water-based coating layer and a water-insoluble/hydrophobic coating layer are formed between a base material for a label and a thermally- and pressure-sensitive adhesive layer, whereby, it can be stripped by boiled water or steam. Also, JP-A-06259017 Official Gazette discloses a thermally-and pressure-sensitive adhesive label in which a thermally-expansible coating layer and a water-insoluble/hydrophobic coating layer are formed between a base material for a label and a thermally-and pressure-sensitive adhesive layer, whereby, it can be stripped by boiled water or steam. Although the thermally-and pressure-sensitive adhesive labels can be stripped by boiled water or steam, those are poor in heat resistance, and preparation becomes complicated because of a multi-layers structure, resulting in that preparation costs become high.

JP-A-06314062 Official Gazette discloses a thermally- and pressure-sensitive adhesive label which can be stripped through immersion into a water-soluble solvent by mixing thermally-expansible microcapsules and a water-soluble polymer in the thermally-and pressure-sensitive adhesive layer. In the thermally-and pressure-sensitive adhesive label, a stripping property can be somewhat improved. However, the pressure-sensitive adhesive occasionally remains at a body to be stuck, and it is poor in water resistance because of mixing the water-soluble polymer.

JP-A-08231929 Official Gazette discloses a pressure-sensitive adhesive sheet in which a heat-sensitive strippable layer composed of a polymeric material and a solid plasticizer is formed between a base material for a label and a thermally-and pressure-sensitive adhesive layer, whereby, it can be stripped from a body to be stuck.

However, in the case of pressure-sensitive adhesive sheet, a portion of the heat-sensitive strippable layer occasionally remains at a body to be stuck. Also, an adhesive strength is weak between the base material and the thermally-and pressure-sensitive adhesive layer, resulting in that an adhesive strength is weak between the pressure-sensitive adhesive sheet and the body to be stuck.

JP-A-08269420 Official Gazette discloses the use of a thermally-and pressure-sensitive adhesive in which a weight average molecular weight (Mw) is 3000-30000 in the above-described component (A), whereby, there is suppressed appearance of an adhesive property in coating-drying step and storing step of a sheet in a rolled state. For that reason, although the thermally-and pressure-sensitive adhesive is excellent in a storing property, since a stripping strength becomes high because of the primary component (B), it is not appropriate in restripping.

Also, printing in surface of a delayed-tack label is often carried out by a photogravure printing and, therefore, it is desired that coating of the thermally- and pressure-sensitive adhesive in back surface of the label is simultaneously carried out by a photogravure printing. If the thermally-and pressure-sensitive adhesive can be coated by a photogravure printing, there can be largely simplified a preparation process of the thermally-and pressure-sensitive adhesive sheet.

However, the coating amount of a coating solution per a unit area is limited in the photogravure printing. Accordingly, the thickness ends to become relatively thin in a coating layer formed by the thermally- and pressure-sensitive adhesive in a sheet obtained. On the other hand, in order to obtain an adhesive strength to be required, it is required to increase the thickness in a layer of the thermally-and pressure-sensitive adhesive to a certain extent. Accordingly, the thermally-and pressure-sensitive adhesive cannot be coated up to a necessary amount of a coating layer in the photogravure printing, resulting in that there cannot be obtained a thermally-and pressure-sensitive adhesive which is capable of producing an adhesive strength to be required. In addition, since a coating speed is large in the photogravure printing, a drying time of period is short. For that reason, even though an emulsion of a thermally-and pressure-sensitive adhesive can be coated over a base sheet in the amount which is capable of producing an adhesive strength to be required, there is a problem that it cannot be dried before a rolling process after printing.

Further, when the thickness is thin in a layer of the adhesive in a conventional thermally-and pressure-sensitive adhesive sheet, in the case that it is stuck on a body to be stuck after producing tackiness by heating, an adhesive strength is insufficient immediately after sticking. As a result, there is a problem that a thermally-and pressure-sensitive adhesive sheet is stripped in a packing process or a wrapping process for glass bottles or PET bottles.

On the other hand, full-coloration can be readily applied in an ink-jet recording method and, since the method is excellent in low-noise and printing quality, it is rapidly coming in recent into wide use. In the ink-jet recording method, a water-based ink is employed from a viewpoint of safeness and recording applicability, and printing is attained by spraying small drops of an ink from a nozzle toward a recording sheet. For that reason, quick absorption of an ink is required in the recording sheet. That is, in a recording sheet having a low absorptive property, an ink is remained on the surface of a recording sheet over a long time of period even after termination of printing, resulting in that the recording sheet is partially made dirty by a contact with a portion of a machine, a contact with a worker, and by laminating the recording sheet. Further, a large amount of ink sprayed is mixedly flown out without absorption in an image section of a high density, resulting in that an image becomes blurred. Still further, water resistance is also required such that recorded images are not blurred even in the case that the recording sheet is wet by water.

On the other hand, there has been developed a recording sheet in which an adhesive layer containing a delayed-tack type pressure-sensitive adhesive is formed on a base material so that it can be stuck on an article after recording characters, symbols, and designs. Although the recording sheet does not show tackiness at ordinary temperatures, since it shows the tackiness by heating, a releasing paper is not required and, moreover, it has a merit of being capable of readily sticking on vessels, etc. by a simple operation of heating.

For example, JP-A-05169798 Official Gazette discloses a pressure-sensitive adhesive printing sheet in which a pressure-sensitive adhesive layer composed of a water-based delayed-tack type adhesive is coated on a photo-transmissible base film such as a polyester film, and printing or printed characters are formed on the surface of the pressure-sensitive adhesive layer. Further, JP-A-08207426 Official Gazette discloses a sheet for an ink-jet recording in which one surface of a base material is coated by an ink-accepting layer which contains a thermoplastic resin such as an ethylene-vinyl acetate copolymer and an acrylic resin, a crystalline plasticizer, and a tackifier. Still further, JP-A-09305117 Official Gazette discloses a delayed-tack type pressure-sensitive adhesive sheet in which at least one surface of a base material is coated by an ink-accepting layer, and further, a delayed-tack layer composed of a pressure-sensitive adhesive such as a solid plasticizer and an ethylene-vinyl acetate copolymer and a tackifier is formed on the surface coated by the ink-accepting layer.

However, a conventional recording sheet coated by a delayed-tack type pressure-sensitive adhesive layer has a disadvantage that an absorption property of an ink is low, and a characters-printing property is poor.

On the other hand, there is a problem that in the case that a usual acrylic resin is employed as a thermoplastic resin (a pressure-sensitive adhesive) of which a pressure-sensitive adhesive layer combined with an ink-accepting layer is composed, although an adhesive strength is high, a blocking resistance is low. Also, there is a problem that in the case that an ethylene-vinyl acetate copolymer is employed as the thermoplastic resin (a pressure-sensitive adhesive), although a blocking resistance is excellent, an ink-absorbing property and an adhesive strength are low.

Further, there is known a recording sheet in which there is formed a pressure-sensitive adhesive layer composed of a hot-melt type pressure-sensitive adhesive or a delayed-tack type pressure-sensitive adhesive. One surface of the recording sheet is an ink-absorbing layer being capable of recording characters, symbols, and designs, etc., and another surface of the recording sheet is a sticking layer to an article (for example, a high-quality paper, a coat-paper, a plastic film, glass, and a metal, etc.).

For example, JP-A-09146462 Official Gazette discloses a thermally-adhesive type recording paper in which an ink-accepting layer is formed on one surface of a substrate, and there are formed (1) a hot-melt type pressure-sensitive adhesive containing a synthetic rubber, etc. as a base resin, and (2) a delayed-tack layer containing a thermoplastic resin which includes an acrylic resin, etc. and a solid plasticizer such as dicyclohexylphthalate on another surface of the substrate. Such the recording paper, particularly, the recording paper in which a delayed-tack layer is formed does not have tackiness at ordinary temperatures. However, since the tackiness is produced by heating, there is an advantage that a releasing paper is not required, and it can be readily stuck to an article by an easy operation of heating.

However, in the recording sheet having a hot-melt layer containing a hot-melt-type pressure-sensitive adhesive such as a synthetic rubber, etc., and the recording sheet having a delayed-tack layer containing the solid plasticizer

such as dicyclohexyl phthalate, for example, if those are stored in a heaped state of a plurality of sheets for a long time of period under a high temperature in the summer, there is caused a so-called blocking phenomenon that the labels are stuck each other. For that reason, there is a problem that a cold reserving apparatus is required in order to prevent such the blocking.

Also, for example, in the case that there is formed the delayed-tack layer containing the solid plasticizer such as dicyclohexyl phthalate, when a coating solution containing a thermoplastic resin and a solid plasticizer is coated and dried, a low temperature of not more than 45°C is required in order to prevent manifestation of tackiness by melting of the solid plasticizer. For that reason, there is a problem that productivity is lowered in a sheet for recording.

On the other hand, as a label for sticking to vessels such as glass battles, PET bottles, and cans, there is developed a shrink label in which an adhesive layer is formed on a thermally-shrinkable film, whereby, a label is firmly fixed by thermally-shrinking of the adhesive and film.

For example, JP-A-62227182 Official Gazette discloses a shrink label for a bottle already printed, in which a covering layer and an adhesive layer primarily composed of a polyamide resin are successively formed on a shrink film. Further, JP-A-04311432 Official Gazette discloses a shrink label for bottles having a thermally shrinking property at at least one direction, in which there are successively laminated a designed ink layer, an anchoring resin layer, a metallized layer, and a thermally-sensitive adhesive layer on one surface thereof. The shrink label is molded into a cylindrical shape. However, in the labels disclosed in the Official Gazettes, a high temperature such as 180-280°C or so is required in order to produce an adhesive property.

Further, as a label which can stick to a body to be stuck at relatively low temperature, as described hereinabove, a delayed-tack label has been known. If an adhesive layer for the above-described shrink label is constructed by such a delayed-tack layer, it can be firmly stuck to bottles, etc. at a relatively low temperature. However, there is a problem that in the case that dicyclohexyl phthalate which is a conventional solid plasticizer is employed as a solid plasticizer mixed in a delayed-tack layer, although a label can be once stuck to the bottles, etc., an adhesive strength ends to lower within a short time of period, whereby, a clearance is occasionally generated between the label and a body to be stuck, and the label is apt to be peeled and, further, a printing portion becomes unclear by a decline of transparency, and becomes unimpressive.

Still further, solvents are being converted from an organic-based one into a water-based one in a field of a coating agent from a viewpoint of environmental problems. However, there is a drawback that since a conventional water-based coating agent does not have crosslinkable functional groups, water resistance, solvent resistance, adhesion, and weatherability in a coating layer are poorer in the water-based coating agent than in a solvent-based coating agent. Further, even in the water-based coating agent, a staining resistance has been being required from a viewpoint of maintenance-free concept.

Therefore, as a water-based coating agent having crosslinkable functional groups, there is proposed (for example, confer JP-A-03021610 Official Gazette, etc.) a water-based coating agent in which there is employed a resin composition which emulsifies a resin having an alkoxysilyl group which is one of hydrolyzable silyl groups. By the use of such the water-based resin composition, although it became possible to obtain a water-based coating agent having an improved water resistance, solvent resistance, and adhesion, a weatherability and staining resistance are not still sufficient.

As a method for improving a weatherability and staining resistance in a coating layer, there has been known a means by copolymerization of a polymerizable unsaturated monomer having a polydimethylsiloxane structure in a resin. However, if the copolymerization is carried out by a usual emulsion polymerization system, since polymerizability of the reactive polydimethylsiloxane is lower compared to other monomers, a large amount of gels are produced during the emulsion polymerization.

Further, when it is intended to stably obtain a resin composition, there must be decreased the use amount of the reactive polydimethylsiloxane, resulting in that the weatherability and staining resistance cannot be obtained as being expected.

On the other hand, in a siding base material in a ceramic industry such as a calcium silicate plate, an ALC plate, a flexible board, a plaster slag, a pearlite, a powdered wood cement plate, and a precast concrete plate, and an inorganic-based porous base material such as a mortar and a concrete base material, surface coating is usually carried out for the purpose of an improvement of durability and a fine appearance.

In the case of the surface coating, if it is directly coated on the base materials, adhesion to the base materials becomes inferior. Accordingly, an under coating is carried out on the base materials. Therefore, in a primer employed for the purpose, there are required an excellent water resistance, weatherability, and storage stability, etc. until using thereof, and adhesion to both the base materials and surface coating.

As the primer to be employed for the purpose, there has been conventionally known a water-based resin composition containing a water-soluble silicate and a synthesized resin.

For example, JP-A-61238860 Official Gazette discloses a a composition containing a water-soluble silicate represented by the formula $M_2O$-$xSi_2O$ (M is an alkali metal, and x is a value of 2.0-4.5) and an acrylic-based synthesized emulsion and/or water-based solution. As an acrylic resin, there are disclosed an acrylate copolymer and a styrene-acrylate copolymer, etc.

Further, JP-A-07102241 Official Gazette discloses a a composition containing an acrylic-emulsified resin and a lithium silicate represented by the formula $Li_2O\text{-}nSiO_2$ (n is a value of 3-8). According to Examples of the Official Gazette, a methylmethacrylate/butylacrylate copolymer is employed as the acrylic resin.

Still further, JP-A-02308887 Official Gazette discloses a a composition containing an emulsion (A) of a vinyl copolymer having carboxylic groups and alkoxysilyl groups and (B) a lithium silicate in the solid components weight ratio of (A):(B)=40:60-90:10.

However, in the compositions described in the Official Gazettes, there is a problem that storage stability, etc. until using thereof is poor, and adhesion to a porous base material is insufficient.

DISCLOSURE OF THE INVENTION

Accordingly, a purpose of the present invention is to provide a thermally-and pressure-sensitive adhesive and a thermally-and pressure-sensitive adhesive sheet which have an excellent blocking resistance.

Another purpose of the present invention is to provide a thermoplastic resin composition which can be thermally dried at a higher temperature after coating, and which does not cause a blocking even in the case of storing for a long time of period, and to provide a thermally- and pressure-sensitive adhesive and a thermally-and pressure-sensitive adhesive sheet which contain the thermoplastic resin composition.

Other purpose of the present invention is to provide a thermoplastic resin composition and a thermally-and pressure-sensitive adhesive which can be thermally dried at a higher temperature in the case of preparing a thermally- and pressure-sensitive sheet by coating on a base material, and which has a high adhesive property and an excellent blocking resistance. Further, an other purpose of the present invention is to provide a thermally-and pressure-sensitive adhesive sheet which is high in productivity and excellent in an adhesive property, and which does not cause a blocking even in the case of storing for a long time of period, and to provide a method for the preparation thereof.

Still further, other purpose of the present invention is to provide a thermoplastic resin composition and a thermally- and pressure-sensitive adhesive which can be thermally dried at a higher temperature in the case of preparing a thermally- and pressure-sensitive adhesive sheet by coating on a base material and, further, which can maintain a durability in a high adhesive property and transparency for a long time of period and, further, which is excellent in a blocking resistance. Besides, other purpose of the present invention is to provide a thermally-and pressure-sensitive adhesive sheet which is high in productivity and excellent in an adhesive property and transparency and, further which does not cause a blocking even in the case of storing for a long time of period, and to provide a method for the preparation thereof.

Also, other purpose of the present invention is to provide a thermoplastic resin composition, a thermally- and pressure-sensitive adhesive, and a thermally- and pressure-sensitive adhesive sheet which do not adversely affect to natural circumstances.

Further, other purpose of the present invention is to provide a thermally-and pressure-sensitive adhesive and a thermally- and pressure-sensitive adhesive sheet which are excellent in adhesive force, a holding power, and water resistance, and to provide a method for the preparation thereof.

Still further, other purpose of the present invention is to provide a thermally-and pressure-sensitive adhesive and a thermally-and pressure-sensitive adhesive sheet which have a sufficient adhesive strength in practical uses, and which can be readily stripped and removed by hands without using boiled water, steam, and a water-based solvent, etc., and to provide a method for the preparation thereof.

Besides, other purpose of the present invention is to provide a thermally-and pressure-sensitive adhesive and a thermally- and pressure-sensitive adhesive sheet which can be readily stripped without remaining a pressure-sensitive adhesive layer on a body to be stuck even at a lapse of a long time of period after sticking, and to provide a method for the preparation thereof.

Also, other purpose of the present invention is to provide a thermally-and pressure-sensitive adhesive and a thermally-and pressure-sensitive adhesive sheet without remaining a pressure-sensitive adhesive layer on a body to be stuck even at a lapse of a determined time of period after sticking and, moreover, which can be readily stripped, and to provide a method for the preparation thereof.

And also, other purpose of the present invention is to provide a thermally-and pressure-sensitive adhesive sheet which can produce a sufficient adhesive force even by a small amount of coating volume of the thermally-and pressure-sensitive adhesive, and which can produce a sufficient adhesive force even at immediately after sticking.

And also, other purpose of the present invention is to provide a recording sheet which is excellent in an ink-absorbing property and printing property, and which can produce a sufficient adhesive property by thermally activating, and to provide a method for the preparation thereof. And also, other purpose of the present invention is to provide a recording sheet which is excellent in a blocking resistance, and to provide a method for the preparation thereof.

And also, other purpose of the present invention is to provide a recording sheet in which an ink-absorbing layer is formed on one surface of a base material, and a delayed-tack layer is formed on another surface, and which is high in productivity and excellent in an adhesive property and, which has a high blocking resistance. And also, other purpose of the present invention is to provide a recording sheet in which an ink-absorbing layer is formed on one surface of a base material, and a delayed-tack layer is formed on another surface, and which is excellent in an ink-absorbing property, printing property, and water resistance, and which can produce a sufficient adhesive force by thermally activating and, moreover, which is excellent in a blocking resistance.

And also, other purpose of the present invention is to provide a shrinking label which can be firmly stuck to a bottle, etc., by a simple means, and which can maintain a high adhesive property and transparency for a long time of period.

And also, other purpose of the present invention is to provide a water-based resin composition having an improved weatherability and staining resistance while maintaining a water resistance, a solvent resistance, and an adhesion to a base material in a water-based coating agent containing a resin having a hydrolyzable silyl group such as an alkoxysilyl group, and to provide a water-based coating agent containing the water-based resin composition.

And also, other purpose of the present invention is to provide a water-based coating composition which is excellent in a water resistance, weatherability, and a storage stability until the use and, moreover, excellent in an adhesion to both a porous base material and a over coating.

The present inventors, as a result of intensive investigations in order to achieve the above-described purposes, have found (1) capability of elevating a temperature at which a thermoplastic resin initiates to be plasticized by the use of a specified plasticizer, and capability of causing tackiness at a temperature when sticking a label, (2) capability of elevating a temperature at which a thermoplastic resin initiates to be plasticized by the simultaneous use of two kinds of specified solid plasticizers, capability of causing tackiness at a temperature when sticking a label, and capability of maintaining a high adhesive property and transparency for a long time of period, (3) it is exceedingly useful in view of safeness for a human by the use of a specific compound which does not cause a change in histomorphology for a testes of a rat to which a specified amount of a solid plasticizer is given, (4) a water resistance can be also improved together with an adhesive force and holding power by the use of a specified thermoplastic resin, (5) tackiness during heating is excellent in the case of preparing a pressure-sensitive adhesive sheet by the use of a thermoplastic resin having a specified range of a weight average molecular weight which is a composing component for a thermally-and pressure-sensitive adhesive, and the sheet can be readily stripped and removed by hands after achieving a determined role, (6) if the difference (drop of a melting point) is within a certain range between a melting point of a solid plasticizer and a melting point of the solid plasticizer in a thermally-and pressure-sensitive adhesive layer formed by heating a water-based thermally-and pressure-sensitive adhesive at a determined condition on a base sheet, blocking is not caused even though being stored in a place at which temperature is apt to relatively elevate, (7) capability of being readily stripped without boiled water and without remaining an adhesive layer and, moreover, even after a lapse of a time of period in a thermally-and pressure-sensitive adhesive sheet in which an adhesion ability at a period of 6 months is maintained within a specified range after sticking a thermally-and pressure-sensitive adhesive sheet in which an adhesive property is caused by heating to a body to be stuck, (8) capability of producing a sufficient adhesive force by a small amount of coating volume of a thermally-and pressure-sensitive adhesive and even immediately after sticking to a body to be stuck in a thermally-and pressure-sensitive adhesive sheet in which a thermally-and pressure-sensitive adhesive is coated in a coating amount of 5 $g/m^2$ and, moreover, an adhesive force exceeds a determined value when a thermally- and pressure-sensitive adhesive sheet is heated to produce an adhesive ability, (9) capability of obtaining a high adhesive force together with an excellent ink-absorbing ability and printing ability by an ink-absorbing layer composing of a specified acrylic polymer and a solid plasticizer, (10) in a recording sheet in which an ink-absorbing layer is formed over one surface of a base material, and a delayed-tack layer is formed over another surface of the base material, blocking resistance is remarkably improved by using a specified substance as a solid plasticizer for constructing a delayed-tack layer, (11) capability of maintaining a high adhesive property and transparency together with being capable of readily sticking and fixing to bottles by employing a delayed-tack layer in which an adhesive layer of a shrink label is constructed by a delayed-tack layer containing at least two specified solid plasticizers, (12) capability of obtaining a water-based resin composition having an improved weatherability and staining resistance while maintaining water resistance, solvent resistance, and adhesion from an emulsion obtained by adding water to a resin solution obtained by a solution polymerization using a polymerizable unsaturated monomer having a hydrolyzable silyl group, a polymerizable unsaturated monomer having at least one of ionizable groups, other polymerizable unsaturated monomers, and a polymerizable unsaturated monomer having a polydimethylsiloxane structure, and (13) an adhesion to both of a porous base material and an over coating is improved in addition to an excellent water resistance, weatherability, and storage stability until the use by using a core/shell type water-based emulsion containing a copolymer composed of a polymerizable unsaturated monomer having a specified structure and/or a polyvalent epoxy compound, and other monomers in components for a core, and containing a copolymer of an unsaturated monomer having carboxylic group with other polymerizable unsaturated monomers.

Based on the above descriptions, the present invention has been completed.

That is, the present invention provides a thermoplastic resin composition containing a thermoplastic resin and a solid plasticizer, characterized in that the solid plasticizer is at least one compound selected from the group of three kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

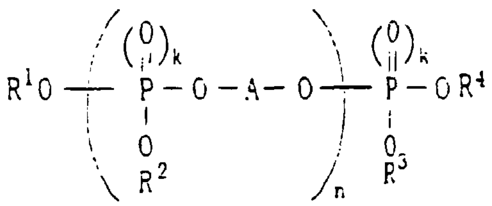

(1a)

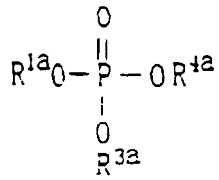

(1b)

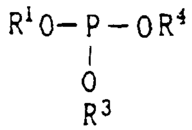

(1c)

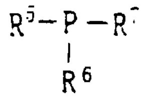

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or a heterocyclic group, respectively, A is a divalent hydrocarbon group or a heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by bonding of at least two groups, respectively.], and (iiia) a diester compound of (C) (c1) hydroquinone or lesorcinol wherein benzene ring may be substituted by an alkyl group, or (c2) catechol wherein benzene ring is substituted by an alkyl group with (D) an organic monobasic acid (hereinafter, it is occasionally called as "the thermoplastic resin composition 1").

Further, the present invention provides a thermoplastic resin composition containing a thermoplastic resin and a solid plasticizer, characterized in that the solid plasticizer is constructed by a combination of at least two compounds selected from the group of four kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one six-membered carbon ring with (B) a polybasic acid, (iia) a phosphorus compound having a melting point of 55-100°C or a phosphorus compound represented by the following formulae (1a), (1b), (1c) or (2)

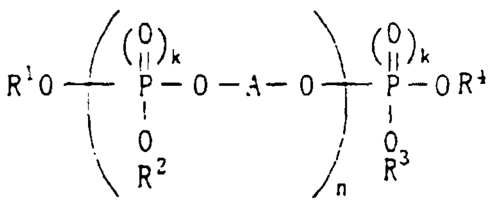

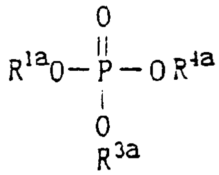

(1a) (1b)

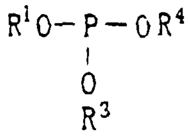

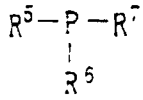

(1c) (2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or a heterocyclic group, respectively, A is a divalent hydrocarbon group or heterocyclic group, k is 0 or 1, n is an integer of 1-3, however, $R^{1a}$, $R^{3a}$, and $R^{4a}$ are not simultaneously a phenyl group or a 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by a bonding of at least two groups, respectively.], and (iii) a dioxybenzene derivative, and (iv) dicyclohexylphthalate (hereinafter, it is occasionally called as "the thermoplastic resin composition 2").

Still further, the present invention provides a thermoplastic resin composition containing a thermoplastic resin and a solid plasticizer, characterized in that the solid plasticizer is constructed by a combination of the compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, and (ii) a phosphorus compound (hereinafter, it is occasionally called as "the thermoplastic resin composition 3").

Also, the present invention provides a thermoplastic resin composition containing a thermoplastic resin and a solid plasticizer, characterized in that the solid plasticizer is a multi ester of a polybasic acid which does not bring about a morphological change to a testes of a rat when it is continuously given by an oral administration to the rat for 7 days in a dose of 1000 mg/kg (hereinafter, it is occasionally called as "the thermoplastic resin composition 4").

And also, the present invention provides a thermoplastic resin composition which contains a thermoplastic resin having a glass transition temperature of -10 to 25°C and a solid plasticizer, and the thermoplastic resin is a water-based thermoplastic resin composition dispersed in water, characterized in that the solid plasticizer is a phosphorus compound (hereinafter, it is occasionally called as "the thermoplastic resin composition 5").

And also, the present invention provides a thermally- and pressure-sensitive adhesive containing the above-described thermoplastic resin composition a thermoplastic resin composition 1, 2, 3, 4, or 5 (hereinafter, it is occasionally called as "the thermally-and pressure-sensitive adhesive 1").

And also, the present invention provides a thermally-and pressure-sensitive adhesive containing a thermoplastic resin composition and a solid plasticizer, wherein the thermoplastic resin is constructed by an epoxy compound (E) and a polymer (F) of a polymerizable unsaturated compound (hereinafter, it is occasionally called as "the thermally- and pressure-sensitive adhesive 2").

And also, the present invention provides a thermally-and pressure-sensitive adhesive containing a thermoplastic resin and a solid plasticizer, wherein that the solid thermoplastic resin is a polymer of a polymerizable unsaturated compound having a hydrolyzable silyl group (hereinafter, it is occasionally called as "the thermally-and pressure-sensitive adhesive 3").

And also, the present invention provides a thermally-and pressure-sensitive adhesive containing a thermoplastic resin and a solid plasticizer, wherein a weight average molecular weight (Mw) of the thermoplastic resin is 100,000-500,000 (hereinafter, it is occasionally called as "the thermally- and pressure-sensitive adhesive 4").

And also, the present invention provides a water-based thermally- and pressure-sensitive adhesive containing a thermoplastic resin and a solid plasticizer, characterized in that a decline of a melting point in the solid plasticizer versus a melting point of the solid plasticizer in a thermally-and pressure-sensitive adhesive layer formed by heating the water-based thermally-and pressure-sensitive adhesive at 40°C for 2 minutes on a base sheet is less than 3°C (hereinafter, it is occasionally called as "the thermally-and pressure-sensitive adhesive 5").

And also, the present invention provides a water-based thermally- and pressure-sensitive adhesive sheet, wherein a pressure-sensitive adhesive layer composed of the above-described thermally-and pressure-sensitive adhesive 1, 2, 3, 4, or 5 is coated on at least one surface of a base material (hereinafter, it is occasionally called as "the thermally-and pressure-sensitive adhesive sheet 1").

And also, the present invention provides a method for the preparation of a thermally-and pressure-sensitive adhesive sheet which comprises forming a pressure-sensitive adhesive layer composed of the thermally-and pressure-sensitive adhesive 1, 2, 3, 4, or 5 by coating on at least one surface of a base material.

And also, the present invention provides a thermally-and pressure-sensitive adhesive sheet, wherein a thermally- and pressure-sensitive adhesive layer containing a thermoplastic resin, a tackifier, and a solid plasticizer is coated on at least one surface of a base material, characterized in that an adhesive strength when being stuck to a body to be stuck after tackiness is produced by heating the thermally-and pressure-sensitive adhesive sheet is 100 gf/25mm-600 gf/25mm at a period of 6 months lapse (hereinafter, it is occasionally called as "the thermally-and pressure-sensitive adhesive sheet 2").

And also, the present invention provides a thermally-and pressure-sensitive adhesive sheet, wherein a thermally- and pressure-sensitive adhesive layer containing a thermoplastic resin, a tackifier, and a solid plasticizer is coated on at least one surface of a base material, characterized in that a coating amount of the thermally-and pressure-sensitive adhesive is less than 5 $g/m^2$, and an adhesive force when being stuck to a body to be sticked after tackiness is generated by heating the thermally-and pressure-sensitive adhesive sheet is not less than 100 gf/25mm (hereinafter, it is occasionally called as "the thermally-and pressure-sensitive adhesive sheet 3").

And also, the present invention provides a recording sheet wherein an ink-absorbing layer composed of an acrylic-based polymer containing 5-50% by mol of a hydrophilic monomer which is a constructing monomer and a solid plasticizer is formed on at least one surface of a base material (hereinafter, it is occasionally called as "the recording sheet 1").

And also, the present invention provides a method for the preparation of a recording sheet which comprises forming an ink-absorbing layer composed of an acrylic-based polymer containing 5-50% by mol of a hydrophilic monomer which is a constructing monomer and a solid plasticizer on at least one surface of a base material.

And also, the present invention provides a recording sheet wherein an ink-absorbing layer is formed on at least one surface of a base material and a delayed-tack layer composed of a thermoplastic resin, a solid plasticizer, and a tackifier is formed on another surface of a base material, the solid plasticizer is at least one compound selected from the group of three kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

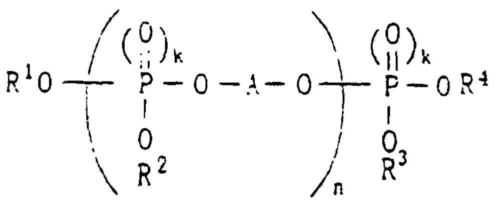

(1a)

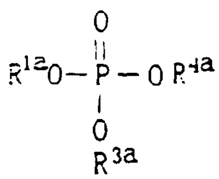

(1b)

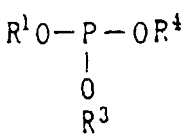

(1c)

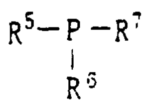

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or heterocyclic group, respectively, A is a divalent hydrocarbon group or heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by a combination of at least two groups, respectively.], and (iiia) a diester compound of (C) (c1) hydroquinone or lesorcinol in which benzene ring may be substituted by an alkyl group or (c2) catechol in which benzene ring may be substituted by an alkyl group with (D) an organic monobasic acid (hereinafter, it is occasionally called as "the recording sheet 2").

And also, the present invention provides a shrink label, on which a delayed-tack layer composed of a thermoplastic resin, a solid plasticizer, and a tackifier is formed, wherein the solid plasticizer is constructed by the combination of at least two compound groups selected from the group of four kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

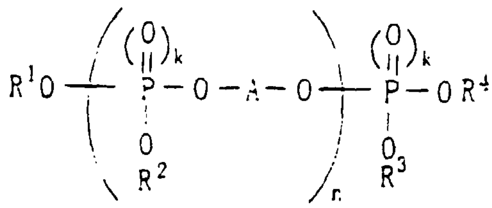

(1a)

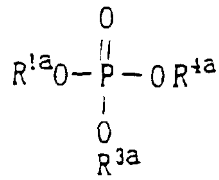

(1b)

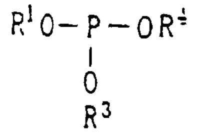

(1c)

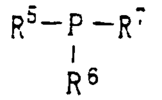

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or heterocyclic group, respectively, A is a divalent hydrocarbon group or heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by a combination of at least two groups, respectively.], and (iiia) a diester compound of (C) (c1) hydroquinone or lesorcinol wherein benzene ring may be substituted by an alkyl group, or (c2) catechol wherein benzene ring is substituted by an alkyl group with (D) an organic monobasic acid, and (iv) dicyclohexylphthalate.

And also, the present invention provides a water-based resin composition obtained by emulsifying while adding water to a resin solution obtained through a solution polymerization of 0.5-50% by weight of (G) a polymerizable unsaturated monomer having a hydrolyzable silyl group, 1-20% by weight of at least one of (H) a polymerizable unsaturated monomer having an ionizable group, 1-40% by weight of (I) a polymerizable unsaturated monomer having a polydimethylsiloxane structure, and {100-[total amount of (G)+(H)+(I)]}% by weight of (J) other polymerizable unsaturated monomers.

Also, the present invention provides a water-based coating agent containing the water-based resin composition.

And also, the present invention provides a water-based coating composition containing (O) a core/shell type water-based emulsion wherein core components are comprised a copolymer of 5-50% by weight of (K) a polymerizable unsaturated monomer represented by general formula (XXXI)

$$CH_2=C(R^{31})COOR^{32} \qquad (XXXI)$$

(in the formula, $R^{31}$ is a hydrogen or a methyl group, and $R^{32}$ is a substituted alkyl group having an epoxy group or a epoxy group-equivalent compound) and/or (L) a polyvalent epoxy compound having at least two epoxy groups in the molecule with 95-50% by weight of (M) other polymerizable unsaturated monomers which are copolymerizable with the (K) a polymerizable unsaturated monomer and the (L) a polyvalent epoxy compound, and shell components are comprised a copolymer of 2-50% by weight of (N) a polymerizable unsaturated monomer having carboxylic group with 98-50% by weight of (M) other polymerizable unsaturated monomers which are copolymerizable with the (N) a polymerizable unsaturated monomer having carboxylic group, and a water-soluble silicate (P) represented by general formula (XXXII)

$$M_2O \bullet xSiO_2 \qquad \text{(XXXII)}$$

(in the formula, M represents an alkali metal belonged to No. IA group in the periodic table, and x represents the number of 2.0-7.5) in a mixing proportion ratio of (O):(P)=10:1-1:10 by weight based on the solid content.

It is to be noted that an "acrylic-based" monomer and a "methacrylic-based" monomer are named generically as a "(meth)acrylic-based" monomer in the present specification.

BEST MODE FOR CARRYING OUT THE INVENTION

[Thermoplastic resin composition and thermally- and pressure-sensitive adhesive 1]

The thermoplastic resin composition of the present invention contains a thermoplastic resin and a solid plasticizer.

As the thermoplastic resin, there are enumerated, for example, an acrylic-based polymer containing (meth)acrylic acid or esters thereof as a monomer, which includes a homo or copolymer of a (meth)acrylate, a styrene-(meth)acrylate copolymer, a vinyl acetate-(meth)acrylate copolymer, an ethylene-(meth)acrylate copolymer, an ethylene-(meth)acrylic acid copolymer, a (meth)acrylate-(meth)acrylic acid copolymer, a styrene-acrylonitrile-(meth)acrylate copolymer, a styrene-(meth)acrylate-(meth)acrylic acid copolymer, a styrene-acrylonitrile-(meth)acrylate-(meth)acrylic acid copolymer, an ethylene-vinyl acetate-(meth)acrylate copolymer, a vinylpyrrolidone-(meth)acrylate copolymer, and a styrene-butadiene-(meth)acrylic acid copolymer; a vinyl acetate-based polymer containing vinyl acetate as a monomer such as a vinyl acetate resin and an ethylene-vinyl acetate copolymer; a synthetic rubber such as a styrene-butadiene copolymer, an isobutyrene resin, an isobutyrene-isoprene copolymer, a butadiene resin, a styrene-isoprene copolymer, and an acrylonitrile-butadiene copolymer; natural rubbers; an ethylene-vinyl chloride copolymer, a vinyl chloride-vinylidene chloride copolymer, a vinylpyrrolidone-styrene copolymer, a chlorinated propylene resin, a urethane resin, and an ethylcellulose, etc. The thermoplastic resins may be solely or in combination of two or more kinds.

A preferred thermoplastic resins include the acrylic-based polymer [for example, the acrylic-based polymer containing a (meth)acrylate as a monomer], the vinyl acetate-based copolymer, the synthetic resin, and the natural rubbers, etc. Of the acrylic-based polymer, particularly, there are preferred the acrylate-(meth)acrylate copolymer (for example, a copolymer of a $C_{2-10}$alkyl ester of acrylic acid and a $C_{1-4}$alkyl ester of methacrylic acid), the acrylate-(meth)acrylate-(meth)acrylic acid copolymer [for example, a terpolymer of a $C_{2-10}$alkyl ester of acrylic acid and a $C_{1-4}$alkyl ester of methacrylic acid and (meth)acrylic acid], and an acrylate-styrene-(meth)acrylic acid copolymer [for example, a copolymer of a $C_{2-10}$ alkyl ester of acrylic acid and styrene and (meth)acrylic acid] which are an acrylic-based copolymer containing an acrylate (a $C_{2-10}$ alkyl ester of acrylic acid), a methacrylate (a $C_{1-4}$ alkyl ester of methacrylic acid), or styrene as a comonomer.

Glass transition temperature (Tg) of the thermoplastic resin can be appropriately selected in consideration of kinds of a body to be stuck within a range in which an adhesive property and blocking resistance are not deteriorated when it is employed for a shrink label. In usual, it is -10 to 70°C or so. In the case that the glass transition temperature is less than -10°C, the blocking resistance is apt to lower. On the other hand, in the case that the glass transition temperature is too high, an adhesive property is apt to lower.

It is to be noted that in the case that the solid plasticizer is, for example, a phosphorus compound, the glass transition temperature (Tg) of the thermoplastic resin is preferably -10 to 25°C or so, more preferably -5 to 20°C or so, and most preferably 0 to 15°C or so.

In the thermoplastic resin composition 1 of the present invention, as a solid plasticizer, there are employed at least one compounds selected from the three kinds of components consisting of the above-described (i) a multiester compound (a first compounds group), (iia) a phosphorus compound (a second compounds group), and (iiia) a diester compound (a third compounds group).

[(i) Multiester compound]

In the alcohol (A1) constructing the above-described multiester compound (i), as an alkyl group which is a substituted group in the cyclohexane ring or the cyclohexene ring, there are enumerated methyl, ethyl, propyl, isopropyl, butyl, isobutyl, s-butyl, t-butyl, pentyl, and hexyl groups, etc.

A preferred alkyl group includes an alkyl group having a carbon number of 1-6 (particularly, 1-4) or so such as methyl, isopropyl, and t-butyl groups.

As the alcohol (A1) having the substituted cyclohexane ring or the cyclohexene ring which is substituted by the above-described one or more alkyl groups and has total carbon number of not less than 3, there are enumerated, for example, a substituted cyclohexanol represented by the formulae (I)-(VII) described below, a substituted cyclohexenol represented by the formulae (VIII)-(X) described below, a substituted cyclohexanol having carbonyl group represented by the formulae (XI)-(XII), and a substituted cyclohexenol having carbonyl group represented by the formula (XIII). Further, as the alcohol (A2) having a bridged ring containing at least one of a six-membered carbon ring, there are enumerated, for example, an alcohol having a bridged ring in which a bridge is formed by bonding of an alkylene group between two carbon atoms other than adjacent carbon atoms in the carbon atoms constructing the six-membered carbon ring, for example, an alcohol having a norbornane ring represented by (XIV), (XV), (XVI), and (XVIII), an alcohol having a norbornene ring represented by (XVII) and (XIX), and an alcohol having an adamantine ring represented by (XX) and (XXI), etc.

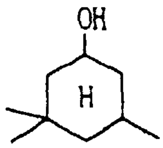

(I)

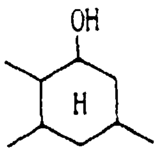

(II)

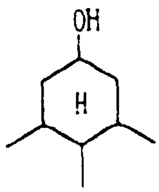

(III)

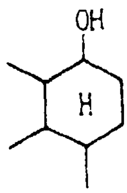

(IV)

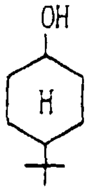

(V)

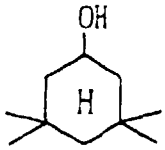

(VI)

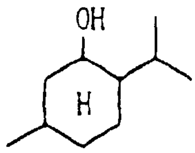

(VII)

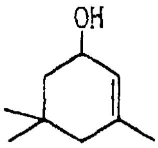

(VIII)

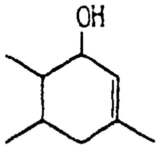

(IX)

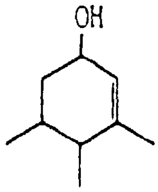

(X)

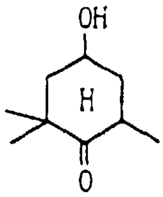

(XI)

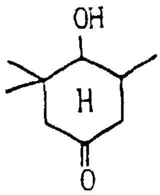

(XII)

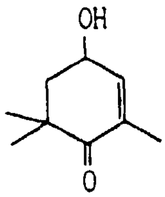

(XIII)

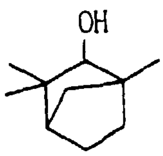

(XIV)

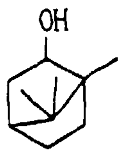

(XV)

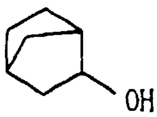

(XVI)

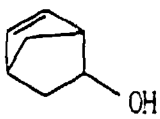

(XVII)

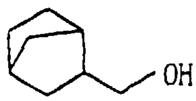

(XVIII)

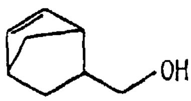

(XIX)

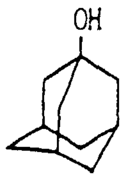

(XX)

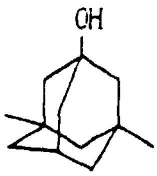

(XXI)

Of the alcohols, there are preferred the substituted cyclohexanol (AII) which is substituted by one or more alkyl groups having total carbon number of not less than 3 in the substituted group, which is the alcohol represented by (I)-(VII), the alcohol (A21) having a bridged ring containing at least one of a six-membered saturated carbon ring in which hydroxyl group or hydroxymethyl group is bonded, which is the alcohol having a norbornane ring represented by (XVI) and (XVIII) and the alcohol having an adamantine ring represented by (XX) and (XXI).

Particularly, 3,3,5-trimethylcyclohexanol represented by the above-described formula (I) is preferred from a viewpoint of a temperature for an appearance of thermally-sensitive tackiness and blocking resistance.

The above-described polybasic acid (B) includes a polyvalent carboxylic acid, a polyvalent sulphonic acid, and a polyvalent phosphonic acid, etc. As the polyvalent carboxylic acid, there are exemplified a polyvalent carboxylic acid (phthalic acid, pyromerritic acid, cyclohexene-4,5-dicarboxylic acid, and trimerritic acid) corresponding to an acid anhydride (phthalic anhydride, pyromerritic anhydride, cyclohexene-4,5-dicarboxylic anhydride, and trimerritic anhydride) represented by the formulae described below,

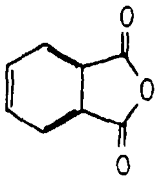

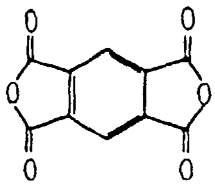

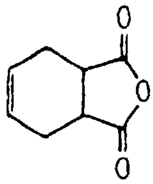

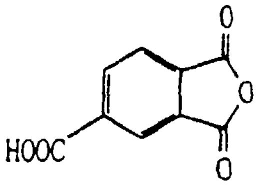

and a polyvalent carboxylic acid (terephthalic acid, isophthalic acid) represented by the formulae described below.

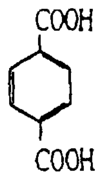

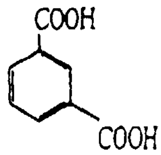

In the above-described formulae, benzene ring may be substituted by a substituted group which includes an alkyl group (for example, $C_{1-4}$alkyl group) such as methyl, ethyl, isopropyl, and t-butyl groups, an aryl group such as phenyl and naphthyl groups, an alkoxy group (for example, $C_{1-4}$alkoxy group) such as methoxy and ethoxy groups, a halogen atom such as fluorine, chlorine, and iodine atom.

Of the multiester compound (i) of the alcohol (A) with the polybasic acid (B), bis(3,3,5-trimethylcyclohexyl)phthalate represented by the formula described below,

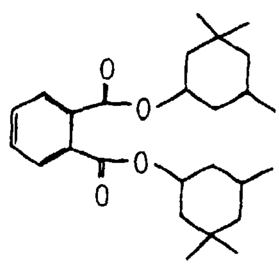

is particularly preferred which is obtained by a reaction of 3,3,5-trimethylcyclohexanol represented by the formula (I)

with phthalic anhydride.

It is to be noted that the above-described 3,3,5-trimethyl cyclohexanol contains a cis-compound and trans-compound which are a geometrical isomer by a relationship of a steric position of hydroxyl group and 5-position methyl group. In the present invention, there can be employed a multiester obtained from any of isomers thereof. Further, there can be also employed a multiester obtained from a mixture of the isomers. For example, as the above-described bis(3,3,5-trimethylcyclohexyl)phthalate, there may be employed any one of bis(trans-3,3,5-trimethylcyclohexyl)phthalate, bis(cis-3,3,5-trimethylcyclohexyl)phthalate, and a mixture thereof. In the case that bis(3,3,5-trimethylcyclohexyl)phthalate is employed as a solid plasticizer, a ratio [trans-compound/cis-compound] of the trans-compound with respect to the cis-compound is preferably 0/100-40/60, more preferably 0/100-15/85, most preferably 0/100-5/95 in view of an initiating temperature of plasticization and, above all, bis(cis-3,3,5-trimethylcyclohexyl)phthalate is preferably employed solely.

Further, as the above-described multiester compound (i), there are preferably employed bis(1-adamantyl)isophthalates which may have alkyl groups (for example, a $C_{1-4}$alkyl group) such as methyl group in the adamantine ring, which include bis(1-adamantyl) isophthalate (a melting point of 141°C) and bis(3,5-dimethyl-1-adamantyl)isophthalate (a melting point of 88°C); bis(1-adamantyl)terephthalates which have at least one alkyl groups (for example, a $C_{1-4}$ alkyl group) such as methyl group in the adamantine ring, which includes bis(3,5-dimethyl-1-adamantyl)terephthalate (a melting point of 176°C); and bis(1-adamantyl)phthalates which may have alkyl groups (for example, a $C_{1-4}$ alkyl group) such as methyl group in the adamantine ring, which include bis(1-adamantyl) phthalate and bis(3,5-dimethyl-1-adamantyl)phthalate, etc.

The above-described multiester compound (i) can be prepared by a publicly-known or conventional esterification method from the alcohol (A) and the polybasic acid (B) or a reactive derivative therefrom (for example, an acid anhydride, an acid halide, and an active ester). For example, the above-described multiester compound (i) can be obtained by allowing to react the alcohol (A) with the polybasic acid (B) under the presence of a catalyst which is a protonic acid, for example, by allowing to react in a solvent such as toluene, and then removing by-produced water.

A melting point of the multiester compound (i) preferably ranges in 70-160°C or so. In the case that the melting point in the multiester compound (i) is lower than 70°C, a blocking resistance is apt to lower and, in the case of exceeding 160°C, it requires a long time for melting, whereby, it is anxious that productivity lowers or a base material is deteriorated. The multiester compound (i) is employed solely or in combination two or more kinds.

[(iia) Phosphorus compound]

The previously-described phosphorus compound (iia) includes phosphates, phosphites, and phosphines, etc. As the previously-described phosphorus compound (iia) having a melting point of 55-100°C, there are enumerated compounds represented by the formula (1) or (2) described below,

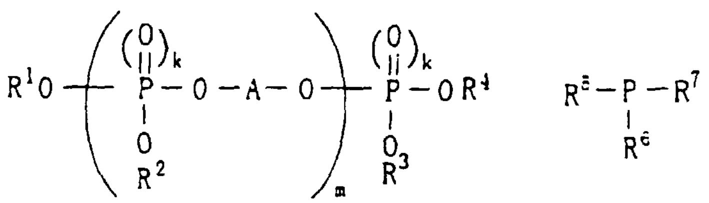

(1) (2)

[in the formulae, $R^1$-$R^7$ represent a hydrocarbon group or a heterocyclic group, respectively, A represents a divalent hydrocarbon group or heterocyclic group, k represents 0 or 1, m represents an integer of 0-3. $R^1$, $R^2$, and A (when m=1 to 3), $R^3$, $R^4$, and A (when m=1 to 3), $R^1$, $R^3$, and $R^4$ (when m=0), $R^5$, $R^6$, and $R^7$ may form a ring containing phosphorus atom by bonding of at least two groups each other, respectively.].

The previously-described compound represented by the formula (1) includes a compound represented by the formulae (1a), (1b), and (1c) described below,

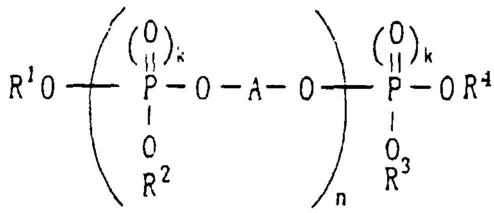
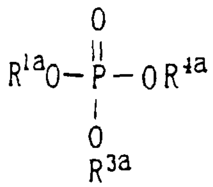
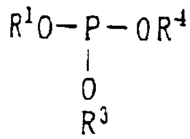

(1a) (1b) (1c)

[in the formulae, $R^1$, $R_2$, $R^3$, $R^4$, $R^{1a}$, $R^{3a}$, $R^{4a}$, $R^5$, $R^6$, and $R^7$ represent a hydrocarbon group or a heterocyclic group, respectively, A represents a bifunctional hydrocarbon group or heterocyclic group, k represents 0 or 1, n represents an integer of 1-3. $R^{1a}$, $R^{3a}$, and $R^{4a}$ are not simultaneously a phenyl group or 4-t-butylphenyl group. $R^1$, $R^2$, and A, $R^3$, $R^4$, and A in the formula (1a), $R^{1a}$, $R^{3a}$, and $R^{4a}$ in the formula (1b), $R^1$, $R^3$, and $R^4$ in the formula (1c) may form a ring containing phosphorus atom by bonding of at least two groups each other, respectively.]

The hydrocarbon group in the previously-described $R^1$-$R_7$, $R^{1a}$, $R^{3a}$, and $R^{4a}$ includes an aromatic hydrocarbon group, a cycloaliphatic hydrocarbon group, and an aliphatic hydrocarbon group. The hydrocarbon groups may have a substituent.

The previously-described aromatic hydrocarbon group includes a phenyl group and a naphthyl group, etc. The cycloaliphatic hydrocarbon group includes a cycloalkyl group such as a cyclopentyl group, a cyclohexyl group, and a cyclooctyl group; a cycloalkenyl group such as a cyclopentenyl group and a cyclohexenyl group; and a hydrocarbon group having a bridged ring such as norbonyl group, bicyclo[4.3.0]nonyl group, and an adamantyl group, etc. The aliphatic hydrocarbon group includes an alkyl group having a carbon number of 1-12 or so such as a methyl, ethyl, propyl, isopropyl, butyl, isobutyl, s-butyl, t-butyl, hexyl, octyl, and decyl groups; an alkenyl group having a carbon number of 2-12 or so such as a vinyl, allyl, and 1-hexenyl groups; an alkinyl group having a carbon number of 2-12 or so such as an ethynyl and propynyl groups.

As the substituent which may be contained in the previously-described hydrocarbon group, for example, there can be exemplified a halogen atom such as fluorine, chlorine, and bromine; a $C^1$-$C^4$alkyl group such as a methyl, ethyl, propyl, isopropyl, isobutyl, s-butyl, and t-butyl groups; a cycloalkyl group such as cyclohexyl group; an aryl group such as phenyl group; a $C^1$-$C^4$alkoxy group such as a methoxy, ethoxy, and isopropoxy groups; an allyroxy group such as phenyloxy group; an alkoxycarbonyl group such as methoxycarbonyl group; an acyl group such as acetyl group and benzoyl group; an acyloxy group such as acetyloxy group; cyano group; nitro group; hydroxyl group; carboxyl group; and an oxo group, etc.

As a typical example of the previously-described aromatic hydrocarbon group, there can be enumerated phenyl group; a phenyl group having a halogen atom such as 2-chlorophenyl group, 3-chlorophenyl group, and 4-chlorophenyl group, a phenyl group having a $C_1$-$C_4$alkyl group such as 2-methylphenyl group, 3-methylphenyl group, 4-methylphenyl group, 2,3-dimethylphenyl group, 2,4-dimethylphenyl group, 2,6-dimethylphenyl group, 2-ethylphenyl group, and 4-t-butylphenyl group. As a typical example of the previously-described cycloaliphatic hydrocarbon group, there can be enumerated cyclopentyl group, cyclohexyl group, cyclohexenyl group, 3,3,5-trimethylcyclohexyl group, 3-oxo-1,5,5-trimethylcyclohexyl group, 6-oxo-2,4,4-trimethylcyclohexyl group, and 1,7,7-trimethylnorbornane-2-yl group, etc. As a typical example of the previously-described aliphatic hydrocarbon group, there can be enumerated an alkyl group bonded by an aryl group (an aralkyl group) such as benzyl group, 2-methylphenylmethyl group, and 2-phenylethyl group, etc.

The heterocyclic group in the previously-described $R^1$-$R^7$, and $R^{1a}$, $R^{3a}$, and $R^{4a}$ includes a heterocyclic group containing oxygen atom such as 2-furyl group, morphonyl group, and tetrahydropyranyl group; a heterocyclic group containing sulphur atom such as 2-thienyl group; a heterocyclic group containing nitrogen atom such as 1-pyrolyl group, 2-pyridyl group, piperidino group, and 2-quinoryl group. The heterocyclic groups may have a substituent.

The substituent includes the substituent, etc. exemplified in the previously-described hydrocarbon group.

The divalent hydrocarbon group in the previously-described A includes a divalent aromatic hydrocarbon group, a divalent cycloaliphatic hydrocarbon group, and a divalent aliphatic hydrocarbon group. The hydrocarbon groups may be combined by at least two thereof through or not through a bonding group such as oxygen atom, sulphur atom, and carbonyl group and, further, those may have a substituent. The substituents include a group such as the substituents exemplified as a substituent which may be possessed by the hydrocarbon group in the previously-described $R^1$-$R^7$, etc.

As the divalent aromatic hydrocarbon group, for example, there are enumerated 1,2-phenylene, 1,3-phenylene, 1,4-phenylene, 1,4-naphthylene, and biphenylene groups, etc. As the divalent cycloaliphatic hydrocarbon group, there

are enumerated a cycloalkylene group such as cyclohexylidene, 1,2-cyclopentylene, 1,2-cyclohexylene, 1,3-cyclohexylene, and 1,4-cyclohexylene groups; a cycloalkenylene group such as 2-cyclohexene-1,4-diyl group, a divalent bridged ring group such as adamantine-1,3-diyl, etc. Further, as the divalent aliphatic hydrocarbon group, there are enumerated an alkylene group having a carbon number of 1-6 or so such as methylene, ethylene, trimethylene, 2-methyltrimethylene, 2,2-dimethyltrimethylene, and tetramethylene groups; an alkenylene group having a carbon number of 2-6 or so such as propenylene group; and an alkinylene group having a carbon number of 2-6 or so such as propylene group, etc.

As a typical example of the divalent hydrocarbon group in the previously-described A, there can be exemplified 1,2-phenylene, 1,3-phenylene, 1,4-phenylene, 1,4-naphtylene, 1,1-diphenylmethane-4',4''-diyl, 1,1-diphenylethane-4',4''-diyl, 2,2-diphenylpropane-4',4''-diyl, 2,2-diphenylbutane-4',4''-diyl, 4,4'-biphenylene, 1,4-cyclohexylene, 1,5,5-trimethylcyclohexane-1,3-diyl, 6-oxo-2,4,4-trimethylcyclohexane-1,2-diyl, -$CH_2$-1,4-cyclohexylene-$CH_2$-, 1,1-dicyclohexylethane-4',4''-diyl, 2,2-dicyclohexylpropane-4',4''-diyl, 2,2-dicyclohexylbutane-4',4,''-diyl, adamantine-1,3-diyl, 5,7-dimethyladamantine-1,3-diyl, trimethylene, 2-methyltrimethylene, 2,2-dimethyltrimethylene, and tetramethylene groups, etc.

The divalent heterocyclic group in the previously-described A includes a divalent group in which two hydroxyl groups are removed from a multivalent heterocyclic alcohol or phenol (for example, saccharides such as isosorbide, isomannide, sucrose, and lactose).

The hydrocarbon groups may be combined by at least two groups through or not through a bonding group such as oxygen atom, sulphur atom, carbonyl group, and carbonyloxy group and, further, those may have a substituent. The substituents include a group such as the substituents exemplified as a substituent which may be possessed by the hydrocarbon group in the previously-described $R^1$-$R^7$, etc.

Also, the previously-described divalent hydrocarbon group and heterocyclic group may be combined through the previously-described bonding groups.

In the previously-described formula (1a), it is preferred that at least one of $R^1$-$R^4$ (particularly, all $R^1$-$R^4$) is an aromatic hydrocarbon group. Further, a preferred A includes a divalent hydrocarbon group containing at least one divalent aromatic hydrocarbon group such as 1,3-phenylene group, and a hydrocarbon group containing at least one divalent cycloaliphatic hydrocarbon group such as -$CH_2$-1,4-cyclohexylene-$CH_2$-. n is 1 or 2, and particularly, it is preferably 1.

As a specific example of the phosphorus compound represented by the formula (1a), for example, there are enumerated diphosphates such as 1,4-cyclohexanedimethanol bis(diphenylphosphate) (a melting point: 97°C) and resorcinol bis[di(2,6-dimethylphenyl)phosphate] (a melting point: 95°C), etc.

A preferred compound in the phosphorus compound represented by the previously-described formula (1b) includes a compound in which all $R^{1a}$, $R^{3a}$, and $R^{4a}$ are an aromatic hydrocarbon group or an aralkyl group, and cyclic phosphates in which at least two groups in the $R^{1a}$, $R^{3a}$, and $R^{4a}$ form a ring containing phosphorus atom by bonding each other, etc.

As a specific example of the compound (phosphates) represented by the formula (1b), for example, there are enumerated cyclic triaryl phosphates which contain a phosphorus atom as a constructing atom in the ring such as tri(4-methylphenyl) phosphates (a melting point: 78°C) which is a tri(methylphenyl) phosphate, and a triaralkyl phosphate such as tribenzylphosphate (a melting point: 65°C), and a compound (a melting point: 95-110°C) represented by the formula (3) described below.

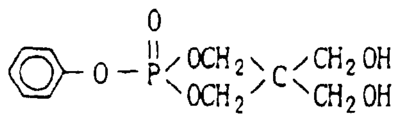

(3)

In the formula (1c), it is preferred that $R^1$-$R^4$ are an aromatic hydrocarbon group or an aralkyl group.

As a specific example of the compound (phosphites) represented by the formula (1c), for example, there are enumerated a triaryl phosphite such as tri(4-t-butylphenyl)phosphite (a melting point: 75°C).

In the previously-described formula (2), $R^5$-$R^7$ are preferably an aromatic hydrocarbon group. As a specific example of the compound represented by the formula (2), for example, there are enumerated triaryl phosphines such as triphenyl phosphine (a melting point: 80°C) and tri(3-methylphenyl)phosphine (a melting point: 100°C).

The phosphorus compounds can be obtained by a well-known or publicly-known method. For example, the phosphates can be obtained by allowing to react dichloromonophosphate such as phosphorus oxychloride and aryldichlorophosphate or chlorodiphosphate such as diarylchlorophosphate with a compound containing hydroxyl group (an alcohol or a phenol) which corresponds to a desired compound, optionally, under the presence of a base such as

piridine.

The cyclic phosphates which contain a phosphorus atom as a constructing atom in the ring can be obtained by using a two or more valent, preferably, three or more valent (for example, three or four valent) compound containing hydroxyl groups [for example, 1,1,1-tris(hydroxymethyl)ethane and pentaerythritol, etc.] as the previously-described compound containing hydroxyl groups.

Further, the phosphites can be obtained, for example, by allowing to react phosphorus trichloride with an alcohol or a phenol which corresponds to a desired compound, optionally, under the presence of a base. Still further, phosphines (triphenyl phosphines, etc.) can be obtained, for example, by allowing to react phosphorus trichloride with a Grignard reagent (phenylmagnesium bromide, etc.) which corresponds to a desired compound.

It is to be noted that in the phosphorus compound represented by the previously-described formulae (1a), (1b), (1c) or (2), the melting point may be not always a range of 55-100°C, for example, it may be 50-160°C or so, preferably 55-105°C or so. In the case that the melting point is excessively low, a blocking resistance is apt to low and, contrarily, in the case that it is excessively high, it requires a time of period for melting, and it is anxious that productivity lowers and a base material deteriorates. The phosphorus compound (iia) may be employed solely or in combination of two or more kinds.

[(iiia) Diester compound]

In the previously-described diester compound (iiia), as an alkyl group which is a substituent on a benzene ring in hydroquinone, resorcinol, and catechol, there can be enumerated an alkyl group having a carbon number of 1-6 or so such as methyl, ethyl, propyl, isopropyl, butyl, isobutyl, s-butyl, t-butyl, pentyl, and hexyl groups. Of those, there is preferred an alkyl group having a carbon number of 1-4 or so such as methyl group.

Substituent number of an alkyl group is 0, or 1-4 (preferably 1-3, more preferably 2 or 3) in the benzene ring of hydroquinone or resorcinol. Further, substituent number of an alkyl group is 1-4, preferably 1-3, and more preferably 2 or 3 in the benzene ring of catechol. In the case that the substituent number of an alkyl group is plural, the alkyl group may be identical or different.

In the previously-described component (C), substituent groups other than the alkyl group may be bonded in the benzene ring. As such the substituent groups, there are enumerated, for example, a halogen atom such as fluorine, chlorine, and bromine; hydroxyl group; an alkoxy group (for example, a $C_{1-4}$alkoxy group) such as methoxy and ethoxy groups; an aryloxy group such as phenoxy group; an acyloxy group such as acetyloxy, propionyloxy, benzoyloxy groups; carboxyl group; alkoxy carbonyl group such as methoxy carbonyl group and ethoxy carbonyl group; cyano group; and nitro group, etc. Further, in the previously-described benzene ring, there may be condensed a 3-8 membered aromatic or nonaromatic carbon ring or heterocyclic ring such as cyclopentane ring, cyclohexane ring, benzene ring, and tetrahydrofuran ring.

As the previously-described (c1) hydroquinone or resorcinol in which benzene ring may be substituted by an alkyl group, there are exemplified, for example, hydroquinone, methylhydroquinone, 2,3-dimethylhydroquinone, 2,5-dimethylhydroquinone, 2,6-dimethylhydroquinone, trimethylhydroquinone, resorcinol, 4-methylresorcinol, 5-methylresorcinol, 2,5-dimethylresorcinol, 4,6-dimethylresorcinol, and 2,4,6-trimethylresorcinol, etc.

Further, as the catechol (c2) in which benzene ring is substituted by an alkyl group, there are enumerated, for example, 3-methylcatechol, 4-methylcatechol, and trimethylcatechol, etc.

The previously-described organic monobasic acid (D) includes an aliphatic, cycloaliphatic, aromatic, and heterocyclic monobasic acids (a carboxylic acid, sulphonic acid, etc.). Of those, an aliphatic, cycloaliphatic, and aromatic monocarboxylic acids are preferred.

As the aliphatic monocarboxylic acid, there are exemplified, for example, an aliphatic monocarboxylic acid having a carbon number of 1-6 or so (preferably, an aliphatic monocarboxylic acid having a carbon number of 1-4 or so, particularly, acetic acid) such as formic acid, acetic acid, propionic acid, butylic acid, isobutylic acid, valeric acid, isovaleric acid, and pivalic acid.

Further, as the cycloaliphatic monocarboxylic acid, there are enumerated a 3-8 membered cycloalkane carboxylic acid such as cyclopentane carboxylic acid and cyclohexane carboxylic acid.

As the aromatic carboxylic acid, there are included, for example, an aromatic carboxylic acid such as benzoic acid, toluic acid, and naphthoic acid which may have at least one substituent groups such as an alkyl group (an alkyl group having a carbon number of 1-4), an alkoxy group (an alkoxy group having a carbon number of 1-4), and a halogen atom (fluorine, chlorine, and bromine, etc.) in the aromatic ring.

As a typical example of the previously-described diester compound, there are exemplified hydroquinone diacetate (a melting point: 123°C), trimethylhydroquinone diacetate (a melting point: 109°C), 3,4,5-trimethylcatechol diacetate (a melting point: 120°C), etc.

The the above-described diester compound can be obtained by allowing to react, for example, the previously-described component (C) with the previously-described organic monobasic acid or reactive derivative thereof (for

example, an acid halide, an active ester, and an acid anhydride, etc.) (D) according to a publicly-known esterification method, optionally, under the presence of an acidic catalyst or a basic.

Further, a diester compound of 3,4,5-trimethylcatechol with the organic monobasic acid can be obtained by allowing to react 2,6,6-trimethylcyclohexene-2-en-1,4-dion(ketoisophorone) with an acylating agent (an acid anhydride, an acylhalide, and enolesters, etc.) corresponding to the previously-described organic monobasic acid under the presence of an acidic catalyst.

In the method, as the acidic catalyst, there can be employed any of a protonic acid and a Lewis acid. As the protonic acid, there are enumerated a super strong acid ($SbF_5$, $SbF_5$-HF, $SbF_5$-$FSO_3H$, and $SbF_5$-$CF_3SO_3H$, etc.), an organic or inorganic acid such as sulfuric acid, hydrochloric acid, phosphoric acid, fluoboric acid, p-toluene sulphonic acid, chloroacetic acid, picric acid, and a heteropolyacid, etc. Further, as the Lewis acid, there are exemplified, for example, $BF_3$, $BF_3O(C_2H_5)_2$, $AlCl_3$, and $FeCl_3$, etc.

Use amount of the catalysts is 0.001-20% by mol, and preferably 0.01-15% by mol or so.

Still further, as the previously-described catalyst, a solid acidic catalyst can be also employed. The solid acidic catalyst includes a strong acidic ion-exchange resin [for example, a styrene-divinylbenzene sulphonic acid-based ion-exchange resin such as Amberlist 15 (manufactured by Organo, Ltd.)]; a super strong acidic resin [for example, a fluorized sulphonic acid resin such as Naphion NR50 (manufactured by Aldrich, Ltd.)]; an aluminosilicate such as a zeolite or a silica-alumina, or an inorganic oxide (including a composite oxide); and a solid acidic catalyst in which the previously-described protonic acids or Lewis acids are carried on a carrier (for example, graphite, a metal sulphate, a metal chloride, an activated carbon, an ion-exchange resin, a zeolite, an alumina, a silica, a silica-alumina, silica-titania, silica-zirconia, titania-zirconia, and kaolin, etc., particularly, a porous carrier). Use amount of the solid acidic catalyst is 0.1-1000% by weight, and preferably 5-100% by weight or so based on the ketoisophorone.

Use amount of the previously-described acylation agent is, for example, not less than 2 mol, and preferably 3-10 mol based on 1 mol of the ketoisophorone. The acylation agent may be also employed as a solvent.

The reaction of the ketoisophorone with the acylation agent may be also carried out in the absence of a solvent, or may be also carried out in the presence of a solvent. As the solvent, there are enumerated hydrocarbons such as hexane, octane, octene, cyclohexane, cyclohexene, benzene, toluene, and xylene; carboxylic acids such as acetic acid and propionic acid; halogenated hydrocarbons such as methylene chloride, 1,2-dichloroethane, chlorobenzene, and dichlorobenzene; ethers such as diethylether, dibutylether, tetrahydrofran, dioxane, and ethyleneglycol dimethylether; ketones such as acetone and methylethyl ketone; and amides such as N,N-dimethylformamide and N-methylpyrrolidone, etc.

Reaction temperature is, for example, 0-150°C, and preferably 10-100°C or so in the reaction of the ketoisophorone with the acylation agent. The diester compound produced can be refined by a separation means of filtration, concentration, extraction, recrystallization, and a column chromatography which are a usual separation means for refining.

It is to be noted that 3,4,5-trimethyl catechol can be obtained by allowing to react thus-obtained diester compound of 3,4,5-trimethyl catechol with the organic monobasic acid with water under the presence of an acid, for example, the previously-described protonic acid and the solid acidic catalyst. In the case, water is usually employed in an excessive amount with respect to the diester compound. Reaction temperature is 40-100°C or so in the hydrolysis reaction. 3,4,5-trimethyl catechol produced can be isolated by, for example, the previously-described refining means for separation.

Although melting point of the diester compound (iiia) may be, for example, even 50-160°C or so, it is preferably 90-130°C or so.

In the case that the melting point of the diester compound (iiia) is too low, a blocking resistance is apt to lower and, contrarily, in the case of being too high, it requires a long time for melting, resulting in that it is afraid that productivity lowers and a base material is deteriorated. The diester compound (iiia) may be employed solely or in combination of two or more kinds.

Since the thermoplastic resin composition 1 of the present invention contains a specified solid plasticizer, tackiness is produced at a higher temperature, and a thermoplastic resin can be readily plasticized by melting at a sticking temperature of a label. Accordingly, even though a thermally-and pressure-sensitive adhesive sheet obtained using the plasticizer is stored for a long time of period, a blocking is not caused. Further, in the case that a thermally-and pressure-sensitive adhesive sheet is prepared by coating the thermoplastic resin composition as a water-based composition onto a base material, it can be thermally-dried at a higher temperature, resulting in that productivity of the sheet can be improved.

In the thermoplastic resin composition 2 of the present invention, at least two kinds of compounds are exemplified in combination from 4 kinds of compounds groups of the previously-described multiester compound (a first group of compounds) (i), phosphorus compound (a second group of compounds) (iia), dioxybenzene derivative (a third group of compounds) (iii), and dicyclohexylphthalate (a fourth group of compounds) (iv) which are a solid plasticizer.

As the multiester compound (i) and the phosphorus compound (a second group of compounds) (iia), there are

exemplified the same multiester compound (i) and phosphorus compound (iia) as in the previously-described thermoplastic resin composition 1.

The previously-described dioxybenzene derivative (iii) includes hydroquinone, resorcinol, catechol, and derivatives thereof. As the derivatives, there are enumerated an alkyl-substituted compound in which benzene ring is substituted by 1-4 pieces of an alkyl group such as methyl group, a mono- or diether compound (for example, a mono- or dialkylether compound such as methylether, and a mono- or diarylether compound such as phenylether) in which at least one hydroxyl group of two hydroxyl groups is etherized, and a mono- or diester compound (for example, a mono- or diester compound of an aliphatic carboxylic acid such as an acetate, a mono- or diester compound of an aromatic carboxylic acid such as a benzoate) in which at least one hydroxyl group of two hydroxyl groups is esterified, etc. Benzene ring in the ether compound and ester compound may be substituted by a substituent such as an alkyl group which includes methyl group, etc.

A preferred dioxybenzene derivative includes the previously-described hydroquinone or resorcinol (iiia) (A) (A1) in which the benzene ring may be substituted by an alkyl group, or catechol (A2) in which the benzene ring is substituted by an alkyl group, and the diester compound (B) with the organic monobasic acid.

As combination modes of the previously-described 4 kinds of the compounds (i)-(iv), there are enumerated (1) a combination of the multiester compound (i) with the phosphorus compound (iia), (2) a combination of the multiester compound (i) with the dioxybenzene derivative (iii), (3) a combination of the multiester compound (i) with the dicyclohexylphthalate (iv), (4) a combination of the phosphorus compound (iia) with the dioxybenzene derivative (iii), (5) a combination of the phosphorus compound (iia) with the dicyclohexylphthalate (iv), (6) a combination of the dioxybenzene derivative (iii) with the dicyclohexylphthalate (iv), (7) a combination of the multiester compound (i) with the phosphorus compound (iia) and the dioxybenzene derivative (iii), (8) a combination of the multiester compound (i) with the dioxybenzene derivative (iii) and the dicyclohexylphthalate (iv), (9) a combination of the phosphorus compound (iia) with the dioxybenzene derivative (iii) and the dicyclohexylphthalate (iv), (10) a combination of the multiester compound (i) with the phosphorus compound (iia), the dioxybenzene derivative (iii), and the dicyclohexylphthalate (iv). Of those, there is preferred a combination including compounds contained in the at least two kinds of compounds group of 3 kinds of compounds group of the previously-described multiester compound (i), the phosphorus compound (iia), and the dioxybenzene derivative (iii).

There is not particularly limited a mixing proportion of a compound contained in one kind of compounds group in the previously-described 4 kinds of compounds group with a compound contained in other compounds group and, for example, the former compound/the latter compound (weight ratio) is 1/99-99/1, preferably 5/95-95/5, more preferably 10/90-90/10, particularly, 20/80-80/20 (for example, 30/70-70/30) or so.

In the thermoplastic resin composition 3 of the present invention, the previously-described multiester compound (i) is employed in combination with the phosphorus compound (ii) as a solid plasticizer. The multiester compound (i) is the same multiester compound as in the previously-described thermoplastic resin composition 1. The phosphorus compound (ii) includes phosphates, phosphites, and phosphines. As a preferred phosphorus compound (ii), there is enumerated the phosphorus compound (iia) to be employed in the previously-described thermoplastic resin composition 1. The phosphorus compound (ii) includes, for example, triphenyl phosphate and tri(p-t-butylphenyl)phosphate, etc. The multiester compound (i) and the phosphorus compound (ii) may be employed solely or in combination of two or more kinds, respectively.

Proportion of the multiester compound (i) with respect to the phosphorus compound (ii) is not particularly limited and, for example, the former compound/the latter compound (weight ratio) is 1/99-99/1, preferably 5/95-95/5, more preferably 10/90-90/10, particularly, 20/80-80/20 (for example, 30/70-70/30) or so.

Since the thermoplastic resin compositions 2 and 3 of the present invention contain a plurality of specific solid plasticizers as described hereinabove, and tackiness is produced at a high temperature, it can be readily plasticized by melting at a sticking temperature of a label, and recrystallization is delayed in the solid plasticizer, resulting in that an excellent transparency and adhesive property are maintained over a long time of period. For that reason, a thermally- and pressure-sensitive adhesive sheet obtained by employing the composition can be thermally dried at a high temperature, and even though it is stored for a long time of period, blocking is not caused and, moreover, a high transparency and adhesive strength can be maintained over a long time of period.

In the thermoplastic resin composition 4 of the present invention, there is employed a multiester compound of a polybasic acid which does not cause a morphological change to a tissue system of testes in a rat when it is orally given continuously for 7 days to the rat in a dose of 1000 mg/kg.

The above-described morphological change means, for example, a bilateral, unilateral, circumscribed, or wide range of denaturation and atrophia in semiferous tubule and spermatid. The presence or the absence of such the morphological change can be judged by observing a specimen obtained by HE-dyeing after slicing paraffin-encapsulated testes of a rat to which a substance to be examined was given into a thin layer using a microscope.

A particularly preferred solid plasticizer includes an ester compound of a polybasic acid which does not show a significant difference in a body weight change of a rat, a weight change of testes, a weight change in an upper portion

of testes, and a weight change of liver compared to nongiven references when it is given by continuous oral administration for 7 days to a rat in a dose of 2000 mg/kg.

As the ester compound of a polybasic acid, for example, if it is a compound having the above-described properties, there is enumerated the previously-exemplified multiester compound (i).

A preferred ester compound of a polybasic acid includes a diester phthalate, etc. As the ester compound of a polybasic acid having the previously-described properties, bis(cis-3,3,5-trimethylcyclohexyl)phthalate, etc. is enumerated.

The thermoplastic resin composition 4 of the present invention includes a compound having an exceedingly high safeness for testes of an animal as a solid plasticizer as described hereinabove. For that reason, a thermally- and pressure-sensitive adhesive and a thermally-and pressure-sensitive adhesive sheet in which the solid plasticizer are employed is remarkably excellent in safeness for human, more specifically, a genital organ of a male.

In the thermoplastic resin composition of the present invention, the content of the solid plasticizer is, for example, 30-1000 parts by weight, preferably 100-1000 parts by weight, more preferably 150-900 parts by weight, and particularly, 200-800 parts by weight based on 100 parts by weight of the thermoplastic resin.

In the case that the content of the solid plasticizer is less than 30 parts by weight, sufficient thermally-sensitive tackiness is not occasionally produced in heating and, in the case of more than 1000 parts by weight, a sufficient adhesive strength is not occasionally shown because of a lowered cohesive force.

In the thermoplastic resin composition of the present invention, there may be optionally employed other solid plasticizers other than the above-described solid plasticizers within a range in which an effect in the present invention is not deteriorated. As the other solid plasticizer which may be optionally employed, for example, there are phthalates such as diphenyl phthalate, dihexnyl phthalate, diisohexenyl phthalate, dicyclohexenyl phthalate, and dinaphthyl phthalate; isophthalates such as dimethyl isophthalate, dibenzyl isophthalate, and dicyclohexenyl isophthalate; terephthalates such as dimethyl terephthalate, dibenzyl terephthalate, and dicyclohexenyl terephthalate; phosphorus compounds such as triphenyl phosphate and tri(p-t-butylphenyl)phosphate; sucrose benzoate, ethyleneglycol dibenzoate, trimethylolethane tribenzoate, tribenzoic glyceride, tetrabenzoic pentaerythrit, sucrose octaacetate, tricyclohexyl citrate, N-cyclohexyl-p-toluene-sulphonic amide, urea derivatives, and paraffin chlorides, etc.

The thermoplastic resin composition of the present invention may optionally contain a tackifier. As the tackifier to be employed, there can be enumerated a terpene resin, an aliphatic-based petroleum resin, an aromatic-based petroleum resin, a coumarone-indene resin, a styrene-based resin, a phenol resin, terpene-phenol resin, a rosin derivative (a rosin, a polymerized rosin, a hydrogenated rosin, and an ester thereof with glycerine, pentaerythritol, etc., and a resin dimer acid, etc.), etc. The tackifiers may be employed solely or in combination of two or more kinds.

The content of the tackifiers is not particularly limited, and it can be appropriately selected according to a combination of the thermoplastic resin with the previously-described solid plasticizer, and it is usually 10-600 parts by weight, and preferably 20-500 parts by weight based on 100 parts by weight of the thermoplastic resin.

In the thermoplastic resin composition of the present invention, in addition to the above-described tackifiers, there may be also added usual additives, for example, an auxiliary for film-preparation, a defoaming agent, an improver for coating, a thickener, a lubricant, a stabilizer (an anti-oxidant, an ultraviolet ray absorbent, and thermal stabilizer, etc.), an antistatic agent, an anti-blocking agent (inorganic particles and organic particles, etc.), etc. within a range in which properties are not deteriorated.

As the auxiliary for film-preparation, there are enumerated glycol ethers and glycol esters such as ethyleneglycol-n-butylether, diethyleneglycol-n-butylether, propyleneglycol-n-butylether, ethyleneglycol-phenylether, propyleneglycol-phenylether, ethyleneglycolmono-2-ethylhexylether, dipropyleneglycol methyletheracetate, propyleneglycol diacetate, and 2,2,4-trimethyl-1,3-pentanediol diisobutylate; plasticizers such as dibutyl phthalate, dioctyl phthalate, and dioctyl sebacate; organic solvents such as benzylalcohol, toluene, acetone, methanol, ethanol, propanol, isopropyl alcohol, butanol, hexane, and cyclohexane, etc. The auxiliary for film-preparation may be employed solely or in combination of two or more kinds.

The thermoplastic resin composition of the present invention may be also changed to a water-based emulsion in which the thermoplastic resin is dispersed into water by employing a dispersant. The dispersant to be employed is not particularly limited, and there can be employed any one of conventionally and publicly-known anionic-based and nonionic-based dispersants, etc.

As the anionic-based dispersants, there can be enumerated a salt of a carboxylic acid, a salt of sulfuric acid, a salt of sulphonic acid, and a salt of phosphoric acid, etc. and, of those, there is preferred an ammonium salt of a carboxylic acid.

As the nonionic-based dispersants, there can be enumerated a polyethyleneglycol-type one and a polyvalent alcohol type one.

As a method for the preparation of the above-described water-based composition, a variety of conventional publicly known methods can be also applied. For example, as the above-described methods for the preparation, there are enumerated a method in which the respective components constructing the thermoplastic resin composition of the

present invention are dispersed into water after premixing, a method in which the solid plasticizer is dispersed in an emulsion of the thermoplastic resin or an emulsion of the tackifier, followed by mixing the emulsions, and a method in which the solid plasticizer is dispersed to prepare a dispersed liquid, followed by mixing the dispersed liquid with an emulsion of the thermoplastic resin and an emulsion of the tackifier. As a method for dispersing the solid plasticizer into the above-described emulsions or water, there can be exemplified a method for dispersing a molten solid plasticizer, a method for dispersing while finely-powdering the solid plasticizer, and a method in which a finely-powdered solid plasticizer is dispersed, etc.

It is to be noted that the emulsion of the thermoplastic resin may be also prepared by an emulsion polymerization and, further it may be also prepared by emulsifying optionally using an additive after obtaining a polymer by other methods except the emulsion polymerization. For example, the emulsion of the thermoplastic resin can be prepared by emulsifying while adding water after adding an additive to an organic solution containing a polymer polymerized under the presence of an organic solvent (an alcohol, etc. such as isopropyl alcohol), and then removing the organic solvent.

In the solid plasticizer in the water-based composition, average particle diameter is preferably 0.5-20 microns or so, and more preferably 1-15 microns or so. In the case that the average particle diameter is less than 0.5 micron, it is anxious that an anti-blocking property occasionally lowers or productivity lowers because of requiring a long period. In the case that the average particle diameter is more than 20 microns, a coating surface become roughened, and it is anxious that a quality of a label lowers.

In the thermoplastic resin composition 5 of the present invention, a glass transition temperature of the thermoplastic resin is -10 to 25°C, and the thermoplastic resin is dispersed in water as described hereinabove and, moreover, the solid plasticizer is a phosphorus compound. The phosphorus compound includes the previously-described phosphorus compound (ii), and preferably the previously-described phosphorus compound (iia). A thermally-and pressure-sensitive adhesive sheet obtained from such the thermoplastic resin composition is also excellent in an anti-blocking property, and an adhesive strength is also high.

The above-described thermoplastic resin composition of the present invention can be employed as a thermally-and pressure-sensitive adhesive (thermally-and pressure-sensitive adhesive 1), and a thermally-and pressure-sensitive adhesive sheet (thermally-and pressure-sensitive adhesive sheet 1) is obtained by forming a layer (a pressure-sensitive adhesive layer) of a thermally-and pressure-sensitive adhesive onto at least one surface of a base material. The layer of a thermally-and pressure-sensitive adhesive can be formed by coating after dissolving a thermally-and pressure-sensitive adhesive in an organic solvent, or by coating after thermally-melting it. Further, a thermally-and pressure sensitive-adhesive sheet is prepared by coating a water-based composition in which the thermoplastic resin composition is dissolved or dispersed in water onto at least one surface of a base material, and by drying. As a method for coating, there can be enumerated methods in which there are employed a roll coater, an air knife coater, a blade coater, a rod coater, a bar coater, a comma coater, a gravure coated, and a silkscreen coater, etc.

As the base material for forming the the previously-described pressure sensitive adhesive layer, there are enumerated papers, coated papers, plastic films, wooden materials, clothes, nonwoven fabrics, and metals, etc. As a polymer constructing the plastic films, there are enumerated a polyolefine such as a polyethylene and polyethylene, an ethylene-vinyl acetate copolymer, a polyvinyl chloride, a polyvinyl chloride-vinyl acetate copolymer, a poly(meth)acrylate, a polystyrene, a polyvinyl alcohol, an ethylene-vinyl alcohol copolymer, a cellulose derivative such as a cellulose acetate, a polyester (a polyalkylene terephthalate such as a polyethylene terephthalate and a polybutylene terephthalate, a polyalkylene naphthalate such as a polyethylene naphthalate and a polybutylene naphthalate), a polycarbonate, a polyamide (a polyamide 6, a polyamide 6/6, a polyamide 6/10, and a polyamide 6/12, etc.), a polyester amide, a polyether, a polyimide, a polyamideimide, and a polyetherester, etc., a copolymer, blended product, and crosslinked product thereof may be also employed.

[Thermally-and pressure-sensitive adhesive 2]

The thermally-and pressure-sensitive adhesive 2 of the present invention contains the thermoplastic resin and the solid plasticizer and, moreover, the thermoplastic resin is comprised an epoxy compound (E) and a polymer (F) of a polymerizable unsaturated compound.

[Epoxy compound (E)]

The epoxy compound (E) includes, for example, a glycidyl ether type, glycidyl ester type, glycidyl amine type, alicyclic, linear chain aliphatic, and heterocyclic epoxy resins. Although the epoxy compound (E) may even have at least one epoxy group in the molecule, usually, there is employed a compound having at least two epoxy groups. The epoxy compound (E) can be employed solely or in combination of two or more kinds.

The glycidyl ether type epoxy resin includes a variety of epoxy resins obtained by a reaction of a compound having hydroxyl group with epichlorohydrin. As the glycidyl ether type epoxy resin, there can be exemplified, for example, an alkyleneglycol diglycidylether (for example, an ethyleneglycol diglycidylether, a trimethyleneglycol diglycidylether, a propyleneglycol diglycidylether, 1,3-butanediol diglycidylether, and a tetramethyleneglycol diglycidylether, etc.), a polyoxyalkyleneglycol diglycidylether (for example, diethyleneglycol diglycidylether, triethyleneglycol diglycidylether, a polyethyleneglycol diglycidylether, and a dipropyleneglycol diglycidylether, tripropyleneglycol diglycidylether, and a polypropyleneglycol diglycidylether, etc.), a polyglycidylether of an aliphatic polyvalent alcohol (for example, trimethylolpropane triglycidylether and glycerine triglycidylether, etc.), a bisphenol type epoxy resin (for example, a bisphenol A type epoxy resin, a bisphenol F type epoxy resin, and a bisphenol AD type epoxy resin, etc.), and a novolak type epoxy resin (a phenol novolak type epoxy resin and a cresol novolak type epoxy resin, etc.), etc.

The glycidyl ester type epoxy resin includes a variety of epoxy resins obtained by a reaction of a carboxylic acid with epichlorohydrin and, for example, there are included a polyglycidylester of an aliphatic polycarboxylic acid (for example, a diglycidyl ester of an aliphatic dicarboxylic acid such as diglycidyl adipate, diglycidyl sebacate, and a diglycidyl ester of dimer acid,), a polyglycidylester of an aromatic polycarboxylic acid (for example, a diglycidylester of an aromatic dicarboxylic acid such as a diglycidyl phthalate, a diglycidyl tetrahydrophthalate, a diglycidyl hexahydrophthalate, a diglycidyl dimethylphthalate, and a diglycidyl dimethylhexahydrophthalate, etc.), etc.

The glycidyl amine type epoxy resin includes a variety of epoxy resins obtained by a reaction of a primary amine or a secondary amine with epichlorohydrin and, for example, there are exemplified N,N-diglycidyl aniline, diglycidyl toluidine, triglycidyl-p-aminophenol, triglycidyl-m-aminophenol, tetraglycidylamino diphenylmethane, tetraglycidyl metaxylylenediamine, tetraglycidyl-1,3-bis(aminomethyl) cyclohexane, and tetraglycidyl-1,4-bis(aminomethyl)cyclohexane, etc.

As the alicyclic type epoxy resin, there are included, for example, 1-epoxyethyl-3,4-epoxycyclohexane, an alicyclic diepoxyacetal, and an alicyclic diepoxyadipate, etc. and, as the heterocyclic epoxy resin, there are included, for example, triglycidyl isocyanate and a hydantoin type epoxy resin (for example, diglycidyl hydantoin and diglycidyl dimethylhydantoin, etc.), etc.

A preferred epoxy compound (E) includes, for example, a glycidylether type epoxy resin (for example, a bisphenol type epoxy resin such as a bisphenol A type epoxy resin) and a glycidylester type epoxy resin.

[Polymer (F)]

As a polymerizable unsaturated monomer for forming the polymer (F), there are included, for example, a (meth)acrylic monomer, a monomer having a hydrolyzable silyl group, unsaturated carboxylic acids, aromatic vinyls, vinyl esters, vinyls containing halogens, vinylethers (for example, vinylethylether, etc.), vinyl ketones (for example, methylvinyl ketone, etc.),a vinyl heterocyclic compound (for example, an N-vinyl compound such as N-vinylpyrroridone and N-vinylmidazole and, vinylpiridine, etc.), and an olefine-based monomer (for example, ethylene and propylene, etc.), and an allyl compound (for example, an allyl ester such as allyl acetate), etc. The polymerizable unsaturated monomer can be employed solely or in combination of two or more kinds.

The (meth)acrylic monomer includes, for example, (meth)acrylates, (meth)acrylamides, and (meth)acrylonitrile, etc.

As the (meth)acrylates, there are included, for example, alkyl(meth)acrylates [for example, $C_{1-18}$ alkyl(meth)acrylates such as methyl(meth)acrylate, ethyl(meth)acrylate, propyl(meth) acrylate, isopropyl(meth) acrylate, butyl(meth)acrylate, isobutyl(meth)acrylate, t-butyl(meth)acrylate, hexyl(meth) acrylate, octyl(meth)acrylate, 2-ethylhexyl(meth)acrylate, and lauryl(meth)acrylate], cycloalkyl(meth)acrylates [for example, cyclohexyl(meth)acrylate, etc.], aryl(meth)acrylates [for example, phenyl(meth)acrylate, etc.], aralkyl(meth)acrylates [for example, benzyl(meth)acrylate, etc.], hydroxyalkyl(meth)acrylates [for example, a hydroxy-$C_{2-4}$-alkyl(meth)acrylate such as 2-hydroxyethyl(meth)acrylate and 2-hydroxypropyl(meth)acrylate, etc.], glycidyl(meth)acrylate, and dialkylaminoalkyl(meth)acrylate [for example, a di-$C_{1-4}$alkylamino-$C_2$-$_4$alkyl(meth)acrylate such as 2-(dimethylamino)ethyl(meth)acrylate and 2-(diethylamino)ethyl (meth)acrylate], etc.

As the (meth)acrylamides, there are included, for example, (meth)acrylamide, hydroxyalkyl(meth)acrylamide [for example, N-hydroxy-$C_{1-4}$alkyl(meth)acrylamide such as N-methylol(meth) acrylamide], alkoxyalkyl(meth)acrylamide [for example, N-$C_{1-4}$alkoxy-$C_{1-4}$alkyl(meth)acrylamide such as N-methoxymethyl (meth)acrylamide, etc.], and diacetone(meth)acrylamide, etc.

A preferred (meth)acrylic monomer includes, for example, a (meth)acrylate [for example, a $C_{1-18}$(meth)acrylate, a hydroxy-$C_2$-$_4$alkyl(meth)acrylate, glycidyl(meth)acrylate, and a di-$C_{1-}$ $_4$alkylamino-$C_{2-4}$alkyl(meth)acrylate, etc.], and (meth)acrylamides, etc. More preferably, there are included a $C_{2-10}$alkylacrylate, a $C_{1-6}$(meth)acrylate, a hydroxy-$C_{2-3}$alkyl(meth)acrylate, glycidyl(meth)acrylate, a di-$C_{1-3}$alkylamino-$C_{2-3}$alkyl(meth)acrylate, etc.

The monomer having a hydrolyzable silyl group includes a (meth)acrylic monomer and a monomer having vinyl group and an alkenyl group, etc. As the (meth)acrylic monomer having a hydrolyzable silyl group, there can be exemplified, for example, 2-(meth)acryloxyethyl trichlorosilane, 3-(meth)acryloxypropyl trichlorosilane, 2-(meth)acryloxyethylmethyldichlorosilane, 2-(meth)acryloxyethyldimethyl chlorosilane, 2-(meth)acryloxyethyl trimethoxysilane, 2-(meth)acryloxyethyltriethoxysilane, 3-(meth) acryloxypropyl trimethoxysilane, 3-(meth) acryloxypropyltriethoxysilane, and 3-(meth)acryloxypropyltris(2-methoxyethoxy)silane, etc.

As the monomer having a hydrolyzable silyl group and vinyl group or an alkenyl group, there can be exemplified, for example, vinyltrichlorosilane, vinylmethyldichlorosilane, isopropenyltrichlorosilane, and isopropenyldimethylchlorosilane; vinyltrimethoxysilane, vinyltriethoxysilane, vinyldimethoxymethylsilane, vinyldiethoxymethylsilane, isopropenyltrimethoxysilane, isopropenyltriethoxysilane, and vinyltris(2-methoxyethoxy)silane, etc.; allyltrichlorosilane and allylmethyldichlorosilane, etc.; allyltrimethoxysilane, vinylphenyltrimethoxysilane, isopropenylphenyl trimethoxysilane, etc.; 3-[2-(allyloxycarbonyl)phenylcarbonyloxy]propyl trimethoxysilane and 3-[2-(isopropenylmethyloxycarbonyl) phenylcarbonyloxy]propyltrimethoxysilane, etc.; 3-(vinylphenylamino )propyltrimethoxysilane and 3-(vinylphenylamino)propyltriethoxysilane, etc.; 3-[2-(N-vinylphenylmethylamino)ethylamino]propyltrimethoxysilane and 3-[2-(N-isopropenylphenylmethylamino)ethylamino]propyl trimethoxysilane, etc.; 2-(vinyloxy)ethyltrimethoxysilane, 3-(vinyloxy)propyl trimethoxysilane, 4- (vinyloxy)butyl triethoxysilane, 2-(isopropenyloxy)ethyl trimethoxysilane, etc.; 3-(allyloxy)propyl trimethoxysilane, 10-(allyloxycarbonyl)decyl trimethoxysilane, 3-(isopropenylmethoxy)propyl trimethoxysilane, etc.; 3-[(meth)acryloxyethoxy]propyl trimethoxysilane, 3-[(meth)acryloxyethoxy]propyldimethoxymethylsilane, etc.; divinyldimethoxysilane, divinyldiethoxysilane, and divinyldi(β-methoxyethoxy)silane, etc.

As the unsaturated carboxylic acids, there can be included, for example, an unsaturated monocarboxylic acid [for example, an ethylenic unsaturated monocarboxylic acid such as a (meth)acrylic acid and crotonic acid] and an unsaturated polyvalent carboxylic acid [for example, an ethylenic unsaturated polyvalent carboxylic acid such as maleic acid, fumaric acid, and itaconic acid, or an anhydride thereof (maleic anhydride, etc.) or esters thereof (for example, a monoalkylester of a bifunctional carboxylic acid such as monomethyl maleate and monobutyl maleate, etc.)], etc. As a preferred unsaturated carboxylic acids, there can be included, for example, the monocarboxylic acid such as (meth)acrylic acid, the unsaturated polyvalent carboxylic acid such as maleic acid, the anhydride thereof, or the esters, etc.

As the aromatic vinyls, there can be included, for example, styrene, α-methylstyrene, and vinyl toluene, etc., and styrene is often employed.

As the vinyl esters, there can be included, for example, vinyl acetate, vinyl propionate, and vinyl versate (VeoVa, etc.), etc.

As the vinyls containing halogens, there can be included, for example, vinylchloride and vinylidenechloride, etc.

As a preferred polymer (F), there can be included a copolymer in which a hard monomer [for example, a monomer component having a glass transition temperature of 80 to 120°C (particularly, 90 to 105°C) or so such as methyl(meth)acrylate and styrene, by which a homopolymer is formed.], a soft monomer [for example, a monomer component having a glass transition temperature of -85 to -10°C (particularly, -85 to -20°C) or so such as a $C_{2-10}$ alkyl acrylate, by which a homopolymer is formed.], and optionally, a monomer [for example, a dialkylamino-alkyl(meth)acrylate, etc.] component having an ionic functional group such as carboxylic group and amino group are constructing monomer components. The copolymer is constructed by following monomers (a hard monomer, a soft monomer, and a monomer containing an ionic group).

1) Hard monomer

10-90% by weight [for example, 15-85% by weight, preferably 20-80% by weight, more preferably 25-75% by weight, and particularly, 30-70% by weight].

2) Soft monomer

10-90% by weight [for example, 15-85% by weight, preferably 20-80% by weight, more preferably 25-75% by weight, and particularly, 30-70% by weight].

3) Monomer containing an ionic group

0-80% by weight [for example, 0-70% by weight, preferably 0-60% by weight, more preferably 0-50% by weight, and particularly, 0-40% by weight].

Further, as the polymer (F) in the present invention, there is particularly preferred an acrylic-based polymer containing the above-described (meth)acrylic-based monomer as a monomer component.

Proportion of the epoxy compound (E) with respect to the polymer (F) can be selected from, for example, a range of the former/the latter=0.5/99.5-70/30 (% by weight) [for example, 0.5/99.5-50/50 (% by weight)] or so. Preferred proportion is, for example, the former/the latter=0.5/99.5-40/60 (% by weight) [for example, 0.5/99.5-30/70 (% by weight)], more preferably 1/99-20/80 (% by weight) [for example, 1/99-15/85 (% by weight)] and, particularly, 2/98-10/90 (% by weight)] or so.

Although the thermoplastic resin composition in the present invention may be a mixture of the epoxy compound (E) with the polymer (F), there is preferred a form in which any one of the epoxy compound (E) and the polymer (F) is dispersed in a particle state in another component, particularly, there is preferred a form in which the epoxy compound (E) is dispersed in a particle state in the polymer (F) which is a matrix. In a dispersion in which the epoxy compound (E) is dispersed in a particle state, an average particle diameter can be selected from a range of, for example, 0.001-5 μm (for example, 0.005-2 μm), preferably 0.01-2 μm (for example, 0.01-1.5 μm), and more preferably 0.01-1 μm or so.

The dispersion in which the epoxy compound (E) is dispersed in a particle state may be also prepared by mixing the polymer (F) while maintaining the epoxy compound (E) in a form of a particle state. As a preferred method for preparing, for example, there can be exemplified a method in which an emulsion of the epoxy compound (E) is mixed with an emulsion of the polymer (F) and a method in which a polymerizable unsaturated monomer is prepared by an emulsion polymerization under the presence of an emulsion containing polymer particles constructed by the epoxy compound (E), etc. The emulsion polymerization may be a seed-polymerization in which particles of the polymer particles containing the epoxy compound (E) are a seed. Further, the particles of the polymer containing the epoxy compound (E) may be constructed by not only the epoxy compound (E) alone but also the epoxy compound (E) and the polymer (F).

The emulsion polymerization can be conducted according to usual polymerization methods. The emulsion polymerization can be conducted by, for example, a method (a) in which there is emulsified a mixed solution of the epoxy compound (E) with the polymerizable unsaturated monomer, or a method (b) in which there is emulsified a mixed solution of the polymerizable unsaturated monomer or a mixed solution of the polymerizable unsaturated monomer with the epoxy compound (E) under the presence of the polymer particles constructed by the epoxy compound (E). The mixed solution of the epoxy compound (E) with the polymerizable unsaturated monomer and the polymerizable unsaturated monomer may be employed as a pre-emulsion which is in advance emulsified. The mixed solution or the polymerizable unsaturated monomer may be polymerized by feeding in lump, or may be polymerized by partially feeding and then feeding the residue. The mixed solution and the polymerizable unsaturated monomer may be added continuously or intermittently into an emulsion polymerization system by dropwise addition, etc. Further, in the emulsion polymerization, the methods may be conducted in combination.

Still further, in the emulsion polymerization, there may be also employed a usual method such as a multi-stage polymerization method. The multi-stage polymerization can be conducted by continuously or intermittently emulsifying the polymerizable unsaturated monomer or a mixed solution of the polymerizable unsaturated monomer with the epoxy compound (E) under the presence of polymer particles containing at least the epoxy compound (E) or polymer particles produced by an emulsion polymerization of a mixed solution of the epoxy compound (E) with the polymerizable unsaturated monomer. In the methods, the polymerizable unsaturated monomer or a mixed solution thereof to be added can be employed in a different composition at an initial period or a latter period in the emulsion polymerization. In the mixed solution to be added, proportion of the polymerizable unsaturated monomer is more at the latter period than at the initial period and, usually, the polymerizable unsaturated monomer is employed as a solution at the latter period. It is to be noted that, of the epoxy compound (E) and the polymerizable unsaturated monomer, although an unsaturated carboxylic acid and a compound having an amino group may be also coexisted each other in the emulsion polymerization system, it is more advantageous that the both are not coexisted in order to suppress a reaction. For that reason, in the case that the multi-stage polymerization is conducted using the unsaturated carboxylic acid and the compound having an amino group as a polymerizable unsaturated monomer, particles containing the epoxy compound (E) are often produced at the initial period of the emulsion polymerization, and then the polymerizable unsaturated monomers containing an unsaturated carboxylic acid and a compound having an amino group are often polymerized at the latter period of the emulsion polymerization.

The emulsion polymerization can be conducted using a polymerization initiator. As the polymerization initiator, there are enumerated a persulphate such as potassium persulphate, sodium persulphate, and ammonium persulphate, and a water-soluble polymerization initiator such as hydrogen peroxide, and there may be also employed a water-soluble redox-type polymerization initiator system. Further, in order to adjust a molecular weight of the polymer (F), there may be also employed a chain transfer agent, for example, alcohols such as catechol, thiols, and mercaptans, etc.

Polymerization temperature is, for example, 40-100°C, preferably 50-90°C, and more preferably 60-80°C or so depending upon the kind of the polymerization initiator.

In the preparation of an emulsion [for example, an emulsion of the epoxy compound (E), etc.] and the emulsion polymerization, there can be employed an emulsifier, for example, a surface active agent such as an anionic surface active agent (for example, sodium dodecylbenzene sulphonate, sodium alkyldiphenylether disulphonate, sodium alkylnaphthalene sulphonate, sodium laurylsulphate, sodium polyoxyethylene alkylether sulphate, sodium polyoxyethylene alkylphenylether sulphate, and sodium dialkylsulphosuccinate, etc.), a nonionic surface active agent (for example, a polyoxyethylene laurylether, a polyoxyethylene oleylphenylether, a polyoxyethylene nonylphenylether, a polyoxyethylene-polyoxypropylene block copolymer, etc.), and a protecting colloid such as a polyvinyl alcohol and a water-soluble polymer. Use amount of the emulsifier is, for example, 0.1-20% by weight, preferably 0.5-10% by weight, and more preferably 1-8% by weight or so based on total amount of the epoxy compound (E) and the polymerizable unsaturated monomer.

Polymer particles in a dispersion (a water-based polymer emulsion) obtained by the emulsion polymerization may be a homogeneous structure, and a different phase structure [for example, a core-shell structure and a micro domain structure, etc.]. As the core-shell structure, often, a core phase is the epoxy compound (E) and a shell phase is the polymer (F). Average particle diameter of the polymer particles is selected in a range in which a dispersion stability and adhesion are not deteriorated, for example, 0.01-5 μm (for example, 0.01-1 μm), preferably 0.01-2 μm, and more preferably 0.01-1 μm.

It is to be noted that pH in the emulsion may be adjusted, and pH may be, for example, not less than 5 (for example, 5-10), and preferably 6-9 or so which is a neutral range to a weak alkali range.

In the thermally-and pressure-sensitive adhesive 2 of the present invention, the content of the thermoplastic resin is, for example, 15-200 parts by weight, preferably 18-150 parts by weight, and more preferably 20-100 parts by weight or so based on 100 parts by weight of the solid plasticizer.

In the case that the content of the thermoplastic resin is less than 15 parts by weight, a cohesive force lowers, resulting in that a sufficient adhesive strength is not occasionally produced and, in the case of more than 200 parts by weight, sufficient tackiness is not occasionally produced during heating.

In the thermally-and pressure-sensitive adhesive 2 of the present invention, particularly, a thermally- and pressure-sensitive adhesive containing a polymer which is a thermoplastic resin in which the epoxy compound (E) is polymerized as a core, and the polymer (F) is a shell, tackiness is firstly produced due to plasticizing of the above-described polymer (F) by the solid plasticizer, followed by sticking to a body to be stuck, and then, firmly adhering by the epoxy compound (E), resulting in that an excellent adhesive force, holding power, and water resistance are obtained.

(Solid plasticizer, etc.)

As the solid plasticizer in the thermally- and pressure-sensitive adhesive 2 of the present invention, there can be employed the same solid plasticizer as employed in the previously-described thermoplastic resin composition of the present invention. The solid plasticizer may be employed solely or in combination of two or more kinds.

The solid plasticizer in the thermally-and pressure-sensitive adhesive 2 of the present invention may optionally contain a tackifier. As the tackifier, there can be employed ones exemplified in the item of the previously-described thermoplastic resin composition of the present invention. The tackifier may be employed in two or more kinds. Although the content of the tackifier is not particularly limited, it can be appropriately selected according to a combination of the thermoplastic resin composition with the solid plasticizer and, in usual, it is employed in 10-600 parts by weight or so, and preferably 20-500 parts by weight or so based on 100 parts by weight of the thermoplastic resin composition.

In the thermally-and pressure-sensitive adhesive 2 of the present invention, in addition to the tackifier, for example, an auxiliary for film-forming, a defoaming agent, a coatability improver, a thickener, a lubricant, a stabilizer (an anti-oxidant, an ultraviolet ray absorbent, and a stabilizer, etc.), an anti-static agent, an anti-blocking agent (inorganic fillers and organic fillers), which are usual additives within a range in which properties are not deteriorated. As the auxiliary for film-forming, there can be employed the compounds as exemplified hereinabove.

The thermally-and pressure-sensitive adhesive 2 of the present invention is employed even in a state of not containing solvents, and it can be also employed as a solution of an organic solvent or a water-based composition.

The water-based composition can be prepared by a common method, for example, (1) a method in which respective components by which the thermally- and pressure-sensitive adhesive 2 of the present invention is constructed are in advance mixed and then dissolved or dispersed in water, (2) a method in which a solid plasticizer is dissolved or dispersed in an aqueous solution or an emulsion of the above-described polymer (a thermoplastic resin), or an aqueous solution or an emulsion of the tackifier, and then, the solutions or emulsions are mixed each other, and (3) a method in which a solid plasticizer is dissolved or dispersed in water to obtain a solution or an emulsion, and the solution or the emulsion is mixed with an aqueous solution or an emulsion of the polymer and an aqueous solution or an emulsion of the tackifier, etc.

As a method for dissolving or dispersing the solid plasticizer into the emulsion or water, there can be exemplified a method in which the melted solid plasticizer is dissolved or dispersed, a method in which the solid plasticizer is dissolved or dispersed while finely-powdering, and a method in which a finely-powdered solid plasticizer is dissolved or dispersed.

In the emulsion of the water-based composition, average particle diameter of the solid plasticizer is preferably 0.5-20 μm or so, and more preferably 1-15 μm or so. In the case that the average particle diameter is less than 0.5 μm, it is anxious that an anti-blocking property lowers, or productivity lowers because of requiring a long period of time for crushing. In the case that the average particle diameter exceeds 20 μm, it is anxious that coating surface becomes roughened, a quality of a label lowers.

By coating the thermally-and pressure-sensitive adhesive 2 of the present invention onto at least one surface

of a base material to form a pressure-sensitive adhesive layer, a thermally- and pressure-sensitive adhesive sheet (thermally- and pressure-sensitive adhesive sheet 1) can be obtained. A method for forming a pressure-sensitive adhesive layer and the base material to be employed are the same as in the case of the previously-described thermally-and pressure-sensitive adhesive 1.

In the pressure-sensitive adhesive layer 2 of the present invention and the thermally-and pressure-sensitive adhesive sheet 1 obtained therefrom, in addition to an excellent adhesive strength and holding power, water resistance is high owing to the construction of an epoxy compound and a polymer of polymerizable unsaturated monomers in a thermoplastic resin.

[Pressure-sensitive adhesive 3]

The pressure-sensitive adhesive 3 of the present invention contains a polymer of a polymerizable unsaturated monomer having a hydrolyzable silyl group as a thermoplastic resin.

(Polymer)

As the polymerizable unsaturated monomer having a hydrolyzable silyl group (monomer having a silyl group) for forming the polymer, there is exemplified a polymerizable unsaturated monomer having a silyl group represented by the formula (13) described below.

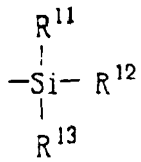

(13)

(in the formula, $R^{11}$, $R^{12}$, and $R^{13}$ may be identical or different, and those represent a halogen atom, an alkyl group, an aryl group, an aralkyl group, an alkoxy group, an aryloxy group, an acyloxy group, hydroxyl group, amino group, aminoxy group, and an alkylthio group).

In the hydrolyzable silyl group, usually, at least one of $R^{11}$-$R^{13}$ are a halogen atom, an alkoxy group, or hydroxyl group.

In the silyl group represented by the formula (13), the halogen atom includes fluorine, chlorine, bromine, and iodine atoms. The halogen atom is usually chlorine atom.

As the alkyl group, there are included, for example, a $C_{1-10}$ alkyl group such as methyl, ethyl, propyl, butyl, pentyl, and hexyl groups. As the aryl group, there is included, for example, a $C_{6-10}$ aryl group such as phenyl group and, as the aralkyl group, there is included, for example, a $C_{7-10}$ aralkyl group such as benzyl.

As the alkoxy group, there is included, for example, a $C_{1-16}$ alkoxy group such as methoxy, ethoxy, propoxy, isopropoxy, buthoxy, isobuthoxy, t-buthoxy, pentyloxy, hexyloxy, octyloxy, decyloxy, and dodecyloxy groups. A preferred alkoxy group includes a $C_{1-14}$ alkoxy group, particularly, methoxy and ethoxy groups. Further, the alkoxy group also includes, for example, an alkoxy-alkoxy group such as methoxyethoxy group.

As the aryloxy group, there is included, for example, a $C_{6-10}$ aryloxy group such as phenoxy group. As the acyloxy group, there is included, for example, a $C_{2-6}$acyloxy group such as acetyloxy group, propionyloxy group, and butylyloxy group.

The amino group includes, for example, an amino group which may have a substituent such as dimethyl amino group and, the aminoxy group includes, for example, an amino group which may have a substituent such as dimethyl aminoxy group. The alkylthio group includes, for example, a $C_{1-6}$alkylthio group, etc. such as a methylthio and ethylthio groups.

The monomer having a silyl group includes, for example, the following monomers.

(a) Monomer having a halogen

(a-1) Compound represented by the formula (14) described below

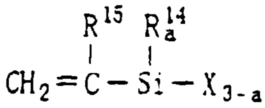 (14)

(in the formula, $R^{14}$ represents a $C_{1-10}$alkyl group, a $C_{6-10}$aryl group or a $C_{7-10}$aralkyl group and, $R^{15}$ represents a hydrogen atom or a methyl group. X represents fluorine, chlorine, bromine, or iodine atom. "a" represents an integer of 0-2.)

As such the monomer, there are enumerated, for example, vinyl trichlorosilane, vinylmethyl dichlorosilane, vinyldimethyl chlorosilane, vinylmethylphenyl chlorosilane, isopropenyl trichlorosilane, isopropenyl methyldichlorosilane, isopropenyl dimethylchlorosilane, and isopropenylmethylphenyl chlorosilane, etc.

(a-2) Compound represented by the formula (15) described below,

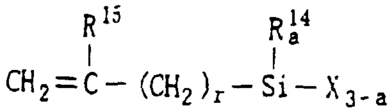 (15)

(in the formula, "r" represents an integer of 1-12. $R^{14}$, $R^{15}$, X, and "a" are the same as described hereinabove.)

As such the monomer, there are enumerated, for example allyl trichlorosilane, allylmethyl dichlorosilane, and allyldimethyl chlorosilane, etc.

(a-3) Compound represented by the formula (16) described below,

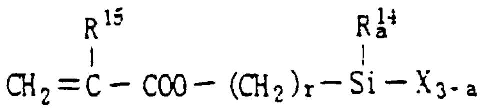 (16)

(in the formula, "r" represents an integer of 1-12. $R^{14}$, $R^{15}$, X, and "a" and "r" are the same as described hereinabove.)

As such the monomer, there are enumerated, for example, 2-(meth)acryloxyethyl trichlorosilane, 3-(meth)acryloxypropyl trichlorosilane, 2-(meth)acryloxyethylmethyl dichlorosilane, and 3-(meth)acryloxypropylmethyl dichlorosilane, 2-(meth)acryloxy ethyldimethylchlorosilane, 3-(meth)acryloxypropyldimethyl chlorosilane, etc.

(b) Monomer having an alkoxy group or an aryloxy group

(b-1) Compound represented by the formula (17) described below,

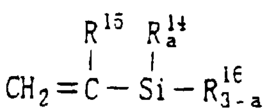 (17)

(in the formula, $R^{16}$ represents a $C_{1-16}$alkoxy group, and $R^{14}$, $R^{15}$, and "a" are the same as in the above descriptions.)

As such the monomer, there are enumerated, for example, vinyltrimethoxysilane, vinyltriethoxysilane, vinyltributoxysilane, vinyltri(hexyloxy)silane, vinyltri(octyloxy)silane, vinyltri (decyloxy)silane, vinyltri(dodecyloxy)silane,

vinyldimethoxy methylsilane, vinyldiethoxy methylsilane, vinylmethoxy dimethylsilane, vinylethoxy dimethylsilane, vinylbutoxydimethylsilane, vinyldiphenyl ethoxysilane, isopropenyl trimethoxysilane, isopropenyl triethoxysilane, isopropenyl tributoxysilane, isopropenyltri(hexyloxy)silane, isopropenyltri(octyloxy)silane, isopropenyl tri(decyloxy) silane, isopropenyl tri(dodecyloxy)silane, isopropenyl dimethoxymethylsilane, isopropenyl diethoxymethylsilane, isopropenyl methoxydimethylsilane, isopropenyl ethoxydimethylsilane, isopropenyl butoxydimethylsilane, and vinyltris(2-methoxyethoxy) silane, etc.

(b-2) Compound represented by the formula (18) described below,

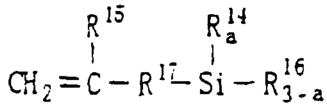

(18)

(in the formula, $R^{17}$ represents a $C_{1-12}$alkylene group or phenylene group, and $R^{14}$, $R^{15}$, $R^{16}$ and "a" are the same as in the above descriptions.)

As such the monomer, there are enumerated, for example, allyltrimethoxysilane, vinyldecyltrimethoxysilane, vinyloctyl trimethoxysilane, vinylphenyltrimethoxysilane, vinylphenyl dimethoxymethylsilane, vinylphenylmethoxydimethylsilane, isopropenylphenyl trimethoxysilane, isopropenylphenyl dimethoxymethylsilane, and isopropenylphenyl methoxydimethylsilane, etc.

(b-3) Compound represented by the formula (19) described below

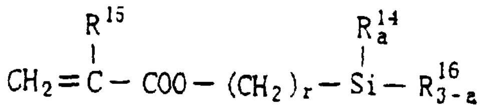

(19)

(in the formula, $R^{14}$, $R^{15}$, $R^{16}$, "a", and "r" are the same as in the above descriptions.)

As such the monomer, there are exemplified, for example, 2-(meth)acryloxyethyl trimethoxysilane, 2-(meth)acryloxyethyl triethoxysilane, 3-(meth)acryloxypropyl trimethoxysilane, 3-(meth)acryloxypropyl triethoxysilane, 3-(meth)acryloxypropyl methyldimethoxysilane, 3-(meth)acryloxypropyldiethoxysilane, and 3-(meth)acryloxypropyl tris(2-methoxyethoxy)silane, etc.

(b-4) Compound represented by the formula (20) described below,

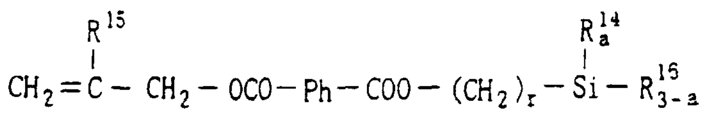

(20)

(in the formula, Ph represents a phenylene group, and $R^{14}$, $R^{15}$, $R^{16}$, "a", and "r" are the same as in the above descriptions.)

As such the monomer, there are included, for example, 3-[2-(allyloxycarbonyl)phenylcarbonyloxy]propyl trimethoxysilane, 3-[2-(allyloxycarbonyl)phenylcarbonyloxy]propyl dimethoxysilane, 3-[2-(allyloxycarbonyl)phenylcarbonyloxy]propylmethoxy dimethylsilane, 3-[2-(isopropenylmethoxycarbonyl) phenylcarbonyloxy]propyltrimethoxysilane, 3-[2-(isopropenylmethoxycarbonyl)phenylcarbonyloxy]propyl dimethoxymethylsilane, and 3-[2-(isopropenylmethoxycarbonyl) phenylcarbonyloxy]propylmethoxydimethylsilane, etc.

(b-5) Compound represented by the formula (21) described below,

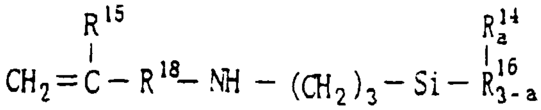

(21)

[in the formula, $R^{18}$ represents a phenylene group or -Ph-$CH_2$- (Ph represents a phenylene group), and $R^{14}$, $R^{15}$, $R^{16}$, and "a" are the same as in the above descriptions.]

As such the monomer, there are exemplified, for example, 3-(vinylphenylamino)propyltrimethoxysilane, 3-(vinylphenylamino) propyltriethoxysilane, 3-(vinylbenzylamino)propyltrimethoxy silane, and 3-(vinylbenzylamino)propyltriethoxysilane, etc.

(b-6) Compound represented by the formula (22) described below,

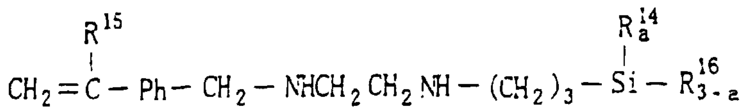

(22)

(in the formula, Ph represents a phenylene group, and $R^{14}$, $R^{15}$, $R^{16}$, and "a" are the same as in the above descriptions.)

As such the monomer, there are included, for example, 3-[2-(N-vinylphenylmethylamino)ethylamino]propyltrimethoxysilane and 3-[2-(N-isopropenylphenylmethylamino)ethylamino]propyl trimethoxysilane, etc.

(b-7) Compound represented by the formula (23) described below,

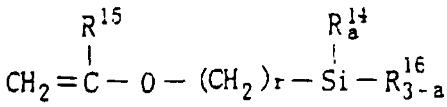

(23)

(in the formula, $R^{14}$, $R^{15}$, $R^{16}$, and "a" are the same as in the above descriptions.)

As such the monomer, there are included, for example, 2-(vinyloxy)ethyltrimethoxysilane, 3-(vinyloxy)propyl trimethoxysilane, 4-(vinyloxy)butyltriethoxysilane, and 2-isopropenyloxy)ethyltrimethoxysilane, etc.

(b-8) Compound represented by the formula (24) described below,

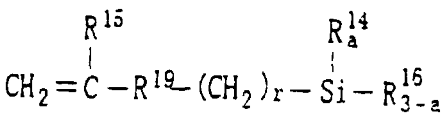

(24)

(in the formula, $R^{19}$ represents -$CH_2O$- or -$CH_2OCO$-, and $R^{14}$, $R^{15}$, $R^{16}$, "a", and "r" are the same as in the above descriptions.)

As such the monomer, there are included, for example, 3-(allyloxy)propyltrimethoxysilane, 10-(allyloxycarbonyl)decyl trimethoxysilane, 3-(isopropenylmethyloxy)propyltrimethoxysilane, and 10-(isopropylmethyloxycarbonyl)decyltrimethoxysilane, etc.

(b-9) Compound represented by the formula (25) described below,

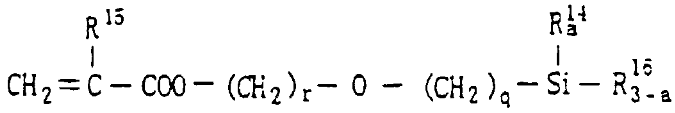

(25)

(in the formula, "q" represents an integer of 1-12, and $R^{14}$, $R^{15}$, $R^{16}$, "a" and "r" are the same as in the above descriptions.)

As such the monomer, there are enumerated, for example, 3-[(meth)acryloxyethoxy]lpropyltrimethoxysilane and 3-[(meth)acryloxyethoxy]lpropyldimethoxymethylsilane, etc.

Further, the monomer having silyl group may be, for example, a compound having divinyl group such as divinyldimethoxysilane, divinyldiethoxysilane, and divinyldi(β-methoxyethoxy)silane. The monomer having a silyl group may be employed solely or in combination of two or more kinds. A preferred monomer having a silyl group includes, for example, a vinyl-based monomer [particularly, a (meth)acrylic-based monomer] having an alkoxysilyl group from a viewpoint of handling, economy, and weakness of side reaction, etc.

In the present invention, although the above-described polymer may be constructed by the above-described monomer alone having a silyl group, it is usually constructed by the above-described monomer having a silyl group and a copolymerizable unsaturated monomer (copolymerizing components). Such the copolymerizing components includes, for example, a (meth)acrylic-based monomer, aromatic vinyls, unsaturated carboxylic acids, vinyl esters, vinyls containing halogens, vinylethers (for example, vinylethylether, etc.), vinylketones (for example, methylvinylketone, etc.), vinylheterocyclic compounds (for example, N-vinylpyrrolidone, an N-vinyl compound such as N-vinylimidazole and vinyl piridine, etc.), an olefinic monomer (for example, ethylene and propylene, etc.), and an allyl compound (for example, an allyl ester such as allyl acetate, etc.), etc. The copolymerizing components may be employed solely or in combination of two or more kinds. The (meth)acrylic-based monomer which is the copolymerizing component includes, for example, a (meth)acrylate, (meth)acrylamides, and (meth)acrylonitrile, etc.

The (meth)acrylate includes, for example, an alkyl(meth)acrylate [for example, $C_{1-18}$alkyl(meth)acrylates such as methyl(meth)acrylate, ethyl(meth)acrylate, propyl(meth)acrylate, isopropyl (meth) acrylate, butyl (meth) acrylate, isobutyl (meth)acrylate, t-butyl (meth)acrylate, hexyl(meth)acrylate, octyl(meth)acrylate, 2-ethylhexyl(meth)acrylate, and lauryl(meth)acrylate], a cycloalkyl(meth)acrylate [for example, cyclohexyl(meth)acrylate, etc.], an aryl(meth)acrylate [for example, phenyl(meth)acrylate, etc.], an aralkyl(meth)acrylate [for example, benzyl (meth)acrylate, etc.], a hydroxyalkyl(meth)acrylate [for example, hydroxy-$C_{2-4}$alkyl(meth)acrylates such as 2-hydroxyethyl(meth)acrylate and 2-hydroxypropyl(meth)acrylate, etc.], glycidyl(meth)acrylate, a dialkylamino-alkyl(meth)acrylate [for example, a di-$C_{1-4}$alkylamino-$C_{2-4}$ alkyl(meth)acrylate such as 2-(dimethylamino)ethyl(meth)acrylate and 2-(diethylamino)ethyl(meth)acrylate], etc.

The (meth)acrylamides include, for example, (meth)acrylamide, a hydroxyalkyl(meth)acrylamide [for example, an N-hydroxy-$C_{1-4}$ alkyl(meth)acrylamide such as N-methylol(meth)acrylamide], an alkoxyalkyl(meth)acrylamide [for example, N-hydroxy-$C_{1-4}$alkoxy-$C_{1-4}$ alkyl(meth)acrylamides such as N-methoxymethyl(meth)acrylamide], and diacetone(meth)acrylamide, etc.

A preferred (meth)acrylic-based monomer includes, for example, a (meth)acrylate [for example, a $C_{1-18}$alkyl(meth)acrylate, a hydroxy-$C_{2-4}$alkyl(meth)acrylate, glycidyl(meth)acrylate, di-$C_{1-4}$ alkylamino-$C_{2-4}$alkyl(meth)acrylate, etc.] and (meth)acrylamides, etc. A more preferred (meth)acrylic-based monomer includes a $C_{2-10}$ alkylacrylate, a $C_{1-6}$methacrylate, a hydroxy-$C_{2-3}$ alkyl(meth)acrylate, glycidyl(meth)acrylate, di $C_{1-3}$alkylamino-$C_{2-3}$ alkyl(meth)acrylate.

The unsaturated carboxylic acids include, for example, an unsaturated monocarboxylic acid [for example, an ethylenic unsaturated monocarboxylic acid such as (meth)acrylic acid and crotonic acid] and an unsaturated polyvalent carboxylic acid [for example, an ethylenic unsaturated polyvalent carboxylic acid such as maleic acid, fumaric acid, and itaconic acid, or an anhydride thereof (maleic anhydride, etc.) or esters (for example, a monoalkyl ester of a bifunctional carboxylic acid such as monomethylmaleate and monobutylmaleate, etc.)], etc. A preferred unsaturated carboxylic acid includes, for example, a monocarboxylic acid such as (meth)acrylic acid and a polyvalent carboxylic acid such as maleic acid, an anhydride thereof, or the esters.

The aromatic vinyls include, for example, styrene, alpha-methylstyrene, and vinyl toluene, etc., and styrene is often employed. The vinyl esters include, for example, vinyl acetate, vinyl propionate, and vinyl versate (VeoVa, etc.), etc. The vinyls containing halogens include, for example, vinyl chloride and vinylidene chloride, etc.

Further, as copolymerizable components, there may be employed, for example, a monomer containing silyl

group such as a compound [for example, vinylbis(dimethylamino)methylsilane, etc.] represented by formula (26);

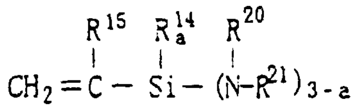

(26)

(in the formula, $R^{20}$ and $R^{21}$, which may be identical or different, represent a $C_{1-10}$alkyl group. $R^{14}$, $R^{15}$, and "a" are the same as in the above descriptions.),
a compound [for example, vinyltri(acetyloxy)silane and vinyldi(acetyloxy)methylsilane, etc.] represented by formula (27);

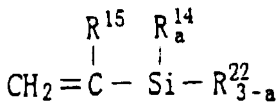

(27)

(in the formula, $R^{22}$ represents a $C_{2-6}$acyl group. $R^{14}$, $R^{15}$, and "a" are the same as in the above descriptions.), and
a compound [for example, vinyltriphenoxysilane, etc.] represented by formula (28);

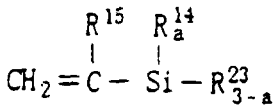

(28)

(in the formula, $R^{23}$ represents a $C_{6-10}$aryloxy group. $R^{14}$, $R^{15}$, and "a" are the same as in the above descriptions.).

In the present invention, as copolymerizable components, usually, there may be often employed a hard monomer [for example, a monomer component which forms a homopolymer having a glass transition temperature of 80 to 120°C (particularly, 90 to 105°C) or so such as methyl(meth)acrylate and styrene] and a soft monomer [for example, a monomer component which forms a homopolymer having a glass transition temperature of -85 to -10°C (particularly, -85 to -20°C) or so such as a $C_{2-10}$ alkylacrylate] in combination thereof. On the other hand, if a monomer component [for example, dialkylamino-alkyl(meth)acrylate, etc.] containing an ionic functional group such as carboxylic group or amino group is employed as a copolymerizable component, a water-based resin composition can be obtained without an emulsifier.

In the case that a polymer is constructed using the monomer containing a silyl group and the copolymerizable components (the hard monomer, soft monomer, and monomer component containing an ionic functional group), the use amount of the respective monomer components can be selected, for example, from the following range.

(1) Monomers containing a silyl group

0.05-30% by weight [for example, 0.1-20% by weight, preferably 0.5-15% by weight, more preferably 1-10% by weight]

(2) Copolymerizable components

70-99.95% by weight [for example, 80-99.9% by weight, preferably 85-99% by weight, more preferably 90-98% by weight]

The copolymerizable components can be constructed by, for example, the following monomers (the hard monomer, soft monomer, and monomer component containing an ionic functional group).

1) Hard monomer

10-90% by weight [for example, 15-85% by weight, preferably 20-80% by weight, more preferably 25-75% by weight, particularly, 30-70% by weight]

2) soft monomer

10-90% by weight [for example, 15-85% by weight, preferably 20-80% by weight, more preferably 25-75% by weight, particularly, 30-70% by weight]

3) Monomer containing an ionic group

0-80% by weight [for example, 0-70% by weight, preferably 0-60% by weight, more preferably 0-50% by weight, particularly, 0-40% by weight]

A preferred polymer in the present invention includes a polymer (an acrylic-based polymer) including at least one kind of an acrylic-based polymer as a constructing monomer (a monomer containing a silyl group and copolymerizable components).

A particularly preferred polymer is a copolymer containing a vinyl-based monomer having an alkoxysilyl group which is a constructing monomer and an acrylic-based monomer which is a copolymerizable component.

The polymers can be obtained by a usual method, for example, a solution polymerization, an emulsion polymerization, a suspension polymerization, and a bulk polymerization, etc. The polymers are often obtained in a form of an aqueous solution and a water-based emulsion. Average particle diameter of polymer particles in the water-based emulsion can be selected within a range in which dispersion stability and adhesion are not deteriorated, for example, a range of 0.01-2 μm (for example, 0.01-1 μm), preferably 0.01-0.05 μm, and more preferably 0.01-0.3 μm or so.

As a method for obtaining the polymer (a thermoplastic resin) as an aqueous solution or a water-based emulsion, there are exemplified, for example, a method (1) and a method (2). The method (1) includes a method (1-1) and a method (1-2). In the method (1-1), there is dissolved or dispersed a polymer in which the vinyl-based monomer having a silyl group represented by the previously-described formula (13) is copolymerized with a copolymerizable component having an ionic functional group such as carboxylic group or amino group using an alkali (for example, an alkyl amine such as triethylamine, a cyclic amine such as morpholine, an alkanol amine such as triethanolamine, pyridine, and ammonia, etc.), an acid [for example, an inorganic acid (for example, hydrochloric acid and sulfuric acid, etc.), and an organic acid (for example, a carboxylic acid such as acetic acid and propionic acid, and sulfonic acid, etc.), and in the method (1-2), the polymer is dissolved or dispersed by an emulsifier, and the method (2) is an emulsion polymerization method, etc.

In the above-described method (1-1) and the method (1-2), the polymer may be also prepared by a solution polymerization and, further, it may be also prepared by an emulsion polymerization, a suspension polymerization, and a bulk polymerization. It is to be noted that the polymerization may be carried out batchwise or continuously.

In the solution polymerization, there is employed an organic solvent [for example, such as an alcohol (for example, ethanol, isopropanol, and butanol, etc.), an aromatic hydrocarbon (for example, benzene, toluene, and xylene, etc.), an aliphatic hydrocarbon (for example, pentane, hexane, and heptane, etc.), a cycloaliphatic hydrocarbon (for example, cyclohexane, etc.), an ester (for example, ethyl acetate and n-butyl acetate, etc.), a ketone (for example, acetone and methylethylketone, etc.), and an ether (for example, diethylether, dioxane, and tetrahydrofran, etc.)]. The organic solvent may be employed solely or in combination of two or more kinds. As the organic solvent, there may be usually employed an alcohol such as isopropanol, an aromatic hydrocarbon such as toluene, and a ketone such as methylethylketone, etc.

Use amount of the organic solvent is not particularly limited, and it can be selected from, for example, a range of total amount of the organic solvents/monomers=0.1/1-5/1 (weight ratio), and preferably 0.5/1-2/1 (weight ratio) based on total amount of the monomers (the monomer having a silyl group and the copolymerizable components).

In the solution polymerization, although a polymerization may be initiated by irradiation of an electronic beam or an ultraviolet ray and heating, it is often initiated using a polymerization initiator. As the polymerization initiator, there can be exemplified, for example, an azo compound [for example, azobisisobutylnitrile, 2,2-azobis(2,4-dimethylvaleronitrile, azobiscyano valeric acid, 2,2-azobis(2-amidinopropane) hydrochloride, 2,2-azobis(2-amidinopropane)acetate,], inorganic peroxides (for example, persulphates acid such as potassium persulphate, sodium persulphate, ammonium persulphate, and hydrogen peroxide), organic peroxides [for example, benzoyl peroxide, di-t-butylperoxide, cumen hydroperoxide, di(2-ethoxyethyl)peroxydicarbonate)], and redox catalysts [for example, sulphite or bisulfite (for example, alkali metal salts and ammonium salts), a reducing agent such as L-ascorbic acid and elisorbic acid, persulphates acid (for example, alkali metal salts and ammonium salts, etc.), and a catalyst system composed of the combination of the peroxides]. The polymerization initiator can be employed solely or in combination of two or more kinds.

Use amount of the polymerization initiator can be selected from, for example, a range of 0.001-20% by weight, and preferably 0.01-10% by weight (for example, 0.1-10% by weight) or so based on total amount of the monomers (the monomer having a silyl group and the copolymerizable components).

Reaction temperature in the solution polymerization is, for example, 50-150°C, and preferably 70-130°C or so. Further, reaction time of period is, for example, 1-10 hours, and preferably 2-7 hours or so. It is to be noted that a termination point of the polymerization can be identified by disappearance in the absorption (for example, 1648 $cm^{-1}$) by double bonds in infrared absorption spectra or a decrease of unreacted monomers using a gas chromatography.

In emulsifying the polymer, there are employed an emulsifier, for example, an anionic surface active agent such as an alkyl sulphate, an alkylaryl sulphonate, an alkyl phosphate, or a fatty acid salt, a cationic surface active agent such as an alkyl amine salt, an alkyl quaternary ammonium salt, a polyoxyethylene alkylarylether, a nonionic surfactant such as a polyoxyethylene alkylether, or a pluronic-type one, an amphoteric surface active agent such as a carboxylic acid-type one (an amino acid-type one, betaine-type one) or a sulfonic acid-type one. It is to be noted that the emulsion may be pH-regulated by a pH regulator.

In the case that the polymer contains a cationic group such as a cation-formable group, amino group, and imide group, the polymer can be readily dissolved or emulsified because of an increase of hydrophilic property by the use of acids. As such the acids, there can be exemplified, for example, an inorganic acid (for example, hydrochloric acid, phosphoric acid, sulfuric acid, and nitric acid, etc.) and an organic acid [for example, a saturated aliphatic monocarboxylic acid such as formic acid, acetic acid, and propionic acid; a saturated aliphatic polycarboxylic acid such as oxalic acid and adipic acid; an unsaturated aliphatic monocarboxylic acid such as (meth)acrylic acid; an unsaturated aliphatic polycarboxylic acid such as maleic acid and itaconic acid; and an aliphatic oxycarboxylic acid such as lactic acid and citric acid, etc.].

In the case that the polymer contains an acidic group such as carboxylic group, the polymer can be readily dissolved or emulsified by the use of a basic compound. As such the basic compound, there can be included an organic basic material (for example, an alkyl amine such as triethylamine, a cyclic amine such as morpholine, an alkanol amine such as triethanol amine, and pyridine, etc.) and an inorganic basic material (for example, ammonia and a hydroxide of an alkali metal, etc.).

Use amount of the acid can be selected from, for example, a range of total amount of the acid/cationic group=0.3/1-1.5/1 (molar ratio) or so.

Use amount of the basic material can be selected from, for example, a range of total amount of the basic material/acidic group=0.3/1-1.5/1 (molar ratio) or so.

The polymer obtained by solution polymerization can be emulsified under the presence or the absence of organic solvents.

In the case that the polymer is dissolved or emulsified under the presence of organic solvents, a water-soluble organic solvent (for example, an alcohol such as isopropanol) is often employed as an organic solvent. In the case that the polymer was emulsified under the presence of organic solvents, the organic solvent may be even removed by evaporation, etc. after emulsifying, and an emulsion may also contain the organic solvent. It is to be noted that in the case that the organic solvent is removed before emulsifying the polymer, an organic solvent (a ketone such as methylethylketone) having a low boiling point is occasionally employed.

In the case that the polymer obtained by solution polymerization is emulsified under the presence of organic solvents, it can be emulsified by adding water after adding an additive (for example, an emulsifier, a pH regulator, and an acid, etc.) to the organic solution containing the polymer. In the case, it is preferred to gradually add water by dropping. Emulsifying is preferably carried out at a low temperature, for example, it can be selected from a range of not more than 70°C (for example, 5-70°C), and preferably not more than 50°C or so (for example, 10-50°C).

After having emulsified by the addition of water, removal of the organic solvents is often carried out at, for example, not more than 80°C (for example, 5-80°C) and an ordinary or reduced pressure (for example, 0.0001-1 normal atmosphere or so).

Further, the emulsion polymerization of the monomers (the monomer having a silyl group and copolymerizable components) can be carried out according to usual emulsion polymerization methods and, for example, there can be applied a method of collectively feeding the monomers (for example, a polymerization method by collectively feeding the monomers to a water-based medium) and a method of monomer feeding (a polymerization method by adding the monomers to a water-based medium), etc. The monomers may be even employed as a pre-emulsion which is in advance emulsified. In the preparation of the pre-emulsion, a polymerizable emulsifier may be even employed as a copolymerizable component, and may be also emulsified using an emulsifier.

As a polymerization initiator to be employed in the emulsion polymerization, there can be employed a water-soluble polymerization initiator such as inorganic peroxides (for example, persulphates such as potassium persulphate, sodium persulphate, and ammonium persulphate, and hydrogen peroxide) in the above-described polymerization initiator for the solution polymerization, and may also be a water-soluble redox type polymerization initiator system.

As the polymerizable emulsifier, there can be employed a variety of usual emulsifiers for polymerization [for example, an emulsifier having (meth)allyl group and a (meth)alkyl group which are a polymerizable functional group and, moreover, a quaternary ammonium salt and a tertiary amine salt a cationic group such as amino group, and imide group, and an anionic group such as a sulfonate and a carboxylate, or a nonionic group such as ethyleneoxide group], etc. Use amount of the polymerizable emulsifier can be selected from, for example, a range of 0.1-20% by weight, and preferably 0.5-10% by weight or so based on total amount of the monomers.

As the emulsifier to be employed in the emulsion polymerization, there can be enumerated the emulsifiers which can be employed when emulsifying a polymer obtained by the previously-described solution polymerization. Further, in order to stabilize the emulsion polymerization, there may be even employed a protecting colloid agent (for example, a partially-saponified polyvinylalcohol, a carboxymethyl cellulose, a methyl cellulose, a hydroxyethyl cellulose, and a hydroxypropyl cellulose, etc.). It is to be noted that pH may be regulated in the emulsion.

It is to be noted that conditions such as temperature, etc. in the emulsion polymerization may be the same as in the previously-described solution polymerization.

In order to control a molecular weight of a polymer in the solution polymerization and the emulsion polymerization, there may be employed a chain transfer agent, for example, an alcohol such as catechol or phenols, thiols, mercaptans (for example, n-lauryl mercaptan, n-dodecyl mercaptan, t-dodecyl mercaptan, 3-mercaptopropyl trimethoxysilane, and 3-mercaptopropylmethyl dimethoxysilane, etc.).

A weight average molecular weight (Mw) in the previously-described polymer is, for example, 100,000-8,000,000, preferably 200,000-7,000,000, and more preferably 300,000-5,000,000 or so.

Further, a glass transition temperature (Tg) in the previously-described polymer is, for example, -10 to 70°C, preferably -5 to 50°C, and more preferably 0 to 40°C or so. In the case that the glass transition temperature is less than -10°C, blocking is apt to be caused in a thermally-and pressure-sensitive adhesive sheet and, in exceeding 70°C, an adhesive property is apt to lower.

In the thermally-and pressure-sensitive adhesive 3 of the present invention, the content of the thermoplastic resin is, for example, 15-200 parts by weight, preferably 18-150 parts by weight, and more preferably 20-100 parts by weight or so based on 100 parts by weight of the total amount of the solid plasticizer. In the case that the content of the thermoplastic resin is less than 15 parts by weight, a cohesive force lowers, resulting in that a sufficient adhesive strength is not occasionally produced and, in the case of more than 200 parts by weight, sufficient tackiness is not occasionally produced in heating.

In the present invention, since the polymerizable unsaturated compound having a hydrolyzable silyl group is employed as a monomer constructing the thermoplastic resin, a polymer having a high molecular weight is obtained by crosslinking, and it is considered that a cohesive force becomes strong. For that reason, in the case that it is employed as a thermally-and pressure-sensitive adhesive, an adhesive force, a holding power, and a water resistance are remarkably improved.

(Solid plasticizer, etc.)

As the solid plasticizer in the thermally-and pressure-sensitive adhesive 3 of the present invention, there can be employed the same solid plasticizer as in the previously-described thermoplastic resin composition of the present invention. The solid plasticizer may be employed solely or in combination of two or more kinds.

The thermally-and pressure-sensitive adhesive 3 of the present invention may optionally contain a tackifier. As the tackifier to be employed, there can be employed the same ones as exemplified in the item of the previously-described thermoplastic resin composition of the present invention. The tackifier may be employed solely or in combination of two or more kinds. The content of the tackifier is not particularly limited, and it can be appropriately selected according to the combination of the thermoplastic resin with the solid plasticizer. Usually, it is 10-600 parts by weight, preferably 20-500 parts by weight based on 100 parts by weight of the thermoplastic resin.

In the thermally-and pressure-sensitive adhesive 3 of the present invention, in addition to the tackifier, there may be added, for example, an auxiliary for film-forming, a defoaming agent, a coatability improving agent, a thickener, a lubricant, a stabilizer (an antioxidant, an ultraviolet ray absorbent, and a thermal stabilizer, etc.), an anti-electrostatic agent, and a anti-blocking agent (inorganic particles and organic particles) within a range in which properties are not deteriorated. As the auxiliary for film-forming, there can be employed the above-exemplified compounds.

The thermally-and pressure-sensitive adhesive 3 of the present invention can be employed in the form of the absence of solvents, and it can be also employed as a solution of an organic solvent or a water-based composition.

The water-based composition can be prepared by usual methods, for example, the methods shown in the item of the previously-described thermally-and pressure-sensitive adhesive 2.

Average particle diameter of the solid plasticizer in emulsion in the water-based composition is preferably 0.5-20 μm, and more preferably 1-15 μm or so. In the case that the average particle diameter is less than 0.5 μm, it is afraid that blocking resistance lowers, and productivity lowers because a long time of period for crushing is required. In the case that the average particle diameter exceeds 20 μm, it is afraid that a coating surface becomes roughened, and a quality is lowered in a label.

By coating the thermally-and pressure-sensitive adhesive 3 of the present invention on at least one surface of a base material, a pressure-sensitive adhesive layer is formed, and a thermally-and pressure-sensitive adhesive sheet (thermally and pressure-sensitive adhesive sheet 1) can be obtained. A method for forming the pressure-sensitive adhesive layer and a base material to be employed are identical to the case of the previously-described thermally-and

pressure-sensitive adhesive 1.

In the thermally- and pressure-sensitive adhesive 3 of the present invention and the thermally- and pressure-sensitive adhesive sheet obtained therefrom, an adhesive strength and holding power are excellent, and a high water resistance is shown by using the polymer of the monomer having a hydrolyzable silyl group.

[Thermally-and pressure-sensitive adhesive 4]

The thermally-and pressure-sensitive adhesive 4 of the present invention contains a thermoplastic resin which is a binder resin, and a solid plasticizer.

(Thermoplastic resin)

As the thermoplastic resin, there can be employed the thermoplastic resin which is exemplified in the item of the previously-described thermoplastic resin composition of the present invention. A preferred thermoplastic resin is also identical to the previously-described ones.

The present invention is primarily characterized in that a weight average molecular weight (Mw) in the previously-described thermoplastic resin ranges in 100,000-500,000. The weight average molecular weight (Mw) is preferably 120,000-400,000, and more preferably 150,000-300,000 or so. In the case that the weight average molecular weight (Mw) is less than 100,000 in the thermoplastic resin, an adhesive strength is lower, and peeling is caused by only placing and, in the case that the weight average molecular weight (Mw) exceeds 500,000 in the thermoplastic resin, an adhesive strength becomes too high, and it becomes incapable of peeling by only hands.

The weight average molecular weight in the thermoplastic resin can be adjusted by, for example, the addition of a chain transfer agent. As the chain transfer agent, there can be exemplified, for example, an alcohol such as catechol or phenols, thiols, and mercaptans (for example, n-lauryl mercaptan, n-dodecyl mercaptan, and t-dodecyl mercaptan, etc.), etc. Further, the weight average molecular weight in the thermoplastic resin can be also adjusted by other usual methods, for example, by appropriately selecting reaction conditions such as the amount of a polymerization initiator, reaction temperature, reaction time of period, and a method for feeding monomers, etc. in polymerization.

Glass transition temperature (Tg) in the thermoplastic resin can be appropriately selected in consideration of the kind of materials to be stuck within a range in which there are not deteriorated an adhesive property and an anti-blocking property in the case that a pressure-sensitive adhesive sheet is prepared. It is usually -10 to 70°C or so, preferably -5 to 50°C, and more preferably 0 to 40°C or so. In the case that the glass transition temperature is less than -10°C, blocking is apt to be caused in the case that a pressure-sensitive adhesive sheet is prepared and, in the case of exceeding 70°C, an adhesive property is apt to be lowered.

In the thermally-and pressure-sensitive adhesive 4 of the present invention, the content of the thermoplastic resin is, for example, 15-200 parts by weight, preferably 18-150 parts by weight, and more preferably 20-100 parts by weight or so based on 100 parts by weight of the solid plasticizer. In the case that the content of the thermoplastic resin is less than 15 parts by weight, a cohesive force lowers, resulting in that a sufficient adhesive strength is not occasionally produced and, in the case of more than 200 parts by weight, a sufficient adhesive power is not occasionally produced in heating.

A method for preparing the thermoplastic resin is not particularly limited, and there can be employed usual methods, for example, a solution polymerization, an emulsion polymerization, a suspension polymerization, and a bulk polymerization, etc. It is to be noted that a polymerization may be any one of a batchwise or continuous style. The thermoplastic resin is often obtained in a mode of a water-based mixture such as a water-based emulsion.

Average particle diameter of the thermoplastic resin in the water-based emulsion is, for example, 0.01-2 μm, and preferably 0.01-5 μm or so. As a method for obtaining the previously-described thermoplastic resin as a water-based emulsion, there are enumerated, for example, a method in which a polymer obtained by a solution polymerization, etc. is emulsified and dispersed using an emulsifier and a method in which monomers are subjected to an emulsion polymerization.

A method for the solution polymerization, a method for emulsifying the polymer obtained in the solution polymerization, and the emulsion polymerization method are identical to the case in the previously-described thermally-and pressure-sensitive adhesive 3 of the present invention.

(Solid plasticizer, etc.)

As the solid plasticizer to be employed in the present invention, if it is melted by heating and it can produce a pressure-sensitive adhesive property by plasticizing the thermoplastic resin, it can be employed and, usually, dicyclohexyl phthalate is often employed. As the solid plasticizer to be employed, there can be employed the same solid plasticizer as in the previously-described thermoplastic resin composition of the present invention. The solid plasticizer

may be employed solely or in combination of two or more kinds.

The thermally-and pressure-sensitive adhesive 4 of the present invention may optionally contain a tackifier. As the tackifier to be employed, there can be employed the same ones as exemplified in the item of the previously-described thermoplastic resin composition of the present invention. The tackifier may be employed solely or in combination of two or more kinds. The content of the tackifier is not particularly limited, and it can be appropriately selected according to a combination of the thermoplastic resin with the solid plasticizer. Usually, it is 3-200 parts by weight, preferably 5-100 parts by weight based on 100 parts by weight of the solid plasticizer.

In the thermally-and pressure-sensitive adhesive 4 of the present invention, in addition to the tackifier, there may be added, for example, an auxiliary for film-forming, a defoaming agent, a coatability improving agent, a thickener, a lubricant, a stabilizer (an antioxidant, an ultraviolet ray absorbent, and a thermal stabilizer, etc.), an anti-electrostatic agent, and a anti-blocking agent (inorganic particles and organic particles) within a range in which properties are not deteriorated. As the auxiliary for film-forming, there can be employed the previously-exemplified compounds.

The thermally-and pressure-sensitive adhesive 4 of the present invention can be employed in the form of the absence of solvents, and it can be also employed as a solution of an organic solvent or a water-based composition.

The water-based composition can be prepared by usual methods, for example, the methods shown in the item of the previously-described thermally and pressure-sensitive adhesive 2.

It is to be noted that a dispersant for dispersing the thermoplastic resin is not particularly limited, and there can be employed any one of an anion-based and nonion-based dispersant which are conventionally publicly-known. As the anion-based dispersant, there can be enumerated carboxylates, sulphates, sulphonates, and phosphates, etc., and a carboxylic ammonium salt is preferred. As the nonion-based dispersant, there can be enumerated a polyethyleneglycol type one and a polyvalent alcohol type one, etc.

Average particle diameter of the solid plasticizer in emulsion in the water-based composition is preferably 0.5-20 µm, and more preferably 1-15 µm or so. In the case that the average particle diameter is less than 0.5 µm, it is afraid that blocking resistance lowers, and productivity lowers because a long time of period for crushing is required. In the case that the average particle diameter exceeds 20 µm, it is afraid that a coating surface becomes roughened, and a quality is lowered in a label.

By coating the thermally-and pressure-sensitive adhesive 4 of the present invention on at least one surface of a base material, a pressure-sensitive adhesive layer is formed, and a thermally-and pressure-sensitive adhesive sheet (thermally- and pressure-sensitive adhesive sheet 1) can be obtained. A method for forming the pressure-sensitive adhesive layer and a base material to be employed are identical to the case of the previously-described thermally-and pressure-sensitive adhesive 1.

In the thermally- and pressure-sensitive adhesive 4 of the present invention and the thermally- and pressure-sensitive adhesive sheet obtained therefrom, since the weight average molecular weight in the thermoplastic resin ranges in a specified scope, if the sheet is stuck to a material to be stuck, a practically sufficient adhesive strength can be obtained and, moreover, the sheet can be readily stripped and removed by hands without using boiled water, steam, and a water-soluble solvent.

For that reason, it can be preferably employed for bottles for beer which are repeatedly used by recollecting and PET bottles which are recycled as a resource.

[Thermally-and pressure-sensitive adhesive 5]

The water-based thermally- and pressure-sensitive adhesive (thermally- and pressure-sensitive adhesive 5) of the present invention contains a thermoplastic resin, a tackifier, and a solid plasticizer, and it is characterized in that a decline of a melting point is less than 3°C in the solid plasticizer in the thermally-and pressure-sensitive adhesive layer which is formed by heating the previously-described water-based thermally-and pressure-sensitive adhesive at 40°C for 2 minutes on a base material sheet compared to a melting point of the solid plasticizer.

It is to be noted that "the melting point of the solid plasticizer in the thermally- and pressure-sensitive adhesive layer" means a melting point of the solid plasticizer alone which is measured from an absorption peak in a differential scanning calorimetric analysis. As described above, capability of measuring the melting point of the solid plasticizer alone in the thermally-and pressure-sensitive adhesive layer depends upon that the solid plasticizer is not miscible with other components in the thermally-and pressure-sensitive adhesive sheet which is obtained by drying after coating the water-based thermally- and pressure-sensitive adhesive of the present invention on at least one surface of a base material, and the solid plasticizer exists as fine particles.

As the thermoplastic resin to be employed as a binder resin in the present invention, there can be employed the thermoplastic resin exemplified in the item of the previously-described thermoplastic resin composition of the present invention. The thermoplastic resin may be employed in combination of two or more kinds. Of the previously-described thermoplastic resin, an acrylic-based polymer is preferred from a viewpoint that the decline of a melting point is less than 3°C in the solid plasticizer in the thermally-and pressure-sensitive adhesive layer.

As described hereinabove, it is considered that the solid plasticizer in the present invention is not almost miscible with the thermoplastic resin and tackifier, and it is dispersed as fine particles in the thermally-and pressure-sensitive adhesive layer.

The solid plasticizer of a particle state becomes miscible with the thermoplastic resin and tackifier by heating the thermally-and pressure-sensitive adhesive layer, and tackiness is produced by melting thereof. As such the solid plasticizer, usually, dicyclohexyl phthalate is often employed. As other solid plasticizers to be employed, there are exemplified the same solid plasticizers as employed in the previously-described thermoplastic resin composition of the present invention. The solid plasticizer may be employed solely or in combination of two or more kinds.

The content of the solid plasticizer is decided so that a decline of a melting point becomes less than 3°C in the solid plasticizer in the thermally- and pressure-sensitive adhesive layer, and it is usually 30-1,000 parts by weight or so, and preferably 100-1,000 parts by weight or so based on 100 parts by weight of the thermoplastic resin. More preferably, it is 150-900 parts by weight, and particularly, it is 200-800 parts by weight.

In the case that the content of the solid plasticizer is less than 30 parts by weight, a sufficient pressure sensitive adhesive property is not occasionally produced in heating and, in the case of more than 1,000 parts by weight, a cohesive force lowers, and a sufficient adhesive strength is not occasionally produced.

As the tackifier to be employed in the present invention, there are employed the same tackifier exemplified in the item of the previously-described thermoplastic resin composition of the present invention. The tackifier may be also employed in combination of two or more kinds. The content of the tackifier is not particularly limited, and it is decided so that a decline of a melting point becomes less than 3°C in the solid plasticizer in the thermally- and pressure-sensitive adhesive layer. It can be appropriately selected according to the combination of the thermoplastic resin with the solid plasticizer. In general, the content of the tackifier is 10-600 parts by weight or so, and preferably 20-500 parts by weight or so based on 100 parts by weight of the thermoplastic resin.

In the thermally-and pressure-sensitive adhesive 5 of the present invention, in addition to the tackifier, there may be added, for example, an auxiliary for film-forming, a defoaming agent, a coatability improving agent, a thickener, a lubricant, a stabilizer (an antioxidant, an ultraviolet ray absorbent, and a thermal stabilizer, etc.), an anti-electrostatic agent, and an anti-blocking agent (inorganic particles and organic particles) within a range in which properties are not deteriorated. As the auxiliary for film-forming, there can be employed the previously-exemplified compounds.

The water-based thermally-and pressure-sensitive adhesive (a water-based composition) of the present invention can be prepared according to usual methods, for example, the methods for the preparation of the water-based composition shown in the item of the thermoplastic resin composition of the present invention. Further, a dispersant to be employed at that time can be employed the dispersant exemplified in the same item.

Average particle diameter of the solid plasticizer in emulsion (a water-based composition) in the water-based emulsion ranges in preferably 1-10 μm from a viewpoint that the decline of a melting point is less than 3°C in the solid plasticizer in the thermally-and pressure-sensitive adhesive layer. In the case that the average particle diameter is less than 1 μm, the difference of a melting point is apt to become not less than 3°C, and an anti-blocking property becomes poor in the thermally- and pressure-sensitive adhesive sheet obtained. Further, it is afraid that productivity lowers because of requiring a long time of period for crushing the solid plasticizer. In the case that the average particle diameter exceeds 10 μm, a coating surface becomes roughened, and quality lowers in a label.

By coating the thermally-and pressure-sensitive adhesive 5 of the present invention on at least one surface of a base material, a pressure-sensitive adhesive layer is formed, and a thermally-and pressure-sensitive adhesive sheet (thermally- and pressure-sensitive adhesive sheet 1) can be obtained. A method for forming the pressure-sensitive adhesive layer and a base material to be employed are identical to the case of the previously-described thermally-and pressure-sensitive adhesive 1.

As described hereinabove, in the water-based thermally- and pressure-sensitive adhesive of the present invention, the difference of a melting point is adjusted so as to become less than 3°C in the solid plasticizer in the thermally- and pressure-sensitive adhesive layer which is formed by heating the thermally-and pressure-sensitive adhesive on a base sheet at 40°C for 2 minutes. In the case that the difference of a melting point is not less than 3°C, an anti-blocking property becomes poor in the thermally- and pressure-sensitive adhesive sheet, and sheets themselves are unpreferably stuck each other in storage at a high temperature. It is to be noted that it is considered that as described hereinabove, such the decline in a melting point is caused because of a state in which a surface portion of the solid plasticizer which exists as particles in the thermally- and pressure-sensitive adhesive becomes miscible with the thermoplastic resin and the solid plasticizer which exist around the surface portion.

The above-described level of a decline in a melting point can be controlled by selecting the kind and the amount of the thermoplastic resin, the kind and the amount of the solid plasticizer, the kind and the amount of the tackifier, and the combination and amount ratio of the thermoplastic resin with the solid plasticizer, etc.

In the thermally- and pressure-sensitive adhesive sheet obtained by the thermally- and pressure-sensitive adhesive of the present invention, since the decline of a melting point is set up in less than 3°C in the solid plasticizer in the thermally- and pressure-sensitive adhesive layer, the thermoplastic resin is not plasticized by melting of the solid

plasticizer even at a relatively high storage temperature in the summer season and, accordingly, tackiness is not finished to be produced thereby.

Accordingly, there can be provided a thermally- and pressure-sensitive adhesive sheet having an excellent anti-blocking property by the present invention.

[Thermally- and pressure-sensitive adhesive sheet 2]

The thermally- and pressure-sensitive adhesive sheet 2 of the present invention is obtained by forming the thermally- and pressure-sensitive adhesive layer containing a thermoplastic resin, a tackifier, and a solid plasticizer on at least one surface of a base material sheet, and it is characterized in that an adhesive strength when being stuck to a body to be stuck after producing tackiness by heating the thermally- and pressure-sensitive adhesive sheet is from 100 gf/25mm to 600 gf/25mm at a period of 6 months-lapse.

Herein, the adhesive strength is shown by "gf/25mm", and it means a tensile force represented by the unit of gram which requires for stripping the thermally- and pressure-sensitive adhesive sheet having the width of 25 mm stuck by loading the weight of 2 kg from a body to be stuck at a tensile speed of 300 mm/minute and a stripping angle of 180°.

As the thermoplastic resin to be employed as a binder resin in the present invention, there can be employed the thermoplastic resin exemplified in the item of the previously-described thermoplastic resin composition of the present invention. The thermoplastic resin may be employed in combination of two or more kinds. Of the previously-described thermoplastic resin, an acrylic-based polymer is preferred from a viewpoint that an adhesive strength becomes from 100 gf/25mm to 600 gf/25mm at a period of 6 months-lapse after sticking of a thermally- and pressure-sensitive adhesive sheet.

As the solid plasticizer to be employed in the present invention, it is melted by heating and it can produce tackiness by plasticizing the thermoplastic resin and, usually, dicyclohexyl phthalate is often employed. As the solid plasticizer to be employed, there can be employed the same solid plasticizer as in the previously-described thermoplastic resin composition of the present invention. The solid plasticizer may be employed solely or in combination of two or more kinds.

The content of the solid plasticizer is decided so that an adhesive strength after sticking the thermally- and pressure-sensitive adhesive sheet is from 100 gf/25mm to 600 gf/25mm at a period of 6 months-lapse, and it is usually 30-1,000 parts by weight or so, and preferably 100-1,000 parts by weight or so based on 100 parts by weight of the thermoplastic resin. More preferably, it is 150-900 parts by weight, and particularly, it is 200-800 parts by weight. In the case that the content of the solid plasticizer is less than 30 parts by weight, sufficient tackiness is not occasionally produced in heating and, in the case of more than 1,000 parts by weight, a cohesive force lowers, and a sufficient adhesive strength is not occasionally produced.

In the present invention, the thermally- and pressure-sensitive adhesive layer by which the thermally- and pressure-sensitive adhesive sheet 2 is constructed contains a tackifier.

As the tackifier to be employed, there are employed, for example, the same tackifier exemplified in the item of the previously-described thermoplastic resin composition of the present invention. The tackifier may be also employed in combination of two or more kinds. The content of the tackifier is not particularly limited, and it is decided so that an adhesive strength after sticking the thermally- and pressure-sensitive adhesive sheet is from 100 gf/25mm to 600 gf/25mm at a period of 6 months-lapse. It can be appropriately selected according to the combination of the thermoplastic resin with the solid plasticizer.

In general, the content of the tackifier is 10-600 parts by weight or so, and preferably 20-500 parts by weight or so based on 100 parts by weight of the thermoplastic resin.

In the thermally- and pressure-sensitive adhesive layer which constructs the thermally- and pressure-sensitive adhesive sheet 2 of the present invention, in addition to the tackifier, there may be added, for example, an auxiliary for film-forming, a defoaming agent, an agent for improving coatability, a thickener, a lubricant, a stabilizer (an antioxidant, an ultraviolet ray absorbent, and a thermal stabilizer, etc.), an anti-electrostatic agent, and a anti-blocking agent (inorganic particles and organic particles) within a range in which properties are not deteriorated.

As the auxiliary for film-forming, there can be employed the previously-exemplified compounds.

The thermally- and pressure-sensitive adhesive sheet 2 of the present invention can be obtained by, for example, coating a water-based dispersion in which components (the thermoplastic resin, etc.) constructing the above-described thermally- and pressure-sensitive adhesive layer are dispersed in water using a dispersant onto a base sheet, followed by being dried. The dispersant to be employed for preparing the water-based dispersion is not particularly limited and, for example, there can be employed the dispersant employed in the method for the preparation of the water-based composition shown in the item of the previously-described thermoplastic resin composition of the present invention. As a method for dispersing into water, there can be also employed the method shown in the same item.

Average particle diameter of the solid plasticizer in emulsion in the water-based dispersion is preferably 0.5-20 μm, and more preferably 1-15 μm or so. In the case that the average particle diameter is less than 0.5 μm, it is afraid

that a blocking is occasionally caused which is a phenomenon sticking each other when the thermally- and pressure-sensitive adhesive sheet is stored at a high temperature, and productivity lowers because a long time of period for crushing of the solid plasticizer is required. In the case that the average particle diameter exceeds 20 µm, it is afraid that a coating surface becomes roughened, and a quality is lowered in a label.

The thermally- and pressure-sensitive adhesive layer in the thermally- and pressure-sensitive adhesive sheet 2 of the present invention can be formed by coating the thermally- and pressure-sensitive adhesive on at least one surface of a base material.

A method for forming the thermally- and pressure-sensitive adhesive layer, and the base material to be employed are the same as in the case of the previously-described thermally- and pressure-sensitive adhesive 1.

As described hereinabove, in the thermally- and pressure-sensitive adhesive sheet 2 of the present invention, there is formed the thermally- and pressure-sensitive adhesive layer containing a thermoplastic resin, a tackifier, and a solid plasticizer on at least one surface of a base material sheet, and an adhesive force is controlled so that an adhesive strength when being stuck to a body to be stuck after manifestation of tackiness by heating the thermally- and pressure-sensitive adhesive sheet is from 100 gf/25mm to 600 gf/25mm at a period of 6 months-lapse. In the case that the adhesive force at a period of 6 months-lapse from sticking is less than 100 gf/25mm, there is unpreferably caused a problem that the thermally- and pressure-sensitive adhesive sheet is peeled until glass bottles and PET bottles are exhibited in a shop window or during being exhibited. Further, in the case that the adhesive force at a period of 6 months-lapse from sticking exceeds 600 gf/25mm, it is not possible to strip the sheet, resulting in that there are obstructed the reuse of the bottles and recycling of the PET bottles. It is to be noted that a reason that a judgement on an adhesive force is given at the period of 6 months after sticking depends upon that contents filled up in the bottles and the PET bottles are almost consumed at the period.

The adhesive force can be controlled by selecting the kind and the amount of the thermoplastic resin, the kind and the amount of the solid plasticizer, the kind and the amount of the tackifier, and the combination and amount ratio of the thermoplastic resin with the solid plasticizer, etc.

In the case that the thermally- and pressure-sensitive adhesive sheet 2 of the present invention is stuck on a body to be stuck after manifestation of tackiness by heating, since it has the adhesive force ranging in 100 gf/25mm to 600 gf/25mm at a period of 6 months-lapse after sticking, it can be readily stripped.

Moreover, the sheet can be readily stripped and removed without using boiled water, steam, and a water-soluble solvent, and it can be preferably employed for bottles for beer which are repeatedly used and for PET bottles which are recycled as a resource.

[Thermally-and pressure-sensitive adhesive sheet 3]

The thermally- and pressure-sensitive adhesive sheet 3 of the present invention is obtained by forming the thermally- and pressure-sensitive adhesive layer containing a thermoplastic resin, a tackifier, and a solid plasticizer on at least one surface of a base material sheet, and it is characterized in that a coating amount of the thermally- and pressure-sensitive adhesive is less than 5 $g/m^2$, and an adhesive strength when being stuck to a body to be stuck after manifestation of tackiness by heating the thermally-and pressure-sensitive adhesive sheet is not less than 100 gf/25mm.

Herein, the adhesive strength is shown by "gf/25mm", and it means a tensile force represented by the unit of gram which requires for stripping the thermally- and pressure-sensitive adhesive sheet having the width of 25mm stuck by loading the weight of 2 kg from a body to be stuck at a tensile speed of 300 mm/minute and a stripping angle of 180°.

As the thermoplastic resin employed as a binder resin in the present invention, there can be employed the thermoplastic resin exemplified in the item of the previously-described thermoplastic resin composition of the present invention. The thermoplastic resin may be employed in combination of two or more kinds. Of the previously-described thermoplastic resin, an acrylic-based polymer is preferred from a viewpoint that a coating amount of the thermally-and pressure-sensitive adhesive is less than 5 $g/m^2$, and an adhesive strength when being stuck to a body to be stuck after manifestation of tackiness by heating the thermally- and pressure-sensitive adhesive sheet is not less than 100 gf/25mm.

As the solid plasticizer to be employed in the present invention, it is melted by heating and it can generate a pressure-sensitive adhesive property by plasticizing the thermoplastic resin, it can be employed and, usually, dicyclohexyl phthalate is often employed. As the solid plasticizer to be employed, there can be employed the same solid plasticizer as in the previously-described thermoplastic resin composition of the present invention. The solid plasticizer may be employed solely or in combination of two or more kinds.

The content of the solid plasticizer is decided so that a coating amount of the thermally- and pressure-sensitive adhesive is less than 5 $g/m^2$, and an adhesive strength when being stuck to a body to be stuck after manifestation of tackiness by heating the thermally- and pressure-sensitive adhesive sheet is not less than 100 gf/25mm, and it is usually 30-1,000 parts by weight or so, and preferably 100-1,000 parts by weight or so based on 100 parts by weight of the thermoplastic resin. More preferably, it is 150-900 parts by weight, and particularly, it is 200-800 parts by weight.

In the case that the content of the solid plasticizer is less than 30 parts by weight, sufficient tackiness is not occasionally produced in heating and, in the case of more than 1,000 parts by weight, a cohesive force lowers, and a sufficient adhesive strength is not occasionally produced.

In the thermally- and pressure-sensitive adhesive layer by which the thermally- and pressure-sensitive adhesive sheet 3 is constructed in the present invention, a tackifier is contained. As the tackifier to be employed, there can be employed, for example, ones exemplified in the item of the previously-described thermoplastic resin composition of the present invention. The tackifier may be employed in combination of two or more kinds. The content of the tackifier is not particularly limited, and it is decided so that a coating amount of the thermally- and pressure-sensitive adhesive is less than 5 g/m$^2$, and an adhesive strength when being stuck to a body to be stuck after manifestation of by heating the thermally- and pressure-sensitive adhesive sheet becomes not less than 100 gf/25mm. It can be selected by appropriately selecting corresponding to the combination of the thermoplastic resin with the solid plasticizer.

In general, it is 10-600 parts by weight or so, and preferably 20-500 parts by weight or so based on 100 parts by weight of the thermoplastic resin.

In the thermally- and pressure-sensitive adhesive layer which constructs the thermally- and pressure-sensitive adhesive sheet 3 of the present invention, in addition to the tackifier, there may be added, for example, an auxiliary for film-forming, a defoaming agent, an agent for improving coatability, a thickener, a lubricant, a stabilizer (an antioxidant, an ultraviolet ray absorbent, and a thermal stabilizer, etc.), an anti-electrostatic agent, and a anti-blocking agent (inorganic particles and organic particles) within a range in which properties are not deteriorated.

As the film-forming auxiliary, there can be employed the previously-exemplified compounds.

The thermally-and pressure-sensitive adhesive sheet 3 of the present invention can be obtained by, for example, coating a water-based dispersion in which components (the thermoplastic resin, etc.) constructing the previously-described thermally- and pressure-sensitive adhesive layer are dispersed in water using a dispersant onto a base sheet, followed by being dried. The dispersant to be employed for preparing the water-based dispersion is not particularly limited and, for example, there can be employed the dispersant employed in the method for the preparation of the water-based composition shown in the item of the previously-described thermoplastic resin composition of the present invention. As a method for dispersing into water, there can be also employed the method shown in the same item.

Average particle diameter of the solid plasticizer in the water-based dispersion is preferably 0.5-20 μm, and more preferably 1-15 μm or so. In the case that the average particle diameter is less than 0.5 μm, it is afraid that a blocking is occasionally caused, and productivity lowers because a long time of period for crushing of the solid plasticizer is required. In the case that the average particle diameter exceeds 20 μm, it is afraid that a coating surface becomess roughened, and a quality is lowered in a label.

The thermally- and pressure-sensitive adhesive layer in the thermally- and pressure-sensitive adhesive sheet 3 of the present invention can be formed by coating a thermally- and pressure-sensitive adhesive on at least one surface of a base material. A method for forming the pressure-sensitive adhesive layer, and the base material to be employed are the same as in the case of the previously-described thermally- and pressure-sensitive adhesive 1.

As described hereinabove, in the thermally- and pressure-sensitive adhesive sheet 3 of the present invention, there is formed the thermally- and pressure-sensitive adhesive layer containing a thermoplastic resin, a tackifier, and a solid plasticizer on at least one surface of a base material sheet, and an adhesive force is controlled so that a coating amount of the thermally- and pressure-sensitive adhesive is less than 5 g/m$^2$, and an adhesive strength when being stuck to a body to be stuck after manifestation of tackiness in the sheet becomes not less than 100 gf/25mm. In the case that the coating amount of the thermally- and pressure-sensitive adhesive is not less than 5 g/m$^2$, a long time is required for drying, and a coating speed cannot become unpreferably increased. Further, a lower limit of a coating amount of the thermally- and pressure-sensitive adhesive, as described hereinafter, if an adhesive strength when being stuck to a body to be stuck after manifestation of tackiness by heating the thermally-and pressure-sensitive adhesive sheet is not less than 100 gf/25mm, is not particularly limited. In general, it is not less than 2 g/m$^2$.

Still further, in the case that the adhesive strength when being stuck to a body to be stuck after manifestation of tackiness by heating the thermally- and pressure-sensitive adhesive sheet is less than 100 gf/25mm, the pressure-sensitive adhesive sheet is apt to become readily peeled and, particularly, in the case that the adhesive strength at 5 minutes-lapse after sticking is less than 100 gf/25mm, the thermally- and pressure-sensitive adhesive sheet is unpreferably apt to become peeled in a stage for filling into bottles and PET bottles and a stage for wrapping thereof.

When tackiness is produced by heating the thermally- and pressure-sensitive adhesive sheet, a maximum limit of the adhesive strength is not particularly limited if the coating amount of the thermally- and pressure-sensitive adhesive is less than 5 g/m$^2$ as described hereinabove, and it is preferred in less than 600 gf/25mm from a viewpoint of being capable of stripping in future days.

The adhesive strength can be controlled by selecting the kind and the amount of the thermoplastic resin, the kind and the amount of the solid plasticizer, the kind and the amount of the tackifier, and the combination and amount ratio of the thermoplastic resin with the solid plasticizer, etc.

In the thermally- and pressure-sensitive adhesive sheet 3 of the present invention, since the coating amount

of the thermally-and pressure-sensitive adhesive is less than 5 g/$m^2$, and an adhesive strength when being stuck to a body to be stuck after manifestation of tackiness by heating the thermally- and pressure-sensitive adhesive sheet is not less than 100 gf/25mm, a sufficient adhesive force can be produced even though in a small coating amount, and the sheet can be prepared by a gravure printing. Further, in the thermally- and pressure-sensitive adhesive sheet in which the adhesive strength when being stuck to a body to be stuck at 5 minutes-lapse after manifestation of tackiness by heating the thermally- and pressure-sensitive adhesive sheet is less than 100 gf/25mm, since a sufficient adhesive force can be produced even immediately after being stuck to a body to be stuck, peeling of the thermally- and pressure-sensitive adhesive sheet is not observed, and it can contribute to stability in a preparation line of a product in which the thermally- and pressure-sensitive adhesive sheet is stuck.

[Recording sheet 1]

In the recording sheet 1 of the present invention, there is formed an ink absorbing layer which is constructed by an acrylic-based polymer containing 5-50% by mol of a hydrophilic monomer which is a constructing monomer and a solid plasticizer on at least one surface of a base material.
The base material is not particularly limited, for example, there are enumerated paper, coated paper, nonwoven fabrics, and a plastic film, etc. As a polymer which constructs plastic film, there are enumerated, for example, a polyolefin such as a polyethylene and polyethylene, an ethylene-vinyl acetate copolymer, a polyvinyl chloride, a polyvinyl chloride-vinyl acetate copolymer, a poly(meth)acrylate, a polystyrene, a polyvinyl alcohol, an ethylene-vinyl alcohol copolymer, a cellulose derivative such as a cellulose acetate, a polyester (a polyalkylene terephthalate such as a polyethylene terephthalate and a polybutylene terephthalate; a polyalkylene naphthalate such as a polyethylene naphthalate and a polybutylene naphthalate), a polycarbonate, a polyamide (a polyamide 6, a polyamide 6/6, a polyamide 6/10, and a polyamide 6/12, etc.), a polyester amide, a polyether, a polyimide, a polyamideimide, and a polyetherester, etc., a copolymer thereof, a blended product thereof, and a crosslinked product thereof may be also employed. Of the films, there are usually employed the polyolefin (particularly, a polypropylene), the polyester (particularly, a polyethylene terephthalate), and the polyamide, etc., and the polyester is particularly preferred in view of mechanical strength and workability, etc. In the plastic films, there may also be optionally added an anti-oxidant, an ultraviolet ray absorbent, a thermal stabilizer, a lubricant, and pigments which are a common additive.
In order to improve an adhesive ability with the ink absorbing layer, the base material may be modified by a surface treatment such as a corona discharge or an under coating and, in order to prevent curling, a layer for preventing curling such as a resin layer and a pigment layer may be formed on back surface of the base material. The base material may be optionally translucent, semi-transparent, or transparent depending upon uses. Thickness of the base material can be selected depending upon uses and, it is usually 5-500 μm, preferably 10-300 μm or so.
In the present invention, it is an important characteristic that the ink absorbing layer is constructed by an acrylic-based polymer containing 5-50% by weight of a hydrophilic monomer which is a constructing monomer, and a solid plasticizer.
As the hydrophilic monomer, there are exemplified, for example, a monomer having carboxylic group [for example, a monomer having a free carboxylic group or an acid anhydride group such as (meth)acrylic acid, itaconic acid, maleic acid, maleic anhydride, fumaric acid, and crotonic acid, and a salt thereof (an alkali metal salt, an alkali earth metal salt, an ammonium salt, and an amine salt, etc.)], a half ester of an unsaturated polyvalent carboxylic acid or an anhydride thereof with a linear chain or branched chain alcohol having a carbon number of 1-20 or so [for example, monomethyl maleate, monoethyl maleate, monobutyl maleate, monooctyl maleate, and mono-2-ethylhexyl maleate, etc.], a monomer having hydroxyl group [for example, a hydroxy-$C_{2-6}$alkyl (meth)acrylate such as 2-hydroxyethyl(meth)acrylate, 2-hydroxypropyl(meth)acrylate, 3-hydroxypropyl(meth)acrylate, and 4-hydroxybutyl(meth)acrylate, etc.], a monomer having an amide group [for example, (meth)acrylamide, α-ethyl(meth)acrylamide, N-methyl(meth)acrylamide, N-butoxymethyl(meth)acrylamide, and diacetone(meth)acrylamide, etc.], a monomer having a sulfonic acid group [for example, styrene sulfonic acid and vinyl sulfonic acid, etc.], a monomer having an ether group [for example, vinyl ethers such as vinylmethyl ether, vinylethyl ether, and vinylisopropyl ether], and a monomer having a polyoxyalkylene group [for example, diethyleneglycol mono(meth)acrylate, triethyleneglycol mono(meth)acrylate, and a polyethyleneglycol mono(meth)acrylate, etc.], etc. The hydrophilic monomer may be employed solely or in combination of two or more kinds.
A preferred hydrophilic monomer includes the monomer having carboxylic group [(meth)acrylic acid, etc.], the monomer having hydroxyl group [2-hydroxyethyl(meth)acrylate and hydroxypropyl(meth)acrylate, etc.], the monomer having a polyoxyalkylene unit [for example, diethyleneglycol mono(meth)acrylate, triethyleneglycol mono(meth)acrylate, and a polyethyleneglycol mono(meth)acrylate, etc.].
The acrylic-based polymer, in addition to the above-described hydrophilic monomers, usually contains a nonionic monomer. As the nonionic monomer, there can be exemplified, for example, an alkyl ester [for example, a $C_{1-18}$alkyl(meth)acrylate such as methyl(meth)acrylate, ethyl(meth)acrylate, propyl(meth)acrylate, isopropyl(meth)acrylate, butyl(meth)acrylate, isobutyl(meth)acrylate, t-butyl(meth)acrylate, hexyl(meth)acrylate, octyl(meth)acrylate, 2-ethylhexyl(meth)acrylate, lauryl(meth)acrylate, and stearyl(meth)acrylate], a cycloalkyl ester [for example, cyclohexyl(meth)acrylate, etc.], an aryl ester [for example, phenyl(meth)acrylate, etc.], an aralkyl ester [for example, benzyl(meth)acrylate, etc.], aromatic vinyls [for example, styrene, vinyltoluene, and α-methylstyrene, etc.], vinyl esters (for example, vinyl acetate, vinyl propionate, and vinyl versate, etc.), allyl esters (for example, allyl acetate, etc.), a monomer containing halogens (for example, vinylidene chloride and vinyl chloride, etc.), a vinyl cyanate [for example, (meth)acrylonitrile, etc.], and olefins (for example, ethylene and propylene, etc.), etc. The nonionic monomers may be employed solely or in combination og two or more kinds.

As the nonionic monomers, there are usually employed a $C_{1-18}$alkyl(meth)acrylate [particularly, a $C_{2-10}$alkylacrylate and a $C_{1-6}$alkylmethacrylate, etc.], aromatic vinyls [particularly, styrene, etc.], and vinyl esters [particularly, vinyl acetate, etc].

The content of the nonionic monomers in the acrylic-based polymer is, for example, 30-95% by mol or so, and preferably 50-95% by mol or so based on total monomers.

The acrylic-based polymer may contain other monomers, for example, a cationic monomer and a crosslinkable monomer, etc., within a range in which an ink absorbing property and adhesive property, etc. are not deteriorated.

The cationic monomer includes, in addition to a variety of monomers having a tertiary amino group or a basic group thereof, a group capable of forming a quaternary ammonium basic group or a variety of monomers having a quaternary ammonium basic group. As the cationic monomer, there are enumerated, for example, a di-$C_{1-4}$alkylamino-$C_{2-3}$alkyl(meth)acrylamide or a salt thereof [for example, dimethylaminoethyl(meth)acrylamide, diethylaminoethyl (meth)acrylamide, and dimethylaminopropyl(meth)acrylamide, and diethylaminopropyl(meth)acrylamide, or a salt thereof, etc.], a di-$C_{1-4}$alkylamino-$C_{2-3}$alkyl(meth)acrylate a salt thereof [for example, dimethyl aminoethyl(meth)acrylate, diethylaminoethyl(meth)acrylate, and diethylaminopropyl (meth)acrylate, or a salt thereof, etc.], a di-$C_{1-4}$alkylamino-$C_{2-3}$alkyl group-substituted aromatic vinyl compound or a salt thereof [for example, 4-(2-dimethylaminoethyl)styrene and 4-(2-dimethylaminopropyl)styrene, or a salt thereof, etc.], and a heterocyclic monomer containing nitrogen or a salt thereof [for example, vinyl pyridine, vinyl imidazole, and vinyl pyrolidone, or a salt thereof etc.], etc. As the salts, there can be exemplified a halide salt (a salt of hydrochloric acid and a salt of hydrobromic acid, etc.), a sulphate, an alkyl sulphate (methyl sulphate and ethyl sulphate, etc.), an alkyl sulphonate, an aryl sulphonate, and a salt of a carboxylic acid (a salt of acetic acid, etc.), etc.

It is to be noted that the quaternary ammonium base may be formed by allowing to react tertiary amino group with an alkylation agent (for example, an organic halogenated compound such as epichlorohydrin, methyl chloride, and benzyl chloride). The cationic monomers can be employed solely or in combination of two or more kinds.

As the crosslinkable monomer, there can be exemplified a variety of monomers having a self-crosslinkable or reactive functional group, for example, a monomer containing an epoxy group [for example, glycidylmethacrylate, methallylglycidylether, 1-allyloxy-3,4-epoxybutane, 1-(3-butenyloxy-2,3-epoxypropane, and 4-vinyl-1-cyclohexene-1,2-epoxide, etc.], a monomer having methylol group or a derivative thereof [for example, N-$C_{1-4}$alkoxymethyl(meth)acrylamide such as N-methylol(meth)acrylamide, N-methoxymethyl(meth)acrylamide, and N-butylol(meth)acrylamide, etc.], a monomer having a hydrolyzable and condensable group such as a silyl group [for example, vinyltrimethoxy silane, vinyltriethoxy silane, vinyltributoxy silane, vinylmethoxydimethyl silane, vinylethoxydimethyl silane, vinylisobutoxydimethyl silane, vinyldimethoxymethyl silane, vinyldiethoxymethyl silane, vinyltris (β-methoxyethoxy)silane, vinyldiphenyl ethoxysilane, vinyltriphenoxysilane, γ-(vinylphenylaminopropyl) trimethoxy silane, γ-(vinylbenzylaminopropyl) trimethoxysilane, γ-(vinylphenylaminopropyl) triethoxysilane, γ-(vinylbenzylaminopropyl)triethoxysilane,divinyldimethoxysilane, divinyldiethoxysilane, divinyldi(β-methoxyethoxy)silane, vinyldiacetoxymethylsilane, vinyltriacetoxysilane, vinylbis(dimethylamino)methylsilane, vinylmethyldichlorosilane, vinyldimethylchlorosilane, vinyltrichlorosilane, vinylmethylphenyl chlorosilane, allyltriethoxy silane, 3-allylaminopropyl trimethoxysilane, allyldiacetoxymethyl silane, allyltriacetoxy silane, allylbis(dimethylamino)methylsilane, allylmethyldichlorosilane, allyldimethylchlorosilane, allyltrichlorosilane, methallylphenyldichlorosilane, β-(meth )acryloxyethyltrimethoxysilane, β-(meth)acryloxyethyl triethoxysilane, γ-(meth)acryloxypropyl trimethoxysilane, γ-(meth)acryloxypropyl triethoxysilane, γ-(meth)acryloxypropylmethyl dimethoxysilane, γ-(meth)acryloxypropylmethyl dichlorosilane, and γ-(meth)acryloxypropyltris(β-methylmethoxy)ethoxy)silane], a monomer having an aziridinyl group [for example, 2-(1-aziridinyl)ethyl(meth)acrylate, 2-(1-aziridinyl)propyl (meth)acrylate, and 3-(1-aziridinyl)propyl(meth)acrylate, etc.], etc. The crosslinkable monomers can be employed solely or in combination of two or more kinds.

The acrylic-based polymer may be a polymer in which an acrylic-based monomer is a primary constructing monomer component.

Glass transition temperature in the acrylic-based polymer is, for example, -20°C to 70°C or so. In the case that the glass transition temperature is less than -20°C, an anti-blocking resistance is apt to lower. Further, in the case that the glass transition temperature is too high, an adhesive property becomes apt to lower. A weight average molecular weight in the acrylic-based polymer is selected from, for example, a range of $0.2 \times 10^4$ to $100 \times 10^4$, preferably, $1 \times 10^4$ to $50 \times 10^4$ or so.

The ink-absorbing layer may optionally contain resin components other than the acrylic-based polymer within a range in which an ink-absorbing property, etc. is not deteriorated. As such the resin components, there are enumerated, for example, a hydrophilic polymer, a common pressure sensitive adhesive resin other than the acrylic-based resin, and a binder resin, etc.

As the above-described hydrophilic polymer, there are enumerated, for example, a hydrophilic natural polymer or a derivative thereof (for example, starch, corn starch, sodium alginate, gum arabic, gelatine, casein, and dextrin, etc.), a cellulose derivative (for example, a methylcellulose, an ethylcellulose, a hydroxyethylcellulose, a carboxymethylcellulose, a cellulose sulphate, and cyanoethylcellulose, etc.), a vinylalcohol-based polymer (for example, a polyvinylalcohol and an ethylene-vinylalcohol copolymer, etc.), an ethylene-based copolymer (for example, an ethylene-maleic anhydride copolymer, etc.), a vinyl acetate-based copolymer (for example, a vinyl acetate-(meth)acrylate copolymer and a vinyl acetate-allylether copolymer, etc.), a polyalkylene oxide (for example, a polyethylene oxide and an ethylene oxide-propylene oxide block copolymer, etc.), a polymer having carboxylic group or sulfonic group and a salt thereof [for example, a poly(meth)acrylic acid or a salt thereof (an alkali metal salt such as an ammonium salt and a sodium salt), an acrylic-based copolymer such as a methylmethacrylate-(meth)acrylic acid copolymer and an acrylic acid-vinylalcohol copolymer; a vinylether-based copolymer such as a polyvinylmethylether, a polyvinylisobutylether, and a methylvinylether-maleic anhydride copolymer; a styrene-based copolymer such as a styrene-maleic anhydride copolymer, a styrene-(meth)acrylic acid copolymer, and a sodium polystyrene sulphonate; and a sodium polyvinylsulphonate, etc.], a polymer having nitrogen (or a cationic polymer) or a salt thereof (for example, a quaternary ammonium salt such as a polyvinylbenzyltrimethyl ammonium chloride and a polydiallyldimethyl ammonium chloride; a hydrochrolate of a polydimethylaminoethyl(meth)acrylate, a polyvinyl pyridine, a polyvinyl imidazole, a polyethylene imine, a polyamide polyamine, a polyacrylamide, and polyvinyl pyrolidone, etc.), etc. The hydrophilic polymers can be employed solely or in combination of two or more kinds.

As the previously-described solid plasticizer, there can be employed a variety of compounds, which are solid at ordinary temperatures, and which can produce tackiness through plasticizing the previously-described acrylic-based polymer by thermally melting, for example, the solid plasticizer described in the item of the previously-described thermoplastic resin composition of the present invention. The solid plasticizers may be employed solely or in combination of two or more kinds.

Of the previously-described solid plasticizers, there are preferably employed at least one compound selected from the group of three kinds of the previously-described compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2), and (iiia) a diester compound of (C) (c1) hydroquinone or reasorcinol in which benzene ring may be substituted by an alkyl group, or (c2) catechol in which benzene ring may be substituted by an alkyl group with (D) an organic monobasic acid.

A preferred multiester compound includes the previously-described multiester compound of the (A11) a substituted cyclohexanol substituted by at least one of an alkyl group and having at least 3 carbons in the substituted group or (A21) an alcohol having a bridged ring containing at least one of a six-membered saturated carbon ring to which hydroxyl group or hydroxymethyl group connects, with (B) a polybasic acid.

The content of the solid plasticizer is 30-1000 parts by weight, preferably 100-1000 parts by weight, and more preferably 150-900 parts by weight based on 100 parts by weight of the previously-described acrylic-based polymer. In the case that the content of the solid plasticizer is less than 30 parts by weight, sufficient tackiness is not occasionally produced in heating and, in the case of more than 1,000 parts by weight, a cohesive force lowers, and a sufficient adhesive strength is not occasionally produced.

The ink-absorbing layer in the present invention may optionally contain a tackifier. As the tackifier to be employed, there can be employed ones exemplified in the item of the previously-described thermoplastic resin composition of the present invention. The tackifier may be employed solely or in combination of two or more kinds.

The content of the tackifier is not particularly limited, and it can be selected depending upon the combination of the acrylic-based polymer with the solid plasticizer. In usual, it is 10-600 parts by weight, and preferably 20-500 parts by weight or so based on 100 parts by weight of the acrylic-based polymer.

In the ink-absorbing layer, in order to improve a fixing ability of a coloring agent (a dye), there may be added a binder for a dye, particularly, a polymeric binder for a dye. The binder for a dye (the polymeric binder for a dye) usually contain a cationic group (particularly, a strong cationic group such as guanidyl group and a quaternary ammonium salt type group) in the molecule. The binder for a dye may be water-soluble.

As the binder for a dye, there can be exemplified a dicyan-based binder (a dicyandiamide-formalin polycondensate, etc.), a polyamine-based binder [an aliphatic polyamine such as diethylenetriamine, triethylenetetramine, dipropylenetriamine, and a polyallylamine, an aromatic polyamine such as phenylenediamine, a condensate of dicyandiamide with a (poly)$C_{2-4}$alkylenepolyamine (a dicyandiamide-diethylenetriamine polycondensate, etc.)], and a polycation-based binder, etc. As the polycation-based binder, there can be exemplified, for example, epichlorohydrin-di-$C_{1-4}$alkylamine addition polymer (a epichlorohydrin-dimethylamine addition polymer, etc.), a polymer of allyl amine or a salt thereof (a polymer of a polyallylamine or a hydrochloric salt, for example, PAA-10C, PAA-HCl-3L, and PAA-HCl-10L, etc. manufactured by Nitto Boseki, Ltd.), a polymer of a diallyl-$C_{1-4}$alkylamine or a salt thereof (a polymer of a diallylmethylamine or a hydrochloric salt thereof, for example, PAS-M-1, etc. manufactured by Nitto Boseki, Ltd.), a polymer of a diallyldi-$C_{1-4}$alkylammonium salt (a polymer of diallyldimethylammonium chloride, for example, PAS-H-5L and PAS-H-10L, etc. manufactured by Nitto Boseki, Ltd.), a copolymer of a diallylamine or a salt thereof with sulphur dioxide (a diallylamine hydrochloric acid-sulphur dioxide copolymer, for example, PAS-92, etc. by Nitto Boseki, Ltd.), a diallyldi-$C_{1-4}$alkylammonium salt-sulphur dioxide copolymer (diallyldimethyl ammonium chloride-sulphur dioxide copolymer, for example, PAS-A-1, PAS-A-5, PAS-A-120L, and PAS-A-120A, etc. by Nitto Boseki, Ltd.), a copolymer of a diallyldi-$C_{1-4}$alkylammonium salt with a diallylamine or a salt thereof or a derivative thereof (a diallyldimethyl ammonium chloride-diallyl amine hydrochloric salt copolymer, for example, PAS-880, etc. by Nitto Boseki, Ltd.), a diallyldi-$C_{1-4}$alkylammonium salt polymer, a diallyldi-$C_{1-4}$alkylaminoethyl(meth)acrylate quaternary salt polymer, a diallyldi-$C_{1-4}$alkylammonium salt-acrylamide copolymer (a diallyldimethyl ammonium chloride-acrylamide copolymer, for example, PAS-J-81, etc. by Nitto Boseki, Ltd.), and an amine-carboxylic acid copolymer (for example, PAS-410, etc. by Nitto Boseki, Ltd.), etc.

The binder for a dye can be employed solely or in combination of two or more kinds.

The content of the binders for a dye can be selected from a range in which the developability can be improved, for example, a range of 0.1-40 parts by weight, preferably 1-30 parts by weight, and more preferably 2-20 parts by weight or so based on 100 parts by weight of the acrylic-based polymer solid.

In the ink-absorbing layer, in order to further improve an ink-absorbing ability and a blocking resistance, there may be also added bulk materials (pigments, etc.). As the bulk materials, there can be enumerated, for example, inorganic bulk materials (mineral bulk materials such as white carbon, fine-particle state calcium silicate, zeolite, aluminomagnesium silicate, calcine diatomaceous earth, fine-particle state magnesium carbonate, fine-particle state alumina, silica, talc, kaolin, delamikaolin, clay, a heavy calcium carbonate, a precipitated calcium carbonate, magnesium carbonate, titanium dioxide, aluminum hydroxide, calcium hydroxide, magnesium hydroxide, magnesium silicate, calcium sulphate, sericite, bentonite, and sumectite), organic bulk materials (crosslinkable or noncrosslinkable organic fine particles such as a polystyrene resin, an acrylic resin, a urea resin, a melamine resin, and benzoguanamine resin, organic bulk materials such as a microbaloon, etc), etc. The bulk materials can be appropriately selected and employed solely or in combination of two or more kinds.

The ink-absorbing layer, within a range in which properties are not deteriorated, may further contain common additives, for example, a curing agent, a dispersant, a surface active agent, a fluorescent coating, a pH regulator, a defoaming agent, a wetting agent, a coatability improver, a thickener, a lubricant, a stabilizer (an antioxidant, an ultraviolet ray absorbent, a thermal stabilizer, etc.), an antistatic agent, an anti-blocking agent, and an antiseptic, etc.

The thickness of the ink-absorbing layer can be selected depending upon uses, and it is, for example, 5-50 μm, preferably 10-30 μm, and usually 5-30 μm or so.

Since the recording sheet 1 of the present invention has an ink-absorbing layer containing the previously-described specified acrylic-based resin and the solid plasticizer, it is high in an ink-absorbing property and an ink-fixing property and, moreover, large in an adhesive property.

The recording sheet 1 of the present invention can be prepared by forming an ink-absorbing layer containing the previously-described acrylic-based resin and the solid plasticizer on at least one surface of a base material. The ink-absorbing layer can be formed by coating after dissolving the previously-described acrylic-based resin and the solid plasticizer into an organic solvent or by coating after thermally melting. Further, a recording sheet can be obtained by coating on at least one surface of a base material after preparing a water-based composition in which the previously-described acrylic-based resin and the solid plasticizer are dissolved or dispersed in water, and then, by drying. As a coating method, there are exemplified a method in which there are employed a roll coater, an air-knife coater, a blade coater, a rod coater, a bar coater, a comma coater, a gravure coater, and a silk screen coater, etc. In a preferred water-based composition, an acrylic-based polymer is dispersed in water.

In the above-described water-based composition, a dispersant to be employed for dispersing the acrylic-based polymer is not particularly limited, and there can be employed any one of an anionic-based, a cationic-based, and a nonionic-based dispersants which are conventionally publicly-known. As the anionic-based dispersants, there can be enumerated carboxylates, sulfates, sulphonates, and phosphonates, etc. Of those, an ammonium carboxylate is preferred. As the nonionic-based dispersants, there can be enumerated a polyethylene glycol type and a polyvalent alcohol type ones, etc.

As a method for preparing the previously-described water-based composition, there can be also employed a variety of methods which are conventionally publicly-known. For example, as the preparation method, there are enumerated a method in which respective components constructing an ink-absorbing layer are in advance mixed, and then, it is dispersed in water, a method in which a solid plasticizer is dispersed in an acrylic-based polymer emulsion and a

tackifier emulsion, respectively, followed by mixing thereof, a method in which a solid plasticizer is dispersed in water, followed by mixing an acrylic-based polymer emulsion and a tackifier emulsion with the dispersion liquid. As a method for dispersing the solid plasticizer into the emulsion or water, there can be exemplified a method in which a molten solid plasticizer is dispersed, a method in which a solid plasticizer is dispersed while finely-powdering, and a method in which a finely-powdered solid plasticizer is dispersed, etc. It is to be noted that the acrylic-based polymer emulsion may be even prepared by an emulsion polymerization and, further, it may be also prepared by emulsifying optionally using an additive after obtaining a polymer by other methods except the emulsion polymerization. For example, an acrylic-based polymer emulsion can be prepared by emulsifying while adding water after adding an additive (for example, an emulsifier, a pH regulator, and an acid, etc.) to an organic solution containing an acrylic-based polymer polymerized under the presence of a water-soluble organic solvent (an alcohol, etc. such as isopropyl alcohol), and then removing the organic solvent.

Average particle diameter of the solid plasticizer in the water-based composition is preferably 0.5-20 μm or so, and more preferably 1-15 μm or so. In the case that the average particle diameter is less than 0.5 μm, it is anxious that an anti-blocking property occasionally lowers or productivity lowers because of requiring a long period. In the case that the average particle diameter exceeds 20 μm, a coating surface becomes roughened, and it is anxious that a quality of a recording sheet lowers.

The recording sheet 1 of the present invention is useful for a recording sheet by an ink-jet method in which micro drops of an ink are flied and, it can be also utilized as a sheet for printing (particularly, a sheet for a water-based ink) by an offset printing and a flexo printing, etc.

In the present invention, since the ink absorbing layer is formed by using the acrylic-based polymer containing 5-50% by mol of a hydrophilic monomer as a constructing monomer and a solid plasticizer, it is excellent in an ink-absorbing property and a printing property and, further, it has a large adhesive force.

Further, an blocking resistance can be largely improved by selecting a solid plasticizer.

[Recording sheet 2]

In the recording sheet 2 of the present invention, at least one ink-absorbing layer is formed on one surface of a base material, and a delayed-tack layer is formed on another surface, which is composed of a solid plasticizer, a thermoplastic resin, and a tackifier.

(Base material)

Kind of the base material is not particularly limited and, for example, there are enumerated paper, coated paper, nonwoven fabrics, and a plastic film, etc. As a polymer which constructs plastic film, there are enumerated, for example, a polyolefine such as a polyethylene and polyethylene, an ethylene-vinyl acetate copolymer, a polyvinyl chloride, a polyvinyl chloride-vinyl acetate copolymer, a poly(meth)acrylate, a polystyrene, a polyvinyl alcohol, an ethylene-vinyl alcohol copolymer, a cellulose derivative such as a cellulose acetate, a polyester (a polyalkylene terephthalate such as a polyethylene terephthalate and a polybutylene terephthalate, a polyalkylene naphthalate such as a polyethylene naphthalate and a polybutylene naphthalate), a polycarbonate, a polyamide (a polyamide 6, a polyamide 6/6, a polyamide 6/10, and a polyamide 6/12, etc.), a polyester amide, a polyether, a polyimide, a polyamideimide, and a polyetherester, etc., and a copolymer thereof, a blended product thereof, and a crosslinked product thereof may be also employed. Of the films, there are usually employed the polyolefine (particularly, a polypropylene), the polyester (particularly, a polyethylene terephthalate, etc.), and the polyamide, etc., and the polyester is particularly preferred in view of mechanical strength and workability, etc. In the plastic films, there may be optionally added an anti-oxidant, an ultraviolet ray absorbent, a thermal stabilizer, a lubricant, and pigments which are a common additive.

In order to improve an adhesive ability with the ink-absorbing layer, the base material may be modified by a surface treatment such as a corona discharge or an under coating and, in order to prevent curling, a layer for preventing curling such as a resin layer and a pigment layer may be formed on back surface of the base material. The base material may be optionally translucent, semi-transparent, or transparent depending upon uses. Thickness of the base material can be selected depending upon uses and, it is usually 5-500 μm, and preferably 10-300 μm or so.

(Delayed-tack layer)

The recording sheet 2 of the present invention is mainly characterized in that a delayed-tack layer is composed of a solid plasticizer, that is, it is a solid at ordinary temperature and, as a component which produces tackiness through plasticizing a thermoplastic resin by thermally melting, there is employed a compound having a specified structure, that is, at least one compound selected from the group of three kinds of compounds (i) a multiester compound of (A) (A1) an alcohol having a substituted cyclohexane ring or a substituted cyclohexene ring substituted by at least one of an alkyl

group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2), and (iiia) a diester compound of (C) (c1) hydroquinone or reasorcinol in which benzene ring may be substituted by an alkyl group, or (c2) catechol in which benzene ring may be substituted by an alkyl group with (D) an organic monobasic acid. It is to be noted that the solid plasticizer may be employed solely or in combination of two or more of the same or different kinds.

Of the previously-described multiester compounds, there is preferred a multiester compound of the previously-described cyclohexanol (A11) substituted by at least one of an alkyl group and having at least 3 carbons in the alkyl group, or (A21) an alcohol having a bridged ring containing at least one of a six-membered saturated carbon ring in which hydroxyl group or hydroxymethyl group are combined, with (B) a polybasic acid.

The solid plasticizer is the same solid plasticizer as in the previously-described thermoplastic resin composition 1 described in the present invention.

The content of the solid plasticizer is 30-1000 parts by weight or so, preferably 100-1000 parts by weight or so, and more preferably 150-900 parts by weight or so based on 100 parts by weight of the previously-described acrylic-based polymer. In the case that the content of the solid plasticizer is less than 30 parts by weight, sufficient tackiness is not occasionally produced in heating and, in the case of more than 1,000 parts by weight, a cohesive force lowers, and a sufficient adhesive strength is not occasionally produced.

In the present invention, as the thermoplastic resin by which the delayed-tack layer is constructed, there can be employed the same thermoplastic resin as in the previously-described thermoplastic resin composition described in the present invention.

Glass transition temperature (Tg) in the thermoplastic resin can be appropriately selected in consideration of the kind of materials to be stuck within a range in which there are not deteriorated an adhesive property and an anti-blocking property in the case that a pressure-sensitive adhesive sheet is prepared. It is usually -10 to 70°C or so, preferably -10 to 25°C or so. In the case that the glass transition temperature is less than -10°C, a blocking resistance is apt to become lowered and, in the case that the glass transition temperature is too high, an adhesive property is apt to become lowered.

In the present invention, as the tackifier by which the delayed-tack layer is constructed, there can be employed the same ones as previously-described. The tackifiers may be employed in combination of two or more kinds. The content of the tackifier is not particularly limited, and it can be selected according to the combination of the thermoplastic resin with the solid plasticizer and, it is usually 10-600 parts by weight or so, and preferably 20-500 parts by weight or so based on 100 parts by weight of the thermoplastic resin.

The delayed-tack layer may further contain usual additives, within a range in which effects in the present invention are not deteriorated, for example, an auxiliary for film-forming, a dispersant, a surface active agent, a pH regulator, a defoaming agent, a wetting agent, a coatability improver, a thickener, a lubricant, a stabilizer (an antioxidant, an ultraviolet ray absorbent, a thermal stabilizer, etc.), an antistatic agent, an anti-blocking agent (inorganic particles or organic particles, etc.), and an antiseptic, etc. As the auxiliary for film-forming, there can be employed the previously-described ones.

The thickness of the delayed-tack layer can be selected depending upon uses, and it is, for example, 5-50 µm, preferably 10-30 µm or so, and usually 5-30 µm or so.

The delayed-tack layer can be formed by coating after dissolving constructing components such as the thermoplastic resin and the solid plasticizer into an organic solvent or by coating after thermally melting. Further, the delayed-tack layer can be formed by coating on at least one surface of a base material after preparing a water-based composition in which constructing components such as the thermoplastic resin and the solid plasticizer are dissolved or dispersed in water, and then by drying. As coating methods, there are exemplified a method in which there are employed a roll coater, an air-knife coater, a blade coater, a rod coater, a bar coater, a comma coater, a gravure coater, and a silk screen coater, etc. In a preferred water-based composition, a thermoplastic resin is dispersed in water.

In the water-based composition, a dispersant to be employed for dispersing the thermoplastic resin is not particularly limited, and there can be employed any one of an anionic-based, a cationic-based, and a nonionic-based dispersants which are conventionally publicly-known. As the anionic-based dispersants, there can be enumerated carboxylates, sulphates, sulphonates, and phosphonates, etc. Of those, an ammonium salt of a carboxylic acid is preferred.

As the nonionic-based dispersants, there can be enumerated a polyethylene glycol type and a polyvalent alcohol type ones, etc.

As a method for preparing the previously-described water-based composition, there can be also employed a variety of methods which are conventionally publicly-known. For example, as the preparation method, there are enumerated a method in which respective components constructing a delayed-tack layer are in advance mixed, and then, it is dispersed in water, a method in which a solid plasticizer is dispersed in a thermoplastic resin emulsion and a tackifier emulsion, respectively, followed by mixing thereof, and a method in which a solid plasticizer is dispersed in water,

followed by mixing a thermoplastic resin emulsion and a tackifier emulsion with the dispersed liquid. As a method for dispersing the solid plasticizer into the emulsion or water, there can be exemplified a method in which a molten solid plasticizer is dispersed, a method in which a solid plasticizer is dispersed while finely-powdering, and a method in which a finely-powdered solid plasticizer is dispersed, etc. It is to be noted that the thermoplastic resin emulsion may be even prepared by an emulsion polymerization and, further, it may be also prepared by emulsifying optionally using an additive after obtaining a polymer by other methods except the emulsion polymerization. For example, a thermoplastic resin emulsion can be prepared by emulsifying while adding water after adding an additive (for example, an emulsifier, pH-regulator, and acid, etc.) to an organic solution containing a polymer polymerized under the presence of a water-soluble organic solvent (an alcohol, etc. such as isopropyl alcohol), and then removing the organic solvent.

Average particle diameter of the solid plasticizer in the water-based composition is preferably 0.5-20 μm or so, and more preferably 1-15 μm or so. In the case that the average particle diameter is less than 0.5 μm, it is anxious that a blocking resistance occasionally lowers or productivity lowers because of requiring a long period. In the case that the average particle diameter exceeds 20 μm, a coating surface becomes roughened, and it is anxious that a quality of a recording sheet lowers.

(Ink-absorbing layer)

The ink-absorbing layer may be constructed by a single layer or a multiple layer. Further, the ink-absorbing layer is not particularly limited so far as it is constructed by ink-absorbable substances. The ink-absorbing layer can be constructed by a polymer, and as the polymer, there are enumerated, for example, natural polymer or a derivative thereof, a cellulose derivative, an olefine-based polymer, an acrylic-based polymer, a styrene-based polymer, a vinyl-based polymer (a vinylacetate-based copolymer and a vinylether-based copolymer, etc.), a vinylalcohol-based polymer, and a polymer derived from a polyalkylene oxide, a polyester, a polyamide, a polycarbonate, a polyurethane, a polysulphone, and an epoxide, etc. The polymer may have a hydrophilic group (an acidic group such as carboxylic group and sulphonic group, or a salt thereof, and a basic group, or a salt thereof). In an ink-jet recording method, since a water-based ink is often employed, an ink-absorbing layer is preferably constructed by a polymer (a hydrophilic polymer) having an absorbing property regardless of being water-soluble or water-insoluble.

As the hydrophilic polymer, there are enumerated, for example, a hydrophilic natural polymer or a derivative thereof (for example, starch, corn starch, sodium alginate, gum arabic, gelatine, casein, and dextrin, etc.), a cellulose derivative (for example, a methylcellulose, an ethylcellulose, a hydroxyethylcellulose, a carboxymethylcellulose, a cellulose sulphate, and cyanoethylcellulose, etc.), a vinylalcohol-based polymer (for example, a polyvinylalcohol and an ethylene-vinylalcohol copolymer, etc.), an ethylene-based copolymer (for example, an ethylene-maleic anhydride copolymer, etc.), a vinyl acetate-based copolymer (for example, a vinyl acetate-methylacrylate copolymer and a vinyl acetate-allylether copolymer, etc.), a polyalkylene oxide (for example, a polyethylene oxide and an ethylene oxide-propylene oxide block copolymer, etc.), a polymer having carboxylic group or sulphonic group and a salt thereof [a poly(meth)acrylic acid or a salt thereof (an alkali metal salt such as an ammonium salt and a sodium salt), an acrylic-based copolymer such as a methylmethacrylate-(meth)acrylic acid copolymer and an acrylic acid-polyvinylalcohol copolymer, etc.], a vinylether-based copolymer (a polyvinylalkyylether such as a polyvinylmethylether, a polyvinylisobutylether, and a methylvinylether-maleic anhydride copolymer), a styrene-based copolymer [a styrene-maleic anhydride copolymer, a styrene-(meth)acrylic acid copolymer, and a sodium polystyrene sulphonate), and a sodium polyvinylsulphonate], a polymer having nitrogen (or a cationic polymer) or a salt thereof [for example, a quaternary ammonium salt such as a polyvinylbenzyltrimethyl ammonium chloride and a polydiallyldimethyl ammonium chloride, a hydrochrolate of a polydimethylaminoethyl(meth)acrylate, a polyvinyl pyridine, a polyvinyl imidazole, a polyethylene imine, a polyamide polyamine, a polyacrylamide, and polyvinyl pyrolidone, etc.], etc. The hydrophilic polymers can be employed solely or in combination of two or more kinds.

Of the hydrophilic polymers, there are preferred the cellulose derivative (particularly, a hydroxyethylcellulose, etc.), the vinylalcohol-based polymer (particularly, the polyvinylalcohol, etc.), the vinylester-based copolymer (particularly, a vinylacetate-based copolymer, etc.), and polyvinyl pyrolidone, etc.

Further, there is also preferred the hydrophilic polymers having at least one functional group selected from a polyoxyalkylene unit, acetoacetyl group, carboxylic group, an acid anhydride group, and amino group.

As the hydrophilic polymers having a polyoxyalkylene unit, there are enumerated, for example, a copolymer (a modified vinyl acetate-based resin) with a vinyl monomer having a vinyl acetate unit and a polyoxyalkylene unit [for example, a (meth)acrylate and allylether, etc.], etc. Such the copolymer can be obtained, for example, as a product of the trade name of "OKS-7158G" from Nihon Gosei Kagaku, Ltd.

The hydrophilic polymers having acetoacetyl group include, for example, a hydrophilic polymer having acetoacetyl group produced by a reaction of a hydrophilic polymer having hydroxyl group with acetoacetic acid ester, for example, an acetoacetyl group-modified vinyl acetate-based copolymer (a polyvinylalcohol having acetoacetyl group and a cellulose derivative having acetoacetyl group, etc.). The acetoacetyl group-modified vinyl acetate-based copolymer can be obtained, for example, as a product of the trade name of "Z-320" from Nihon Gosei Kagaku Kogyo, Ltd.

The carboxylic group-modified hydrophilic polymer includes (a) a carboxylic group-modified polyvinylalcohol, for example, a partially-saponified product of a copolymer of a vinylester (a vinyl acetate, a vinyl propionate, and a vinyl formate) with an unsaturated monomer having carboxylic group [a monocarboxylic acid such as (meth)acrylic acid, a dicarboxylic acid such as maleic acid, fumaric acid, and itaconic acid, an acid anhydride thereof, or a monoalkyl ester], as a specific example, there are included a styrene-(meth)acrylic acid copolymer, a (meth)acrylate-(meth)acrylic acid copolymer (a methylmethacrylate-(meth)acrylic acid copolymer), a saponified product such as a vinyl acetate-(meth)acrylic acid copolymer, (b) a polysaccharide having carboxylic groups, for example, a carboxylic-$C_1$-alkyl cellulose, a carboxymethyl dextran, and alginic acid, etc.

The hydrophilic polymer having an acid anhydride group includes an alkylvinylether-maleic anhydride copolymer (a methylvinylether-maleic anhydride copolymer, etc.), an ethylene-maleic anhydride copolymer, a vinyl acetate-maleic anhydride copolymer, a styrene-maleic anhydride copolymer, and a (meth)acrylic acid-maleic anhydride copolymer (a methylmethacrylate-maleic anhydride copolymer, etc.), etc.

The hydrophilic polymer having an amino group includes a polyamide-polyamine, a polyvinylamine, a partially-saponified product of a poly(N-vinylformamide), and a polysaccharide having an amino group (an amino dextran and chitosan, etc.), etc.

Other preferred hydrophilic polymers include a hydrophilic polymer having epoxy groups. The hydrophilic polymer having epoxy groups may be any one of (1) a homopolymer or copolymer having a monomer unit having an epoxy group and (2) an epoxidized resin by epoxidation of a resin. As the monomer having epoxy groups, there are exemplified, for example, allylglycidylether, glycidyl methacrylate, glycidylacrylate, methallylglycidylether, 1-allyloxy-3,4-epoxybutane, 1-(3-butenyloxy)-2,3-epoxypropane, and 4-vinyl-1-cyclohexene-1,2-epoxide, etc. As a preferred monomer having epoxy groups, there are included allylglycidylether and glycidyl(meth)acrylate, etc.

As a copolymerizable monomer which is copolymerizable with the monomer having epoxy groups, there can be employed vinyl acetate and the previously-exemplified copolymerizable monomers, particularly, vinylesters (vinyl acetate, etc.), vinylpyrolidone, a (meth)acrylic-based monomer (a $C_{1-8}$alkyl(meth)acrylate, etc.), and a monomer having carboxylic group or a salt thereof ((meth)acrylic acid or a salt thereof), etc. It is to be noted that in the polymers, a unit in the vinylesters may construct a vinylalcohol unit by hydrolysis.

Further, an ink-absorbing layer may also contain a cationic polymer having a crosslinkable group. The cationic polymer having a crosslinkable group can be constructed by (1) a polymer of a monomer including at least a cationic monomer and a crosslinkable monomer, and (2) a polymer of a monomer containing at least a cationic monomer, a crosslinkable monomer, and a hydrophilic monomer. A preferred cationic polymer can be constructed by the polymer (2).

The cationic monomer includes, in addition to a variety of monomers having tertiary amino group or a base thereof, a variety of monomers having a group which can form a quaternary ammonium basic group or a quaternary ammonium basic group.

As the cationic monomer, there are enumerated, for example, a di-$C_{1-4}$alkylamino-$C_{2-3}$alkyl(meth)acrylicamide or a salt thereof [for example, dimethylaminoethyl(meth)acrylamide, diethylamino ethyl(meth)acrylamide, dimethylaminoproyl(meth)acrylamide, and diethylaminoproyl(meth)acrylamide or a salt thereof], a di-$C_{1-4}$alkylamino-$C_{2-3}$alkyl(meth)acrylate or a salt thereof [for example, dimethylaminoethyl(meth)acrylate, diethylaminoethyl (meth)acrylate, dimethylaminoproyl(meth)acrylate, and diethylaminoproyl(meth)acrylate or a salt thereof], a di-$C_{1-4}$alkylamino-$C_{2-3}$alkyl group-substituted aromatic vinyl compound or a salt thereof [for example, 4-(2-dimethylaminoethyl)styrene and 4-(2-dimethylaminopropyl)styrene, or a salt thereof, etc.], and a nitrogen-contained heterocyclic monomer or a salt thereof [for example, vinylpiridine, vinylimidazole, and vinylpyrolidone, or a salt thereof], etc. As the salts, there can be exemplified a salt of a halogenated hydrogen (a salt of hydrochloric acid and a salt of hydrogen bromide, etc.), a salt of sulfuric acid, a salt of alkyl sulphuric acid (a salt of methylsulphuric acid and a salt of ethylsulphuric acid, etc.), a salt of alkylsulphonic acid, a salt of allylsulphonic acid, and a salt of a carboxylic acid (a salt of acetate, etc.), etc. It is to be noted that the quaternary ammonium base may be also produced by a reaction of a tertiary amino group with an alkylation agent (for example, an organic halogenated compound such as epichlorohydrin, methylchloride, and benzyl chloride). The cationic monomer can be employed solely or in combination of two or more kinds.

As the crosslinkable monomer, there can be exemplified a variety of monomers having a self-crosslinkable or reactive functional group, for example, a monomer containing an epoxy group [for example, glycidylmethacrylate, (meth)allylglycidylether, 1-allyloxy-3,4-epoxybutane, 1-(3-butenyloxy-2,3-epoxypropane, and 4-vinyl-1-cyclohexene-1,2-epoxide, etc.], a monomer having methylol group or a derivative thereof [for example, N-$C_{1-4}$alkoxymethyl(meth)acrylamide such as N-methylol (meth)acrylamide, N-methoxymethyl(meth)acrylamide, and N-butylol(meth)acrylamide, etc.], a monomer having a hydrolyzable and condensable group such as a silyl group [for example, vinyltrimethoxysilane, vinyltriethoxysilane, vinyltributoxysilane, vinylmethoxydimethylsilane, vinylethoxydimethylsilane, vinylisobutoxydimethylsilane, vinyldimethoxymethylsilane, vinyldiethoxymethylsilane, vinyltris (β-methoxyethoxy) silane, vinyldiphenylethoxysilane, vinyltriphenoxysilane, γ-(vinylphenylaminopropyl)trimethoxysilane, γ-(vinylbenzylaminopropyl) trimethoxysilane, γ-(vinylphenylaminopropyl) triethoxysilane, γ-(vinylbenzylaminopropyl ) triethoxysilane,divinyldimethoxysilane, divinyldiethoxysilane, divinyldi (β-methoxyethoxy) silane, vinyldiacetoxymethylsilane, vinyltriacetoxysilane, vinylbis (dimethylamino)methylsilane, vinylmethyldichlorosilane, vinyldimethylchlorosilane, vinyltrichlorosilane, vinylmethylphenylchlorosilane, allyltriethoxysilane, 3-allylaminopropyltrimethoxysilane, allyldiacetoxymethylsilane, allyltriacetoxysilane, allylbis (dimethylamino)methylsilane, allylmethyldichlorosilane, allyldimethylchlorosilane, allyltrichlorosilane, methallylphenyldichlorosilane, β-(meth)acryloxyethyltrimethoxysilane, β-(meth)acryloxyethyl triethoxysilane, γ-(meth)acryloxypropyltrimethoxysilane, γ-(meth) acryloxypropyltriethoxysilane, γ-(meth) acryloxypropylmethyldimethoxysilane, γ-(meth)acryloxypropylmethyldichlorosilane, and γ-(meth)acryloxypropyltris (β-methoxyethoxy)silane], and a monomer having an aziridinyl group [for example, 2-(1-aziridinyl)ethyl(meth)acrylate, 2-(1-aziridinyl)propyl (meth)acrylate, and 3-(1-aziridinyl)propyl(meth)acrylate, etc.], etc. The crosslinkable monomers can be employed solely or in combination of two or more kinds.

A preferred crosslinkable monomer has a group capable of condensing by hydrolysis, particularly, an alkoxysilyl group (a $C_{1-4}$alkoxy silyl group such as a methoxy silyl group and an ethoxy silyl group, etc.).

As the hydrophilic monomer, there are exemplified, for example, a monomer having carboxylic group [for example, a monomer having a free carboxylic group or an acid anhydride group such as (meth)acrylic acid, itaconic acid, maleic acid, maleic anhydride, fumaric acid, crotonic acid, and a salt thereof (an alkali metal salt, an alkali earth metal salt, ammonium salt, and amine salt, etc.)], a half ester of an unsaturated polyvalent carboxylic acid or an anhydride thereof with a linear chain or branched chain alcohol having a carbon number of 1-20 [for example, monomethyl maleate, monoethyl maleate, monobutyl maleate, monooctyl maleate, and mono-2-ethylhexyl maleate, etc.], a monomer having hydroxyl group [for example, a hydroxy-$C_{2-6}$alkyl(meth)acrylate such as 2-hydroxyethyl(meth)acrylate, 2-hydroxypropyl(meth)acrylate, 3-hydroxypropyl(meth)acrylate, and 4-hydroxybutyl(meth)acrylate], a monomer having an amide group [for example, (meth)acrylamide, α-ethyl(meth)acrylamide, N-methyl(meth)acrylamide, N-butoxymethyl(meth)acrylamide, and diacetone(meth)acrylamide, etc.], a monomer having a sulphonic acid group [for example, styrene sulphonic acid and vinyl sulphonic acid, etc.], a monomer having ether group [for example, vinyl ethers such as vinylmethyl ether, vinylethyl ether, and vinylisopropyl ether], a monomer having a polyoxyalkylene group [for example, diethylene glycolmono(meth)acrylate, triethyleneglycol mono(meth)acrylate, and a polyethyleneglycol mono(meth)acrylate, etc.], etc. The hydrophilic monomer may be employed solely or in combination of two or more kinds.

A preferred hydrophilic monomer includes the monomer having carboxylic group [(meth)acrylic acid, etc.], the monomer having hydroxyl group [2-hydroxyethyl(meth)acrylate and hydroxypropyl(meth)acrylate, etc.], the monomer having a polyoxyalkylene unit [for example, diethyleneglycol mono(meth)acrylate, triethyleneglycol mono(meth)acrylate, and a polyethyleneglycol mono(meth)acrylate, etc.].

The monomers are usually employed in combination with a nonionic monomer in order to adjust a film-forming ability and properties of a coating layer.

The nonionic monomer includes, for example, an alkyl ester [for example, a $C_{1-18}$alkyl(meth)acrylate such as methyl(meth)acrylate, ethyl(meth)acrylate, propyl(meth)acrylate, isopropyl(meth)acrylate, butyl(meth)acrylate, isobutyl(meth) acrylate, t-butyl (meth) acrylate, hexyl (meth) acrylate, octyl (meth) acrylate, 2-ethylhexyl(meth)acrylate, lauryl(meth)acrylate, and stearyl(meth)acrylate], a cycloalkyl ester [for example, cyclohexyl(meth)acrylate, etc.], an aryl ester [for example, phenyl(meth)acrylate, etc.], an aralkyl ester [for example, benzyl(meth)acrylate, etc.], aromatic vinyls [for example, styrene, vinyltoluene, and α-methylstyrene, etc.], vinyl esters (for example, vinyl acetate, vinyl propionate, and vinyl versate, etc.), allyl esters (for example, allyl acetate, etc.), a monomer containing halogens (for example, vinylidene chloride and vinyl chloride, etc.), a vinyl cyanate [for example, (meth)acrylonitrile, etc.], and olefines (for example, ethylene and propylene, etc.), etc. The nonionic monomers may be also employed solely or in combination og two or more kinds.

As the nonionic monomer, there are usually employed the $C_{1-18}$alkyl(meth)acrylate [particularly, a $C_{2-10}$alkylacrylate and a $C_{1-6}$methalkylacrylate, etc.], aromatic vinyls [particularly, styrene, etc.], and vinyl esters [particularly, vinyl acetate, etc].

Use amount of the above-described cationic monomer, the crosslinkable monomer, and the hydrophilic monomer can be selected with in a range in which water resistance and ink-absorbing ability, etc. are not deteriorated. For example, the cationic monomer (for example, a monomer containing tertiary amino group and quarternary ammonium base) is employed in an amount of 0.1-50% by mol (for example, 1-45% by mol), preferably 0.5-40% by mol (for example, 2-35% by mol), and more preferably 1-30% by mol (for example, 3-25% by mol) or so in total monomers, and it is usually 2-25% by mol or so. Further, the crosslinkable monomer is employed in an amount of 0.1-25% by mol, preferably 0.2-20% by mol, and more preferably 0.5-15% by mol or so in total monomers, and it is usually 0.3-10% by mol or so. Still further, the hydrophilic monomer is employed in an amount of 0-50% by mol, preferably 0-45% by mol (for example, 0.5-45% by mol), and more preferably 0-40% by mol(for example, 1-35% by mol) or so in total monomers, and it is usually 1-20% by mol or so. It is to be noted that the residue of monomers is constructed by the previously-described the nonionic monomers.

Glass transition temperature of the cationic polymer can be selected within a range in which film-forming ability,

etc. is not deteriorated, for example, it is -20 to 50°C, preferably -10 to 40°C, and more preferably 0 to 30°C or so. A polymer having such the glass transition temperature can be adjusted by appropriately combining the above-described cationic monomers and crosslinkable monomers with optionally the hydrophilic monomers.

In a preferred embodiment of the present invention, an ink-absorbing layer is constructed by the above-described cationic polymers having a crosslinkable group and the above-described hydrophilic polymers. Such the ink-absorbing layer is particularly excellent in an ink-absorbing ability. In the case, as a preferred hydrophilic polymer, there are enumerated a hydrophilic polymer having a functional group which reacts with a reactive functional group (for example, an epoxy group such as glycidyl group, a group capable of condensing by hydrolysis such as methylol group and alkoxysilyl group, an adiridynyl group) in the previously-described cationic polymer, for example, an acetoacetyl group-modified hydrophilic polymer (an acetoacetyl group-modified vinyl acetate-based copolymer, etc.), a carboxylic group-modified hydrophilic polymer (a carboxylic group-modified polyvinylalcohol and a carboxylic group-contained polysaccharide, etc.), an acid anhydride group-contained hydrophilic polymer (an alkylvinylether-maleic anhydride copolymer, an ethylene-maleic anhydride copolymer, a vinyl acetate-maleic anhydride copolymer, a styrene-maleic anhydride copolymer, and a (meth)acrylate-maleic anhydride copolymer, etc.), and an amino group-contained hydrophilic polymer [a polyamide-polyamine, a polyvinyl amine, and a partially-hydrolyzed product of a ploy(N-vinylformamide), an amino group-contained polysaccharide, etc.].

In the above-described preferred embodiments, use amount of the hydrophilic polymers is usually 50-1000 parts by weight, preferably 100-500 parts by weight or so based on solid content with respect to 100 parts by weight of the above-described cationic polymer.

In other preferred embodiments of the present invention, a most outside layer in the ink-absorbing layer is constructed by a porous layer.

The porous layer is, if it has a wetting ability to a water-based ink, and it is capable of permeating into pores, not particularly limited. The porous layer can be usually constructed by a variety of polymers, for example, an olefin-based polymer, a vinyl-based polymer, an acrylic-based polymer, a styrene-based polymer, a polyester, a polyamide, a polycarbonate, a polyurethane, a polysulphone, a polymer derived from an epoxide, and a cellulose derivative, etc.

A preferred porous layer has a high wetting ability to a water-based ink, and it has a sufficient hydrophilic surface which is capable of permeating into pores. Such the porous layer can be constructed by a hydrophilic polymer or a polymer which is modified as becoming hydrophilic. It is to be noted that the hydrophilic polymer or the polymer which is modified as becoming hydrophilic means a polymer having a contact angle of less than 80° (preferably, 0-60°, and particularly, 0-40° or so). The contact angle is an angle between a tangent to a water drop and surface of the polymer at an intersection between the surface of the water drop and the surface of the polymer in a state in which spreading of the water drop stops on a surface of the polymer at room temperatures.

As the hydrophilic polymer, there can be employed the same hydrophilic polymer as in the previously-described ink-absorbing layer. More specifically, as the hydrophilic polymer, there can be enumerated, for example, a cellulose derivative [a cellulose ester (an ester of an organic acid such as a cellulose acetate, a cellulose propionate, a cellulose butylate, a cellulose acetate-propionate, a cellulose acetate-butylate, and a cellulose acetate-phthalate; an ester of an inorganic acid such as a cellulose nitrate, a cellulose sulphate, and a cellulose phosphate; an ester of a mixed acid such as a cellulose nitrate-acetate, and a cellulose ether (an ethylcellulose, etc.), etc.], an acrylic-based polymer [the previously-exemplified poly(meth)acrylates, polyacrylonitrile, polyacrylamide, poly-N-methylacrylamide, etc.], a polyvinylpyrolidone, a polyalkyleneoxide (a polyethyleneglycol, etc.), a ployvinylacetate and a completely- or partially-saponified product thereof (a polyvinylalcohol, etc.), an ethylene-vinylacetate copolymer and a completely- or partially-saponified product thereof (an ethylene-vinylalcohol copolymer, etc.), a polyalkylvinylether (a polymethylvinylether, etc.), a polymer having carboxylic group or a salt thereof (a styrene-maleic anhydride copolymer, an alkyl(meth)acrylate-(meth)acrylic acid copolymer, and a methylvinylether-maleic anhydride copolymer, etc.), a polyamide, a polyethylene imine, a polysulphone, and a polyether sulphone, etc. The hydrophilic polymers can be employed solely or in combination of two or more kinds.

It is to be noted that even a polyolefin-based resin such as a polyethylene and a polypropylene, a styrene-based resin such as a polystyrene, and a fluororesin which are a hydrophobic polymer can be given a hydrophilic property by addition or coating of a surface active agent and a wetting agent, etc., plasma-treating, and a corona-discharge, etc., and the previously-described hydrophilic polymers also include the hydrophobic polymer to which a hydrophilic property is given as described above.

The porous layer is preferably constructed by at least one selected from the cellulose ester, (meth)acrylonitrile-based polymer, (meth)acrylate-based polymer, and polysulphone-based polymer, and average pore diameter is preferably 0.5-5 μm or so.

As a preferred cellulose ester for forming the porous layer, there are included an organic acid ester of a cellulose (for example, an ester with organic acid having a carbon number of 2-4 or so), particularly, a cellulose acetate (a cellulose diacetate and a cellulose triacetate, etc.), etc.

A viscosity-average polymerization degree in the cellulose derivative (the cellulose ester, etc.) is, for example,

50-800, preferably 75-500, and more preferably 100-250 (particularly, 100-200) or so. There can be also effectively employed a cellulose acetate having the viscosity-average polymerization degree of 100-190 or so.

The viscosity-average polymerization degree in the cellulose ester such as a cellulose acetate can be measured by an intrinsic viscosity method by Uda, et al (Kazuo Uda, Hideo Saitoh, Textile Society Journal, Vol. No. 18, No. 1, pages 105-120, 1962). That is, a cellulose ester is precisely-weighed to dissolve in a mixed solvent of methylenechloride/methanol=9/1 (weight ratio), and a solution having a predetermined concentration "c" (2.00 g/L) is prepared. The solution is poured into an Ostwald viscometer, and there is measured a time "t" (second) during which the solution passes through between marked lines in the viscometer at 25°C. On the other hand, in relation to the mixed solvent alone, there is also measured a time "$t_0$" (second) during which it passes through as described above, and the viscosity-average polymerization degree is measured according to the following equation.

$$\eta_{rel} = t/t_0$$

$$[\eta] = (\ln \eta_{rel})/c$$

$$DP = [\eta]/6x10^{-4}$$

(in the formula, "t" is a passing time (second) of the solution, and "$t_0$" (second) is a passing time (second) of the solvent. "c" is concentration (g/L) of the cellulose ester in the solution, $\eta_{rel}$ is a relative viscosity, [η] is an intrinsic viscosity, and DP is the polymerization degree.)

The average substitution degree in the cellulose derivative can be selected from a range of 1-3 or so. For example, in a preferred cellulose acetate, an average acetylation degree is 42-62% (43-60%) or so, preferably 42-57% or so.

Of the vinyl-based polymers, the (meth)acrylonitrile-based polymer and the (meth)acrylate-based polymer are preferred. That is, there are preferred at least one of homopolymers or copolymers of the (meth)acrylic-based monomer selected from (meth)acrylonitrile and the (meth)acrylate-based monomer, and a copolymer of the (meth)acrylic-based monomers with other copolymerizable monomers [a vinyl ester-based monomer, a vinyl-based monomer having a heterocyclic ring, an aromatic vinyl-based monomer, and at least one monomer selected from a polymerizable unsaturated dicaroxylic acid or a derivative therefrom, etc.]

The (meth)acrylonitrile-based polymer includes a polyacrylonitrile, a polymethacrylonitrile, and a copolymer of (meth)acrylonitrile with a copolymerizable monomer. The copolymerizable monomers includ, for example, a vinyl ester-based monomer (vinyl acetate, etc.), a (meth)acrylic-based monomer [(meth)acrylic acid, a $C_{1-8}$alkyl(meth)acrylate, and a $C_{1-4}$alkylamino-$C_{2-4}$alkyl(meth)acrylate, etc.], a vinyl-based monomer having a heterocyclic ring containing nitrogen (vinylpyrolidone, etc.), or a combination thereof, etc.

As the (meth)acrylate-based polymer, there can be exemplified a homopolymer or a copolymer of the above-described (meth)acrylic-based monomer and a copolymer of the (meth)acrylic-based monomer with a copolymerizable monomer (a vinyl ester-based monomer, an aromatic vinyl monomer, a polymerizable unsaturated dicaroxylic acid or a derivative therefrom, etc.), etc.

The previously-described porous layer has a large number of micro pores, and the micro pores may be any one of passing through-pores and netlike random shape pores. A preferred porous layer has usually a micro layer-separated structure. In the micro layer-separated structure, a shape of the micro pores is usually an indefinite shape, and irregularly non-circular shape.

Average particle diameter in the porous layer may be, for example, 0.001-10 µm (for example, 0.005-10 µm), preferably 0.005-5 µm (for example, 0.01-5 µm), and more preferably 0.005-2.5 µm (for example, 0.005-1 µm) or so. In the case that the average particle diameter is less than 0.001 µm, an ink-absorbing ability is not improved so much and, in the case of exceeding 10 µm, water resistance and printing quality are apt to lower.

Porosity in the porous layer can be selected depending upon an ink-absorbing property, and it is, for example, 10-70% (for example, 10-65%), preferably 15-65% (for example, 15-50%), and more preferably 20-60% (for example, 20-45%) or so.

Thickness of the porous layer can be selected depending upon uses, and it is, for example, 1-100 µm, preferably 3-50 µm, and particularly 3-20 µm or so. In the case that the thickness of the porous layer is less than 1 µm, water resistance is insufficient and, in the case of exceeding 100 µm, it is anxious that an ink-absorbing property lowers. Since the porous layer is high in a wetting property, and it has a hydrophilic surface through which an ink sufficiently penetrates into the pores, in an ink-jet style method, flied ink is quickly absorbed into a hydrophilic polymer by which the porous layer is formed, whereby, the surface of the recording sheet can be apparently dried quickly.

The porous layer to be employed in the present invention may also be a porous membrane which is commercially supplied as a usual membrane filter. As a commercially supplied product, there can be exemplified, for example, a membrane filter made from a triacetyl cellulose (manufactured by Fuji Photo Film Co. Ltd.) and a membrane filter

made from a mixed cellulose of a triacetyl cellulose/nitrocellulose (manufactured by Millipore), etc.

In the present invention, in order to improve water resistance, a crosslinkable agent may be added to the ink-absorbing layer. As the crosslinkable agent, there can be exemplified, for example, an organic-based crosslinkable agent (an amino resin, an epoxide-based compound, an amine compound, a polyvalent carboxylic acid or an anhydride thereof, a polyisocyanate, and a blocked type polyisocyanate, etc.) and an inorganic-based crosslinkable agent (boric acid or a borate, a zirconium compound, a titanium compound, an aluminum compound, a phosphorus compound, and a silane coupling agent, etc.), etc. The crosslinkable agent can be employed solely or in combination of two or more kinds.

In the ink-absorbing layer, a curing agent (a curing catalyst or a curing accelerator) may be added in order to accelerate a curing reaction. As the curing agent, there are enumerated an organic tin compound, an organic aluminum compound, an organic titanium compound, an organic zirconium compound, an acidic compound, an basic compound, an acidic phosphate, a mixture or a reaction product of the acidic phosphate with an amine compound.

The curing agent can be employed solely or in combination of two or more kinds.

Further, in order to improve a fixing ability of a coloring agent (a dye), there may be advantageously employed a binder for a dye, particularly, a polymeric binder for a dye. The binder for a dye (the polymeric binder for a dye) usually contain a cationic group (particularly, a strong cationic group such as guanidyl group and a quaternary ammonium salt type group) in the molecule. The binder for a dye may be even water-soluble. As the binder for a dye, there can be exemplified, for example, a dicyan-based binder, a polyamine-based binder, and a polycation-based binder, etc. The binder for a dye can be also employed solely or in combination of two or more kinds.

In the ink-absorbing layer, in order to further improve an ink-absorbing ability and a blocking resistance, there may be also added bulk materials (pigments, etc.). As the bulk materials, there can be enumerated, for example, inorganic bulk materials (mineral bulk materials such as white carbon, fine-particle state calcium silicate, zeolite, aluminomagnesium silicate, calcine diatomaceous earth, fine-particle state magnesium carbonate, fine-particle state alumina, silica, talc, kaolin, delamikaolin, clay, heavy calcium carbonate, light calcium carbonate, magnesium carbonate, titanium dioxide, aluminum hydroxide, calcium hydroxide, magnesium hydroxide, magnesium silicate, calcium sulphate, sericite, bentonite, and sumectite), organic bulk materials (crosslinkable or noncrosslinkable organic fine particles such as a polystyrene resin, an acrylic resin, a urea resin, a melamine resin, and benzoguanamine resin, organic bulk materials such as a microbaloon, etc), etc. The bulk materials can be appropriately selected and employed solely or in combination of two or more kinds.

The ink-absorbing layer, within a range in which properties are not deteriorated, may further contain usual additives, for example, a dispersant, a surface active agent, a fluorescent coating, a pH regulator, a defoaming agent, a wetting agent, a coatability improver, a thickener, a lubricant, a stabilizer (an antioxidant, an ultraviolet ray absorbent, a thermal stabilizer, etc.), an anti-static agent, an anti-blocking agent, and an antiseptic, etc.

The thickness of the ink-absorbing layer can be selected depending upon uses, and it is, for example, 5-50 μm, preferably 10-30 μm, and usually 5-30 μm or so. In the case that a porous layer is formed as a most outside layer for the ink-absorbing layer, the total thickness of the ink-absorbing layer is 5-150 μm, and preferably 8-50 μm or so.

The ink-absorbing layer can be formed by coating a coating liquid containing the previously-described ink-absorbable polymer (a hydrophilic polymer) on a base material, and then drying. The coating liquid having an ink-absorbing properties constructed by the hydrophilic polymer and a solvent (water or an organic solvent), and it may contain the additives. Further, a film-like ink-absorbing layer may be even laminated by sticking on a base material optionally using an adhesive, etc. Still further, in the case that a porous layer is formed, the other ink-absorbing layer side can be also laminated on a base material by sticking optionally using an adhesive, etc. after forming a laminate of the porous layer with an other ink-absorbing layer.

The porous layer may be laminated optionally using an adhesive, etc., and, it can be formed by, for example, (i) a phase separation method in which a polymer is micro-phase-separated using a good solvent and a weak solvent, (ii) a foaming method in which pores are formed by foaming a polymer, (iii) a stretching method in which a polymer film is stretched, (iv) an irradiation method by an ionizing radiation in which pores are formed by irradiating an ionizing radiation on a polymer film, (v) an extracting method in which pores are formed by extracting and removing soluble components from a film prepared by the soluble components (polymers, inorganic salts, etc.) to solvents and insoluble polymers to solvents, and (vi) a sintering method in which pores are formed at clearance between particles by bonding organic particles (polymer particles, etc.) or inorganic particles by a binder. A preferred method includes the phase separation method (i), particularly, a method in which pores in the porous layer are formed after coating a coating liquid containing a polymer on a base material or other ink-absorbing layer (that is, a method for forming micro pores of the porous layer in a film-forming step).

In the phase separation method (i), the micro pores in the porous layer may be formed by a wet phase-conversion method (that is, a method in which micro pores are formed by applying the weak solvent to the polymer through spraying or immersing on the coated layer after coating a good solvent solution of a polymer on the ink-absorbing layer). However, it is more preferred to form by a dry phase-conversion-method (that is, a method in which a porous layer is

formed by causing a micro phase-separation through evaporating and drying solvents after coating a coating liquid containing a polymer, a good solvent solution to the polymer, and a weak solvent to the polymer having a higher boiling point than the good solvent on the ink-absorbing layer) in view of mass production.

In the dry phase-conversion method, the good solvent having a lower boiling point predominantly evaporates by drying after coating the coating liquid containing a polymer, a good solvent, and a weak solvent, and solubility of the polymer lowers with a progress of evaporation of the good solvent, resulting in that the polymer forms a micelle (a gelation phase) and causes a phase-separation from a weak solvent phase. By a progress of further drying, a network structure is formed by coagulation-contact of micelle, resulting in that a porous phase having micro pores between particles is formed by the completion of evaporation of the weak solvent.

In the dry phase-conversion method (a dry phase-separation method), it is important to use a solvent (a higher boiling point solvent) having a higher boiling point than the good solvent as a weak solvent. In the dry phase-separation process, in order to control pore diameter of the porous layer, it is important to select a good solvent and a weak solvent. The good solvent and the weak solvent can be experimentally selected, depending upon the kind of polymers, from a variety of solvents such as aliphatic hydrocarbons (hexane and octane, etc.), cycloaliphatic hydrocarbons (cyclohexane, etc.), aromatic hydrocarbons (toluene and xylene, etc.), halogenated hydrocarbons (methylene chloride and ethylene chloride, etc.), alcohols (methanol, ethanol, and butanol, etc.), esters (methyl acetate and ethyl acetate, etc.), ketones (acetone and methylethylketone, etc.), ethers (dioxane, diethylether, and tetrahydrofuran, etc.), and cellosolves. The content of the polymer in the coating liquid can be selected depending upon polymerization degree, etc. of the polymer and, for example, it is 5-30% by weight, preferably 5-20% by weight, and particularly 5-15% by weight or so. The coating liquid is cast or coated on a base material by, for example, a roll coater, air-knife coater, blade coater, rod coater, bar coater, comma cater, gravure coater, and silk screen coater method, etc. which are a commonly used method.

In the ink-jet recording method, pictures are formed on the recording sheet by spraying ink components such as a dye ink or a pigment ink from a side of the ink-absorbing layer. In such a recorded matter, since recorded pictures are formed on the ink-absorbing layer (in the case that a porous layer is formed, pores in the porous layer or other ink-absorbing layer), the picture images are excellent in water resistance and durability.

Particularly, in the case that the ink-absorbing layer is constructed by a cationic polymer having a crosslinkable group and a hydrophilic polymer and in the case that a porous layer is formed as a most outside layer of the ink-absorbing layer, an ink-absorbing property, a printing property, and water resistance are remarkably improved. It is to be noted that in the case that the pigment ink is employed as a component for an ink, although the recorded picture images are excellent in water resistance, in the case that a porous layer is formed as a most outside layer of the ink-absorbing layer, even though a particle-state coloring agent such as the pigment ink, since fixing is carried out by being taken into the pores of the porous layer, water resistance can be largely improved.

In the recording sheet 2 of the present invention, since a delayed-tack layer is formed on an opposite side of the ink-absorbing layer, it can be readily stuck on a desired article such as, for example, a wood free paper, a coat paper, a plastic film, glass, and a metal by a simple operation of heating before or after forming picture images on an ink-absorbing layer.

In the recording sheet 2 of the present invention, since a specified component is employed as a solid plasticizer constructing the delayed-tack layer, in the case that the delayed-tack layer is formed, it can be dried by heating at a higher temperature, and not only productivity can be improved but also blocking is not caused while maintaining an excellent adhesive property even though it is stored for a long time.

Although the recording sheet 2 of the present invention is useful as a recording sheet by an ink-jet recording method in which small drops of an ink are sprayed to record, it can be also utilized as a printing sheet (particularly, a sheet for a water-based ink) for an offset printing and a flexo printing.

The recording sheet 2 of the present invention is high in productivity, and it is excellent in an adhesive property and, moreover, it is has a high blocking resistance. Further, it is excellent in an ink-absorbing ability, printing ability, and water resistance.

[Shrink label]

In the shrink label of the present invention, a delayed-tack layer composed of a thermoplastic resin, a solid plasticizer, and a tackifier is formed on a shrink film.

As the thermoplastic resin, there can be employed the same thermoplastic resin as in the previously-described thermoplastic resin composition described in the present invention. Glass transition temperature (Tg) in the thermoplastic resin can be appropriately selected in consideration of the kind of materials to be stuck within a range in which there are not deteriorated an adhesive property and an anti-blocking property in the case that a pressure-sensitive adhesive sheet is prepared. It is usually -10 to 70°C or so, preferably -10 to 25°C. In the case that the glass transition temperature is less than -10°C, a blocking resistance is apt to become lowered and, in the case that the glass transition temperature

is too high, an adhesive property is apt to become lowered.

The present invention is mainly characterized in that a solid plasticizer is employed in combination of compounds included in at least two kinds of compound groups of four kinds of compound groups composed of the multiester compound (i) (first compound group), the phosphorus compound (iia) (second compound group), the diester compound (iiia) (third compound group), and the dicyclohexylphthalate (fourth compound group).

Of the previously-described multiester compound, there is preferred a multiester compound of the previously-described (A11) a substituted cyclohexanol substituted by at least one of an alkyl group and having at least 3 carbons in the alkyl group or (A21) an alcohol having a bridged ring containing at least one of a six-membered saturated carbon ring to which hydroxyl group or hydroxymethyl group is bonded with the (B) a polybasic acid.

The solid plasticizers are the same as in the previously-described thermoplastic resin composition 1 described in the present invention.

In the present invention, the solid plasticizer is employed in combination of at least two kinds of compound groups of four kinds of compound groups of the (i)-(iv). As the embodiments thereof, there are enumerated (1) a combination of the multiester compound (i) with the phosphorus compound (iia), (2) a combination of the multiester compound (i) with the diester compound (iiia), (3) a combination of the multiester compound (i) with the dicyclohexylphthalate (iv), (4) a combination of the phosphorus compound (iia) with the diester compound (iiia), (5) a combination of the phosphorus compound (iia) with the dicyclohexylphthalate (iv), (6) a combination of the diester compound (iiia) with the dicyclohexylphthalate (iv), (7) a combination of the multiester compound (i) with the phosphorus compound (iia) and the diester compound (iiia), (8) a combination of the multiester compound (i) with the diester compound (iiia) and the dicyclohexylphthalate (iv), (9) a combination of the phosphorus compound (iia) with the diester compound (iiia) and the dicyclohexylphthalate (iv), and (10) a combination of the multiester compound (i) with the phosphorus compound (iia), the diester compound (iiia), and the dicyclohexylphthalate (iv). Of those, there is preferred a combination including compounds included in at least two compounds groups of the three kinds of the compounds groups of the multiester compound (i), the phosphorus compound (iia), and the diester compound (iiia).

The compounds included in at least two compounds groups of the four kinds of the compounds groups are preferably employed in the amount of, for example, 1-99% by weight or so, particularly 5-95% by weight or so and, above all, 5-80% by weight or so with respect to total solid plasticizers.

In the present invention, the content of the solid plasticizer in the delayed-tack layer is, for example, 30-1000 parts by weight, preferably 100-1000 parts by weight, more preferably 150-900 parts by weight, and particularly 200-800 parts by weight or so based on 100 parts by weight of the thermoplastic resin. In the case that the content of the solid plasticizer is less than 30 parts by weight, sufficient tackiness is not occasionally produced in heating and, in the case of more than 1000 parts by weight, cohesive force lowers, resulting in that adhesive strength is not occasionally produced.

In the shrink label of the present invention, since different kind of compounds included in the above-described specified compounds groups are employed in combination of a plurality of kinds as the solid plasticizer for allowing to contain in the delayed-tack layer, those are readily plasticized by being melted at a sticking temperature of the label, and recrystallization of the solid plasticizer is delayed, resulting in that a high transparency and adhesive ability are maintained over a long time of period. For that reason, it can be firmly and stably stuck on a vessel, etc. such as a bottle for a long time of period.

In the present invention, other solid plasticizers except the above-described ones may be optionally employed within a range in which an effect in the present invention is not deteriorated. As the other solid plasticizers to be coemployed, there are enumerated the same compounds as in the thermoplastic resin composition 1 of the present invention described hereinabove.

As a tackifier constructing the delayed-tack layer, the same ones described hereinabove can be employed. The tackifier may be also employed in combination of two or more kinds.

The content of the tackifier in the delayed-tack layer is not particularly limited, and it can be appropriately selected according to the combination of the thermoplastic resin with the solid plasticizers. In usual, it is preferably employed the amount of 10-600 parts by weight, and preferably 20-500 parts by weight based on the 100 parts by weight of the thermoplastic resin.

In the delayed-tack layer, within a range in which properties are not deteriorated, there may be added usual additives such as, for example, an auxiliary for film-forming, a defoaming agent, a coatability improver, a thickener, a lubricant, a stabilizer (an antioxidant, an ultraviolet ray absorbent, a thermal stabilizer, etc.), an anti-static agent, and an anti-blocking agent (inorganic fillers and organic fillers), etc. As the auxiliary for film-forming, the previously-described ones can be employed.

The delayed-tack layer can be formed by coating the thermoplastic resin composition containing the thermoplastic resin, the solid plasticizers, and the tackifier on the shrink film. For example, the delayed-tack layer can be formed by coating a water-based composition in which the thermoplastic resin is dispersed in water, or by coating after dissolving the thermoplastic resin, etc. in an organic solvent and, or by coating after thermally melting the thermoplastic

resin, etc. Of those, there is preferred a method of coating a water-based composition in which the thermoplastic resin is dispersed in water.

In the previously-described water-based composition, a dispersant to be employed for dispersing the thermoplastic resin is not particularly limited, and there can be employed any one of an anionic-based, a cationic-based, and a nonionic-based dispersants which are conventionally publicly-known. As the anionic-based dispersants, there can be enumerated carboxylates, sulphates, sulphonates, and phosphonates, etc. Of those, an ammonium carboxylate is preferred. As the nonionic-based dispersants, there can be enumerated a polyethylene glycol type and a polyvalent alcohol type ones, etc.

As a method for preparing the previously-described water-based composition, there can be also employed a variety of methods which are conventionally publicly-known. For example, as the preparation method, there are enumerated a method in which respective components constructing a delayed-tack layer are in advance mixed, and then, dispersed in water, a method in which a solid plasticizer is dispersed in a thermoplastic resin emulsion and a tackifier emulsion, respectively, followed by mixing thereof, a method in which a solid plasticizer is dispersed in water, followed by mixing a thermoplastic resin emulsion and a tackifier emulsion with the dispersed liquid. As a method for dispersing the solid plasticizer into the emulsion or water, there can be exemplified a method in which a molten solid plasticizer is dispersed, a method in which a solid plasticizer is dispersed while finely-powdering, and a method in which a finely-powdered solid plasticizer is dispersed, etc.

It is to be noted that the thermoplastic resin emulsion may be even prepared by an emulsion polymerization and, further, it may be also prepared by emulsifying optionally using an additive after obtaining a polymer by other methods except the emulsion polymerization. For example, a thermoplastic resin emulsion can be prepared by emulsifying while adding water after adding an additive (for example, an emulsifier, pH-regulator, and acid, etc.) to an organic solution containing a polymer polymerized under the presence of a water-soluble organic solvent (an alcohol, etc. such as isopropyl alcohol), and then by removing the organic solvent.

In the solid plasticizer in the water-based composition, average particle diameter is preferably 0.5-20 μm or so, and more preferably 1-15 μm or so. In the case that the average particle diameter is less than 0.5 μm, it is anxious that a blocking resistance occasionally lowers or productivity lowers because of requiring a long period for crushing. In the case that the average particle diameter is more than 20 μm, a coating surface become roughened, and it is anxious that a quality of a label lowers.

As methods for coating the thermoplastic resin composition, there can be enumerated by, for example, a method in which there are used a roll coater, an air-knife coater, a blade coater, a rod coater, a bar coater, a comma cater, a gravure coater, and a silk screen coater, etc. Thickness of the delayed-tack layer is, for example, 4-20 μm, and preferably 5-15 μm or so.

In the shrink label of the present invention, as a shrink film which is a base material, there can be employed a thermally-shrinkable plastic film which shows a thermally-shrinkable property to at least one direction, and which is publicly known and, for example, a polyvinylchloride; a polyolefine such as a polyethylene and a polypropylene; a styrene-based resin such as a polystyrene; a polyester such as a polyethylene terephthalate; and a monoaxially or biaxially-oriented film composed of a composite material thereof, etc. thickness of the shrink film is, for example, 15-150 μm, and preferably 20-120 μm or so.

In at least one surface of the shrink film, a printing layer may be formed in which characters and designs, etc. are printed.

The printing layer can be formed through printing by usual printing methods (for example, a letterpress printing, a planography, and a gravure printing, etc.).

Between the shrink film and the delayed tack layer, a concealing layer may be formed. In the shrink label having the concealing layer, in the case that it is applied to vessels, etc. already printed, unnecessary expressions can be concealed from the view which are directly printed on the vessels, etc. The concealing layer can be formed by printing or coating a composition containing a substance having a concealing property using usual printing methods or coating methods. For example, the concealing layer can be formed by printing a printing ink containing the substance having a concealing property, a vehicle (an oil, a resin, a solvent, and a plasticizer, etc.), and additives (wax and a surface active agent, etc.) using usual printing methods.

As the substance having a concealing ability, there are enumerated, for example, a white pigment such as titanium oxide and zinc oxide, a black pigment such as carbon black, a pigment such as a blue-colored pigment; and metal powder such as bronze powder, etc. The resin constructing the vehicle is not particularly limited, and there are enumerated, for example, natural resins (rosin, shellac, and gilsonite), natural resin derivatives (rosin derivatives, etc.), and synthesis resins (a phenol resin, a ketone resin, a polyvinylchloride, a chlorinated polypropylene, an acrylic resin, a polyester resin, a polyamide resin, and a cellulose derivative, etc.), etc. There is preferred the use of a resin which has an affinity to the thermoplastic resin constructing a delayed-tack layer in order to prevent peeling from the delayed-tack layer on the concealing layer. The concealing layer may be formed by a plurality of layers. It is to be noted that in the case that a printing layer is formed on the surface of the delayed-tack layer side in the both surfaces of the shrink film,

the concealing layer is formed between the printing layer and the delayed-tack layer. Thickness of the concealing layer is, for example, 3-20 μm, preferably 4-15 μm or so.

Further, in order to give metallic gloss, a metal-deposited layer may be formed between the shrink film and the delayed-tack layer. It is to be noted that in the case that a printing layer is formed on the surface of the delayed-tack layer side in the both surfaces of the shrink film, a metal-deposited layer is formed between the printing layer and the delayed-tack layer. As metals for constructing the metal-deposited layer, there are enumerated, for example, aluminum, chromium, and nickel, etc. The deposited layer is formed by, for example, a vacuum depositing method, an ion-plating method, and a spattering method, etc. which are a usual method. Thickness of the metal-deposited layer is, for example, 0.01-0.5 μm, and preferably 0.02-0.3 μm or so.

Although the shrink label of the present invention may be even flat-state, it is often employed in a cylindrical shape in which the delayed-tack layer is employed as an inside. The shrink label of the present invention can be employed for, for example, a plastic vessel such as a so-called PET bottle, a glass vessel, and a metallic vessel, etc.

In the shrink label of the present invention, since the compounds contained in specified compound groups are employed in combination of at least two kinds of compounds as a solid plasticizer to be contained in the delayed-tack layer, tackiness can be readily produced by heating, and recrystallization of the solid plasticizer can be delayed, resulting in that an excellent transparency and adhesive strength can be maintained for a long time of period. For that reason, it can be firmly and stably fixed on an article to be stuck such as vessels for a long time of period.

[Water-based resin composition and a water-based coating agent]

There are illustrated respective components for copolymerization of resins which construct the water-based resin composition of the present invention. In the present invention, a polymerizable unsaturated monomer (G) having a hydrolyzable silyl group is employed as one of the components for copolymerization.

By the use of the monomer (G) as the components for copolymerization, the hydrolyzable silyl group acts as a crosslinkable functional group during forming a coating layer, and water resistance, solvent resistance, and adhesion in the coating layer can become improved.

As the polymerizable unsaturated monomer (G) having a hydrolyzable silyl group, there is enumerated, for example, the polymerizable unsaturated monomer having a hydrolyzable silyl group represented by the formula (13) shown in the previously-described thermally- and pressure-sensitive adhesive 3 of the present invention. In the formulae, meanings of marks and examples of substituted groups are the same as in the above descriptions.

The polymerizable unsaturated monomer (G) having a hydrolyzable silyl group includes, for example, the compounds represented by the formulae (14)-(25) which are shown as a polymerizable unsaturated monomer having a silyl group in the previously-described thermally-and pressure-sensitive adhesive 3 of the present invention. In the formulae, meanings of marks and examples of substituted groups are the same as in the above descriptions.

As the compounds represented by the previously-described formula (14), there are enumerated, for example, vinyl trichlorosilane, vinylmethyldichlorosilane, vinyldimethyl chlorosilane, vinylmethylphenylchlorosilane, isopropenyl trichlorosilane, isopropenylmethyldichlorosilane, isopropenyl dimethylchlorosilane, and isopropenylmethylphenylchlorosilane, etc.

As the compounds represented by the previously-described formula (15), there are enumerated, for example allyltrichlorosilane, allylmethyldichlorosilane, and allyldimethylchlorosilane, etc.

As the compounds represented by the previously-described formula (16), there are enumerated, for example, 2-(meth)acryloxyethyltrichlorosilane, 3-(meth)acryloxypropyl trichlorosilane, 2-(meth)acryloxyethylmethyl dichlorosilane, 3-(meth) acryloxypropylmethyl dichlorosilane, 2-(meth)acryloxyethyldimethylchlorosilane, and 3-(meth)acryloxypropyldimethylchlorosilane, etc.

As the compounds represented by the previously-described formula (17), there are enumerated, for example, vinyltrimethoxysilane, vinyltriethoxysilane, vinyltributoxysilane, vinyltri(hexyloxy)silane, vinyltri(octyloxy)silane, vinyltri(decyloxy)silane, vinyltri(dodecyloxy)silane, vinyldimethoxymethylsilane, vinyldiethoxymethylsilane, vinylmethoxydimethylsilane, vinylethoxydimethylsilane, vinylbutoxydimethylsilane, vinyldiphenylethoxysilane, isopropenyltrimethoxysilane, isopropenyltriethoxysilane, isopropenyltributoxysilane, isopropenyltri(hexyloxy)silane, isopropenyltri(octyloxy)silane, isopropenyltri(decyloxy)silane, isopropenyltri(dodecyloxy)silane, isopropenyldimethoxymethylsilane, isopropenyldiethoxymethyl silane, isopropenylmethoxydimethylsilane, isopropenylethoxy dimethylsilane, isopropenylbutoxydimethylsilane, and vinyltris(2-methoxyethoxy)silane, etc.

As the compounds represented by the previously-described formula (18), there are enumerated, for example, allyltrimethoxysilane, vinyldecyltrimethoxysilane, vinyloctyltrimethoxysilane, vinylphenyltrimethoxysilane, vinylphenyldimethoxymethylsilane, vinylphenylmethoxydimethyl silane, isopropenylphenyltrimethoxysilane, isopropenylphenyl dimethoxymethylsilane, and isopropenylphenylmethoxydimethyl silane, etc.

As the compounds represented by the formula (19), there are enumerated, for example, 2-(meth)acryloxyethyltrimethoxysilane, 2-(meth)acryloxyethyltriethoxysilane, 3-(meth)acryloxypropyl trimethoxysilane, 3-(meth)acryloxypropyltriethoxysilane, 3-(meth)acryloxypropylmethyldimethoxysilane, 3-(meth)acryloxypropyl diethoxysilane, and 3-(meth)acryloxypropyltris(2-methoxyethoxy)silane, etc.

As the compounds represented by the previously-described formula (20), there are enumerated, for example, 3-(allyloxycarbonyl-o-phenylene-carboxy)propyltrimethoxysilane,3-(allyloxycarbonyl-o-phenylene-carboxy) propyldimethoxymethyl silane, 3-(allyloxycarbonyl-o-phenylene-carboxy)propylmethoxy dimethylsilane, 3-(isopropenylmethyleneoxycarbonyl-o-phenylene-carboxy)propyltrimethoxysilane, 3-(isopropenylmethyleneoxy carbonyl-o-phenylene-carboxy)propyldimethoxymethylsilane, and 3-(isopropenylmethyleneoxycarbonyl-o-phenylene-carboxy)propylmethoxydimethylsilane, etc.

As the compounds represented by the previously-described formula (21), there are enumerated, for example, 3-(vinylphenylamino)propyltrimethoxysilane, 3-(vinylphenylamino) propyltriethoxysilane, 3-(vinylbenzylamino)propyltrimethoxy silane, and 3-(vinylbenzylamino)propyltriethoxysilane, etc.

As the compounds represented by the previously-described formula (22), there are enumerated, for example, 3-[vinylphenylenemethylene(ethylenediamino)]propyltrimethoxysilane and 3-[isopropenylphenylenemethylene(ethylenediamino)]propyl trimethoxysilane, etc.

As the compound represented by the previously-described formula (23), there are enumerated, for example, 2-(vinyloxy)ethyltrimethoxysilane, 3-(vinyloxy)propyl trimethoxysilane, 4-(vinyloxy)butyltriethoxysilane, and 2-isopropenyloxy)ethyltrimethoxysilane, etc.

As the compounds represented by the previously-described formula (24), there are enumerated, for example, 3-(allyloxy)propyltrimethoxysilane, 10-(allyloxycarbonyl)decyl trimethoxysilane, 3-(isopropenylmethyleneoxy)propyl trimethoxysilane, and 10-(isopropylmethyleneoxycarbonyl)decyl trimethoxysilane, etc.

As the compounds represented by the previously-described formula (25), there are enumerated, for example, 3-[(meth)acryloxyethyleneoxy]lpropyltrimethoxysilane and 3-[(meth)acryloxyethyleneoxy]propyldimethoxymethylsilane, etc.

Further, the polymerizable unsaturated monomer (G) having a hydrolyzable silyl group may be, for example, a compound having divinyl group such as divinyldimethoxysilane, divinyldiethoxysilane, and divinyldi(β-methoxyethoxy)silane.

The polymerizable unsaturated monomer (G) having a hydrolyzable silyl group may be employed solely or in combination of two or more kinds. A preferred monomer having a silyl group includes, for example, a vinyl-based monomer having an alkoxysilyl group from a viewpoint of handling, economy, and control of side reactions, etc.

In the present invention, at least one kind of a polymerizable unsaturated monomer (H) having an ion-formable group is employed as one of copolymerizable components for resins. By the use of the monomer (H) as a polymerizable component, a polymer obtained includes the ion-formable group, resulting in that the polymer is readily emulsified.

As the ion-formable group, there is enumerated a cation-formable group such as amino group and imide group, and an anion-formable group such as carboxylic group.

Accordingly, as the monomer (H) having a cation-formable group, there are enumerated, for example, dimethylaminoethyl (meth)acrylate, diethylaminoethyl(meth)acrylate, dimethylamino propyl(meth)acrylate, diethylaminopropyl(meth)acrylate, dimethylaminoethyl(meth)acrylamide, (meth)acryloyoxyethyl trimethylammoniumchloride, (meth)acryloyoxyethyl trimethylammoniummethosulphate, etc. Such the monomer (H) having a cation-formable group may be employed solely or in combination of two or more kinds.

As the monomer (H) having an anion-formable group, there are enumerated, for example, carboxyethyl(meth)acrylate, carboxypropyl(meth)acrylate, vinyl carboxylic acids [(meth)acrylic acid, ethacrylic acid, crotonic acid, sorbic acid, maleic acid, itaconic acid, and cinnamic acid, etc.], vinyl sulphonic acids [vinyl sulphonic acid, allyl sulphonic acid, vinyl toluenesulphonic acid, styrenesulphonic acid, etc.], (meth)acrylic sulphonic acids [(meth)acrylic sulphoethyl and (meth)acrylic sulphopropyl, etc.], and (meth)acrylamide sulphonic acids [2-acrylamide-2-methylpropane sulphonate, etc.], etc. Such the monomer (H) having an anion-formable group may be employed solely or in combination of two or more kinds.

In the present invention, a polymerizable unsaturated monomer (I) having a polydimethylsiloxane structure is employed as one of copolymerizable components for resins. By use of the polymerizable unsaturated monomer (I) having a polydimethylsiloxane structure, there can be improved weatherability and stain resistance in a composition obtained.

As such the polymerizable unsaturated monomer (I), there is enumerated, for example, a vinyl-terminated or (meth)acryloxy-terminated polydimethylsiloxane represented by the formula (11) or (12) described below.

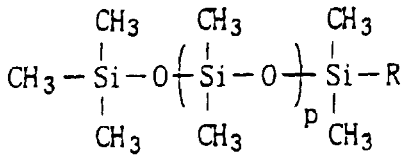

(11)

$R: -CH=CH_2$ ,

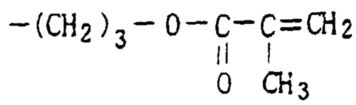

or

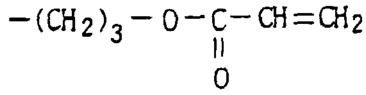

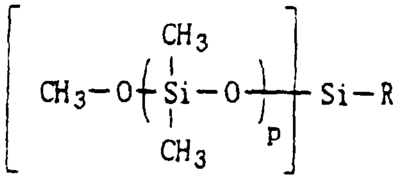

(12)

$R: -CH=CH_2$ ,

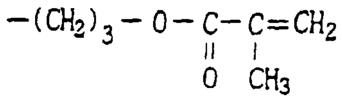

or

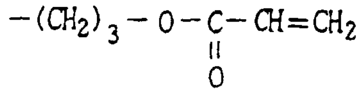

(in the formula (11) or (12), "p" is an integer of 1-15)

Of those, "p" is preferably 2-6. Further, the polymerizable unsaturated monomer (I) having a polydimethylsiloxane structure can be employed solely or in combination of two or more kinds.

In the present invention, other polymerizable unsaturated monomer (J) is allowed to copolymerize in addition to the previously-described polymerizable unsaturated monomer (G) having a hydrolyzable silyl group, the polymerizable unsaturated monomer (H) having an ion-formable group, and the polymerizable unsaturated monomer (I) having a polydimethylsiloxane structure. The other polymerizable unsaturated monomer (J) is appropriately selected from a variety of polymerizable unsaturated monomers which are already-known according to uses to which a resin composition is applied.

As such the polymerizable unsaturated monomer (J), there are enumerated, for example, (meth)acrylic-based monomers, aromatic vinyls, vinyl esters, vinyls containing halogens, vinyl ethers (for example, vinylethylether, etc.), vinyl ketones (for example, methylvinylketone, etc.), vinylheterocyclic compounds (for example, an N-vinyl compound such as N-vinylpyrolidone and N-vinylimidazole, and vinyl pyridine, etc.), olefin-based monomer (for example, ethylene and propylene, etc.), and an allyl compound (for example, an allyl ester such as allyl acetate), etc. The polymerizable unsaturated monomer (J) can be employed solely or in combination of two or more kinds.

The (meth)acrylic-based monomers in the polymerizable unsaturated monomer (J) include, for example, (meth)acrylates, (meth)acrylamides, and (meth)acrylonitriles, etc.

The (meth)acrylates include, for example, an alkyl(meth)acrylate [for example, a $C_{1-18}$alkyl(meth)acrylate such as methyl(meth)acrylate, ethyl(meth)acrylate, propyl(meth)acrylate, isopropyl(meth)acrylate, butyl(meth)acrylate, isobutyl(meth)acrylate, t-butyl(meth)acrylate, hexyl(meth)acrylate, octyl(meth)acrylate, 2-ethylhexyl(meth)acrylate, and lauryl(meth)acrylate, etc.], a cycloalkyl(meth)acrylate [for example, cyclohexyl(meth)acrylate, etc.], an aryl(meth)acrylate [for example, phenyl(meth)acrylate, etc.], an aralkyl(meth)acrylate [for example, benzyl(meth)acrylate, etc.], a hydroxyalkyl(meth)acrylate [for example, a hydroxy-$C_{2-4}$alkyl(meth)acrylate such as 2-hydroxyethyl(meth)acrylate, and 2-hydroxypropyl(meth)acrylate, etc.], glycidyl(meth)acrylate, a dialkylaminoalkyl(meth)acrylate [for example, a di-$C_{1-4}$alkylamino-$C_{2-4}$alkyl(meth)acrylate such as 2-(dimethylamino)ethyl(meth)acrylate and 2-(diethylamino)ethyl

(meth)acrylate], etc.

The (meth)acrylamides include, for example, (meth)acrylamide, a hydroxyalkyl(meth)acrylamide [for example, an N-hydroxy-$C_{2-4}$alkyl(meth)acrylamide such as N-methylol(meth)acrylamide], an alkoxyalkyl(meth)acrylamide [for example, an N-alkoxy-$C_{1-4}$alkoxy-$C_{1-4}$alkyl(meth)acrylamide such as N-methoxymethyl(meth)acrylamide], and diacetone(meth)acrylamide, etc.

Preferred (meth)acrylic-based monomers include, for example, the (meth)acrylate [for example, a $C_{1-18}$alkyl(meth)acrylate, a hydroxy-$C_{2-4}$alkyl(meth)acrylate, glycidyl(meth)acrylate, di-$C_{1-4}$alkylamino-$C_{2-4}$alkyl(meth)acrylate, etc.], and the (meth)acrylamides, etc.

More preferred (meth)acrylic-based monomers include, for example, a $C_{2-10}$alkylacrylate, a $C_{1-6}$alkylmethacrylate, a hydroxy-$C_{2-3}$alkyl(meth)acrylate, glycidyl(meth)acrylate, and a di-$C_{1-3}$alkylamino-$C_{2-3}$alkyl(meth)acrylate, etc.

The aromatic vinyls include, for example, styrene, α-methylstyrene, and vinyl toluene, etc., and styrene is often employed. The vinyl esters include, for example, vinyl acetate, vinyl propionate, and vinyl versate (VeoVa, etc.), etc. The vinyls containing halogens include, for example, vinyl chloride and vinylidene chloride, etc.

Further, as the other polymerizable unsaturated monomer (J), the monomers represented by the formulae (26)-(28) shown as the components which are copolymerized with the polymerizable unsaturated monomer having a silyl group in the previously-described thermally- and pressure-sensitive adhesive 3 of the present invention. In the formulae, meanings of marks and examples of substituted groups are the same as in the above descriptions.

As the compound represented by the formula (26), for example, vinylbis(dimethylamino)methylsilane, etc. is enumerated.

As the compound represented by the formula (27), for example, vinyltri(acetyloxy)silane and vinyldi(acetyloxy)methylsilane, etc. are enumerated.

As the compound represented by the formula (28), for example, vinyltriphenoxysilane, etc. is enumerated.

As such the polymerizable unsaturated monomer (J), in usual, a hard monomer [for example, monomer components such as methyl(meth)acrylate and styrene by which there is formed a homopolymer having a glass transition temperature of 80-120°C (particularly, 90-105°C) or so] is often employed in combination with a soft monomer [for example, monomer components such as a $C_{2-10}$alkylacrylate by which there is formed a homopolymer having a glass transition temperature of -80 to 10°C (particularly, -85 to - 20°C) or so].

In the case that the hard monomer and the soft monomer are usually employed as such the polymerizable unsaturated monomer (J), formulation ratio is not particularly limited and, for example, the hard monomer is employed in 10-90% (particularly, 15-85% by weight, preferably 20-80% by weight, and more preferably 25-75% by weight, particularly, 30-70% by weight), and the soft monomer is employed in 10-90% (for example, 15-85% by weight, preferably 20-80% by weight, more preferably 25-75% by weight, and particularly, 30-70% by weight).

In the present invention, the above-described respective polymerizable components are solution-polymerized in a proportion of 0.5-50% by weight of the polymerizable unsaturated monomer (G) having a hydrolyzable silyl group, 1-20% by weight of the polymerizable unsaturated monomer (H) having an ion-formable group, 1-40% by weight of the polymerizable unsaturated monomer (I) having a polydimethylsiloxane structure, and {100-(total of (G)+(H)+(I))}% by weight of the other polymerizable unsaturated monomer (J).

The polymerizable unsaturated monomer (G) having a hydrolyzable silyl group is employed in 0.5-50% by weight of the total polymerizable unsaturated monomers and, particularly, it is preferably 0.5-20% by weight. In the case that the proportion of the monomer (G) is less than 5% by weight, there is occasionally caused a problem that there end in lowering water resistance, solvent resistance, and adhesion in a cured coating layer. On the other hand, in the case of exceeding 50% by weight, there is occasionally caused a problem that there end in lowering a polymerization stability and storage stability in the water-based resin composition.

The polymerizable unsaturated monomer (H) having an ion-formable group is employed in 1-20% by weight of the total polymerizable unsaturated monomers and, it is preferably 2-10% by weight. In the case that the proportion of the monomer (H) is less than 1% by weight, aggregates are produced in emulsifying and, on the other hand, in the case of exceeding 20% by weight, water resistance becomes worse in a coating layer formed.

The polymerizable unsaturated monomer (I) having a polydimethylsiloxane structure is employed in 1-40% by weight of the total polymerizable unsaturated monomers and, it is preferably 2-30% by weight. In the case that the proportion of the monomer (I) is less than 1% by weight, there is not obtained an effect of modification by a polydimethylsiloxane, resulting in that water resistance and staining resistance become worse and, on the other hand, in the case of exceeding 40% by weight, aggregates are produced in emulsifying, resulting in that an emulsion cannot be stably obtained.

The other polymerizable unsaturated monomer (J) occupies the residual amount except the above-described monomers (G), (H), and (I).

In the present invention, it is characteristic that the above-described respective copolymerizable components are solution-polymerized and, the water-based resin composition is obtained by emulsifying through adding water to a

resin solution obtained.

That is, the above-described respective copolymerizable components are mixed and copolymerized under the presence of appropriate solvents to obtain a copolymer, and the copolymer is dissolved or dispersed using an alkali (for example, an alkyl amine such as triethylamine, a cyclic amine such as morpholine, an alkanol amine such as triethanol amine, pyridine, and ammonia, etc.) or an acid [for example, an inorganic acid (for example, hydrochloric acid and sulphuric acid, etc.) and an organic acid (for example, a carboxylic acid such as acetic acid and propionic acid, and sulphonic acid, etc.)]. It is to be noted that polymerization operation may be even any one of a batchwise style and a continuous style.

As the organic solvent to be employed in the solution polymerization, there can be enumerated, for example, an alcohol (for example, ethanol, isopropanol, and n-butanol, etc.), an aromatic hydrocarbon (for example, benzene, toluene, and xylene, etc.), an aliphatic hydrocarbon (for example, pentane, hexane, and heptane, etc.), a cycloaliphatic hydrocarbon (for example, cyclohexane, etc.), an ester (for example, ethyl acetate and n-butyl acetate, etc.), a ketone (for example, acetone and methylethylketone, etc.), and an ether (for example, diethylether, dioxane, and tetrahydrofuran, etc.), etc. The organic solvents may be employed solely or in combination of two or more kinds. As the organic solvents, there are usually employed an alcohol such as isopropanol, an aromatic hydrocarbon such as toluene, and a ketone such as methylethylketone, etc.

Use amount of the organic solvent is not particularly limited and, for example, it can be selected from a range of the weight ratio (0.1/1-5/1), preferably (0.5/1-2/1) or so of the organic solvent with respect to total amount of the polymerizable unsaturated monomers.

In the solution polymerization, although polymerization may initiate by irradiation of an electron beam or an ultraviolet ray or heating, it is often initiated using a polymerization initiator.

As the polymerization initiator, there can be exemplified, for example, an azo compound [for example, azobisisobutylonitrile, 2,2-azobis(2,4-dimethylvalerolnitrile), azobiscyanovaleric acid, 2,2-azobis(2-amidinopropane)hydrochloride, 2,2-azobis(2-amidinopropane)acetate, etc.], an inorganic oxide (for example, persulphates such as potassium persulphate, sodium persulphate, and ammonium persulphate, hydrogen peroxide, etc.), an organic oxide [for example, benzoyl peroxide, di-t-butylperoxide, cumenhydroperoxide, di(2-ethoxyethyl)peroxydicarbonate], and a redox catalyst [for example, a sulphite or a bisulphite (for example, an alkali metal salt and ammonium salt, etc.), a catalyst system composed of a combination of a reducing agent such as L-ascorbic acid and elisorbic acid, a persulphate (for example, an alkali metal salt and ammonium salt, etc.) with an oxidation agent such as a peroxide, etc.]. The polymerization initiator can be employed solely or in combination of two or more kinds.

Use amount of the polymerization initiator can be selected from, for example, a range of 0.001-20% by weight, preferably 0.01-10% by weight (for example, 0.1-10% by weight) or so with respect to total amount of the polymerizable unsaturated monomers.

Reaction temperature of the solution polymerization is, for example, 50-150°C, and preferably 70-130°C or so. Further, reaction time of period is, for example, 1-10 hours, and preferably 2-7 hours or so. It is to be noted that a termination point of the polymerization can be identified by disappearance of an absorption (1648 $cm^{-1}$) by a double bond in infrared absorption spectra, or decrease of unreacted monomers using a gas chromatography.

It is to be noted that in the case that the polymer contains a cationic group such as amino group, imide group, and a cation-formable group, a hydrophilic property is improved by the use of acids, resulting in that the polymer can be readily dissolved or emulsified. As such the acids, there can be exemplified, for example, an inorganic acid (for example, hydrochloric acid, phosphoric acid, sulfuric acid, and nitric acid, etc.) and an organic acid [for example, a saturated aliphatic monocarboxylic acid such as formic acid, acetic acid, and propionic acid; a saturated aliphatic polycarboxylic acid such as oxalic acid and adipic acid; an unsaturated aliphatic monocarboxylic acid such as (meth)acrylic acid; an unsaturated aliphatic polycarboxylic acid such as maleic acid and itaconic acid; and an aliphatic oxycarboxylic acid such as lactic acid and citric acid, etc.], etc.

In the case that the polymer contains an acidic group such as carboxylic group, the polymer can be readily dissolved or emulsified by the use of a basic compound. As such the basic compound, there can be included an organic base (for example, an alkyl amine such as triethylamine, a cyclic amine such as morpholine, an alkanol amine such as triethanol amine, and pyridine, etc.) and an inorganic base (for example, ammonia and a hydroxide of an alkali metal, etc.), etc.

Use amount of the acid can be selected from, for example, a range of acid/cationic group=0.3/1-1.5/1 (molar ratio) or so with respect to total amount of the acidic groups.

The polymer obtained by a solution polymerization can be emulsified under the presence or the absence of organic solvents.

In the case that the polymer is dissolved or emulsified under the presence of organic solvents, a water-soluble organic solvent (for example, an alcohol such as isopropanol) is often employed as an organic solvent. In the case that the polymer was emulsified under the presence of organic solvents, the organic solvent may be even removed by evaporation, etc. after emulsifying, and an emulsion may also contain the organic solvent. It is to be noted that in the case

that the organic solvent is removed before emulsifying the polymer, an organic solvent (a ketone such as methylethylketone) having a low boiling point is occasionally employed.

In the case that the polymer obtained by a solution polymerization is emulsified under the presence of organic solvents, it can be emulsified by adding water after adding an additive (for example, an emulsifier, a pH regulator, and an acid, etc.) to the organic solution containing the polymer. In the case, it is preferred to gradually add water by dropping. Emulsifying is preferably carried out at a low temperature, for example, it can be selected from a range of not more than 70°C (for example, 5-70°C), and preferably not more than 50°C or so (for example, 10-50°C).

After having being emulsified by the addition of water, removal of the organic solvents is often carried out at, for example, not more than 80°C (for example, 5-80°C) and an ordinary or reduced pressure (for example, 0.0001-1 normal atmosphere or so).

It is to be noted that in order to control a molecular weight of a polymer in the solution polymerization, there may be employed a chain transfer agent, for example, an alcohol such as catechol or phenols, thiols, mercaptans (for example, n-lauryl mercaptan, n-dodecyl mercaptan, t-dodecyl mercaptan, 3-mercaptopropyl trimethoxysilane, and 3-mercaptopropylmethyldimethoxysilane, etc.).

Average particle diameter of polymer particles in the water-based emulsion thus-obtained can be selected from a range in which dispersion stability and adhesion are not deteriorated, for example, 0.01-2 μm, preferably 0.1-1 μm, more preferably 0.01-0.5 μm, most preferably 0.01-0.3 μm or so.

The water-based resin composition of the present invention may be a solution or a water-based emulsion (a water-based polymer emulsion). Since such the water-based resin composition is a water-based resin composition constructed without using a special crosslinked resin such as a crosslinked product of an acrylic silicone oligomer having a hydrolyzable alkoxysilyl group, it is excellent in handling ability. Further, by the use of the water-based resin composition, there is rare anxiety in air pollution, poisoning, and a fire, etc. and, moreover, there can be obtained a coating having excellent workability.

Further, in the water-based resin composition of the present invention, there may be optionally added a variety of additives, for example, a fluorine resin, a silicone resin, an organic sulphonic acid salt compound, an organic phosphoric acid salt compound, a lubricating substance such as an organic carboxylic acid salt compound, an antioxidant, an ultraviolet ray absorbent, a stabilizer such as a thermal stabilizer, a radical scavenger, a delustering agent, an antistatic agent, a plasticizer, a thickener, and a defoaming agent, which are publicly-known. As described hereinabove, there can be prepared a water-based coating agent in which a water-based resin composition is employed.

Since the water-based resin composition of the present invention is constructed as described hereinabove, it is excellent in water resistance, solvent resistance, and adhesion to a base material, and it is also excellent in weatherability and staining resistance. Accordingly, the water-based coating agent in which a water-based resin composition is employed is suitable as an under coating, an over coating, a clear coating, and a lining for a variety of materials.

[Coating composition]

There is illustrated a copolymer by which core components are constructed in a core/shell type water-based emulsion in the coating composition of the present invention.

A polymerizable unsaturated monomer (K) is represented by the following formula (XXXI).

$$CH_2=C(R^{31})COOR^{32} \qquad \text{(XXXI)}$$

(in the formula, $R^{31}$ is a hydrogen atom or a methyl group, and $R^{32}$ is an epoxy group or a substituted alkyl group having a equivalent group to an epoxy group)

The epoxy group or the substituted alkyl group having a equivalent group to an epoxy group which is $R^{32}$ is not particularly limited and, for example, there are enumerated groups represented by the formulae (31), (32), and (33) described below.

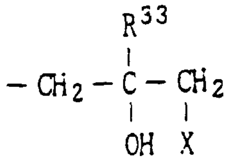

(31)

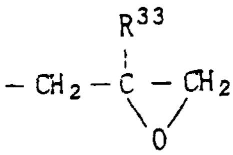

(32)

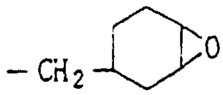

(33)

In the formulae, $R^{31}$ is a hydrogen atom or a methyl group, and X is a halogen atom such as fluorine, chlorine, and bromine.

As the polymerizable unsaturated monomer (K) which can be readily obtained, there are more specifically enumerated glycidylmethacrylate, glycidylethacrylate, β-methylglycidyl methacrylate, (3,4-cyclohexyl)methylmethacrylate, and 3-chloro-2-hydroxypropylmethacrylate, etc.

The epoxy group or the equivalent group to an epoxy group in the polymerizable unsaturated monomer (K) reacts with carboxylic group of the copolymer in the shell components, and can form a crosslinked structure.

The polyvalent epoxy compound (L) is a compound having at least two epoxy groups in the molecule. For example, there are enumerated glycidylethers such as bisphenol A diglycidylether, bisphenol A di-β-methylglycidylether, bisphenol F diglycidylether, bisphenol F di-β-methylglycidylether, a brominated bisphenol A diglycidylether, tetrahydroxyphenylmethane tetraglycidylether, resorcinol diglycidylether, a novolak diglycidylether, a polyalkyleneglycol diglycidylether, glycerinetriglycidylether, and pentaerythritol glycidylether; diglycidylesters such as diglycidyl phthalate, diglycidyl tetrahydrophthalate, and an ester of a dimer acid; polyvalent glycidylamines such as tetraglycidyl diaminodiphenylmethane and triglycidylisocyanurate; and an aliphatic epoxy resin such as an epoxidized polybutadiene and an epoxidized soybean oil, etc.

Of those, there are preferred bisphenol A diglycidylether, bisphenol A di-β-methylglycidylether, bisphenol F diglycidylether, and bisphenol F di-β-methylglycidylether, etc., which can be readily obtained.

A residual epoxy group after production of a copolymer of the polyvalent epoxy compound (L) reacts with carboxylic group in the copolymer of the shell components, and can form a crosslinked structure.

The above-described other polymerizable unsaturated monomers (M) which are copolymerizable with the polymerizable unsaturated monomers (K) and/or the polyvalent epoxy compound (L) preferably include at least one selected from (meth)acrylates, styrene or a styrene derivative, (meth)acrylonitrile, a vinyl monomer having an amide bond, a vinyl monomer having hydroxyl group, and a vinyl monomer having a silyl group.

As such the (meth)acrylates, there are enumerated alkyl (meth)acrylates having a carbon number of 1-12, and preferably 1-8 in the alkyl group. More preferably, methyl(meth)acrylate, ethyl(meth)acrylate, propyl(meth)acrylate, n-butyl(meth)acrylate, isobutyl(meth)acrylate, t-butyl(meth)acrylate, pentyl(meth)acrylate, hexyl(meth)acrylate, 2-ethylhexyl(meth)acrylate, octyl(meth)acrylate, isooctyl(meth)acrylate, and cyclohexyl(meth)acrylate, etc.

Of those, there are preferred methyl(meth)acrylate, n-butyl(meth)acrylate, and 2-ethylhexyl(meth)acrylate, and cyclohexyl(meth)acrylate, etc. in view of being capable of readily obtaining, and being excellent in copolymerizability with other vinyl-based monomers. Further, those may be employed solely or in combination of two or more kinds.

As styrene or the styrene derivative, there are enumerated styrene, α-methylstyrene, p-t-butylstyrene, vinyltoluene, and monochlorostyrene, etc. Of those, there are preferred styrene and α-methylstyrene in view of being capable of readily obtaining, and being excellent in copolymerizability with other vinyl-based monomers.

As the vinyl monomer having an amide bond, there are enumerated, for example, acryl amide, methacryl amide, and α-ethyl acryl amide; an N-substituted acrylic amide such as N,N-dimethylacryl amide, N,N-dimethylmethacryl amide, N-methylacryl amide, N-methylmethacryl amide, N-methylolacryl amide, and N-methylolmethacryl amide;

a dimer of an N-substituted (meth)acryl amide such as methylenebis acryl amide and methylenebis methacryl amide; and N-vinylpyrolidone, etc. Of those, there are preferred acryl amide, methacryl amide, N,N-dimethylacryl amide, and N,N-dimethylmethacryl amide in view of being capable of readily obtaining, and being excellent in copolymerizability with other vinyl-based monomers except the vinyl monomer having an amide bond.

As the vinyl monomer having hydroxyl group, there are enumerated, for example, hydroxyethyl(meth)acrylate and hydroxypropyl(meth)acrylate.

As the vinyl monomer having a silyl group, there are enumerated, for example, divinyldimethoxysilane, divinyldi-β-methoxyethoxysilane, vinyltriethoxysilane, vinyltris-β-methoxyethoxysilane, γ-(meth)acryloxypropyl trimethoxysilane, γ-(meth)acryloxypropyl triethoxysilane, and γ-(meth)acryloxypropyl methyldiethoxysilane, etc. Of those, there are preferred γ-(meth)acryloxypropyl trimethoxysilane and γ-(meth)acryloxypropyl triethoxysilane, etc. in view of being capable of readily obtaining, and stability in an alkoxysilane group.

Further, as the polymerizable unsaturated monomers (M), there can also be optionally employed vinyl chloride, vinyl acetate, and butadiene, etc. in addition to the above-described monomers within a range in which the purpose of the present invention is not deteriorated.

In the present invention, the copolymer constructing the core components is composed of 5-50% by weight of the above-described polymerizable unsaturated monomers (K) and/or the above-described polyvalent epoxy compound (L), and 95-50% by weight of the above-described polymerizable unsaturated monomers (M). In the case that the monomers (K) and/or the polyvalent epoxy compound (L) are less than 5% by weight, the number of epoxy group in the copolymer is few, and crosslinked structure of the copolymer with carboxylic group is few in the shell components during curing of a coating layer, resulting in that adhesion is hard to be produced. On the other hand, in the case that the (K) and/or the (L) exceeds 50% by weight, there become worse an emulsifying stability when preparing a core/shell type emulsion and a storage stability when storing the emulsion. The (K) and/or the (L) is preferably 5-20% by weight in consideration of the number of carboxylic groups in a copolymer for the shell components.

Hereinafter, there is illustrated a copolymer by which the shell components are constructed.

As the polymerizable unsaturated monomer (N) having carboxylic groups, for example, there are enumerated (meth)acrylic acid, an α,β-unsaturated carboxylic acid such as maleic acid, a half ester product of maleic acid, fumaric acid, a half ester product of fumaric acid, itaconic acid, a half ester product of itaconic acid, crotonic acid, and cinnamic acid; further, a carboxyalkyl(meth)acrylate such as carboxyethyl(meth)acrylate and carboxypropyl(meth)acrylate; and an ester of a dicarboxylic acid with a monohydroxyalkyl acrylate such as phthalic monohydroxyethyl acrylate and succinic monohydroxyethyl acrylate, etc.

Of those, there are preferred acrylic acid and methacrylic acid in view of being capable of readily obtaining, and being excellent in copolymerizability with other vinyl-based monomers.

As the other polymerizable unsaturated monomers (M) which are copolymerizable with the polymerizable unsaturated monomers (N) having carboxylic group, there are employed the same monomers as the previously-described monomer (M).

In the present invention, the copolymer by which the shell components are constructed is composed of 2-50% by weight of the above-described polymerizable unsaturated monomers (N) having carboxylic groups and 98-50% by weight of the above-described polymerizable unsaturated monomers (M). In the case that the monomer (N) is less than 2% by weight, the number of carboxylic group in the copolymer is few, there become worse an emulsifying stability when preparing a core/shell type emulsion and a storage stability when storing the emulsion. Further, a crosslinked structure of the copolymer with epoxy groups is few in the shell components during curing of a coating layer, resulting in that adhesion is hard to be produced. Still further, in the case that it is mixed with a water-soluble silicate, gelling is apt to be caused. On the other hand, in the case that the monomer (N) exceeds 50% by weight, a hydrophilic property becomes large in the coating layer, resulting in that water resistance becomes worse. The monomer (N) is preferably 5-30% by weight in consideration of the number of epoxy groups in a copolymer for the core components.

The core/shell type water-based emulsion (O) employed in the present invention can be prepared, for example, as described hereinafter.

For example, there is polymerized a copolymer by which the shell components are constructed, and the shell components are employed as a polymeric dispersant to emulsify and disperse respective monomer components for a copolymer by which the core components are constructed into water, followed by being synthesized through an emulsion polymerization using a radical polymerization initiator.

In more detail, respective monomer components for a copolymer by which the shell components are constructed, that is, 2-50% by weight of at least one kind of the (N) and 98-50% by weight of at least one kind of the (M) are polymerized in an appropriate solvent such as isopropyl alcohol under the presence of a radical polymerization initiator while agitating at 40-90°C or so. After the polymerization, organic solvents are removed by heating at ordinary pressure or reduced pressure while neutralizing carboxylic groups derived from the monomer (N) by addition of, for example, an aqueous ammonia, etc. to obtain a water-based copolymer for the shell components.

Subsequently, respective monomer components for a copolymer by which the core components are constructed, that is, 5-50% by weight of at least one kind of the (K) and/or at least one kind of the (L) and 95-50% by weight of at least one kind of the (M) are allowed to emulsify and disperse into water using the copolymer obtained as a polymeric dispersant, followed by being emulsion-polymerized under the presence of a radical polymerization initiator while agitating at 40-90°C or so.

As the radical polymerization initiator, conventional ones can be employed and, for example, azobisisobutylonitrile, benzoyl peroxide, and ammonium persulphate, etc. can be employed. Use amount of the radical polymerization initiator may also be appropriately selected.

Through such the reaction, a crosslinking is caused between carboxylic groups in the shell components and epoxy groups in the core components to form a core/shell type structure.

Further, in the preparation of the core/shell type water-based emulsion (O), core/shell weight ratio preferably ranges in the core:shell of 9:1-1:9. In the case that the core components exceed the range, it becomes difficult to maintain an emulsion stability.

On the other hand, in the case that the core components become less than the range, although the emulsion stability is sufficient, since carboxylic groups become relatively more, water resistance and chemical resistance are apt to lower. The core/shell weight ratio preferably ranges in the core:shell of 8:2-2:8.

Still further, in the present invention, a glass transition temperature Tg is preferably -40 to 100°C in a copolymer which constructs the core components, and a glass transition temperature. Tg is preferably -40 to 100°C in a copolymer which constructs the shell components in the above-described core/shell type water-based emulsion (O) in view of a layer-forming ability in a coating layer and adhesion in a heating-cooling cycle.

The glass transition temperature Tg is a value calculated based on a formula by Tobolsky described below. The value calculated based on the equation nearly agrees with an actual value.

$$1/Tg=W_1/Tg_1+W_2/Tg_2+\ldots\ldots +W_n/Tg_n$$

[in the formula, Tg is a glass transition temperature (K) of a copolymer, $Tg_1$, $Tg_2$, ......... $Tg_n$ are a glass transition temperature (K) of a homopolymer of respective monomers 1, 2, ........n, and $W_1$, $W_2$, ....... $W_n$ are weight fraction of respective monomers 1, 2, ........n)

Particle diameter in the core/shell type water-based emulsion (O) is appropriate in 0.01-1 μm or so, and preferred in 0.03-0.8 μm in connection with a mixing stability before the use of the emulsion (O), the water-soluble silicate (P), and compatibility in a layer state after coating.

Hereinafter, there is illustrated the water-soluble silicate (P) represented by general formula (XXXII),

$$M_2O\text{-}xSiO_2 \qquad (XXXII)$$

(in the formula, M represents an alkali metal belonging to the 1A group in the periodic table, and x is a value of 2.0-7.5).

As the alkali metal M in the water-soluble silicate (P), Li, Na, and K are preferred. Further, "x" in the water-soluble silicate (P) is a value of 2.0-7.5. In the case that "x" is less than 2.0, water resistance is poor in the coating composition obtained and, on the other hand, in the case that "x" exceeds 7.5, adhesion to a base material is poor in the coating composition obtained. A preferred value of "x" is 2.0-4.5.

Further, in the present invention, the water-soluble silicate (P) is preferably of a complete aqueous solution state. Colloidal silicate is poor in a permeability into a base material and adhesion to a base material. Still further, the water-soluble silicate (P) may be also employed in combination of two or more kinds.

The coating composition of the present invention contains the core/shell type water-based emulsion (O) and the water-soluble silicate (P) in the formulating proportion by weight ratio of solid of (O):(P) = 10:1-1:10. In the case that formulating amount of the emulsion (O) is more than the range, although adhesion to an over coating becomes good, adhesion to an inorganic base material becomes worse. On the other hand, in the case that formulating amount of the emulsion (O) is less than the range, although adhesion to an inorganic base material becomes good, adhesion to an over coating becomes worse. Although a more appropriate formulating proportion depends upon the core/shell components in the emulsion (O) and the ratio thereof, it is of (O):(P) = 1:5-5:1, and preferably of (O):(P) = 1:5-1:1.

The coating composition of the present invention can be obtained by mixing the core/shell type emulsion (O) with the water-soluble silicate (P). In the case of mixing, there may be employed an auxiliary agent for film-forming such as methylcellosolve, carbitol, triethyleneglycol, and texanol. Further, in the coating composition, there may be optionally mixed a defoaming agent, a thickener, a freezing stabilizer, a wetting agent, pigments, a water-soluble resin, and an auxiliary agent for penetrating, which are publicly-known additives.

In the coating composition of the present invention, since miscibility is high between the core/shell type emulsion (O) and the water-soluble silicate (P), it is very excellent in storage stability before uses thereof. Further, since miscibility is good between both, a homogeneous state in the coating composition can be maintained at any one of a period of coating onto a base material and a period of forming a coating layer. Still further, adhesion can be improved by, for

example, a crosslinking structure formed by epoxy group in a polymer of the core components and carboxylic group in a polymer of the shell components through baking of the coating layer. As a result, adhesion to a base material is very excellent and, moreover, adhesion to an over coating is also very excellent. Accordingly, the coating composition of the present invention is particularly useful as a surface treating agent for a porous plate or a primer.

[Examples]

Hereinafter, although the present invention is illustrated in more detail based on Examples, the present invention is not limited by the Examples. It is to be noted that the average particle diameter of the solid plasticizer is measured based on a median diameter by a laser diffraction type particle size distribution meter (LA-500 manufactured by Horiba Seisakusyo, Ltd.). Further, "part" is "part by weight" so far as not being particularly provided.

Preparation Example A1

[Preparation of bis(cis-3,3,5-trimethylcyclohexyl)phthalate]

A 2L glass-made 3-necked flask equipped with an agitator was charged with 313 g (2.2 mol) of cis-3,3,5-trimethylcyclohexanol, 148 g (1.0 mol) of phthalic anhydride, and 1200 ml of toluene (a solvent), followed by allowing to react under the presence of 14 g (0.073 mol) of p-toluene sulphonic acid which is a catalyst while refluxing. Since water is produced with the progress of a reaction, it was distilled out of a system. The reaction was carried out under a nitrogen atmosphere. After 6 hours, since a determined amount of water was distilled out, the reaction was terminated. Reaction liquid was extracted using water, and water was removed from an organic layer using magnesium sulphate, followed by concentrating.

600 ml of methanol was added into a concentrated liquid, followed by crystallizing. A crystalline obtained was filtered, washed, and dried to obtain 350 g of bis(cis-3,3,5-trimethylcyclohexyl)phthalate (a melting point of 93°C) which is a target product. Yield is 84%.

[Preparation of bis(trans-3,3,5-trimethylcyclohexyl)phthalate]

A 2L glass-made 3-necked flask equipped with an agitator was charged with 313 g (2.2 mol) of trans-3,3,5-trimethylcyclohexanol, 148 g (1.0 mol) of phthalic anhydride, and 1200 ml of toluene (a solvent), followed by allowing to react in the presence of 14 g (0.073 mol) of p-toluene sulphonic acid which is a catalyst while refluxing. Since water is produced with the progress of a reaction, it was distilled out of a system. The reaction was carried out under a nitrogen atmosphere. After 6 hours, since a fixed amount of water was distilled out, the reaction was terminated. Reaction liquid was extracted using water, and water was removed from an organic layer using magnesium sulphate, followed by concentrating. 400 ml of methanol was added into a concentrated liquid, followed by crystallizing. A crystalline obtained was filtered, washed, and dried to obtain 326 g of bis(trans-3,3,5-trimethylcyclohexyl)phthalate (a melting point of 57°C) which is a target product. Yield is 79%.

According to the above-described method for the preparation, there were prepared other multiester compounds such as bis(cis-3,3,5-trimethylcyclohexyl)terephthalate (a melting point of 133°C), bis(trans-3,3,5-trimethylcyclohexyl)terephthalate (a melting point of 103°C), bis(3,5-dimethyl-1-adamantyl)isophthalate (a melting point of 88°C), bis(1-adamantyl)isophthalate (a melting point of 141°C), and bis(3,5-dimethyl-1-adamantyl)terephthalate (a melting point of 176°C).

Example A1

(Preparation of a solid plasticizer)

There were mixed 100 parts by weight of bis(cis-3,3,5-trimethylcyclohexyl)phthalate (a melting point of 93°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.2 μm to obtain a water dispersion liquid of bis(cis-3,3,5-trimethylcyclohexyl) phthalate.

(Preparation of a thermally- and pressure-sensitive adhesive)

A water-based emulsion of an acrylic-based polymer (2-ethylhexylacrylate-methylmethacrylate-acrylic acid copolymer having a glass transition temperature Tg of 28°C) which is a thermoplastic resin, a water-based emulsion of a terpene resin which is a tackfier, and water were added to the water dispersion liquid of bis(cis-3,3,5-trimethylcyclohexyl)phthalate prepared as described hereinabove, followed by agitating until attaining to a uniform liquid to obtain a thermally- and pressure-sensitive adhesive having a solid content of 50% by weight. Formulating ratio herein is 26 parts by weight of the thermoplastic resin (the acrylic-based polymer) and 17 parts by weight of the tackifier (the terpene resin) based on 100 parts by weight of the solid plasticizer [bis(cis-3,3,5-trimethylcyclohexyl)phthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/m$^2$ and a polyethylene terephthalate film (hereinafter, occasionally referred merely to "PET film") having the thickness of 25 μm which is treated by a corona discharge using a barcoater so that a coating amount after drying becomes 12 g/m$^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A2

(Preparation of a thermally- and pressure-sensitive adhesive)

A water-based emulsion of a styrene-butadiene-acrylic acid copolymer (a glass transition temperature Tg: 20°C) which is a thermoplastic resin, a water-based emulsion of a hydrogenated terpene resin which is a tackifier, and water were added to the water dispersion liquid of bis(cis-3,3,5-trimethylcyclohexyl)phthalate prepared in the Example A1, followed by agitating until attaining to a uniform liquid to obtain a thermally- and pressure-sensitive adhesive having a solid content of 54% by weight. Formulating ratio herein is 40 parts by weight of the thermoplastic resin (a styrene-butadiene-acrylic acid copolymer) and 26 parts by weight of the tackifier (the terpene resin) based on 100 parts by weight of the solid plasticizer [bis(cis-3,3,5-trimethylcyclohexyl)phthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/m$^2$ and a PET film having the thickness of 25 μm which is treated by a corona discharge using a barcoater so that a coating amount after drying becomes 12 g/m$^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A3

(Preparation of a water dispersion liquid of a solid plasticizer)

There were mixed 100 parts by weight of bis(cis-3,3,5-trimethylcyclohexyl)terephthalate (a melting point of 133°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.6 μm to obtain a water dispersion liquid of bis(cis-3,3,5-trimethylcyclohexyl)terephthalate.

(Preparation of a thermally- and pressure-sensitive adhesive)

A water-based emulsion of an acrylic-based polymer (2-ethylhexylacrylate-styrene-acrylic acid copolymer having a glass transition temperature Tg of 30°C) which is a thermoplastic resin, a water-based emulsion of a rosin ester which is a tackifier, and water were added to the water dispersion liquid of bis(cis-3,3,5-trimethylcyclohexyl) terephthalate prepared as described hereinabove, followed by agitating until attaining to a uniform liquid to obtain a thermally-

and pressure-sensitive adhesive having a solid content of 52% by weight. Formulating ratio is 17 parts by weight of the thermoplastic resin (the acrylic-based polymer) and 26 parts by weight of the tackifier (the rosin ester) based on 100 parts by weight of the solid plasticizer [bis(cis-3,3,5-trimethylcyclohexyl)terephthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 170°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A4

(Preparation of a water dispersion liquid of a solid plasticizer)

There were mixed 100 parts by weight of dimenthylphthalate (a melting point of 134°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.5 µm to obtain a water dispersion liquid of dimenthylphthalate.

(Preparation of a thermally- and pressure-sensitive adhesive)

A water-based emulsion of an acrylic-based polymer (2-ethylhexylacrylate-styrene-acrylic acid copolymer having a glass transition temperature Tg of 30°C) which is a thermoplastic resin, a water-based emulsion of a rosin ester which is a tackifier, and water were added to the water dispersion liquid of dimenthylphthalate prepared as described hereinabove, followed by agitating until attaining to a uniform liquid to obtain a thermally-and pressure-sensitive adhesive having a solid content of 53% by weight. Formulating ratio herein is 17 parts by weight of the thermoplastic resin (the acrylic-based polymer) and 26 parts by weight of the tackifier (the rosin ester) based on 100 parts by weight of the solid plasticizer (dimenthylphthalate).

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 170°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A5

(Preparation of a water dispersion liquid of a solid plasticizer)

There were mixed 100 parts by weight of dibonylphthalate (a melting point of 136°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.8 µm to obtain a water dispersion liquid of dibonylphthalate.

(Preparation of a thermally- and pressure-sensitive adhesive)

A water-based emulsion of an acrylic-based polymer (2-ethylhexylacrylate-styrene-acrylic acid copolymer having a glass transition temperature Tg of 30°C) which is a thermoplastic resin and a vinylacetate-based copolymer (a vinylacetate-ethylene copolymer having a glass transition temperature Tg of 7°C), a water-based emulsion of a terpene phenol resin which is a tackifier, and water were added to the water dispersion liquid of dibonylphthalate prepared as described hereinabove, followed by agitating until attaining to a uniform liquid to obtain a thermally-and pressure-sensitive adhesive having a solid content of 50% by weight. Formulating ratio herein is 14.4 parts by weight of the thermoplastic resin (the acrylic-based polymer), 3.6 parts by weight of the thermoplastic resin (the vinylacetate-based copolymer), and 26 parts by weight of the tackifier (the terpene phenol resin) based on 100 parts by weight of the solid plasticizer (dibonylphthalate).

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 μm which is treated by a corona discharge using a barcoater so that a coating amount after drying becomes 12 g/$m^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 170°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A6

(Preparation of a water dispersion liquid of a solid plasticizer)

There were mixed 100 parts by weight of bis(4-t-butylcyclohexyl)phthalate (a melting point of 116°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.6 μm to obtain a water dispersion liquid of bis(4-t-butylcyclohexyl)phthalate.

(Preparation of a thermally- and pressure-sensitive adhesive)

A water-based emulsion of an acrylic-based polymer (2-ethylhexylacrylate-styrene-acrylic acid copolymer having a glass transition temperature Tg of 30°C) which is a thermoplastic resin, a water-based emulsion of a terpene resin which is a tackifier, and water were added to the water dispersion liquid of bis(4-t-butylcyclohexyl)phthalate prepared as described hereinabove, followed by agitating until attaining to a uniform liquid to obtain a thermally- and pressure-sensitive adhesive having a solid content of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer [bis(4-t-butylcyclohexyl) phthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 μm which is treated by a corona discharge using a barcoater so that a coating amount after drying becomes 12 g/$m^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 140°C for 30 seconds to produce tackiness, and placed on a glass plate [Micro Slide Glass "white Green Polish" manufactured by Iwaki Glass, Ltd.], followed by sticking through compressing with a rubber roll by making one round traverse while loading the weight of 2 kg to prepare test pieces for measuring an adhesive strength.

Example A7

(Preparation of a water dispersion liquid of a solid plasticizer)

There were mixed 100 parts by weight of bis(trans-3,3,5-trimethylcyclohexyl)terephthalate (a melting point of 103°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.5 µm to obtain a water dispersion liquid of bis(trans-3,3,5-trimethylcyclohexyl)terephthalate.

(Preparation of a thermally- and pressure-sensitive adhesive)

A water-based emulsion of a styrene-butadiene-acrylic acid copolymer (a glass transition temperature Tg: 20°C) which is a thermoplastic resin, a water-based emulsion of a hydrogenated terpene resin which is a tackifier, and water were added to the water dispersion liquid of bis(trans-3,3,5-trimethylcyclohexyl) terephthalate prepared as described hereinabove, followed by agitating until attaining to a uniform liquid to obtain a thermally-and pressure-sensitive adhesive having a solid content of 52% by weight. Formulating ratio herein is 40 parts by weight of the thermoplastic resin (the styrene-butadiene-acrylic acid copolymer) and 26 parts by weight of the tackifier (the hydrogenated terpene resin) based on 100 parts by weight of the solid plasticizer [bis(trans-3,3,5-trimethylcyclohexyl)terephthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 140°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A8

(Preparation of a water dispersion liquid of a solid plasticizer)

There were mixed 100 parts by weight of bis(3,5-dimethyl-1-adamantyl)isophthalate (a melting point of 88°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.5 µm to obtain a water dispersion liquid of bis(3,5-dimethyl-1-adamantyl) isophthalate.

(Preparation of a thermally- and pressure-sensitive adhesive)

A water-based emulsion of an acrylic-based copolymer (2-ethylhexylacrylate-methylmethacrylate-styrene-acrylic acid copolymer, a glass transition temperature Tg: 28°C) which is a thermoplastic resin, a water-based emulsion of a terpene phenol resin which is a tackifier, and water were added to the water dispersion liquid of bis(3,5-dimethyl-1-adamantyl)isophthalate prepared as described hereinabove, followed by agitating until attaining to a uniform liquid to obtain a thermally- and pressure-sensitive adhesive having a solid content of 53% by weight.

Formulating ratio herein is 27 parts by weight of the thermoplastic resin (the acrylic-based polymer) and 27 parts by weight of the tackifier (the terpene phenol resin) based on 100 parts by weight of the solid plasticizer [bis(3,5-dimethyl-1-adamantyl) isophthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 70°C for 2 minutes to obtain a thermally- and pressure-sensitive adhesive sheet. The thermally-

and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A9

(Preparation of a water dispersion liquid of a solid plasticizer)

There were mixed 100 parts by weight of bis(1-adamantyl)isophthalate (a melting point of 141°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.8 μm to obtain a water dispersion liquid of bis(1-adamantyl)isophthalate.

(Preparation of a thermally- and pressure-sensitive adhesive)

A water-based emulsion of an acrylic-based copolymer (2-ethylhexylacrylate-styrene-acrylic acid copolymer, a glass transition temperature Tg: 30°C) which is a thermoplastic resin, a water-based emulsion of a terpene phenol resin which is a tackifier, 2,2,4-trimethyl-1,3-pentanediol monoisobutylate which is an auxiliary agent for film-forming, and water were added to the water dispersion liquid of bis(1-adamantyl)isophthalate prepared as described hereinabove, followed by agitating until attaining to a uniform liquid to obtain a thermally and pressure-sensitive adhesive having a solid content of 50% by weight. Formulating ratio herein is 14 parts by weight of the thermoplastic resin (the acrylic-based copolymer), 28 parts by weight of the tackifier (the terpene phenol resin), and 4 parts by weight of the auxiliary agent for film-forming based on 100 parts by weight of the solid plasticizer [bis(1-adamantyl)isophthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/m$^2$ and a PET film having the thickness of 25 μm which is treated by a corona discharge using a barcoater so that a coating amount after drying becomes 12 g/m$^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 180°C for 30 seconds to produce a pressure-sensitive adhesive property, and placed on a glass plate [Micro Slide Glass White Green Polish"" manufactured by Iwaki Glass, Ltd.], followed by sticking through compressing with a rubber roll by making one round traverse while loading the weight of 2 kg to prepare test pieces for measuring an adhesive strength.

Example A10

(Preparation of a water dispersion liquid of a solid plasticizer)

There were mixed 95 parts by weight of bis(cis-3,3,5-trimethylcyclohexyl)phthalate (a melting point of 93°C) and 5 parts by weight of bis(trans-3,3,5-trimethylcyclohexyl)phthalate (a melting point of 57°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.8 μm to obtain a water dispersion liquid of bis(cis-3,3,5-trimethylcyclohexyl)phthalate and bis (trans-3,3,5-trimethylcyclohexyl)phthalate.

(Preparation of a thermally- and pressure-sensitive adhesive)

A water-based emulsion of an acrylic-based copolymer (2-ethylhexylacrylate-styrene-acrylic acid copolymer, a glass transition temperature Tg: 30°C) which is a thermoplastic resin, a water-based emulsion of a terpene phenol resin which is a tackifier, and water were added to the water dispersion liquid of bis(cis-3,3,5-trimethylcyclohexyl)phthalate and bis(trans-3,3,5-trimethylcyclohexyl)phthalate prepared as described hereinabove, followed by agitating until attaining to a uniform liquid to obtain a thermally- and pressure-sensitive adhesive having a solid content of 52% by weight. Formulating ratio herein is 14 parts by weight of the thermoplastic resin (the acrylic-based copolymer) and 28 parts by weight of the tackifier (the terpene phenol resin) based on 95 parts by weight of bis(cis-3,3,5-trimethylcyclohexyl)phthalate and 5 parts by weight of bis(trans-3,3,5-trimethylcyclohexyl)phthalate which are the solid plasticizer.

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 70°C for 2 minutes to obtain a thermally and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A11

(Preparation of a water dispersion liquid of a solid plasticizer)

There were mixed 50 parts by weight of bis(cis-3,3,5-trimethylcyclohexyl)phthalate (a melting point of 93°C) and 50 parts by weight of dicyclohexylterephthalate (a melting point of 89°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.5 µm to obtain a water dispersion liquid of bis(cis-3,3,5-trimethylcyclohexyl)phthalate and dicyclohexyl terephthalate.

(Preparation of a thermally- and pressure-sensitive adhesive)

A water-based emulsion of an acrylic-based copolymer (2-ethylhexylacrylate-styrene-acrylic acid copolymer, a glass transition temperature Tg: 30°C) which is a thermoplastic resin, a water-based emulsion of a hydrogenated terpene resin which is a tackifier, and water were added to the water dispersion liquid of bis(cis-3,3,5-trimethylcyclohexyl)phthalate and dicyclohexylterephthalate prepared as described hereinabove, followed by agitating until attaining to a uniform liquid to obtain a thermally- and pressure-sensitive adhesive having a solid content of 54% by weight. Formulating ratio herein is 27 parts by weight of the thermoplastic resin (the acrylic-based copolymer) and 27 parts by weight of the tackifier (the hydrogenated terpene phenol resin) based on 50 parts by weight of bis(cis-3,3,5-trimethylcyclohexyl) phthalate and 50 parts by weight of dicyclohexylterephthalate which are the solid plasticizer.

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 50°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Example A12

(Preparation of a water dispersion liquid of a solid plasticizer)

There were mixed 100 parts by weight of bis(3,5-dimethyl-1-adamantyl)terephthalate (a melting point of 176°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.8 µm to obtain a water dispersion liquid of bis(3,5-dimethyl-1-adamantyl) terephthalate.

(Preparation of a thermally- and pressure-sensitive adhesive)

A water-based emulsion of an acrylic-based copolymer (2-ethylhexylacrylate-methylmethacrylate-styrene-acrylic acid copolymer, a glass transition temperature Tg: 28°C) which is a thermoplastic resin, a water-based emulsion of a terpene phenol resin which is a tackifier, and water were added to the water dispersion liquid of bis(3,5-dimethyl-1-adamantyl)terephthalate prepared as described hereinabove, followed by agitating until attaining to a uniform liquid to obtain a thermally- and pressure-sensitive adhesive having a solid content of 53% by weight.

Formulating ratio herein is 27 parts by weight of the thermoplastic resin (the acrylic-based copolymer) and 27 parts by weight of the tackifier (the terpene phenol resin) based on 100 parts by weight of the solid plasticizer [bis(3,5-dimethyl-1-adamantyl) terephthalate].

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 $g/m^2$ and a PET film having the thickness of 25 µm which is treated by a corona discharge using a barcoater so that a coating amount after drying becomes 12 $g/m^2$, followed by drying at 70°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Comparative Example A1

(Preparation of a water dispersion liquid of a solid plasticizer)

There were mixed 100 parts by weight of dicyclohexylphthalate (a melting point of 65°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.2 µm to obtain a water dispersion liquid of dicyclohexylphthalate.

(Preparation of a thermally- and pressure-sensitive adhesive)

A water-based emulsion of an acrylic-based copolymer (2-ethylhexylacrylate-methylmethacrylate-acrylic acid copolymer, a glass transition temperature Tg: 28°C) which is a thermoplastic resin, a water-based emulsion of a terpene resin which is a tackifier, and water were added to the water dispersion liquid of dicyclohexylphthalate prepared as described hereinabove, followed by agitating until attaining to a uniform liquid to obtain a thermally- and pressure-sensitive adhesive having a solid content of 50% by weight. Formulating ratio herein is 26 parts by weight of the thermoplastic resin (the acrylic-based copolymer) and 17 parts by weight of the tackifier (the terpene resin) based on 100 parts by weight of the solid plasticizer (dicyclohexylphthalate).

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 $g/m^2$ and a PET film having the thickness of 25 µm which is treated by a corona discharge using a barcoater so that a coating amount after drying becomes 12 $g/m^2$, followed by drying at 40°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Comparative Example A2

(Preparation of a thermally- and pressure-sensitive adhesive)

A water-based emulsion of a styrene-butadiene-acrylic acid copolymer (a glass transition temperature Tg: 28°C) which is a thermoplastic resin, a water-based emulsion of a hydrogenated terpene resin which is a tackifier, and water were added to the water dispersion liquid of dicyclohexylphthalate prepared in the Comparative Example A1, followed by agitating until attaining to a uniform liquid to obtain a thermally- and pressure-sensitive adhesive having a solid content of 52% by weight. Formulating ratio herein is 40 parts by weight of the thermoplastic resin (the styrene-butadiene-acrylic acid copolymer) and 26 parts by weight of the tackifier (the hydrogenated terpene resin) based on 100 parts by weight of the solid plasticizer (dicyclohexylphthalate).

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 $g/m^2$ and a PET film having the thickness of 25 μm which is treated by a corona discharge using a barcoater so that a coating amount after drying becomes 12 $g/m^2$, followed by drying at 40°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

Comparative Example A3

A water-based emulsion of an acrylic-based copolymer (2-ethylhexylacrylate-styrene-acrylic acid copolymer, a glass transition temperature Tg: 30°C) which is a thermoplastic resin, a water-based emulsion of a rosin ester which is a tackifier, and water were added to the water dispersion liquid of dicyclohexylphthalate prepared in the Comparative Example A1, followed by agitating until attaining to a uniform liquid to obtain a thermally- and pressure-sensitive adhesive having a solid content of 52% by weight. Formulating ratio is 17 parts by weight of the thermoplastic resin (the acrylic-based copolymer) and 26 parts by weight of the tackifier (the rosin ester) based on 100 parts by weight of the solid plasticizer (cyclohexylphthalate).

(Preparation of a thermally- and pressure-sensitive adhesive sheet and test pieces for measuring an adhesive strength)

The thermally- and pressure-sensitive adhesive prepared as described hereinabove was coated on a surface (back surface) of a single side-treated art paper having the density of 84.9 $g/m^2$ and a PET film having the thickness of 25 μm which is treated by a corona discharge using a barcoater so that a coating amount after drying becomes 12 $g/m^2$, followed by drying at 40°C for 2 minutes to obtain a thermally- and pressure-sensitive adhesive sheet. The thermally- and pressure-sensitive adhesive sheet obtained by coating on the PET film was cut into the size of width of 25 mm and length of 125 mm to prepare test pieces. The test pieces were heated at 120°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg to prepare test pieces for measuring an adhesive strength.

〈Performance test〉

(Adhesive strength)

Test pieces for adhesive strength test were prepared, and then the test pieces were placed at an atmosphere of 23°C and 50% RH for 1 day, and then an adhesive strength was measured at a tensile speed of 300 mm/minute and a peeling angle of 180° using a tensile tester (Tensilon UCT-5T manufactured by Orientech, Ltd.). Results are shown in Table 1.

(Blocking resistance)

4 layers of the thermally- and pressure-sensitive adhesive sheet obtained by coating on a single side-treated

art paper were laminated so that a gloss surface (surface) of the single side-treated art paper was put into contact with another surface (back surface) on which the thermally- and pressure-sensitive adhesive is coated, at the loading the weight of 500 g/cm$^2$ and an atmosphere of 55°C for 24 hours, followed by evaluating a blocking resistance according to the following standards. Results are shown in Table 1.

5: It was peeled without a peeling resistance.

4: It was peeled while slightly sounding when being peeled.

3: It was peeled while continuously sounding when being peeled.

2: Fibers of the paper were partially left on a pressure-sensitive adhesive layer when being peeled.

1: Paper was broken by blocking.

Table 1

| | Adhesive strength(gf/25 mm) | Blocking resistance |
|---|---|---|
| Example A1 | 1150 | 5 |
| Example A2 | 1350 | 4 |
| Example A3 | 1000 | 5 |
| Example A4 | 1080 | 5 |
| Example A5 | 1100 | 5 |
| Example A6 | 1130 | 5 |
| Example A7 | 1300 | 5 |
| Example A8 | 1150 | 5 |
| Example A9 | 980 | 5 |
| Example A10 | 1250 | 4 |
| Example A11 | 1180 | 4 |
| Example A12 | 990 | 5 |
| Comparative Example A1 | 750 | 1 |
| Comparative Example A2 | 950 | 1 |
| Comparative Example A3 | 530 | 1 |

From the results of the Table 1, it is confirmed that the thermally- and pressure-sensitive adhesive sheets in the Examples A1-A12 are more excellent in adhesive strength and blocking resistance compared to the pressure-sensitive adhesive sheets in the Comparative Examples A1-A3.

Example A13

Using rats [F344/N(SPF), male, age in week at a period of experimentation: 42 days, Japan SLC, Ltd.], an influence of 4 kinds of phthalates on testes was tested as described below.

It is to be noted that 10 rats (n=10) per 1 group were used in tests at respective conditions. Before administration, starvation was continued for 16 hours, and administration was conducted in the morning. Further, in relation to feeding, CRF-1 (manufactured by Oriental Enzyme Industries, Ltd.) was given over 6 hours after the administration. In relation to intake of water, Himeji municipal water was freely given.

(Experimentation 1)

8 ml of an olive oil of a pharmacopeia grade (Lot No. 998521 manufactured by Yoshida Seiyaku, Ltd.) was added to 2 g of bis(cis-3,3,5-trimethylcyclohexyl)phthalate (hereinafter, abbreviated as "TMCOL-P"), followed by heating and dissolving at 100°C for approximately 30 minutes to prepare a TMCOL-P solution having 200 mg/ml. Likewise, using dicyclohexylphthalate (hereinafter, abbreviated as "DCHP") (manufactured by Wako Jun-yaku Kogyo, Ltd.), a DCHP solution of 200 mg/ml was prepared.
Further, 7.96 ml of an olive oil of a pharmacopeia grade (Lot No. 998521 manufactured by Yoshida Seiyaku, Ltd.) was added to 2 g of bis(2-ethylhexyl)phthalate (hereinafter, abbreviated as "DOP") (manufactured by Aldrich Chemicals Industries, Ltd.), followed by mixing in a vortex to prepare a DOP solution of 200 mg/ml. Still further, 8.09 ml of an olive oil of a pharmacopeia grade (Lot No. 998521 manufactured by Yoshida Seiyaku, Ltd.) was added to 2 g of dibutylphthalate (hereinafter, abbreviated as "DBP"), followed by mixing in a vortex to prepare a DBP solution of 200 mg/ml.
The phthalate solutions were prepared at a day for administration, and maintained at the temperature of 37°C until immediately before administration.
Using thus-obtained respective solutions of TMCOL-P, DCHP, DOP, and DBP, a continuous administration (an oral administration) was conducted to rats at a dose of 1000 mg/kg (5 ml/kg) for 7 days.
Administration of an olive oil alone was conducted as controls in place of the administration of the phthalates.
During the continuous administration for 7 days, body weight was measured everyday, and at the next day (8th day) of a final day, testes and epididymis were delivered to measure wet weight after decapitation and removal of blood.
Further, the testes delivered was stained in a Bouin fixative (saturated picric acid: 15, formalin: 3, and glacial acetic acid: 1). After staining for 48 hours, the testes was twice washed with 70% ethyl alcohol, and it was embedded in paraffin and sliced, and then HE-stained to prepare an HE-stained sample and to conduct a histomorphological retrieval.
As a result, although weight change was not significantly observed in groups of TMCOL-P, DOP, and DBP compared to groups of the controls, in a group of DCHP, there was observed a significant decrease in body weight to 92-94% at fourth day ($p<0.05$), sixth day ($p<0.01$), seventh day ($p<0.05$), and eighth day ($p<0.05$) after administration compared to groups of the controls. Further, in the case of TMCOL-P, DCHP, and DOP, although a significant decrease of testes weight was not observed compared to groups of the controls and, in the case of DBP group, a significant decrease (49%, $p<0.001$) of testes weight was observed compared to groups of the controls. However, in relation to the epididymis, a significant decrease in the weight was not observed in all the administration groups compared to groups of the controls.
On the other hand, in relation to pathobiological retrieval of testes tissue, no change was observed in the testes tissue of all the administration groups of TMCOL-P compared to groups of the controls. However, in the groups of DCHP and DOP, a bilateral and unilateral denaturation and atrophia in semiferous tubule were observed in 4 examples and 5 examples, respectively. In the group of DBP, a grave change was observed in the testes tissue, and a bilateral and inflamed atrophia in semiferous tubule were observed in all the samples. Samples showing several pieces of atrophia in the semiferous tubule (+), samples showing a wide range of atrophia but not inflamed (++), and samples showing the inflamed change (+++) were scored 1 point, 2 points, and 3 points, respectively, to evaluate an influence level to the testes. As a result, the groups of TMCOL-P, DCHP, DOP, and DBP were scored 0 point, 0 point, 5 points, 10 points, and 26 points, respectively.

(Experimentation 2)

12 ml of an olive oil of a pharmacopeia grade (Lot No. 998521 manufactured by Yoshida Seiyaku, Ltd.) was added to 3 g of TMCOL-P, followed by heating and dissolving at 100°C for approximately 30 minutes to prepare a TMCOL-P solution of 200 mg/ml. Likewise, using DCHP (manufactured by Wako Jun-yaku Kogyo, Ltd.), a DCHP solution of 200 mg/ml was prepared.
Further, 11.94 ml of an olive oil of a pharmacopeia grade (Lot No. 998521 manufactured by Yoshida Seiyaku, Ltd.) was added to 3 g DOP (manufactured by Aldrich Chemicals Industries, Ltd.), followed by mixing in a vortex to prepare a DOP solution of 200 mg/ml. Still further, 12.14 ml of an olive oil of a pharmacopeia grade (Lot No. 998521, Yoshida Seiyaku, Ltd.) was added to 3 g of DBP, followed by mixing in a vortex to prepare a DBP solution of 200 mg/ml.
The phthalate solutions were prepared at a day for administration, and maintained at the temperature of 37°C until immediately before administration.
Using thus-obtained respective solutions of TMCOL-P, DCHP, DOP, and DBP, a continuous administration (an oral administration) was conducted to rats at a dose of 2000 mg/kg (10 ml/kg) for 7 days.
Administration of an olive oil alone was conducted as controls in place of the administration of the phthalates.
During the continuous administration for 7 days, body weight was measured everyday, and at the next day (8th

day) of a final day, testes, epididymis, and liver were delivered to measure wet weight after decapitation and removal of blood.

As a result, although weight change was not significantly observed in the group of TMCOL-P compared to groups of the controls, in groups of DCHP, DOP, and DBP, there was observed a significant decrease of body weight compared to groups of the controls. The significant decrease of body weight in groups of DOP and DBP was observed ($p<0.05$ and $p<0.01$, respectively) at a period of fifth day after administration, and it continued to gradually decrease until a final day (eighth day) in the experimentation.

Change of body weight at the final day of the experimentation in groups of DOP and DBP was 85% ($p<0.01$) and 83% ($p<0.01$), respectively, based on 100% in the groups of the controls. In the group of DCHP, death was observed at fifth day after administration in one example. In relation to conditions in a whole body, since there were observed piloerection, browning of hair, crouching, and asthenia, etc., administration was stopped. However, at the sixth and seventh days, death was observed in two examples and one example, respectively. Although the body weight in the group of DCHP decreased to a minimum value (75%, $p<0.01$) at the seventh day after administration, there was shown a tendency of recovery after that.

Further, in relation to the weight of testes, a significant decrease was observed in all the groups of DCHP, DOP, and DBP except TMCOL-P (86%, none of a significant difference), and the decrease level was 46% ($p<0.01$), 56% ($p<0.01$), and 38% ($p<0.01$) based on the weight of groups of the controls, respectively. Still further, in relation to the weight of the epididymis as well as the weight of testes, a significant decrease was observed in all the groups of DCHP, DOP, and DBP except TMCOL-P (81%, none of a significant difference), and the decrease level was 58% ($p<0.05$), 71% ($p<0.05$), and 56% ($p<0.01$) based on the weight of groups of the controls, respectively. Besides, in relation to the weight of the liver, a significant increase was observed in all the groups of DCHP, DOP, and DBP except TMCOL-P (111%, none of a significant difference), and the increase level was 131% ($p<0.001$), 175% ($p<0.001$), and 146% ($p<0.001$) based on the weight of groups of the controls, respectively.

Example B1

(Preparation of a water dispersion liquid of a solid plasticizer)

A water dispersion liquid of 1,4-cyclohexanedimethanol bis(diphenylphosphate) was prepared by mixing 100 parts by weight of 1,4-cyclohexanedimethanol bis(diphenylphosphate) (a melting point: 97°C) which is a solid plasticizer, 15 parts by weight of an anionic surface active agent (a polycarboxylic ammonium salt) which is a dispersant, and 80 parts by weight of water, and by crushing until attaining to an average particle diameter of 2.5 μm using a ball mill.

(Preparation of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based emulsion of a terpene resin which is a tackifier, and water were added to the water dispersion liquid of 1,4-cyclohexanedimethanol bis(diphenylphosphate) as prepared hereinabove, followed by agitating until attaining to a uniform liquid to obtain a thermally- and pressure-sensitive adhesive having a solid content of 50% by weight. Formulating ratio herein is 26 parts by weight of the thermoplastic resin (the acrylic-based polymer) and 17 parts by weight of the tackifier (the terpene resin) based on 100 parts by weight of the solid plasticizer [1,4-cyclohexanedimethanol bis(diphenylphosphate)].

(Preparation of a thermally- and pressure-sensitive adhesive sheet)

The thermally- and pressure-sensitive adhesive prepared hereinabove was coated on a surface (back surface) of a single side-treated art paper having the density of 84.9 $g/m^2$ and a polyethylene terephthalate film (hereinafter, occasionally referred merely to "PET film") having the thickness of 25 μm which is treated by a corona discharge using a barcoater so that a coating amount after drying becomes 12 $g/m^2$, followed by drying at 40°C for 2 minutes to obtain a thermally- and pressure-sensitive adhesive sheet.

Example B2

(Preparation of a water dispersion liquid of a solid plasticizer)

A water dispersion liquid of resorcinolbis[di(2,6-dimethylphenyl)phosphate] was prepared by mixing 100 parts by weight of resorcinolbis[di(2,6-dimethylphenyl)phosphate] (a melting point: 95°C) which is a solid plasticizer, 15 parts by weight of an anionic surface active agent (a polycarboxylic ammonium salt) which is a dispersant, and 80 parts by

weight of water, and by crushing until attaining to an average particle diameter of 2.6 µm using a ball mill.

(Preparation of a thermally- and pressure-sensitive adhesive)

A water-based emulsion of an acrylic-based polymer (2-ethylhexylacrylate-styrene-acrylic acid copolymer having a glass transition temperature of 5°C) which is a thermoplastic resin, a water-based emulsion of a terpene-phenol resin which is a tackifier, and water were added to the water dispersion liquid of resorcinolbis[di(2,6-dimethylphenyl)phosphate] prepared hereinabove, followed by agitating until attaining to a uniform liquid to obtain a thermally- and pressure-sensitive adhesive having a solid content of 50% by weight. Formulating ratio herein is 26 parts by weight of the thermoplastic resin (the acrylic-based polymer) and 17 parts by weight of the tackifier (the terpene phenol resin) based on 100 parts by weight of the solid plasticizer {resorcinolbis[di(2,6-dimethylphenyl)phosphate]}.

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 40°C for 2 minutes to obtain a thermally- and pressure-sensitive adhesive sheet.

Comparative Example B1

(Preparation of a water dispersion liquid of a solid plasticizer)

A water dispersion liquid of dicyclohexylphthalate was prepared by mixing 100 parts by weight of dicyclohexylphthalate (a melting point of 65°C) which is a solid plasticizer, 15 parts by weight of an anionic surface active agent (a polycarboxylic ammonium salt) which is a dispersant, and 80 parts by weight of water, and by crushing until attaining to an average particle diameter of 2.2 µm using a ball mill.

(Preparation of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based emulsion of a terpene resin which is a tackifier, and water were added to the water dispersion liquid of dicyclohexylphthalate prepared hereinabove, followed by agitating until attaining to a uniform liquid to obtain a thermally and pressure-sensitive adhesive having a solid content of 50% by weight. Formulating ratio herein is 26 parts by weight of the thermoplastic resin (the acrylic-based polymer) and 17 parts by weight of the tackifier (the terpene resin) based on 100 parts by weight of the solid plasticizer (dicyclohexylphthalate).

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a PET film having the thickness of 25 µm which is treated by a corona discharge using a barcoater so that a coating amount after drying becomes 12 g/$m^2$, followed by drying at 40°C for 2 minutes to obtain a thermally- and pressure-sensitive adhesive sheet.

〈Performance test〉

(Adhesive strength)

The thermally- and pressure-sensitive adhesive sheet obtained by coating on the PET film was cut into the size of width of 25 mm and length of 125 mm to prepare test pieces. The test pieces were heated at 140°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH for 1 day, and then an adhesive strength was measured at a tensile speed of 300 mm/minute and a peeling angle of 180° using a tensile tester (Tensilon UCT-5T manufactured by Orientech, Ltd.).

Results are shown in Table 2.

(Blocking resistance)

4 layers of the thermally- and pressure-sensitive adhesive sheet obtained by coating on a single side-treated art paper were laminated so that a gloss surface (surface) of the single side-treated art paper was put into contact with another surface (back surface) on which the thermally- and pressure-sensitive adhesive is coated, at the loading the weight of 500 gf/$cm^2$ and an atmosphere of 55°C for 24 hours, followed by evaluating a blocking resistance according to the following standards. Results are shown in Table 2.

5: It was peeled without a peeling resistance.

4: It was peeled while slightly sounding when being peeled.

3: It was peeled while continuously sounding when being peeled.

2: Fibers of the paper were partially left on a pressure-sensitive adhesive layer when being peeled.

1: Paper was broken by blocking.

Table 2

| | Adhesive strength(gf/25 mm) | Blocking resistance |
|---|---|---|
| Example B1 | 1250 | 5 |
| Example B2 | 950 | 5 |
| Comparative Example B1 | 650 | 1 |

From the results of the Table 2, it is confirmed that the thermally- and pressure-sensitive adhesive sheets in the Example B1 and Example B2 are more excellent in adhesive strength and blocking resistance compared to the pressure-sensitive adhesive sheets in the Comparative Example B1.

Example C1

(Preparation of a water dispersion liquid of a solid plasticizer)

A water dispersion liquid of trimethylhydroquinone diacetate was obtained by mixing 100 parts by weight of trimethylhydroquinone diacetate (a melting point: 109°C) which is a solid plasticizer, 15 parts by weight of an anionic surface active agent (a polycarboxylic ammonium salt) which is a dispersant, and 80 parts by weight of water, and then by crushing until attaining to an average particle diameter of 2.2 µm using a ball mill.

(Preparation of a thermally- and pressure-sensitive adhesive)

A water-based emulsion of an acrylic-based polymer (2-ethylhexylacrylate-methylmethacrylate-acrylic acid copolymer having a glass transition temperature of 5°C) which is a thermoplastic resin, a water-based emulsion of a terpene resin which is a tackifier, and water were added to the water dispersion liquid of trimethylhydroquinone diacetate prepared hereinabove, followed by agitating until attaining to a uniform liquid to obtain a thermally- and pressure-sensitive adhesive having a solid content of 50% by weight. Formulating ratio herein is 26 parts by weight of the thermoplastic resin (the acrylic-based polymer) and 17 parts by weight of the tackifier (the terpene resin) based on 100 parts by weight of the solid plasticizer (trimethylhydroquinone diacetate).

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a polyethylene terephthalate film (hereinafter, occasionally referred merely as "PET film") having the thickness of 25 µm which is treated by a corona discharge using a barcoater so that a coating amount after drying becomes 12 g/$m^2$, followed by drying at 40°C for 2 minutes to obtain a thermally- and pressure-sensitive adhesive sheet.

Example C2

(Preparation of 3,4,5-trimethylcatechol diacetate)

A 160 ml-flask was charged with 10 g of Amberlist 15 (manufactured by Organo, Ltd.) which is a strong acidic ion-exchange resin, 30 g ot ketoisophorone, 46.4 g of acetyl chloride, and 160 ml of 1,2-dichloroethane, followed by allowing to react at 85°C for 6 hours. Reaction mixture was analyzed by gas chromatography and, ketoisophorone which is a raw material was completely consumed, and 3,4,5-trimethylcatechol diacetate was produced in a yield of 65%. The reaction mixture was filtered, and filtrate was concentrated. Residual product concentrated was recrystallized from a mixed solvent of ethyl acetate/hexane (volume ratio of 1/4) to obtain a white acicular crystal of 3,4,5-trimethylcatechol diacetate (a melting point: 120°C) (a yield: 36%).

$_{13}$C-NMR ($CDCl_3$) δ: 168.5, 168.2, 139.7, 138.9, 134.6, 133.8, 130.1, 121.5, 20.4, 20.3, 20.1, 15.6, 13.2

MS ($EI^+$) m/z: 236 ($M^+$), 194, 152, 137

IR ($cm^{-1}$): 893, 1045, 1213, 1311, 1375, 1479, 1701.

(Preparation of a water dispersion liquid of a solid plasticizer)

There were mixed 100 parts by weight of the above-described 3,4,5-trimethylcatechol diacetate which is a solid plasticizer, 15 parts by weight of an anionic surface active agent (a polycarboxylic ammonium salt) which is a dispersant, and 80 parts by weight of water, and then by crushing until attaining to an average particle diameter of 2.0 μm using a ball mill to obtain a water dispersion liquid of 3,4,5-trimethylcatechol diacetate. It is to be noted that an average particle diameter of the solid plasticizer was measured by a laser-diffraction type particle size distribution meter (LA-500 manufactured by Horiba Seisakusyo, Ltd.), and it is described by a median diameter.

(Preparation of a thermally- and pressure-sensitive adhesive)

A water-based emulsion of an acrylic-based polymer (2-ethylhexylacrylate-styrene-acrylic acid copolymer having a glass transition temperature Tg of 5°C) which is a thermoplastic resin, a water-based emulsion of a terpene-phenol resin which is a tackifier, and water were added to the water dispersion liquid of 3,4,5-trimethylcatechol diacetate prepared hereinabove, followed by agitating until attaining to a uniform liquid to obtain a thermally- and pressure-sensitive adhesive having a solid content of 50% by weight. Formulating ratio herein is 26 parts by weight of the thermoplastic resin (the acrylic-based polymer) and 17 parts by weight of the tackifier (the terpene-phenol resin) based on 100 parts by weight of the solid plasticizer (3,4,5-trimethylcatechol diacetate).

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a PET film having the thickness of 25 μm which is treated by a corona discharge using a barcoater so that a coating amount after drying becomes 12 g/$m^2$, followed by drying at 40°C for 2 minutes to obtain a thermally- and pressure-sensitive adhesive sheet.

Comparative Example C1

(Preparation of a water dispersion liquid of a solid plasticizer)

A water dispersion liquid of dicyclohexylphthalate was obtained by mixing 100 parts by weight of dicyclohexylphthalate (a melting point of 65°C) which is a solid plasticizer, 15 parts by weight of an anionic surface active agent (a polycarboxylic ammonium salt) which is a dispersant, and 80 parts by weight of water, and then by crushing until attaining to an average particle diameter of 2.2 μm using a ball mill.

(Preparation of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based emulsion of a terpene resin which is a tackifier, and water were added to the water dispersion liquid of dicyclohexylphthalate prepared hereinabove, followed by agitating until attaining to a uniform liquid to obtain a thermally-and pressure-sensitive adhesive having a solid content of 50% by weight. Formulating ratio herein is 26 parts by weight of the thermoplastic resin (the acrylic-based polymer) and 17 parts by weight of the tackifier (the terpene resin) based on 100 parts by weight of the solid plasticizer (dicyclohexylphthalate).

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a PET film having the thickness of 25 μm which is treated by a corona discharge using a barcoater so that a coating amount after drying becomes 12 g/$m^2$, followed by drying at 40°C for 2 minutes to obtain a thermally- and pressure-sensitive adhesive sheet.

⟨Performance test⟩

(Adhesive strength)

The thermally- and pressure-sensitive adhesive sheet obtained by coating on the PET film was cut into the size of width of 25 mm and length of 125 mm to prepare test pieces. The test pieces were heated at 150°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH for 1 day, and then an adhesive strength was measured at a tensile speed of 300 mm/minute and peeling angle of 180° using a tensile tester (Tensilon UCT-5T manufactured by Orientech, Ltd.).
Results are shown in Table 3.

(Blocking resistance)

4 layers of the thermally- and pressure-sensitive adhesive sheets obtained by coating on a single side-treated art paper were laminated so that a gloss surface (surface) of the single side-treated art paper was brought into contact with another surface (back surface) on which the thermally- and pressure-sensitive adhesive is coated, at the loading the weight of 500 gf/$cm^2$ and an atmosphere of 55°C for 24 hours, followed by evaluating a blocking resistance according to the following standards. Results are shown in Table 3.

5: It was peeled without a peeling resistance.

4: It was peeled while slightly sounding when being peeled.

3: It was peeled while continuously sounding when being peeled.

2: Fibers of the paper were partially left on a pressure-sensitive adhesive layer when being peeled.

1: Paper was broken by blocking.

Table 3

| | Adhesive strength(gf/25 mm) | Blocking resistance |
|---|---|---|
| Example C1 | 1180 | 5 |
| Example C2 | 1050 | 5 |
| Comparative ExampleC1 | 650 | 1 |

From the results of the Table 3, it is confirmed that the thermally- and pressure-sensitive adhesive sheets in the Examples C1 and C2 are more excellent in adhesive strength and blocking resistance compared to the pressure-sensitive adhesive sheets in the Comparative Example C1.

Preparation Example D1

(Preparation of a water dispersion liquid D1 of a solid plasticizer)

There were mixed 100 parts by weight of bis(cis-3,3,5-trimethylcyclohexyl)phthalate (a melting point of 93°C) and 15 parts by weight of an anionic surface active agent (an ammonium salt of a polycarboxylic acid) as a dispersant, and 80 parts by weight of water, and those were crushed using a ball mill until attaining to an average particle diameter of 2.2 μm to obtain a water dispersion liquid (a water dispersion liquid D1 of a solid plasticizer) of bis(cis-3,3,5-trimethylcyclohexyl)phthalate.

Preparation Example D2

(Preparation of a water dispersion liquid D2 of a solid plasticizer)

There were mixed 100 parts by weight of resorcinol bis[di(2,6-dimethylphenyl)phosphate] (a melting point: 95°C) and 15 parts by weight of an anionic surface active agent (an ammonium salt of a polycarboxylic acid) as a dispersant, and 80 parts by weight of water, and those were crushed using a ball mill until attaining to an average particle diameter of 2.6 μm to obtain a water dispersion liquid (a water dispersion liquid D2 of a solid plasticizer) of resorcinol bis[di(2,6-dimethylphenyl)phosphate].

Preparation Example D3

(Preparation of a water dispersion liquid D3 of a solid plasticizer)

There were mixed 100 parts by weight of trimethylhydroquinone diacetate (a melting point: 109°C) and 15 parts by weight of an anionic surface active agent (an ammonium salt of a polycarboxylic acid) as a dispersant, and 80 parts by weight of water, and those were crushed using a ball mill until attaining to an average particle diameter of 2.2 μm to obtain a water dispersion liquid (a water dispersion liquid D3 of a solid plasticizer) of trimethylhydroquinone diacetate.

Preparation Example D4

(Preparation of a water dispersion liquid D4 of a solid plasticizer)

There were mixed 100 parts by weight of dicyclohexylphthalate (a melting point: 65°C) and 15 parts by weight of an anionic surface active agent (an ammonium salt of a polycarboxylic acid) as a dispersant, and 80 parts by weight of water, and those were crushed using a ball mill until attaining to an average particle diameter of 2.2 μm to obtain a water dispersion liquid (a water dispersion liquid D4 of a solid plasticizer) of dicyclohexylphthalate.

Example D1

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of bis(cis-3,3,5-trimethylcyclohexyl)phthalate and resorcinol bis[di(2,6-dimethylphenyl)phosphate] which are the solid plasticizers D1 and D2 prepared hereinabove in solid content ratio of 50:50, followed by agitating until attaining to a uniform liquid to obtain a thermally- and pressure-sensitive adhesive having a solid content of 47% by weight. Formulating ratio herein is 17 parts by weight of the thermoplastic resin (the acrylic-based polymer) and 26 parts by weight of the tackifier (the terpene resin) based on 100 parts by weight of the solid plasticizer.

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a polyethyleneterephthalate film (hereinafter, occasionally referred as a merely "PET film") having the thickness of 25 μm which is treated by a corona discharge using a barcoater so that a coating amount after drying becomes 12 g/$m^2$, followed by drying at 40°C for 2 minutes to

obtain a thermally- and pressure-sensitive adhesive sheet.

Example D2

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of bis(cis-3,3,5-trimethylcyclohexyl)phthalate, resorcinol bis[di(2,6-dimethylphenyl)phosphate], and trimethylhydroquinone diacetate which are the solid plasticizers D1, D2, and D3 prepared hereinabove in solid content ratio of 35:35:30, followed by agitating until attaining to a uniform liquid to obtain a thermally-and pressure-sensitive adhesive having a solid content of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer.

(Preparation of a thermally- and pressure-sensitive adhesive sheet)

The thermally- and pressure-sensitive adhesive prepared hereinabove was coated on a surface (back surface) of a single side-treated art paper having the density of 84.9 $g/m^2$ and a PET film having the thickness of 25 μm which is treated by a corona discharge using a barcoater so that a coating amount after drying becomes 12 $g/m^2$, followed by drying at 40°C for 2 minutes to obtain a thermally- and pressure-sensitive adhesive sheet.

Example D3

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of bis(cis-3,3,5-trimethylcyclohexyl)phthalate, resorcinol bis[di(2,6-dimethylphenyl)phosphate], trimethylhydroquinone diacetate, and dicyclohexylphthalate which are the solid plasticizers D1, D2, D3, and D4 prepared hereinabove in solid content ratio of 30:30:30:10, followed by agitating until attaining to a uniform liquid to obtain a thermally- and pressure-sensitive adhesive having a solid content of 45% by weight. Formulating ratio herein is 17 parts by weight of the thermoplastic resin (the acrylic-based polymer) and 26 parts by weight of the tackifier (the terpene resin) based on 100 parts by weight of the solid plasticizer.

(Preparation of a thermally- and pressure-sensitive adhesive sheet)

The thermally- and pressure-sensitive adhesive prepared hereinabove was coated on a surface (back surface) of a single side-treated art paper having the density of 84.9 $g/m^2$ and a PET film having the thickness of 25 μm which is treated by a corona discharge using a barcoater so that a coating amount after drying becomes 12 $g/m^2$, followed by drying at 40°C for 2 minutes to obtain a thermally-and pressure-sensitive adhesive sheet.

Comparative Example D1

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid (a water-based emulsion of the solid plasticizer D4) of dicyclohexylphthalate prepared hereinabove, followed by agitating until attaining to a uniform liquid to obtain a thermally- and pressure-sensitive adhesive having a solid content of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer (dicyclohexylphthalate).

(Preparation of a thermally- and pressure-sensitive adhesive sheet)

The thermally- and pressure-sensitive adhesive prepared hereinabove was coated on a surface (back surface) of a single side-treated art paper having the density of 84.9 $g/m^2$ and a PET film having the thickness of 25 μm which

is treated by a corona discharge using a barcoater so that a coating amount after drying becomes 12 g/m$^2$, followed by drying at 40°C for 2 minutes to obtain a thermally- and pressure-sensitive adhesive sheet.

〈Performance test〉

(Adhesive strength, transparency)

The thermally- and pressure-sensitive adhesive sheet obtained by coating on the PET film was cut into the size of width of 25 mm and length of 125 mm to prepare test pieces. The test pieces were heated at 140°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH, and then an adhesive strength was measured at a tensile speed of 300 mm/minute and peeling angle of 180° using a tensile tester (Tensilon UCT-5T manufactured by Orientech, Ltd.) after 1 day, 1 month, and 3 months. Further, transparency was visually confirmed. Results are shown in Table 4.

(Blocking resistance)

4 layers of the thermally- and pressure-sensitive adhesive sheets obtained by coating on a single side-treated art paper were laminated so that a gloss surface (surface) of the single side-treated art paper was brought into contact with another surface (back surface) on which the thermally- and pressure-sensitive adhesive is coated, at the loading the weight of 500 gf/cm$^2$ and an atmosphere of 40°C for 24 hours, followed by evaluating a blocking resistance according to the following standards. Results are shown in Table 4.

5: It was peeled without a peeling resistance.
4: It was peeled while slightly sounding when being peeled.
3: It was peeled while continuously sounding when being peeled.
2: Fibers of the paper were partially left on a pressure-sensitive adhesive layer when being peeled.
1: Paper was broken by blocking.

Table 4

| | Adhesive strength (gf/25m) | | | Transparency | | | Blocking resistance |
|---|---|---|---|---|---|---|---|
| | After | | | After | | | |
| | 1-day | 1-month | 3 -months | 1-day | 1-month | 3 -months | |
| Example D1 | 1450 | 1370 | 1350 | Trans. | Trans. | Trans. | 5 |
| Example D2 | 1520 | 1480 | 1400 | Trans. | Trans. | Trans. | 5 |
| Example D3 | 1380 | 1300 | 1270 | Trans. | Trans. | Trans | 5 |
| Comparative Example D1 | 960 | 0 | 0 | Trans. | Opaque | Opaque | 3 |

From the results of the Table 4, it is confirmed that the thermally- and pressure-sensitive adhesive sheet in the Comparative Example D1 changed to "opaque" and adhesive strength ended to become zero after 1-month because of crystallization of the solid plasticizer. On the other hand, the thermally- and pressure-sensitive adhesive sheets in the Examples D1-D3 maintain a high transparency and adhesive strength even after 3-months and, further, those are excellent in blocking resistance.

Preparation Example E1

(Preparation of a water dispersion liquid E1 of a solid plasticizer)

There were mixed 100 parts by weight of resorcinol bis [di(2,6-dimethylphenyl)phosphate] (a melting point: 95°C) which is a solid plasticizer, 15 parts by weight of an anionic surface active agent (an ammonium salt of a polycarboxylic acid) which is a dispersant, and 80 parts by weight of water, and those were crushed using a ball mill until attaining to an average particle diameter of 2.6 μm to obtain a water dispersion liquid (a water dispersion liquid E1 of a solid plasticizer) of resorcinol bis[di(2,6-dimethylphenyl)phosphate].

Preparation Example E2

(Preparation of a water dispersion liquid E2 of a solid plasticizer)

There were mixed 100 parts by weight of trimethylhydroquinone diacetate (a melting point: 109°C) which is a solid plasticizer, 15 parts by weight of an anionic surface active agent (an ammonium salt of a polycarboxylic acid) which is a dispersant, and 80 parts by weight of water, and those were crushed using a ball mill until attaining to an average particle diameter of 2.2 μm to obtain a water dispersion liquid (a water dispersion liquid E2 of a solid plasticizer) of trimethylhydroquinone diacetate.

Preparation Example E3

(Preparation of a water dispersion liquid E3 of a solid plasticizer)

There were mixed 100 parts by weight of dicyclohexhylphthalate (a melting point: 65°C) which is a solid plasticizer, 15 parts by weight of an anionic surface active agent (an ammonium salt of a polycarboxylic acid) which is a dispersant, and 80 parts by weight of water, and those were crushed using a ball mill until attaining to an average particle diameter of 2.2 μm to obtain a water dispersion liquid (a water dispersion liquid E3 of a solid plasticizer) of dicyclohexhylphthalate.

Example E1

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of resorcinol bis[di(2,6-dimethylphenyl)phosphate] and trimethylhydroquinone diacetate which are the solid plasticizers E1 and E2 prepared hereinabove in solid content weight ratio of 50:50, followed by agitating until attaining to a uniform liquid to obtain a thermally- and pressure-sensitive adhesive having a solid content of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer.

(Preparation of a thermally- and pressure-sensitive adhesive sheet)

The thermally- and pressure-sensitive adhesive prepared hereinabove was coated on a surface (back surface) of a single side-treated art paper having the density of 84.9 g/m$^2$ and a polyethylene terephthalate film (hereinafter, occasionally referred to as a merely "PET film") having the thickness of 25 μm which is treated by a corona discharge using a barcoater so that a coating amount after drying becomes 12 g/m$^2$, followed by drying at 40°C for 2 minutes to obtain a thermally- and pressure-sensitive adhesive sheet.

Example E2

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of resorcinol bis[di(2,6-dimethylphenyl)phosphate], trimethylhydroquinone diacetate, and dicyclohexylphthalate which are the solid plasticizers E1-E3 prepared hereinabove in solid content weight ratio of 45:45:10, followed by agitating until attaining to a uniform liquid to obtain a thermally- and pressure-sensitive adhesive having a solid content of 48% by weight. Formulating ratio herein is 17 parts by weight of the thermoplastic resin (the acrylic-based polymer) and 26 parts by weight of the tackifier (the terpene resin) based on 100 parts by weight of the solid plasticizer.

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a PET film having the thickness of 25 μm which is treated by a corona discharge using a barcoater so that a coating amount after drying becomes 12 g/$m^2$, followed by drying at 40°C for 2 minutes to obtain a thermally- and pressure-sensitive adhesive sheet.

Comparative Example E1

(Preparation of a water dispersion liquid of a solid plasticizer)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of dicyclohexylphthalate (the solid plasticizers E3) prepared hereinabove, followed by agitating until attaining to a uniform liquid to obtain a thermally- and pressure-sensitive adhesive having a solid content of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer (dicyclohexylphthalate).

(Preparation of a thermally- and pressure-sensitive adhesive sheet)

The thermally- and pressure-sensitive adhesive prepared hereinabove was coated on a surface (back surface) of a single side-treated art paper having the density of 84.9 g/$m^2$ and a PET film having the thickness of 25 μm which is treated by a corona discharge using a barcoater so that a coating amount after drying becomes 12 g/$m^2$, followed by drying at 40°C for 2 minutes to obtain a thermally- and pressure-sensitive adhesive sheet.

Performance test

(Adhesive strength, transparency)

The thermally- and pressure-sensitive adhesive sheet obtained by coating on the PET film was cut into the size of width of 25 mm and length of 125 mm to prepare test pieces. The test pieces were heated at 140°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH, and then an adhesive strength was measured at a tensile speed of 300 mm/minute and peeling angle of 180° using a tensile tester (Tensilon UCT-5T manufactured by Orientech, Ltd.) after 1 day, 1 month, and 3 months. Further, transparency was visually confirmed. Results are shown in Table 5.

(Blocking resistance)

4 layers of the thermally- and pressure-sensitive adhesive sheets obtained by coating on the single side-treated art paper were laminated so that a glossy surface (surface) of the single side-treated art paper was brought into contact with another surface (back surface) on which the thermally- and pressure-sensitive adhesive is coated, at an atmosphere of 40°C and the loading weight of 500 gf/$cm^2$ for 24 hours, followed by evaluating a blocking resistance according to the following standards. Results are shown in Table 5.

5: It was peeled without a peeling resistance.

4: It was peeled while slightly sounding when being peeled.

3: It was peeled while continuously sounding when being peeled.

2: Fibers of the paper were partially left on the pressure-sensitive adhesive layer when being peeled.

1: Paper was broken by blocking.

Table 5

| | Adhesive strength (gf/25 mm) | | | Transparency | | | Blocking resistance |
|---|---|---|---|---|---|---|---|
| | After | | | After | | | |
| | 1-day | 1-month | 3-months | 1-day | 1-month | 3-months | |
| Example E1 | 1260 | 1150 | 1130 | Trans. | Trans. | Trans. | 5 |
| Example E2 | 1180 | 1070 | 1050 | Trans. | Trans. | Trans. | 5 |
| Comparative Exampe E1 | 960 | 0 | 0 | Trans. | Opaque | Opaque | 3 |

In the Table 5, Trans. means "transparent".

From the results of the Table 5, it is confirmed that the thermally- and pressure-sensitive adhesive sheet in the Comparative Example E1 changed to "opaque" and adhesive strength ended to become zero after 1-month because of crystallization of the solid plasticizer, on the other hand, the thermally- and pressure-sensitive adhesive sheets in the Examples E1-E2 maintain a high transparency and adhesive strength even after 3-months and, further, those are excellent in blocking resistance.

Example F1

(Preparation of a water dispersion liquid of a solid plasticizer)

There were mixed 100 parts by weight of trimethylhydroquinone diacetate (a melting point: 109°C) which is a solid plasticizer, 15 parts by weight of an anionic surface active agent (an ammonium salt of a polycarboxylic acid) which is a dispersant, and 80 parts by weight of water, and those were crushed using a ball mill until attaining to an average particle diameter of 2.2 µm to obtain a water dispersion liquid of trimethylhydroquinone diacetate.

On the other hand, there were mixed 100 parts by weight of dicyclohexylphthalate (a melting point: 65°C) which is a solid plasticizer, 15 parts by weight of an anionic surface active agent (an ammonium salt of a polycarboxylic acid) which is a dispersant, and 80 parts by weight of water, and those were crushed using a ball mill until attaining to an average particle diameter of 2.2 µm to obtain a water dispersion liquid of dicyclohexylphthalate.

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of trimethylhydroquinone diacetate and dicyclohexylphthalate which are two kinds of the solid plasticizers prepared hereinabove in solid content weight ratio of 50:50, followed by agitating until attaining to a uniform liquid to obtain a thermally- and pressure-sensitive adhesive having a solid content of 50% by weight.

Formulating ratio herein is 17 parts by weight of the thermoplastic resin (the acrylic-based polymer) and 26 parts by weight of the tackifier (the terpene resin) based on 100 parts by weight of the solid plasticizer.

(Preparation of a thermally- and pressure-sensitive adhesive sheet)

The thermally- and pressure-sensitive adhesive prepared hereinabove was coated on a surface (back surface) of a single side-treated art paper having the density of 84.9 g/m$^2$ and a polyethylene terephthalate film (hereinafter, referred to a merely "PET film" having the thickness of 25 µm which is treated by a corona discharge using a barcoater so that a coating amount after drying becomes 12 g/m$^2$, followed by drying at 40°C for 2 minutes to obtain a thermally- and pressure-sensitive adhesive sheet.

Comparative Example F1

(Preparation of a thermally- and pressure-sensitive adhesive)

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of dicyclohexylphthalate prepared in the Example F1, followed by agitating until attaining to a uniform liquid to obtain a thermally- and pressure-sensitive adhesive having a solid content of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer (dicyclohexylphthalate).

(Preparation of a thermally- and pressure-sensitive adhesive sheet)

The thermally- and pressure-sensitive adhesive prepared hereinabove was coated on a surface (back surface) of a single side-treated art paper having the density of 84.9 g/m$^2$ and a PET film having the thickness of 25 μm which is treated by a corona discharge using a barcoater so that a coating amount after drying becomes 12 g/m$^2$, followed by drying at 40°C for 2 minutes to obtain a thermally- and pressure-sensitive adhesive sheet.

Performance test

(Adhesive strength, transparency)

The thermally- and pressure-sensitive adhesive sheet obtained by coating on the PET film was cut into the size of width of 25 mm and length of 125 mm to prepare test pieces. The test pieces were heated at 140°C for 30 seconds to produce tackiness, and placed on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH, and then, an adhesive strength was measured at a tensile speed of 300 mm/minute and peeling angle of 180° using a tensile tester (Tensilon UCT-5T manufactured by Orientech, Ltd.) after 1 day, 1 month, and 3 months. Further, transparency was visually confirmed. Results are shown in Table 6.

(Blocking resistance)

4 layers of the thermally- and pressure-sensitive adhesive sheets obtained by coating on the single side-treated art paper were laminated so that a glossy surface (surface) of the single side-treated art paper was brought into contact with another surface (back surface) on which the thermally- and pressure-sensitive adhesive is coated, at the loading the weight of 500 gf/cm$^2$ and an atmosphere of 40°C for 24 hours, followed by evaluating a blocking resistance according to the following standards. Results are shown in Table 6.

5: It was peeled without a peeling resistance.

4: It was peeled while slightly sounding when being peeled.

3: It was peeled while continuously sounding when being peeled.

2: Fibers of the paper were partially left on the pressure-sensitive adhesive layer when being peeled.

1: Paper was broken by blocking.

Table 6

| | Adhesive strength (gf/25 mm) | | | Transparency | | | Blocking resistance |
|---|---|---|---|---|---|---|---|
| | After | | | After | | | |
| | 1 -day | 1-month | 3-months | 1-day | 1-month | 3-months | |
| Example F1 | 1160 | 1050 | 1030 | Trans. | Trans. | Trans. | 5 |
| Comparative Example F1 | 960 | 0 | 0 | Trans. | Opaque. | Opaque. | 3 |

In the Table 6, Trans. means "transparent".

From the results of the Table 6, it is confirmed that the thermally- and pressure-sensitive adhesive sheet in the Comparative Example F1 changed to "opaque" and adhesive strength ended to become zero after 1-month because of crystallization of the solid plasticizer, on the other hand, the thermally- and pressure-sensitive adhesive sheets in the Example F1 maintain a high transparency and adhesive strength even after 3-months and, further, those are excellent in blocking resistance.

Example G1

(Synthesis of a thermoplastic resin)

A 1000-ml reaction vessel equipped with an agitator, a reflux condenser, a dropping funnel, a tube for introducing nitrogen, and a thermometer was charged with 20% by weight of a mixture composed of 360 parts of a deionized water, 17 parts of a surface active agent (Emulgen 935 manufactured by Kao, Ltd.), 342 parts of a methylmethacrylate (MMA), 101 parts of a n-butylacrylate (BA), 39 parts of an epoxy compound (Epikote 828 manufactured by Yuka-Shell Epoxy, Ltd.), followed by heating to 70°C while agitating. Residual 80% of the mixture and 2.8 parts of potassium persulphate were added dropwise into the reaction vessel over approximately 2 hours.

Reaction was further continued for 2 hours to terminate polymerization reaction and to obtain an emulsion.

A 1000-ml reaction vessel equipped with an agitator, a reflux condenser, a dropping funnel, a tube for introducing nitrogen, and a thermometer was charged with 140 parts of the emulsion and 266 parts of a deionized water, followed by heating to 70°C while agitating. There were added dropwise a mixture composed of 26 parts of BA, 21 parts of MMA, 2.5 parts of diethylaminoethylmethacrylate, and 1.5 part of acrylic acid, and 0.5 part of potassium persulphate over 2 hours into the reaction vessel. Reaction was further continued for 2 hours to terminate polymerization reaction and to obtain an acrylic epoxy-based emulsion (solid content concentration of 30% by weight, pH 4.8, a viscosity of 6 mP • s (30°C)). Ammonia was added to the emulsion to adjust pH to 8.0.

(Preparation of a thermally- and pressure-sensitive adhesive)

There were mixed 100 parts by weight of dicyclohexylphthalate which is a solid plasticizer, 12 parts by weight of an anionic surface active agent which is a dispersant, and 70 parts by weight of water, followed by crushing with a ball mill until attaining to an average particle diameter of 2.2 μm to obtain a water dispersion liquid of dicyclohexylphthalate.

Into the dispersion liquid, there were added a water dispersion liquid of the thermoplastic resin obtained hereinabove, the terpene-based resin which is a tackifier, and water, followed by agitating until attaining to becoming homogeneous to obtain a thermally- and pressure-sensitive adhesive having a solid content of 45% by weight. Formulating ratio herein is 26 parts by weight of the thermoplastic resin and 17 parts by weight of the tackifier based on 100 parts by weight of the solid plasticizer.

(Preparation of a thermally- and pressure-sensitive adhesive sheet)

The thermally- and pressure-sensitive adhesive prepared hereinabove was coated on a polyethylene terephthalate film (hereinafter, occasionally referred to a merely "PET film" having the thickness of 25 μm which is treated by a corona discharge using a barcoater so that a coating amount after drying becomes 12 g/m$^2$, followed by drying at 40°C for 2 minutes to obtain a thermally- and pressure-sensitive adhesive sheet.

Comparative Example G1

(Preparation of a thermally- and pressure-sensitive adhesive)

Into the water dispersion liquid of dicyclohexylphthalate likewise prepared as in the Example G1, there were added a water-based emulsion of an acrylic-based resin (an MMA-BA-acrylic acid copolymer, glass transition temperature (Tg): 25°C), a water-based emulsion of the terpene-based tackifier, and water, followed by agitating until attaining to becoming homogeneous to obtain a thermally- and pressure-sensitive adhesive having a solid content of 47% by weight. Formulating ratio herein is 26 parts by weight of the thermoplastic resin and 17 parts by weight of the tackifier based on 100 parts by weight of the solid plasticizer.

(Preparation of a thermally- and pressure-sensitive adhesive sheet)

The thermally- and pressure-sensitive adhesive prepared hereinabove was coated on a PET film using a barcoater so that a coating amount after drying becomes 12 g/$m^2$, followed by drying at 40°C for 2 minutes to obtain a thermally- and pressure-sensitive adhesive sheet.

Performance test

In the thermally- and pressure-sensitive adhesive sheets obtained in the Example and Comparative Example, properties were evaluated as follows. Results are shown in Table 7.

(Adhesive strength)

The thermally- and pressure-sensitive adhesive sheet was cut into the size of width of 25 mm and length of 125 mm to prepare test pieces. The test pieces were activated at 120°C for 30 seconds, and placed on a glass plate [Micro Slide Glass "White Green Polish" manufactured by Iwaki Glass, Ltd.] and a stainless steel plate, followed by sticking through compressing with a rubber roll by making one round traverse while loading the weight of 2 kg. The test pieces were placed at an atmosphere of 23°C and 50% RH for 1 day, and then, an adhesive strength (gf/25 mm) was measured at a tensile speed of 300 mm/minute and peeling angle of 180° using a tensile tester (Tensilon UCT-5T manufactured by Orientech, Ltd.).

(Holding power)

After two test pieces were activated as well as in the case of the adhesive strength, pressure sensitive adhesive layers in the two test pieces were laminated so that an adhesive portion becomes 25 $mm^2$, and those were stuck each other through compressing with a rubber roll by making one round traverse while loading the weight of 2 kg. After placed at an atmosphere of 23°C and 50% RH for 30 minutes, holding power (minute) was measured according to JIS Z 0237.

(Water resistance)

After the test pieces were activated as well as in the case of the adhesive strength, those were stuck on a glass plate. After placed at an atmosphere of 23°C and 50% RH for 1 day, conditions when immersed in water of 23°C for 2 days were judged according to the following standards.

o: No change was observed.
△: A blister was partially observed in a coating material.
x: A coating material was peeled.

Table 7

| | Adhesive strength (gf/25 m) | | Holding Power | Water resistance |
|---|---|---|---|---|
| | glass | stainless | | |
| Example G1 | 1180 | 1550 | >16 minutes | o |
| Comparative Example G1 | 650 | 800 | 6 minutes | x |

From the Table 7, it is evident that the thermally- and pressure-sensitive adhesive sheet obtained in the Example has an excellent adhesive strength against, particularly, a metal and, moreover, excellent in holding power and water resistance.

Example H1

(Preparation of a water dispersion liquid of a solid plasticizer)

100 parts of dicyclohexylphthalate which is a solid plasticizer, 12 parts of an anionic surface active agent (an ammonium salt of a polycarboxylic acid), and 70 parts of water were mixed, followed by crushing with a ball mill until attaining to an average particle diameter of 2.2 µm to obtain a water dispersion liquid of dicyclohexylphthalate.

(Preparation of a thermoplastic resin emulsion)

2-liter reaction vessel equipped with an agitator, a reflux condenser, a dropping funnel, a tube for introducing nitrogen, and a thermometer was charged with 219 parts of isopropylalcohol (hereinafter, abbreviated to "IPA"), and 0.62 part of azobisisobutylonitrile (hereinafter, abbreviated as "AIBN") was added while agitating to dissolve, followed by heating to 80°C. As copolymerizable components, there were mixed 135.7 parts of methylmethacrylate (MMA), 86.3 parts of n-butylacrylate (BA), 7.4 parts by weight of acrylic acid (AA), and 2.8 parts of 3-methacryloxypropyl trimethoxysilane (A-174 manufactured by Nihon Unicar, Ltd.), followed by adding dropwise into the reaction vessel using the dropping funnel over approximately 4 hours. After the completion of the dropwise addition, 0.25 part of AIBN which is an additional catalyst was dissolved in 25 parts of IPA, and it was added dropwise into the reaction vessel, and reaction was further continued for 2 hours. After the completion of the polymerization reaction, 7.0 parts of 25 wt%-aqueous ammonia was added into the reaction vessel, and 705 parts of water was added dropwise into the reaction vessel over approximately 2 hours while agitating to emulsify. After having emulsified, a desired thermoplastic resin emulsion was obtained by evaporating IPA using a rotary evaporator.

In the emulsion, solid content was 47% by weight, and in the thermoplastic resin (a methylmethacrylate-n-butylacrylate-acrylic acid-3-methacryloxypropyl trimethoxysilane copolymer), a weight average molecular weight (Mw) was 2,500,000, and a glass transition temperature (Tg) was 25°C.

(Preparation of a thermally- and pressure-sensitive adhesive)

Into the water dispersion liquid of the solid plasticizer prepared hereinabove, the water-based emulsion of an acrylic-based resin having a hydrolyzable silyl group prepared hereinabove, a water-based emulsion of a terpene-based tackifier, and water were mixed, followed by agitating until attaining to becoming homogeneous to obtain a thermally- and pressure-sensitive adhesive having a solid content of 52% by weight. Formulating ratio herein is 26 parts of the thermoplastic resin and 17 parts of the tackifier based on 100 parts of the solid plasticizer.

(Preparation of a thermally- and pressure-sensitive adhesive sheet)

The thermally- and pressure-sensitive adhesive prepared hereinabove was coated on a polyethylene terephthalate film (hereinafter, referred as merely "PET film") having the thickness of 25 μm which is treated by a corona discharge using a barcoater so that a coating amount after drying becomes 12 g/$m^2$, followed by drying at 40°C for 2 minutes to obtain a thermally- and pressure-sensitive adhesive sheet.

Example H2

(Preparation of a water dispersion liquid of a solid plasticizer)

There were mixed 100 parts of bis(cis-3,3,5-trimethylcyclohexyl)phthalate (a melting point: 93°C) and 12 parts of an anionic surface active agent (an ammonium salt of a polycarboxylic acid) as a dispersant, and 70 parts of water, and those were crushed using a ball mill until attaining to an average particle diameter of 2.8 μm to obtain a water dispersion liquid of bis(cis-3,3,5-trimethylcyclohexyl)phthalate.

(Preparation of a thermoplastic resin emulsion)

2-liter reaction vessel equipped with an agitator, a reflux condenser, a dropping funnel, a tube for introducing nitrogen, and a thermometer was charged with 219 parts of IPA, and 0.62 part of AIBN was added while agitating to dissolve, followed by heating to 80°C. As copolymerizable components, there were mixed 45.2 parts of methylmethacrylate (MMA), 105.5 parts of n-butylacrylate, 90.4 parts of styrene, 7.4 parts of acrylic acid, and 3.5 parts of 3-methacryloxypropyl methoxy silane (A-174 manufactured by Nihon Unicar, Ltd.), followed by adding dropwise into the reaction vessel using the dropping funnel over approximately 4 hours. After the completion of the dropwise addition, 0.25 part of AIBN which is an additional catalyst was dissolved in 25 parts of IPA, and it was added dropwise into the reaction vessel, and reaction was further continued for 2 hours. After the completion of the polymerization reaction, 7.0 parts of 25 wt%-aqueous ammonia was added into the reaction vessel, and 705 parts of water was added dropwise into the reaction vessel over approximately 2 hours while agitating to prepare an emulsion. After having emulsified, a desired thermoplastic resin emulsion was obtained by evaporating IPA using a rotary evaporator. In the emulsion, solid content was 52% by weight, and in the thermoplastic resin (a methylmethacrylate-n-butylacrylate-styrene-acrylic acid-3-methacryloxypropyl trimethoxysilane copolymer), a weight average molecular weight (Mw) was 2,300,000, and a glass transition temperature (Tg) was 23°C.

(Preparation of a thermally- and pressure-sensitive adhesive)

Into the water dispersion liquid of the solid plasticizer prepared hereinabove, a water-based emulsion of an acrylic-based polymer having a hydrolyzable silyl group prepared hereinabove, a water-based emulsion of a rosin-based tackifier which is a tackifier, and water were mixed, followed by agitating until attaining to becoming homogeneous to obtain a thermally- and pressure-sensitive adhesive having a solid content of 55% by weight. Formulating ratio herein is 26 parts of the thermoplastic resin and 17 parts of the tackifier based on 100 parts of the solid plasticizer.

(Preparation of a thermally- and pressure-sensitive adhesive sheet)

The thermally- and pressure-sensitive adhesive prepared hereinabove was coated on a PET film having the thickness of 25 µm which is treated by a corona discharge using a barcoater so that a coating amount after drying becomes 12 g/m$^2$, followed by drying at 40°C for 2 minutes to obtain a thermally- and pressure-sensitive adhesive sheet.

Comparative Example H1

[Preparation of a thermally- and pressure-sensitive adhesive]

Into the water dispersion liquid of dicyclohexylphthalate likewise prepared as in the Example H1, a water-based emulsion of an acrylic-based resin (a methylmethacrylate-n-butylacrylate-acrylic acid copolymer, a weight average molecular weight (Mw): 220,000, and a glass transition temperature (Tg): 15°C), a water-based emulsion of a terpene-based tackifier which is a tackifier, and water were mixed, followed by agitating until attaining to becoming homogeneous to obtain a thermally- and pressure-sensitive adhesive having a solid content of 52% by weight. Formulating ratio herein is 26 parts of the thermoplastic resin and 17 parts of the tackifier based on 100 parts of the solid plasticizer.

(Preparation of a thermally- and pressure-sensitive adhesive sheet)

The thermally- and pressure-sensitive adhesive prepared hereinabove was coated on a PET film using a barcoater so that a coating amount after drying becomes 12 g/m$^2$, followed by drying at 40°C for 2 minutes to obtain a thermally- and pressure-sensitive adhesive sheet.

Performance test

Properties in the thermally- and pressure-sensitive adhesive sheets obtained in the Examples and Comparative Example were evaluated as follows. Results are shown in Table 8.

(Adhesive strength)

The thermally- and pressure-sensitive adhesive sheet was cut into the size of width of 25 mm and length of 125 mm to prepare test pieces. The test pieces were activated at 120°C for 30 seconds, and placed on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH for 1 day, and then, an adhesive strength (gf/25 mm) was measured at a tensile speed of 300 mm/minute and peeling angle of 180° using a tensile tester (Tensilon UCT-5T manufactured by Orientech, Ltd.).

(Holding power)

After two test pieces were activated as well as in the case of the adhesive strength, pressure sensitive adhesive layers in the two test pieces were laminated so that an adhesive portion becomes 25 mm$^2$, and those were stuck each other through compressing with a rubber roll by making one round traverse while loading the weight of 2 kg. After placed at an atmosphere of 23°C and 50% RH for 30 minutes, holding power (minute) was measured according to JIS Z 0237.

(Water resistance)

After two test pieces were activated as well as in the case of the adhesive strength, those were stuck on a glass

plate. After placed at an atmosphere of 23°C and 50% RH for 1 day, conditions when immersed in water of 23°C for 2 days were judged according to the following standards.

o: No change was observed.

△: A blister was partially measured in a coating material.

x: A coating material was peeled.

Table 8

| | Adhesive strength (gf/25 mm) | Holding Power | Water resistance |
|---|---|---|---|
| Example H1 | 1050 | >16 minutes | o |
| Example H2 | 1130 | >16 minutes | o |
| Comparative Example H1 | 800 | 6.5 minutes | x |

From the Table 8, it is evident that the thermally- and pressure-sensitive adhesive sheets obtained in the Examples are more excellent in adhesive strength, holding power and water resistance compared to the sheet in the Comparative Example.

Example I 1

(Preparation of a water dispersion liquid of a solid plasticizer)

100 parts of dicyclohexylphthalate which is a solid plasticizer, 12 parts of an anionic surface active agent, and 70 parts of water were mixed, followed by crushing with a ball mill until attaining to an average particle diameter of 2.2 μm to obtain a water dispersion liquid of dicyclohexylphthalate.

(Synthesis of a thermoplastic resin)

A 2-liter reaction vessel equipped with an agitator, a reflux condenser, a dropping funnel, a tube for introducing nitrogen, and a thermometer was charged with 35 parts of a deionized water, 0.11 part of α-sulpho-ω-[2-(1-propenyl)-4-nonylphenoxy]polyoxyethylene (n=10) ammonium salt ("Aqualone HS-10" manufactured by Daiichi-Kogyo Seiyaku, Ltd.) which is an emulsifier to be added at an initial period, and 0.33 part of ammonium persulphate (APS) which is a polymerization initiator, followed by raising internal temperature to 80°C. On the other hand, another vessel was charged with 30 parts of a deionized water and 7.9 parts of "Aqualone HS-10" to dissolve while agitating, followed by adding a monomer mixture composed of 38 parts of 2-ethylhexylacrylate (2EHA), 60 parts of styrene (St), and 2 parts of acrylic acid (AA) while agitating for 30 minutes to obtain a monomer premixture.

Contents in the reaction vessel were agitated under a nitrogen stream, the monomer premixture and 5.7 parts of 3.8 wt%-APS aqueous solution were intermittently added to initiate a polymerization, followed by conducting a polymerization reaction for approximately 3 hours. After the completion of the polymerization reaction, agitation was further continued for approximately 1 hour at the same temperature, followed by cooling to 60°C. After that, 2.85 parts of 12 wt%-aqueous solution of t-butylhydroperoxide ("Perbutyl H69" manufactured by Nihon Yushi, Ltd.) which is a polymerization initiator was added twice over every 15 minutes, and 1.375 part of 9 wt%-aqueous solution of a sodium-formaldehyde-sulphoxylate ("Redol C" manufactured by Sumitomo Seika, Ltd.) which is a reducing agent was added four times over every 15 minutes.

After the completion of the addition of the reducing agent, agitation was further continued for approximately 30 minutes at the same temperature, followed by cooling to obtain an emulsion of an acrylic-based copolymer. In the emulsion, solid content concentration was 56% by weight, pH was 2.1, a viscosity was 110 cps (30°C), and an average particle diameter was 0.15 μm. Further, in the acrylic-based copolymer, a weight average molecular weight (Mw) was 200,000, and a glass transition temperature (Tg) was 22°C. It is to be noted that the weight average molecular weight in the acrylic-based copolymer was measured by a gel permeation chromatography (GPC).

(Preparation of a thermally- and pressure-sensitive adhesive)

Into the water dispersion liquid of dicyclohexylphthalate prepared hereinabove, the water-based emulsion of the acrylic-based polymer obtained hereinabove which is a thermoplastic resin, a water-based emulsion of a terpene-based tackifier which is a tackifier, and water were mixed, followed by agitating until attaining to becoming homogeneous to obtain a thermally- and pressure-sensitive adhesive having a solid content of 47% by weight. Formulating ratio herein is 26 parts of the thermoplastic resin and 17 parts of the tackifier based on 100 parts of the solid plasticizer.

(Preparation of a thermally- and pressure-sensitive adhesive sheet)

The thermally- and pressure-sensitive adhesive prepared hereinabove was coated on a polyethylene terephthalate film (hereinafter, occasionally referred as merely a "PET film") having the thickness of 25 µm which is treated by a corona discharge so that a coating amount after drying becomes 12 $g/m^2$ using a barcoater, followed by drying at 40°C for 2 minutes to obtain a thermally- and pressure-sensitive adhesive sheet.

Comparative Example I 1

(Preparation of a thermoplastic resin)

An acrylic-based copolymer emulsion was likewise prepared as in the Example I 1 except that a temperature in polymerization was changed to 90°C, and concentration was changed to 10% by weight (addition amount of the APS aqueous solution: 5.7 parts) in an APS aqueous solution to be intermittently added together with a monomer premixture in polymerization. As a result, in the acrylic-based copolymer obtained, a weight average molecular weight (Mw) was 50,000, and a glass transition temperature (Tg) was 23°C.

(Preparation of a thermally- and pressure-sensitive adhesive)

Into the water dispersion liquid of dicyclohexylphthalate likewise prepared as in the Example I 1, the water-based emulsion of an acrylic-based copolymer obtained hereinabove which is a thermoplastic resin, a water-based emulsion of a terpene-based tackifier which is a tackifier, and water were mixed, followed by agitating until attaining to becoming homogeneous to obtain a thermally- and pressure-sensitive adhesive having a solid content of 47% by weight. Formulating ratio herein is 26 parts of the thermoplastic resin and 17 parts of the tackifier based on 100 parts of the solid plasticizer.

(Preparation of a thermally- and pressure-sensitive adhesive sheet)

The thermally- and pressure-sensitive adhesive prepared hereinabove was coated on a PET film so that a coating amount after drying becomes 12 $g/m^2$ using a barcoater, followed by drying at 40°C for 2 minutes to obtain a thermally- and pressure-sensitive adhesive sheet.

Comparative Example I 2

(Preparation of a thermoplastic resin)

An acrylic-based copolymer emulsion was likewise prepared as in the Example I 1 except that a temperature in polymerization was changed to 70°C, and concentration was changed to 2% by weight (addition amount of the APS aqueous solution: 5.7 parts) in an APS aqueous solution to be intermittently added together with a monomer premixture in polymerization. As a result, in the acrylic-based copolymer obtained, a weight average molecular weight (Mw) was 700,000, and a glass transition temperature (Tg) was 19°C.

(Preparation of a thermally- and pressure-sensitive adhesive)

Into the water dispersion liquid of dicyclohexylphthalate likewise prepared as in the Example I 1, the water-based emulsion of an acrylic-based polymer obtained hereinabove which is a thermoplastic resin, a water-based emulsion of a terpene-based tackifier which is a tackifier, and water were mixed, followed by agitating until attaining to becoming homogeneous to obtain a thermally- and pressure-sensitive adhesive having a solid content concentration of 47% by weight. Formulating ratio herein is 26 parts of the thermoplastic resin and 17 parts of the tackifier based on 100 parts of the solid plasticizer.

(Preparation of a thermally- and pressure-sensitive adhesive sheet)

The thermally- and pressure-sensitive adhesive prepared hereinabove was coated on a PET film so that a coating amount after drying becomes 12 g/m$^2$ using a barcoater, followed by drying at 40°C for 2 minutes to obtain a thermally- and pressure-sensitive adhesive sheet.

Performance test

Properties in the thermally- and pressure-sensitive adhesive sheets obtained in the Example and Comparative Examples were evaluated as follows. Results are shown in Table 9.

(Adhesive strength)

The thermally- and pressure-sensitive adhesive sheet was cut into the size of width of 25 mm and length of 125 mm to prepare test pieces. The test pieces were activated at 120°C for 30 seconds, and placed on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH for 1 day or 6 months, and then, an adhesive strength (gf/25 mm) was measured at a tensile speed of 300 mm/minute and peeling angle of 180° using a tensile tester (Tensilon UCT-5T manufactured by Orientech, Ltd.).

(Peeling test)

The thermally- and pressure-sensitive adhesive sheet was stuck on a glass plate as well as in the above-described adhesive strength, and test pieces were peeled by hand after placing for 1 day or 6 months. Evaluations were judged according to the following standards.

o: Peeled without remaining the thermally- and pressure-sensitive adhesive on surface of the glass plate.

△: Peeled with partially remaining the thermally- and pressure-sensitive adhesive on surface of the glass plate.

x: Already peeled before testing, or a base sheet was broken.

Table 9

| | Adhesive strength (gf/25 mm) | | Conditions in peeling | |
|---|---|---|---|---|
| | After | | After | |
| | 1-day | 6 months | 1-day | 6 months |
| Example I1 | 450 | 430 | o | o |
| Comparative Example I1 | 120 | 0 | △ | x |
| Comparative Example I2 | 570 | >1000 | o | x |

From the Table 9, it is evident that the thermally- and pressure-sensitive adhesive sheet obtained in the Example has a practically sufficient adhesive strength at the period of 1 day and 6 months after sticking in the case that it is stuck on a material to be stuck after producing a tackiness by heating and, moreover, it can be peeled without remaining the thermally- and pressure-sensitive adhesive on the glass plate. On the other hand, it is confirmed that adhesive strength is small in the thermally- and pressure-sensitive adhesive sheet obtained in the Comparative Example I 1 and, it was peeled at the period of 6 months by only placing on the glass plate, resulting in that it cannot be practically employed. Further, although the adhesive strength is only slightly larger in the thermally- and pressure-sensitive adhesive sheet in the Comparative Example I 2 than that in the Example I 1, the adhesive strength becomes very larger at 6 months, it becomes substantially impossible to peel.

Example J1

(Preparation of a water dispersion liquid of a solid plasticizer)

There were mixed 100 parts of dicyclohexhylphthalate as a solid plasticizer, 2.4 parts of an anionic surface active agent (an ammonium salt of a polycarboxylic acid) as a dispersant, and 80 parts of water, and those were crushed using a ball mill until attaining to an average particle diameter of 2.2 μm to obtain a water dispersion liquid of dicyclohexhylphthalate.

(Preparation of a water-based thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based emulsion of a terpene-based tackifier which is a tackifier, and water were added to the water dispersion liquid of dicyclohexylphthalate prepared hereinabove, followed by agitating until attaining to a uniform liquid to obtain a thermally- and pressure-sensitive adhesive having a concentration of 50% by weight. Formulating ratio herein is 26 parts of the thermoplastic resin and 17 parts of the tackifier based on 100 parts of the solid plasticizer. Composition of the thermally- and pressure-sensitive adhesive in the Example is shown in Table 10.

(Thermally- and pressure-sensitive adhesive sheet)

The thermally- and pressure-sensitive adhesive prepared hereinabove was coated on a surface of a single side-treated art paper having the density of 84.9 g/$m^2$ using a barcoater so that a coating amount after drying becomes 12 g/$m^2$, followed by drying at 40°C for 2 minutes to obtain a thermally- and pressure-sensitive adhesive sheet in the Example J1.

Comparative Example J1

(Preparation of a water-based thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based dispersion of a rosin-based tackifier in which is a tackifier, and water were added to the water dispersion liquid of dicyclohexylphthalate prepared in the Example J1, followed by agitating until attaining to a uniform liquid to obtain a thermally- and pressure-sensitive adhesive having a concentration of 50% by weight. Formulating ratio herein is 53 parts of the thermoplastic resin and 13 parts of the tackifier based on 100 parts of the solid plasticizer. Composition of the water-based thermally- and pressure-sensitive adhesive in the Comparative Example is shown in Table 10.

(Thermally- and pressure-sensitive adhesive sheet)

The water-based thermally- and pressure-sensitive adhesive prepared hereinabove was coated on a surface of a single side-treated art paper having the density of 84.9 g/m$^2$ using a barcoater so that a coating amount after drying becomes 12 g/m$^2$, followed by drying at 40°C for 2 minutes to obtain a thermally- and pressure-sensitive adhesive sheet in the Comparative Example J1.

Table 10

| | | Example J1 | Comparative Example J1 |
|---|---|---|---|
| Acrylic-based thermoplastic resin 1) | | 26 | 53 |
| Tackifier | Terpene resin | 17 | - |
| | Rosin derivative | - | 13 |
| Solid plasticizer (dicyclohexylphthalate) | | 100 | 100 |
| Anionic surface active agent | | 2.4 | 2.4 |
| Unit: part by weight | | | |

1) 2-ethylhexylacrylate-methylmethacrylate-acrylic acid copolymer
(Glass transition temperature Tg: 5°C)

Evaluations of properties in the thermally- and pressure-sensitive adhesive sheets

Properties in the thermally- and pressure-sensitive adhesive sheets obtained in the Example J1 and Comparative Example J1 were evaluated as follows.

(Adhesive strength test)

The thermally- and pressure-sensitive adhesive sheet obtained was cut into the size of width of 25 mm and length of 125 mm to prepare test pieces. The test pieces were heated at 120°C for 30 seconds to produce tackiness, and stuck on a glass plate [Micro Slide Glass "White Green Polish" manufactured by Iwaki Glass, Ltd.], followed by sticking through compressing with a rubber roll by making one round traverse while loading the weight of 2 kg.
The test pieces were placed at an atmosphere of 23°C and 60°C RH for 1 day and 6 months, and then an adhesive strength was measured at a tensile speed of 300 mm/minute and peeling angle of 180° using a tensile tester (Tensilon UCT-5T manufactured by Orientech, Ltd.). Results are shown in Table 11.

(Blocking resistance test)

The thermally- and pressure-sensitive adhesive sheets obtained were placed at the loading the weight of 500 g/cm$^2$ and under an atmosphere of 45°C for 24 hours to evaluate blocking resistance from a peeling ability according to the following standards.
Results are shown in Table 11.

5: It was peeled without a peeling resistance.

4: It was peeled while slightly sounding when being peeled.

3: It was peeled while continuously sounding when being peeled.

2: Fibers of paper were partially left on a pressure-sensitive adhesive layer when being peeled.

1: Paper was broken by blocking.

(Fall of a melting point)

The water-based thermally- and pressure-sensitive adhesives prepared in the Example J1 and the Comparative Example J1 were coated on a polyethylene terephthalate film having the thickness of 75 μm using a barcoater, respectively. A coating amount after drying was adjusted to 12 g/m$^2$. After heating at 40°C for 2 minutes, thermally- and pressure-sensitive adhesive layers were scraped off, respectively, followed by conducting a differential thermal analysis at temperature raising speed of 20°C/minute using a differential scanning calorimeter. Likewise, a differential thermal analysis for the solid plasticizer (dicyclohexylphthalate) itself was conducted at temperature raising speed of 20°C/minute using a differential scanning calorimeter. An endothermic peak was defined as a melting point of the solid plasticizer.

In a differential thermal analysis chart for samples scraped off the thermally- and pressure-sensitive adhesive layers in the Example J1 and the Comparative Example J1, there were shown endothermic peaks caused by the solid plasticizer and the tackifier and, of those, a temperature of the endothermic peak caused by the solid plasticizer is defined as "a melting point of the solid plasticizer in a thermally- and pressure-sensitive adhesive layer".

And, a fall of a melting point was calculated by the following equation based on the melting points and, results are shown in Table 11.

Fall of a melting point = (Melting point of the solid plasticizer) - (Melting point of the solid plasticizer in a thermally- and pressure-sensitive adhesive layer)

Table 11

| | Adhesive strength (gf/25 mm) | Blocking resistance | Fall of melting point |
|---|---|---|---|
| Example J1 | 450 | 5 | 1.8°C |
| Comparative Example J1 | 570 | 1 | 4.2°C |

As shown in Table 11, in the thermally- and pressure-sensitive adhesive sheet of the Example J1, fall of the melting point of the solid plasticizer in the thermally- and pressure-sensitive adhesive layer was 1.8°C which is less than 3°C and, on the other hand, in the thermally- and pressure-sensitive adhesive sheet of the Comparative Example J1, fall of the melting point of the solid plasticizer in the thermally- and pressure-sensitive adhesive layer was not less than 3°C. Although the adhesive strength is a same level in the Example J1 and the Comparative Example J1, the blocking resistance is more excellent in the sheet of the Example J1 than in the sheet of the Comparative Example J1.

Example K1

(Preparation of a water dispersion liquid of a solid plasticizer)

There were mixed 100 parts of dicyclohexhylphthalate as a solid plasticizer, 12 parts of an anionic surface active agent (an ammonium salt of a polycarboxylic acid) as a dispersant, and 80 parts of water, and those were crushed using a ball mill until attaining to an average particle diameter of 2.2 μm to obtain a water dispersion liquid of dicyclohexyl phthalate.

(Preparation of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based emulsion of a terpene-based tackifier which is a tackifier, and water were added to the water dispersion liquid of dicyclohexylphthalate prepared hereinabove, followed by agitating until attaining to a uniform liquid to obtain an emulsion of a thermally- and pressure-sensitive adhesive having a concentration of 50% by weight. Formulating ratio herein is 26 parts of the thermoplastic resin and 17 parts of the tackifier based on 100 parts of the solid plasticizer. Composition of the thermally- and pressure-sensitive adhesive in the Example is shown in Table 12.

(Thermally- and pressure-sensitive adhesive sheet)

The emulsion of a thermally- and pressure-sensitive adhesive prepared hereinabove was coated on a surface of a single side-treated art paper having the density of 84.9 g/m$^2$ using a barcoater so that a coating amount after drying becomes 12 g/m$^2$, followed by drying at 40°C for 2 minutes to obtain a thermally- and pressure-sensitive adhesive sheet in the Example K1.

Comparative Example K1

(Preparation of a water dispersion liquid of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based dispersion of a rosin-based tackifier which is a tackifier, and water were added to the water dispersion liquid of dicyclohexylphthalate prepared in the Example K1, followed by agitating until attaining to a uniform liquid to obtain an emulsion of a thermally- and pressure-sensitive adhesive having a concentration of 50% by weight. Formulating ratio herein is 53 parts of the thermoplastic resin and 13 parts of the tackifier based on 100 parts of the solid plasticizer. Composition of the thermally- and pressure-sensitive adhesive in the Comparative Example is shown in Table 12.

(Thermally- and pressure-sensitive adhesive sheet)

The emulsion of a thermally- and pressure-sensitive adhesive prepared hereinabove was coated on a surface of a single side-treated art paper having the density of 84.9 g/m$^2$ using a barcoater so that a coating amount after drying becomes 12 g/m$^2$, followed by drying at 40°C for 2 minutes to obtain a thermally- and pressure-sensitive adhesive sheet in the Comparative Example K1.

Comparative Example K2

(Preparation of a water dispersion liquid of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based dispersion of a petroleum resin-based tackifier which is a tackifier, and water were added to the water dispersion liquid of dicyclohexylphthalate prepared in the Example K1, followed by agitating until attaining to a uniform liquid to obtain an emulsion of a thermally- and pressure-sensitive adhesive having a concentration of 50% by weight. Formulating ratio herein is 40 parts of the thermoplastic resin and 27 parts of the tackifier based on 100 parts of the solid plasticizer. Composition of the thermally- and pressure-sensitive adhesive in the Comparative Example is shown in Table 12.

(Thermally- and pressure-sensitive adhesive sheet)

The emulsion of the thermally- and pressure-sensitive adhesive prepared hereinabove was coated on a surface of a single side-treated art paper having the density of 84.9 g/m$^2$ using a barcoater so that a coating amount after drying becomes 12 g/m$^2$, followed by drying at 40°C for 2 minutes to obtain a thermally- and pressure-sensitive adhesive sheet in the Comparative Example K2.

Table 12

| | | Example K1 | Comparative Example K1 | Comparative Example K2 |
|---|---|---|---|---|
| Acrylic-based thermoplastic resin 1) | | 26 | 53 | 40 |
| Tackifier | Terpene resin | 17 | - | - |
| | Rosin derivative | - | 13 | - |
| | Petroleum resin | - | - | 27 |
| Solid plasticizer (dicyclohexylphthalate) | | 100 | 100 | 100 |
| Nonionic surface active agent | | 12 | 12 | 12 |
| Unit: part by weight | | | | |

1) 2-ethylhexylacrylate-methylmethacrylate-acrylic acid copolymer
(Glass transition temperature Tg: 5°C)

Evaluations of properties in the thermally- and pressure-sensitive adhesive sheets

Properties in the thermally- and pressure-sensitive adhesive sheets obtained in the Example K1 and Comparative Examples K1 and K2 were evaluated as follows.

(Adhesive strength test)

The thermally- and pressure-sensitive adhesive sheet obtained was cut into the size of width of 25 mm and length of 125 mm to prepare test pieces. The test pieces were heated at 120°C for 30 seconds to produce tackiness, and stuck on a glass plate [Micro Slide Glass "White Green Polish" manufactured by Iwaki Glass, Ltd.], followed by sticking through compressing with a rubber roll by making one round traverse while loading the weight of 2 kg.
The test pieces were placed at an atmosphere of 23°C and 60% RH for 1 day or 6 months, and then, an adhesive strength was measured at a tensile speed of 300 mm/minute and peeling angle of 180° using a tensile tester (Tensilon UCT-5T manufactured by Orientech, Ltd.) after 1 day or 6 months.

(Peeling test)

Test pieces were stuck on a glass plate as well as in the above-described adhesive strength, and the test pieces were peeled by hand. Evaluations of a peeling property were judged according to the following standards.

o: Peeled without remaining the thermally- and pressure-sensitive adhesive on the glass plate.

△: Peeled with partially remaining the thermally- and pressure-sensitive adhesive on the glass plate.

x: Already peeled before testing, or paper (a base material sheet) was broken.

Results of the adhesive strength test and the peeling test are shown in Table 13.

Table 13

| | Adhesive strength (gf/25 mm) | | Conditions in peeling | |
|---|---|---|---|---|
| | After | | After | |
| | 1-day | 6 months | 1-day | 6 months |
| Example K1 | 450 | 430 | o | o |
| Comparative Example K1 | 570 | >1000 | o | x |

Table 13 (continued)

| | Adhesive strength (gf/25 mm) | | Conditions in peeling | |
|---|---|---|---|---|
| | After | | After | |
| | 1-day | 6 months | 1-day | 6 months |
| Comparative Example K2 | 400 | 0 | △ | x |

From the Table 13, it is evident that the thermally- and pressure-sensitive adhesive sheet obtained in the Example K1 has a practically sufficient adhesive strength after 1 day and 6 months and, moreover, it can be peeled without remaining the thermally-and pressure-sensitive adhesive on the glass plate. On the other hand, it is confirmed that the adhesive strength after 1 day in the thermally- and pressure-sensitive adhesive sheet obtained in the Comparative Example K1 is slightly larger than that in Example K1 and, it became very larger after 6 months, resulting in that it cannot be substantially peeled. Further, it is confirmed that although the adhesive strength is only slightly smaller in the thermally- and pressure-sensitive adhesive sheet in the Comparative Example K2 than that in the Example K1, it was peeled by only placing after 6 months, it cannot be practically employed.

Example L1

(Preparation of a water dispersion liquid of a solid plasticizer)

There were mixed 100 parts of dicyclohexhylphthalate as a solid plasticizer, 12 parts of an anionic surface active agent (an ammonium salt of a polycarboxylic acid) as a dispersant, and 80 parts of water, and those were crushed using a ball mill until attaining to an average particle diameter of 2.2 μm to obtain a water dispersion liquid of dicyclohexyl phthalate.

(Preparation of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based emulsion of a terpene-based tackifier which is a tackifier, and water were added to the water dispersion liquid of dicyclohexylphthalate prepared hereinabove, followed by agitating until attaining to a uniform liquid to obtain a thermally- and pressure-sensitive adhesive having a concentration of 50% by weight. Formulating ratio herein is 26 parts of the thermoplastic resin and 17 parts of the tackifier based on 100 parts of the solid plasticizer. Composition of the thermally- and pressure-sensitive adhesive in the Example is shown in Table 14.

(Thermally- and pressure-sensitive adhesive sheet)

The emulsion of a thermally- and pressure-sensitive adhesive prepared hereinabove was coated on a surface of a single side-treated art paper having the density of 84.9 g/$m^2$ using a gravure coater so that a coating amount after drying becomes 4.5 g/$m^2$, followed by drying at a drying zone (a zone length of 12 m) of 40°C and drying speed of 50 m/minute to obtain a thermally- and pressure-sensitive adhesive sheet in the Example L1.

Comparative Example L1

(Preparation of a water dispersion liquid of a thermally- and pressure-sensitive adhesive)

A water-based emulsion of an acrylic-based polymer (2-ethylhexylacrylate-methylmethacrylate-acrylic acid copolymer having a glass transition temperature Tg of 5°C) which is a thermoplastic resin, a water-based dispersion of a rosin-based tackifier which is a tackifier, and water were added to the water dispersion liquid of dicyclohexylphthalate prepared in the Example L1, followed by agitating until attaining to a uniform liquid to obtain an emulsion of a thermally- and pressure-sensitive adhesive having a concentration of 50% by weight. Formulating ratio herein is 53 parts of the thermoplastic resin and 13 parts of the tackifier based on 100 parts of the solid plasticizer. Composition of the thermally- and pressure-sensitive adhesive in the Comparative Example is shown in Table 14.

(Thermally- and pressure-sensitive adhesive sheet)

The emulsion of a thermally- and pressure-sensitive adhesive prepared hereinabove was coated on a surface of a single side-treated art paper having the density of 84.9 g/$m^2$ using a gravure coater so that a coating amount after drying becomes 8.0 g/$m^2$, followed by drying at a drying zone (a zone length of 12 in) of 40°C and drying speed of 50 m/minute to obtain a thermally- and pressure-sensitive adhesive sheet in the Comparative Example L1.

Table 14

| | | Example J1 | Comparative Example J1 |
|---|---|---|---|
| Acrylic-based thermoplastic resin 1) | | 26 | 53 |
| Tackifier | Terpene resin | 17 | - |
| | Rosin derivative | - | 13 |
| Solid plasticizer (dicyclohexylphthalate) | | 100 | 100 |
| Nonionic surface active agent | | 12 | 12 |
| Unit: part by weight | | | |

1) 2-ethylhexylacrylate-methylmethacrylate-acrylic acid copolymer
(Glass transition temperature Tg: 5°C)

Evaluations of properties in the thermally- and pressure-sensitive adhesive sheets

Properties in the thermally- and pressure-sensitive adhesive sheets obtained in the Example L1 and Comparative Example L1 were evaluated as follows.

(Adhesive strength test)

The thermally- and pressure-sensitive adhesive sheet obtained was cut into the size of width of 25 mm and length of 125 mm to prepare test pieces. The test pieces were heated at 120°C for 30 seconds to produce tackiness, and stuck on a glass plate [Micro Slide Glass "White Green Polish" manufactured by Iwaki Glass, Ltd.], followed by sticking through compressing with a rubber roll by making one round traverse while loading the weight of 2 kg.
The test pieces were placed at an atmosphere of 23°C and 60% RH for 5 minutes, 1 hour, and 1 day, respectively, and then, an adhesive strength was measured at a tensile speed of 300 mm/minute and peeling angle of 180° using a tensile tester (Tensilon UCT-5T manufactured by Orientech, Ltd.).

(Dryability test)

In the above-described preparation of a thermally- and pressure-sensitive adhesive sheet, a dried level was judged by touching the pressure-sensitive adhesive sheet by hand immediately after passing through a drying zone after coating using a gravure coater. Standards for judgement are as follows.

o: Problems in dryability were not observed.

x: Drying was insufficient, and a coating liquid adhered to hand.

Results of the adhesive strength test and the dryability test are shown in Table 15.

Table 15

| | Adhesive strength(gh/25 mm) | | | Conditions in drying |
|---|---|---|---|---|
| | After | | | |
| | 5 minutes | 1 hour | 1 day | |
| Example L1 | 240 | 250 | 270 | o |
| Comparative Example L1 | 40 | 70 | 270 | x |

As being evident from the Table 15, thermally- and pressure-sensitive adhesive sheet obtained in the Example L1 has a practically sufficient adhesive strength even after 5 minutes, 1 hour, and 1 day in spite of a slight coated amount. On the other hand, in the thermally- and pressure-sensitive adhesive sheet obtained in the Comparative Example L1, the adhesive strength after 5 minutes and 1 hour is small in spite of a large coated amount, and it required approximately 1 day for attaining to the same level of the adhesive strength as in the Example L1. Further, although the thermally- and pressure-sensitive adhesive sheet in the Example L1 was sufficiently dried by passing through the drying zone, the thermally- and pressure-sensitive adhesive sheet in the Comparative Example L1 was not sufficiently dried because of a large coated amount.

Example M1

(1) Acrylic-based polymer emulsion 1

A 2000-ml reaction vessel equipped with an agitator, a reflux condenser, a dropping funnel, a tube for introducing nitrogen, and a thermometer was charged with 219 parts of isopropylalcohol (IPA) and 1.23 part of azobisisobutylonitrile (AIBN) while agitating to dissolve, followed by heating to 80°C.
As copolymerizable components, there were mixed 93.7 parts of methylmethacrylate (MMA), 98.7 parts of n-butylacrylate (BA), and 22.2 parts of acrylic acid, followed by adding dropwise into the reaction vessel using the dropping funnel over approximately 4 hours. After the completion of the dropwise addition, a solution composed of 0.25 part of AIBN which is an additional catalyst and 25 parts of IPA was added dropwise, and reaction was further continued for 2 hours to complete a polymerization. After the completion of the polymerization, 20.9 parts of 25 wt%-aqueous ammonia was added into the reaction vessel, and 705 parts of water was added dropwise into the reaction vessel over approximately 2 hours while continuing to agitate to emulsify. After having been emulsified, an acrylic-based polymer emulsion 1 (solid concentration of 41.0% by weight) was obtained by evaporating IPA using a rotary evaporator.

(2) Recording sheet M1A

There were mixed 100 parts of dicyclohexylphthalate (a melting point of 65°C) as a solid plasticizer, 15 parts of an anionic surface active agent (a polycarboxylic ammonium salt) which is a dispersant, and 80 parts of water, and then by crushing until attaining to an average particle diameter of 2.2 μm using a ball mill to obtain a water dispersion liquid of dicyclohexylphthalate.
It is to be noted that an average particle diameter in the solid plasticizer was measured by a laser-diffraction type particle size distribution meter (LA-500 manufactured by Horiba Seisakusyo, Ltd.), and it is described by a median diameter.
The acrylic-based polymer emulsion 1 obtained in the above-described step (1) and a water-based emulsion of a terpene-phenol resin which is a tackifier (R-1050 manufactured by Yasuhara Chemical, Ltd.) were added to the water dispersion liquid of dicyclohexylphthalate prepared hereinabove, followed by agitating until attaining to a uniform liquid to obtain a water-based coating liquid having a solid concentration of 45% by weight.
Formulating ratio herein is 50 parts of the acrylic-based polymer and 17 parts of the tackifier based on 100 parts of the solid plasticizer (dicyclohexylphthalate).
The above-described water-based coating liquid was coated on a polyethylene terephthalate film (hereinafter, occasionally referred to a merely "PET film" having the thickness of 25 μm which is treated by a corona discharge using a barcoater so that a coating amount after drying becomes 12 $g/m^2$, followed by drying at 40°C for 3 minutes to obtain a recording sheet M1A.

(3) Recording sheet M1B

There were mixed 100 parts of bis(cis-3,3,5-trimethylcyclohexyl)phthalate (a melting point of 93°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.2 µm to obtain a water dispersion liquid of bis(cis-3,3,5-trimethylcyclohexyl) phthalate.
The acrylic-based polymer emulsion 1 obtained in the above-described step (1) and a water-based emulsion of a terpene-phenol resin which is a tackifier (R-1050 manufactured by Yasuhara Chemical, Ltd.) were added to the water dispersion liquid of bis(cis-3,3,5-trimethylcyclohexyl)phthalate prepared hereinabove, followed by agitating until attaining to a uniform liquid to obtain a water-based coating liquid having a solid concentration of 45% by weight. Formulating ratio herein is 50 parts of the acrylic-based polymer and 17 parts of the tackifier based on 100 parts of the solid plasticizer [bis(cis-3,3,5-trimethylcyclohexyl)phthalate].
The above-described water-based coating liquid was coated on a PET film having the thickness of 25 µm which is treated by a corona discharge using a barcoater so that a coating amount after drying becomes 12 g/m$^2$, followed by drying at 40°C for 3 minutes to obtain a recording sheet M1B.

(4) Recording sheet M1C

There were mixed 100 parts of dimenthylphthalate (a melting point of 134°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.5 µm to obtain a water dispersion liquid of dimenthylphthalate.
The acrylic-based polymer emulsion 1 obtained in the above-described step (1) and a water-based emulsion of a terpene-phenol resin which is a tackifier (R-1050 manufactured by Yasuhara Chemical, Ltd.) were added to the water dispersion liquid of dimenthylphthalate prepared hereinabove, followed by agitating until attaining to a uniform liquid to obtain a water-based coating liquid having a solid concentration of 45% by weight. Formulating ratio herein is 50 parts of the acrylic-based polymer and 17 parts of the tackifier based on 100 parts of the solid plasticizer (dimenthylphthalate).
The above-described water-based coating liquid was coated on a PET film having the thickness of 25 µm which is treated by a corona discharge using a barcoater so that a coating amount after drying becomes 12 g/m$^2$, followed by drying at 40°C for 3 minutes to obtain a recording sheet M1C.

(5) Recording sheet M1D

There were mixed 100 parts of 1,4-cyclohexanedimethanol bis(diphenylphospate) (a melting paint of 97°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.5 µm to obtain a water dispersion liquid of 1,4-cyclohexanedimethanol bis(diphenylphospate).
The acrylic-based polymer emulsion 1 obtained in the above-described step (1) and a water-based emulsion of a terpene-phenol resin which is a tackifier (R-1050 manufactured by Yasuhara Chemical, Ltd.) were added to the water dispersion liquid of 1,4-cyclohexanedimethanolbis(diphenylphospate) prepared hereinabove, followed by agitating until attaining to a uniform liquid to obtain a water-based coating liquid having a solid concentration of 46% by weight. Formulating ratio herein is 50 parts of the acrylic-based polymer and 17 parts of the tackifier based on 100 parts of the solid plasticizer (1,4-cyclohexanedimethanol bis(diphenylphospate)).
The above-described water-based coating liquid was coated on a PET film having the thickness of 25 µm which is treated by a corona discharge using a barcoater so that a coating amount after drying becomes 12 g/m$^2$, followed by drying at 40°C for 3 minutes to obtain a recording sheet M1D.

(6) Recording sheet M1E

There were mixed 100 parts of resorcinolbis[di(2,6-dimethylphenyl)phospate] (a melting point of 95°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.6 µm to obtain a water dispersion liquid of resorcinolbis[di(2,6-dimethylphenyl)phospate].
The acrylic-based polymer emulsion 1 obtained in the above-described step (1) and a water-based emulsion of a terpene resin which is a tackifier (R-1050 manufactured by Yasuhara Chemical, Ltd.) were added to the water dispersion liquid of resorcinolbis[di(2,6-dimethylphenyl)phosphate], followed by agitating until attaining to a uniform liquid to obtain a water-based coating liquid having a solid concentration of 45% by weight. Formulating ratio herein is 50

parts of the acrylic-based polymer and 17 parts of the tackifier based on 100 parts of the solid plasticizer {resorcinol-bis[di(2,6-dimethylphenyl)phospate]}.

The above-described water-based coating liquid was coated on a PET film having the thickness of 25 μm which is treated by a corona discharge using a barcoater so that a coating amount after drying becomes 12 g/m$^2$, followed by drying at 40°C for 3 minutes to obtain a recording sheet M1E.

(7) Recording sheet M1F

There were mixed 100 parts of trimethylhydroquinone diacetate (a melting point of 109°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.2 μm to obtain a water dispersion liquid of trimethyl hydroquinonediacetate.

The acrylic-based polymer emulsion 1 obtained in the above-described step (1) and a water-based emulsion of a terpene resin which is a tackifier (R-1050 manufactured by Yasuhara Chemical, Ltd.) were added to the water dispersion liquid of trimethylhydroquinone diacetate, followed by agitating until attaining to a uniform liquid to obtain a water-based coating liquid having a solid concentration of 46% by weight. Formulating ratio herein is 50 parts of the acrylic-based polymer and 17 parts of the tackifier based on 100 parts of the solid plasticizer (trimethylhydroquinone diacetate).

The above-described water-based coating liquid was coated on a PET film having the thickness of 25 μm which is treated by a corona discharge using a barcoater so that a coating amount after drying becomes 12 g/m$^2$, followed by drying at 40°C for 3 minutes to obtain a recording sheet M1F.

(8) Recording sheet M1G

A flask was charged with 10 g of Amberlist 15 (manufactured by Organo, Ltd.) which is a strong acidic ion-exchange resin, 30 g of ketoisophorone, 46.4 g of acetyl chloride, and 160 ml of 1,2-dichloroethane, followed by allowing to react at 85°C for 6 hours.

Reaction mixture was analyzed by gas chromatography and, as a result, ketoisophorone which is a raw material was completely consumed, and 3,4,5-trimethylcatechol diacetate was produced in a yield of 65%. The reaction mixture was filtered, and filtrate was concentrated. Residual product concentrated was recrystallized from a mixed solvent of ethyl acetate/hexane (volume ratio of 1/4) to obtain a white acicular crystal of 3,4,5-trimethylcatechol diacetate (a melting point: 120°C) (a yield: 36%).

$_{13}$C-NMR ($CDCl_3$) δ: 168.5, 168.2, 139.7, 138.9, 134.6, 133.8, 130.1, 121.5, 20.4, 20.3, 20.1, 15.6, 13.2
MS ($EI^+$) m/z: 236 ($M^+$), 194, 152, 137
IR ($cm^{-1}$): 893, 1045, 1213, 1311, 1375, 1479, 1701.

There were mixed 100 parts of the above-described 3,4,5-trimethylcatechol diacetate which is a solid plasticizer, 15 parts of an anionic surface active agent (a polycarboxylic ammonium salt) which is a dispersant, and 80 parts of water, and then, by crushing until attaining to an average particle diameter of 2.0 μm using a ball mill to obtain a water dispersion liquid of 3,4,5-trimethylcatechol diacetate.

The acrylic-based polymer emulsion 1 obtained in the above-described step (1), a water-based emulsion of a terpene resin which is a tackifier, and water were added to the water dispersion liquid of 3,4,5-trimethylcatechol diacetate, followed by agitating until attaining to a uniform liquid to obtain a water-based coating liquid having a solid concentration of 45% by weight. Formulating ratio herein is 50 parts of the acrylic-based polymer and 17 parts of the tackifier based on 100 parts of the solid plasticizer (3,4,5-trimethylcatechol diacetate).

The water-based coating liquid was coated on a PET film having the thickness of 25 μm which is treated by a corona discharge using a barcoater so that a coating amount after drying becomes 12 g/m$^2$, followed by drying at 40°C for 3 minutes to obtain a recording sheet M1G.

Example M2

A 2000-ml reaction vessel equipped with an agitator, a reflux condenser, a dropping funnel, a tube for introducing nitrogen, and a thermometer was charged with 219 parts of IPA and 1.23 part of AIBN while agitating to dissolve, followed by heating to 80°C.

As copolymerizable components, there were mixed 113.5 parts of MMA, 38.3 parts of BA, and 81.3 parts of a polyethyleneglycol methacrylate (Blemmer PEG-200 manufactured by Nihon Yushi, Ltd.), followed by adding dropwise into the reaction vessel over approximately 4 hours. After the completion of the dropwise addition, a solution composed

of 0.25 part of AIBN which is an additional catalyst and 25 parts of IPA was added dropwise, and reaction was further continued for 2 hours to complete a polymerization. After the completion of the polymerization, 705 parts of water was added dropwise into the reaction vessel over approximately 2 hours while agitating to emulsify. After having been emulsified, an acrylic-based polymer emulsion 2 (a solid concentration of 36.5% by weight) was obtained by evaporating IPA using a rotary evaporator.

The water dispersion liquid of bis(cis-3,3,5-trimethylcyclohexyl)phthalate obtained in the (3) of the Example M1 and the water dispersion liquid of a rosin resin as a tackifier (E-625 manufactured by Arakawa Kagaku Kogyo, Ltd.) were added to the acrylic-based polymer emulsion 2, followed by agitating until attaining to become homogeneous to obtain a water-based coating liquid having the solid concentration of 42% by weight.

Formulating ratio herein is 50 parts of the acrylic-based polymer and 17 parts of the tackifier based on 100 parts of the solid plasticizer [bis(cis-3,3,5-trimethylcyclohexyl)phthalate].

The water-based coating liquid was coated on a PET film having the thickness of 25 μm which is treated by a corona discharge using a barcoater so that a coating amount after drying becomes 12 g/$m^2$, followed by drying at 40°C for 3 minutes to obtain a recording sheet M2.

Example M3

An acrylic-based polymer emulsion 3 (a solid concentration of 38.3% by weight) was likewise obtained as in the Example M2 except that there were employed 73.5 parts of MMA, 50.8 parts of BA, and 82.3 parts of 2-hydroxyethylmethacrylate as copolymerizable components.

The water dispersion liquid of bis(cis-3,3,5-trimethylcyclohexyl)phthalate obtained in the (3) of the Example M1 and the water dispersion liquid of a rosin resin as a tackifier (E-625 manufactured by Arakawa Kagaku Kogyo, Ltd.) were added to the acrylic-based polymer emulsion 3, followed by agitating until attaining to become homogeneous to obtain a water-based coating liquid having the solid concentration of 44% by weight.

Formulating ratio herein is 50 parts of the acrylic-based polymer and 17 parts of the tackifier based on 100 parts by weight of the solid plasticizer [bis(cis-3,3,5-trimethylcyclohexyl) phthalate].

The water-based coating liquid was coated on a PET film having the thickness of 25 μm which is treated by a corona discharge using a barcoater so that a coating amount after drying becomes 12 g/$m^2$, followed by drying at 40°C for 3 minutes to obtain a recording sheet M3.

Comparative Example M1

The acrylic-based polymer emulsion 1 obtained in the Example M1 was coated on a PET film having the thickness of 25 μm which is treated by a corona discharge using a barcoater so that a coating amount after drying becomes 12 g/$m^2$, followed by drying at 40°C for 3 minutes to obtain a recording sheet M4.

Comparative Example M2

An acrylic-based polymer emulsion 4 (a solid concentration of 36.7% by weight) was likewise obtained as in the Example M2 except that there were employed 93.7 parts of MMA and 98.7 parts of BA as copolymerizable components.

The water dispersion liquid of dicyclohexylphthalate obtained in the (2) of the Example M1 and the water dispersion liquid of a terpene resin as a tackifier (R-1050 manufactured by Yasuhara Chemical, Ltd.) were added to the acrylic-based polymer emulsion 4, followed by agitating until attaining to become homogeneous to obtain a water-based coating liquid having the solid concentration of 42% by weight. Formulating ratio herein is 50 parts of the acrylic-based polymer and 17 parts of the tackifier based on 100 parts of the solid plasticizer (dicyclohexylphthalate).

The water-based coating liquid was coated on a PET film having the thickness of 25 μm which is treated by a corona discharge using a barcoater so that a coating amount after drying becomes 12 g/$m^2$, followed by drying at 40°C for 3 minutes to obtain a recording sheet M5.

Comparative Example M3

The water dispersion liquid of dicyclohexylphthalate obtained in the (2) of the Example M1 and the water dispersion liquid of a terpene resin as a tackifier (R-1050 manufactured by Yasuhara Chemical, Ltd.) were added to an ethylene-vinyl acetate copolymer (S-301 manufactured by Sumitomo Kagaku Kogyo, Ltd.), followed by agitating until attaining to become homogeneous to obtain a water-based coating liquid having the solid concentration of 48% by weight. Formulating ratio herein is 50 parts of the ethylene-vinyl acetate copolymer and 17 parts of the tackifier based on 100 parts of the solid plasticizer (dicyclohexylphthalate).

The water-based coating liquid was coated on a PET film having the thickness of 25 µm which is treated by a corona discharge using a barcoater so that a coating amount after drying becomes 12 g/$m^2$, followed by drying at 40°C for 3 minutes to obtain a recording sheet M6.

Evaluation test

In relation to the recording sheets obtained in the Examples and Comparative Examples, a variety of properties were evaluated according to the following methods. Evaluation results are shown in Table 16.

Using an ink-jet printer (BJC-420J manufactured by Cannon, Ltd.), coloring materials such as Cyan, Yellow, Magenta, and Black were all over printed, respectively, on the recording sheets obtained in the Examples and Comparative Examples to form a recording picture image.

(Ink-absorbing ability)

After printing, a PPC copy paper was placed on a printed portion at interval of every determined time, and the loading (250 g/$cm^2$) was charged on the copy paper for 10 seconds. After peeled off the copy paper, the presence or the absence of ink-moving to a back surface was visually observed, and ink-absorbing ability was evaluated by a time of period when the ink-moving to a back surface did not become observed.

(Printing conditions)

A printing ability was visually evaluated according to the following standards.

o: Printing portion is uniformly printed.

△: Unevenness is slightly observed in the printing portion.

x: Unevenness is remarkably observed in the printing portion.

(Adhesive strength)

Portion having a recording image was cut into the size of width of 25 mm and length of 125 mm to prepare test pieces. The test pieces were heated at 140°C for 30 seconds (the recording sheets N1C and M1G were heated at 160°C for 30 seconds) to produce tackiness, and stuck on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH for 1 day, and then an adhesive strength was measured at a tensile speed of 300 mm/minute and peeling angle of 180° using a tensile tester (Tensilon UCT-5T manufactured by Orientech, Ltd.).

(Blocking resistance)

Respective ink-absorbing layers (an ink-receiving image layer) of 4 layers of the recording sheets in which a picture image is not recorded were laminated with a surface of a PET film on which an ink-absorbing layer is not formed at the loading the weight of 500 g/$cm^2$ and under an atmosphere of 50°C for 24 hours to evaluate blocking resistance according to the following standards.

5: It was peeled without a peeling resistance.

4: It was peeled while slightly sounding when being peeled.

3: It was peeled while continuously sounding when being peeled.

2: Pressure-sensitive adhesive layer was partially left on a film surface when being peeled.

1: It was not peeled by blocking.

Table 16

| | | Ink-absorbing ability | Printing ability | Adhesive strength (gf/25 mm) | Blocking resistance |
|---|---|---|---|---|---|
| Example M1 | Recording sheet M1A | 2 minutes | o | 850 | 2 |
| | Recording sheet M1B | 2 minutes | o | 1050 | 5 |
| | Recording sheet M1C | 2 minutes | o | 730 | 5 |
| | Recording sheet M1D | 2 minutes | o | 930 | 5 |
| | Recording sheet M1E | 2 minutes | o | 880 | 5 |
| | Recording sheet M1F | 2 minutes | o | 840 | 5 |
| | Recording sheet M1G | 2 minutes | o | 1010 | 5 |
| Example M2 | Recording sheet M2 | 3 minutes | o | 850 | 5 |
| Example M3 | Recording sheet M3 | 3 minutes | o | 950 | 5 |
| Comparative Example M1 | Recording sheet M4 | 2 minutes | o | 0 | 5 |
| Comparative Example M2 | Recording sheet M5 | >7 minutes | x | 850 | 2 |
| Comparative Example M3 | Recording sheet M6 | >7 minutes | x | 120 | 5 |

From the results of the Table 16, it is confirmed that the recording sheets obtained in the Examples are excellent in the ink-absorbing ability and printing ability, and a sufficient adhesive strength can be obtained by thermally activating. Further, the recording sheets M1B-M1G are excellent in the blocking resistance.
On the other hand, although the recording sheet obtained in the Comparative Example M1 is excellent in the ink-absorbing ability and printing ability, an adhesive force was not shown.
Although a sufficient adhesive force is obtained in the recording sheet obtained in the Comparative Example M2, it is poor in the ink-absorbing ability and blocking resistance. Although a blocking resistance is excellent in the recording sheet obtained in the Comparative Example M3, it is low in the ink-absorbing ability and adhesive strength.

Example N1

(1) Ink-absorbing layer 1

A 2000-ml reaction vessel equipped with an agitator, a reflux condenser, a dropping funnel, a tube for introducing nitrogen, and a thermometer was charged with 219 parts of isopropyl alcohol (IPA) and 1.23 part of azobisisobutyronitrile (AIBN) while agitating to dissolve, followed by heating to 80°C.
As copolymerizable components, there were mixed 59.1 parts of methylmethacrylate, 59.1 parts of n-butylacrylate, 49.3 parts of diethylaminoethyl methacrylate, 22.5 parts of acrylic acid, and 4.9 parts of trimethoxysilanepropylmethacrylate[γ-methacryloxypropyl trimethoxysilane] (A-174 manufactured by Nihon Unicar, Ltd.), followed by adding dropwise into a flask over approximately 4 hours. After the completion of the dropwise addition, a solution composed of 0.25 part of AIBN which is an additional catalyst and 25 parts of IPA was added dropwise, and reaction was further continued for 2 hours to complete a polymerization.

After the completion of the polymerization, 16 parts of acetic acid was added into the flask and, subsequently, 705 parts of water was added dropwise over approximately 2 hours while agitating to emulsify. After having been emulsified, a cationic acrylic-based polymer emulsion (solid concentration of 34.8% by weight) was obtained by evaporating IPA using a rotary evaporator.

A water-based coating liquid was obtained by mixing 86.2 parts (solid content of 30 parts) of the above-described cationic acrylic-based polymer emulsion with 700 parts (solid content of 70 parts) of 10 wt%-aqueous solution of an acetoacetyl group-modified vinyl acetate-based copolymer (Z-320 manufactured by Nihon Gosei Kagaku Kogyo, Ltd.).

The water-based coating liquid was coated on a polyethylene terephthalate film (Merinex 705 manufactured by ICI Japan, Ltd., hereinafter, occasionally referred as a merely "PET film") having the thickness of 100 μm which is treated so as to readily-adhere, followed by drying at 100°C for 3 minutes to form an ink-absorbing layer 1 having the thickness of 15 μm.

(2) Recording sheet N1A

There were mixed 100 parts of bis(cis-3,3,5-trimethyl cyclohexyl)phthalate (a melting point of 93°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.2 μm to obtain a water dispersion liquid of bis(cis-3,3,5-trimethylcyclohexyl) phthalate. It is to be noted that an average particle diameter in the solid plasticizer was measured by a laser-diffraction type particle size distribution meter (LA-500 manufactured by Horiba Seisakusyo, Ltd.), and it is described by a median diameter.

The emulsion of an acrylic-based polymer (2-ethylhexylacrylate-styrene-acrylic acid copolymer having a glass transition temperature Tg of 15°C) which is a thermoplastic resin and a water-based emulsion of a terpene resin which is a tackifier (R-1050 manufactured by Yasuhara Chemical, Ltd.) were added to the water dispersion liquid of bis(cis-3,3,5-trimethylcyclohexyl) phthalate prepared hereinabove, followed by agitating until attaining to a uniform liquid to obtain a thermally- and pressure-sensitive adhesive having a solid concentration of 48% by weight.

Formulating ratio herein is 26 parts of the thermoplastic resin (the acrylic-based polymer) and 17 parts of the tackifier (the terpene resin) based on 100 parts of the solid plasticizer [bis(cis-3,3,5-trimethylcyclohexyl)phthalate].

The above-described thermally- and pressure-sensitive adhesive was coated on a back surface of a PET film in which there is formed the ink-absorbing layer 1 obtained in the above-described step (1) using a barcoater so that a coating amount after drying becomes 12 g/m$^2$, followed by drying at 40°C for 2 minutes to obtain a recording sheet N1A.

(3) Recording sheet N1B

There were mixed 100 parts of dimenthylphthalate (a melting point of 134°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.5 μm to obtain a water dispersion liquid of dimenthylphthalate.

The water-based emulsion of an acrylic-based polymer (2-ethylhexylacrylate-styrene-acrylic acid copolymer having a glass transition temperature Tg of 15°C) which is a thermoplastic resin and a water-based emulsion of a terpene resin which is a tackifier (R-1050 manufactured by Yasuhara Chemical, Ltd.) were added to the water dispersion liquid of dimenthylphthalate, followed by agitating until attaining to a uniform liquid to obtain a thermally- and pressure-sensitive adhesive having a solid concentration of 52% by weight. Formulating ratio herein is 26 parts of the thermoplastic resin (the acrylic-based polymer) and 17 parts of the tackifier (the terpene resin) based on 100 parts of the solid plasticizer (dimenthylphthalate).

The above-described thermally- and pressure-sensitive adhesive was coated on a back surface of a PET film in which there is formed the ink-absorbing layer 1 obtained in the above-described step (1) using a barcoater so that a coating amount after drying becomes 12 g/m$^2$, followed by drying at 40°C for 2 minutes to obtain a recording sheet N1B.

(4) Recording sheet N1C

There were mixed 100 parts of 1,4-cyclohexanedimethanol bis(diphenylphospate) (a melting point of 97°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.5 μm to obtain a water dispersion liquid of 1,4-cyclohexanedimethanol bis(diphenylphospate).

The water-based emulsion of an acrylic-based polymer (2-ethylhexylacrylate-styrene-acrylic acid copolymer having a glass transition temperature Tg of 15°C) which is a thermoplastic resin and a water-based dispersion of a terpene resin which is a tackifier (R-1050 manufactured by Yasuhara Chemical, Ltd.) were added to the water dispersion liquid of 1,4-cyclohexanedimethanol bis(diphenylphospate), followed by agitating until attaining to a uniform liquid to obtain a thermally- and pressure-sensitive adhesive having a solid concentration of 50% by weight.

Formulating ratio herein is 26 parts of the thermoplastic resin (the acrylic-based polymer) and 17 parts of the tackifier (the terpene resin) based on 100 parts of the solid plasticizer [1,4-cyclohexanedimethanolbis(diphenylphospate)].

The above-described thermally- and pressure-sensitive adhesive was coated on a back surface of a PET film in which there is formed the ink-absorbing layer 1 obtained in the above-described step (1) using a barcoater so that a coating amount after drying becomes 12 g/m$^2$, followed by drying at 40°C for 2 minutes to obtain a recording sheet N1C.

(5) Recording sheet N1D

There were mixed 100 parts of resorcinol bis[di(2,6-dimethylphenyl)phosphate] (a melting point of 95°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.6 µm to obtain a water dispersion liquid of resorcinolbis[di(2,6-dimethylphenyl)phosphate].

The water-based emulsion of an acrylic-based polymer (2-ethylhexylacrylate-styrene-acrylic acid copolymer having a glass transition temperature Tg of 15°C) which is a thermoplastic resin and a water-based emulsion of a terpene resin which is a tackifier (R-1050 manufactured by Yasuhara Chemical, Ltd.) were added to the water dispersion liquid of resorcinolbis[di(2,6-dimethylphenyl)phosphate], followed by agitating until attaining to a uniform liquid to obtain a water-based coating liquid having a solid concentration of 50% by weight. Formulating ratio herein is 50 parts of the thermoplastic resin (the acrylic-based polymer) and 17 parts of the tackifier (the terpene resin) based on 100 parts of the solid plasticizer [1,4-cyclohexanedimethanol bis(diphenylphospate)].

The above-described thermally- and pressure-sensitive adhesive was coated on a back surface of a PET film in which there is formed the ink-absorbing layer 1 obtained in the above-described step (1) using a barcoater so that a coating amount after drying becomes 12 g/m$^2$, followed by drying at 40°C for 2 minutes to obtain a recording sheet N1D.

(6) Recording sheet N1E

There were mixed 100 parts of trimethylhydroquinone diacetate (a melting point of 109°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.2 µm to obtain a water dispersion liquid of trimethylhydroquinone diacetate.

The water-based emulsion of an acrylic-based polymer (2-ethylhexylacrylate-styrene-acrylic acid copolymer having a glass transition temperature Tg of 15°C) which is a thermoplastic resin and a water-based emulsion of a terpene resin which is a tackifier (R-1050 manufactured by Yasuhara Chemical, Ltd.) were added to the water dispersion liquid of trimethylhydroquinone diacetate, followed by agitating until attaining to a uniform liquid to obtain a thermally- and pressure-sensitive adhesive having a solid concentration of 48% by weight. Formulating ratio herein is 26 parts of the thermoplastic resin (the acrylic-based polymer) and 17 parts of the tackifier (the terpene resin) based on 100 parts of the solid plasticizer (trimethylhydroquinone diacetate).

The above-described thermally- and pressure-sensitive adhesive was coated on a back surface of a PET film in which there is formed the ink-absorbing layer 1 obtained in the above-described step (1) using a barcoater so that a coating amount after drying becomes 12 g/m$^2$, followed by drying at 40°C for 2 minutes to obtain a recording sheet N1E.

(7) Recording sheet N1F

A flask was charged with 10 g of Amberlist 15 (manufactured by Organo, Ltd.) which is a strong acidic ion-exchange resin, 30 g of ketoisophorone, 46.4 g of acetyl chloride, and 160 ml of 1,2-dichloroethane, followed by allowing to react at 85°C for 6 hours.

Reaction mixture was analyzed by gas chromatography and, ketoisophorone which is a raw material was completely consumed, and 3,4,5-trimethylcatechol diacetate was produced in a yield of 65%.

The reaction mixture was filtered, and a filtrate was concentrated. Residual product concentrated was recrystallized from a mixed solvent of ethyl acetate/hexane (volume ratio of 1/4) to obtain a white acicular crystal of 3,4,5-trimethylcatechol diacetate (a melting point: 120°C) (a yield: 36%).

$_{13}$C-NMR ($CDCl_3$) δ: 168.5, 168.2, 139.7, 138.9, 134.6, 133.8, 130.1, 121.5, 20.4, 20.3, 20.1, 15.6, 13.2

MS ($EI^+$) m/z: 236 ($M^+$), 194, 152, 137

IR ($cm^{-1}$): 893, 1045, 1213, 1311, 1375, 1479, 1701.

There were mixed 100 parts of the above-described 3,4,5-trimethylcatechol diacetate which is a solid plasticizer, 15 parts of an anionic surface active agent (a polycarboxylic ammonium salt) which is a dispersant, and 80 parts of water, and then by crushing until attaining to an average particle diameter of 2.0 μm using a ball mill to obtain a water dispersion liquid of 3,4,5-trimethylcatechol diacetate.

The water-based emulsion of an acrylic-based polymer (2-ethylhexylacrylate-styrene-acrylic acid copolymer having a glass transition temperature Tg of 15°C) which is a thermoplastic resin and a water-based emulsion of a terpene resin which is a tackifier, and water were added to the water dispersion liquid of 3,4,5-trimethylcatechol diacetate, followed by agitating until attaining to a uniform liquid to obtain a water-based coating liquid having a solid concentration of 52% by weight. Formulating ratio herein is 26 parts of the thermoplastic resin (the acrylic-based polymer) and 17 parts of the tackifier (the terpene resin) based on 100 parts of the solid plasticizer (3,4,5-trimethylcatechol diacetate).

The above-described thermally- and pressure-sensitive adhesive was coated on a back surface of a PET film in which there is formed the ink-absorbing layer 1 obtained in the above-described step (1) using a barcoater so that a coating amount after drying becomes 12 $g/m^2$, followed by drying at 40°C for 2 minutes to obtain a recording sheet N1F.

Example N2

(1) Ink-absorbing layer 2

A 15 wt%-aqueous solution of a modified vinyl acetate-based copolymer (OKS-7158G manufactured by Nihon Gosei Kagaku, Ltd.) was coated on a PET film (Merinex 705 manufactured by ICI Japan, Ltd.) having the thickness of 100 μm which is treated so as to readily-adhere, followed by drying at 120°C for 3 minutes to form a resin layer having the thickness of 15 μm. Subsequently, 48 parts of cyclohexanol was added to 100 parts of a methylcellosolve solution containing 7 wt% of a cellulose acetate (an average acetylation degree: 55, a viscosity-average molecular weight: 170) to form a coating liquid (a dope). The coating liquid was coated on the resin layer, and an ink-absorbing layer 2 was formed by laminating a white colored porous membrane having an average pore diameter of 1.2 μm and thickness of 5 μm through drying under an atmosphere of temperature of 25°C and humidity of 90% RH for 5 minutes and then 120°C for 3 minutes.

(2) Recording sheet N2A

The water-based emulsion of an acrylic-based polymer (2-ethylhexylacrylate-methylmethacrylate-acrylic acid copolymer having a glass transition temperature Tg of 20°C) which is a thermoplastic resin and the water dispersion liquid of a rosin resin as a tackifier (E-625 manufactured by Arakawa Kagaku Kogyo, Ltd.) were added to the water dispersion liquid of bis(cis-3,3,5-trimethylcyclohexyl)phthalate obtained in the (2) of the Example N1, followed by agitating until attaining to become homogeneous to obtain a thermally- and pressure-sensitive adhesive having the solid concentration of 48% by weight. Formulating ratio herein is 39 parts of the thermoplastic resin (the acrylic-based polymer) and 23 parts of the tackifier (the rosin resin) based on 100 parts of the solid plasticizer [bis(cis-3,3,5-trimethylcyclohexyl) phthalate].

The above-described thermally- and pressure-sensitive adhesive was coated on a back surface of a PET film in which there is formed the ink-absorbing layer 2 obtained in the above-described step (1) using a barcoater so that a coating amount after drying becomes 12 $g/m^2$, followed by drying at 40°C for 2 minutes to obtain a recording sheet N2A.

(3) Recording sheet N2B

The water-based emulsion of an acrylic-based polymer (2-ethylhexylacrylate-methylmethacrylate-acrylic acid copolymer having a glass transition temperature Tg of 25°C) which is a thermoplastic resin and the water dispersion liquid of a rosin resin as a tackifier (E-625 manufactured by Arakawa Kagaku Kogyo, Ltd.) were added to a water dispersion liquid of dimenthylphthalate obtained in the (3) of the Example N1, followed by agitating until attaining to become homogeneous to obtain a water-based coating liquid having the solid concentration of 51% by weight. Formulating ratio herein is 39 parts of the thermoplastic resin (the acrylic-based polymer) and 23 parts of the tackifier (the rosin resin) based on 100 parts of the solid plasticizer (dimentyhlphthalate).

The above-described thermally- and pressure-sensitive adhesive was coated on a back surface of a PET film in which there is formed the ink-absorbing layer 2 obtained in the above-described step (1) using a barcoater so that a coating amount after drying becomes 12 $g/m^2$, followed by drying at 40°C for 2 minutes to obtain a recording sheet N2B.

(4) Recording sheet N2C

The water-based emulsion of an acrylic-based polymer (2-ethylhexylacrylate-methylmethacrylate-acrylic acid copolymer having a glass transition temperature Tg of 25°C) which is a thermoplastic resin and the water dispersion liquid of a rosin resin as a tackifier (E-625 manufactured by Arakawa Kagaku Kogyo, Ltd.) were added to a water dispersion liquid of 1,4-cyclohexanedimethanol bis(diphenylphosphate) obtained in the (4) of the Example N1, followed by agitating until attaining to become homogeneous to obtain a thermally- and pressure-sensitive adhesive having the solid concentration of 52% by weight. Formulating ratio herein is 39 parts of the thermoplastic resin (the acrylic-based polymer) and 23 parts of the tackifier (the rosin resin) based on 100 parts of the solid plasticizer [1,4-cyclohexanedimethanol bis(diphenylphosphate)].

The above-described thermally- and pressure-sensitive adhesive was coated on a back surface of a PET film in which there is formed the ink-absorbing layer 2 obtained in the above-described step (1) using a barcoater so that a coating amount after drying becomes 12 g/$m^2$, followed by drying at 40°C for 2 minutes to obtain a recording sheet N2C.

(5) Recording sheet N2D

The water-based emulsion of an acrylic-based polymer (2-ethylhexylacrylate-methylmethacrylate-acrylic acid copolymer having a glass transition temperature Tg of 25°C) which is a thermoplastic resin and the water dispersion liquid of a rosin resin as a tackifier (E-625 manufactured by Arakawa Kagaku Kogyo, Ltd.) were added to a water dispersion liquid of resorcinol bis[di(2,6-dimethylphenyl)phosphate] obtained in the (5) of the Example N1, followed by agitating until attaining to become homogeneous to obtain a water-based coating liquid having the solid concentration of 50% by weight. Formulating ratio herein is 39 parts of the thermoplastic resin (the acrylic-based polymer) and 23 parts of the tackifier (the rosin resin) based on 100 parts of the solid plasticizer {resorcinol bis[di(2,6-dimethylphenyl)phosphate]}.

The above-described thermally- and pressure-sensitive adhesive was coated on a back surface of a PET film in which there is formed the ink-absorbing layer 2 obtained in the above-described step (1) using a barcoater so that a coating amount after drying becomes 12 g/$m^2$, followed by drying at 40°C for 2 minutes to obtain a recording sheet N2D.

(6) Recording sheet N2E

The water-based emulsion of an acrylic-based polymer (2-ethylhexylacrylate-methylmethacrylate-acrylic acid copolymer having a glass transition temperature Tg of 25°C) which is a thermoplastic resin and the water dispersion liquid of a rosin resin as a tackifier (E-625 manufactured by Arakawa Kagaku Kogyo, Ltd.) were added to a water dispersion liquid of trimethylhydroquinone diacetate obtained in the (6) of the Example N1, followed by agitating until attaining to become homogeneous to obtain a water-based coating liquid having the solid concentration of 52% by weight. Formulating ratio herein is 39 parts of the thermoplastic resin (the acrylic-based polymer) and 23 parts of the tackifier (the rosin resin) based on 100 parts of the solid plasticizer (trimethylhydroquinone diacetate).

The above-described thermally- and pressure-sensitive adhesive was coated on a back surface of a PET film in which there is formed the ink-absorbing layer 2 obtained in the above-described step (1) using a barcoater so that a coating amount after drying becomes 12 g/$m^2$, followed by drying at 40°C for 2 minutes to obtain a recording sheet N2E.

(7) Recording sheet N2F

The water-based emulsion of an acrylic-based polymer (2-ethylhexylacrylate-methylmethacrylate-acrylic acid copolymer having a glass transition temperature Tg of 25°C) which is a thermoplastic resin and the water dispersion liquid of a rosin resin as a tackifier (E-625 manufactured by Arakawa Kagaku Kogyo, Ltd.) were added to a water dispersion liquid of 3,4,5-trimethylcatechol diacetate obtained in the (7) of the Example N1, followed by agitating until attaining to become homogeneous to obtain a thermally- and pressure-sensitive adhesive having the solid concentration of 48% by weight. Formulating ratio herein is 39 parts of the thermoplastic resin (the acrylic-based polymer) and 23 parts of the tackifier (the rosin resin) based on 100 parts by weight of the solid plasticizer (3,4,5-trimethylcatechol diacetate).

The above-described thermally- and pressure-sensitive adhesive was coated on a back surface of a PET film in which there is formed the ink-absorbing layer 2 obtained in the above-described step (1) using a barcoater so that a coating amount after drying becomes 12 g/$m^2$, followed by drying at 40°C for 2 minutes to obtain a recording sheet N2F.

Comparative Example N1

(1) Recording sheet N3A

There were mixed 100 parts of dicyclohexylphthalate (a melting point of 65°C) as a solid plasticizer, 15 parts of an anionic surface active agent (an ammonium salt of a polycarboxylic acid) as a dispersant, and 80 parts of water, and those were crushed using a ball mill until attaining to an average particle diameter of 2.2 μm to obtain a water dispersion liquid of dicyclohexylphthalate.

The water-based emulsion of an acrylic-based polymer (2-ethylhexylacrylate-styrene-acrylic acid copolymer having a glass transition temperature Tg of 15°C) which is a thermoplastic resin and a water-based emulsion of a terpene resin which is a tackifier (R-1050 manufactured by Yasuhara Chemical, Ltd.) were added to the water dispersion liquid of dicyclohexylphthalate, followed by agitating until attaining to a uniform liquid to obtain a thermally- and pressure-sensitive adhesive having a solid concentration of 52% by weight. Formulating ratio herein is 26 parts of the thermoplastic resin (the acrylic-based polymer) and 17 parts of the tackifier (the terpene resin) based on 100 parts of the solid plasticizer (dicyclohexylphthalate).

The above-described thermally- and pressure-sensitive adhesive was coated on a back surface of a PET film in which there is formed the ink-absorbing layer 1 obtained in the above-described step (1) of the Example N1 using a barcoater so that a coating amount after drying becomes 12 g/$m^2$, followed by drying at 40°C for 2 minutes to obtain a recording sheet N3A.

(2) Recording sheet N3B

The water-based emulsion of an acrylic-based polymer (2-ethylhexylacrylate-methylmethacrylate-acrylic acid copolymer having a glass transition temperature Tg of 25°C) which is a thermoplastic resin and a water-based dispersion liquid of a rosin resin which is a tackifier (E-625 manufactured by Arakawa Kagaku Kogyo, Ltd.) were added to the water dispersion liquid of dicyclohexylphthalate obtained in the above-described step (1), followed by agitating until attaining to a uniform liquid to obtain a thermally- and pressure-sensitive adhesive having a solid concentration of 48% by weight. Formulating ratio herein is 39 parts of the thermoplastic resin (the acrylic-based polymer) and 23 parts of the tackifier (the rosin resin) based on 100 parts of the solid plasticizer (dicyclohexylphthalate).

The above-described thermally- and pressure-sensitive adhesive was coated on a back surface of a PET film in which there is formed the ink-absorbing layer 2 obtained in the above-described step (1) of the Example N1 using a barcoater so that a coating amount after drying becomes 12 g/$m^2$, followed by drying at 40°C for 2 minutes to obtain a recording sheet N3B.

Comparative Example N2

(1) Recording sheet (N4A)

A hot-melt type adhesive (MU74 manufactured by Konishi) as a hot-melt layer was coated on a back surface of a PET film in which there is formed the ink-absorbing layer 1 obtained in the above-described step (1) of the Example N1 by spray-coating so that a coating amount after drying becomes 12 g/$m^2$ to obtain a recording sheet N4A.

(2) Recording sheet (N4B)

A hot-melt type adhesive (MU74 manufactured by Konishi) as a hot-melt layer was coated on a back surface of a PET film in which there is formed the ink-absorbing layer 2 obtained in the above-described step (1) of the Example N2 by spray-coating so that a coating amount after drying becomes 12 g/$m^2$ to obtain a recording sheet N4B.

Evaluation test

In relation to the recording sheets obtained in the Examples and Comparative Examples, a variety of properties were evaluated according to the following methods. Evaluation results are shown in Table 17.

Using an ink-jet printer (BJC-420J manufactured by Cannon, Ltd.), coloring materials such as Cyan, Yellow, Magenta, and Black were all over printed, respectively, on the recording sheets obtained in the Examples and Comparative Examples to form a recording picture image.

(Ink-absorbing ability)

After printing, a PPC copy paper was placed on a printed portion for every determined time, and the loading (250 g/cm$^2$) was charged on the copy paper for 10 seconds. After peeled off the copy paper, the presence or the absence of ink-moving to a back surface was visually observed, and ink-absorbing ability was evaluated by a time of period until the ink-moving to a back surface does not become observed.

(Printing ability)

A printing condition was visually evaluated according to the following standards.

o: Printing portion is uniform.

△: Unevenness is slightly observed in the printing portion.

x: Unevenness is remarkably observed in the printing portion.

(Water immersion test)

After having immersed the printing portion in water of 30°C for 1 minute, it was vertically raised, and dried by sufficiently removing water. After having dried, a printing condition was visually evaluated according to the following standards.

o: Printing portion is completely remained.

△: Blot is observed in the printing portion.

x: Printing portion is not remained.

(Adhesive strength)

Recording sheet obtained was cut into the size of width of 25 mm and length of 125 mm to prepare test pieces. The test pieces were heated at 140°C for 30 seconds (in the recording sheets N1B, N1F, N2B, and N2F, 160°C for 30 seconds) to produce tackiness, and stuck on a glass plate [Micro Slide Glass "White Green Polish" manufactured by Iwaki Glass, Ltd.], followed by sticking through compressing with a rubber roll by making one round traverse while loading the weight of 2 kg. The test pieces were placed at an atmosphere of 23°C and 50% RH for 1 day, and then an adhesive force was measured at a tensile speed of 300 mm/minute and peeling angle of 180° using a tensile tester (Tensilon UCT-5T manufactured by Orientech, Ltd.).

(Blocking resistance)

Respective ink-absorbing layers of 4 layers of the recording sheets in which a picture image is not recorded were laminated with a delayed-tack layer at the loading the weight of 500 g/cm$^2$ and under an atmosphere of 50°C for 24 hours to evaluate blocking resistance according to the following standards.

5: It was peeled without a peeling resistance.

4: It was peeled while slightly sounding when being peeled.

3: It was peeled while continuously sounding when being peeled.

2: Pressure-sensitive adhesive layer was partially left on a film surface when being peeled.

1: It was not peeled by blocking.

Table 17

| | | IAA | PA | WIT | AS | BR |
|---|---|---|---|---|---|---|
| Example N1 | Recording sheet N1A | 3 minutes | o | o | 1250 | 5 |
| | Recording sheet N1B | 3 minutes | o | o | 1130 | 5 |
| | Recording sheet N1C | 3 minutes | o | o | 950 | 5 |
| | Recording sheet N1D | 3 minutes | o | o | 930 | 5 |
| | Recording sheet N1E | 3 minutes | o | o | 880 | 5 |
| | Recording sheet N1F | 3 minutes | o | o | 840 | 5 |
| Example N2 | Recording sheet N2A | <1 minute | o | o | 1180 | 5 |
| | Recording sheet N2B | <1 minute | o | o | 1050 | 5 |
| | Recording sheet N2C | <1 minute | o | o | 950 | 5 |
| | Recording sheet N2D | <1 minute | o | o | 1030 | 5 |
| | Recording sheet N2E | <1 minute | o | o | 850 | 5 |
| | Recording sheet N2F | <1 minute | o | o | 920 | 5 |
| Comparative Example N1 | Recording sheet N3A | 3 minutes | o | o | 960 | 2 |
| | Recording sheet N3B | 3 minutes | o | o | 850 | 2 |
| Comparative Example N2 | Recording sheet N4A | 3 minutes | o | o | 550 | 1 |
| | Recording sheet N4B | 3 minutes | o | o | 480 | 1 |

In the Table 17, abbreviations are as follows.

IAA: Ink-absorbing ability

PA: Printing ability

WIT: Water immersion test

AS: Adhesive strength (gf/25mm)

BR: Blocking resistance

From the results of the Table 17, it is confirmed that the recording sheets obtained in the Examples are excellent in the ink-absorbing ability, printing ability, water resistance, and blocking resistance, and a sufficient adhesive force can be obtained by thermally activating. On the other hand, although the recording sheets obtained in the Comparative Examples is excellent in the ink-absorbing ability, printing ability, and water resistance, a blocking resistance is unpractically low.

Preparation Example O1

(Preparation of a water dispersion liquid O1 of a solid plasticizer)

There were mixed 100 parts by weight of bis(cis-3,3,5-trimethylcyclohexyl)phthalate (a melting point: 93°C) and 15 parts by weight of an anionic surface active agent (an ammonium salt of a polycarboxylic acid) as a dispersant, and 80 parts by weight of water, and those were crushed using a ball mill until attaining to an average particle diameter of 2.2 μm to obtain a water dispersion liquid (the water dispersion liquid O1 of a solid plasticizer) of bis(cis-3,3,5-trimethylcyclohexyl) phthalate.

Preparation Example O2

(Preparation of a water dispersion liquid O2 of a solid plasticizer)

There were mixed 100 parts by weight of resorcinol bis[di(2,6-dimethylphenyl)phosphate] (a melting point: 95°C) and 15 parts by weight of an anionic surface active agent (an ammonium salt of a polycarboxylic acid) as a dispersant, and 80 parts by weight of water, and those were crushed using a ball mill until attaining to an average particle diameter of 2.6 μm to obtain a water dispersion liquid (the water dispersion liquid O2 of a solid plasticizer) of resorcinol bis[di(2,6-dimethylphenyl)phosphate].

Preparation Example O3

(Preparation of a water dispersion liquid O3 of a solid plasticizer)

There were mixed 100 parts by weight of trimethylhydroquinone diacetate (a melting point: 109°C) and 15 parts by weight of an anionic surface active agent (an ammonium salt of a polycarboxylic acid) as a dispersant, and 80 parts by weight of water, and those were crushed using a ball mill until attaining to an average particle diameter of 2.2 μm to obtain a water dispersion liquid (the water dispersion liquid O3 of a solid plasticizer) of trimethylhydroquinone diacetate.

Preparation Example O4

(Preparation of a water dispersion liquid O4 of a solid plasticizer)

There were mixed 100 parts by weight of dicyclohexylphthalate (a melting point: 65°C) as a solid plasticizer, 15 parts by weight of an anionic surface active agent (an ammonium salt of a polycarboxylic acid) as a dispersant, and 80 parts by weight of water, and those were crushed using a ball mill until attaining to an average particle diameter of 2.2 μm to obtain a water dispersion liquid (the water dispersion liquid O4 of a solid plasticizer) of dicyclohexylphthalate.

Example O1

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of bis(cis-3,3,5-trimethylcyclohexyl)phthalate and resorcinol bis[di(2,6-dimethylphenyl)phosphate] which are water dispersion liquids O1 and O2 of a solid plasticizer prepared hereinabove in solid content ratio of 50:50 by weight, followed by agitating until attaining to a uniform liquid to obtain a thermally- and pressure-sensitive adhesive having a solid concentration of 47% by weight. Formulating ratio herein is 17 parts by weight of the thermoplastic resin (the acrylic-based polymer) and 26 parts by weight of the tackifier (the terpene resin) based on 100 parts by weight of the solid plasticizer.

The thermally- and pressure-sensitive adhesive prepared hereinabove was coated on one surface of a polyvinylchloride-made shrink film having the thickness of 25 μm using a barcoater so that a coating amount after drying becomes 10 g/$m^2$, followed by drying at 40°C for 2 minutes. The film was cut into the width of 7 cm and the length of 29 cm, and it was cylindrically formed so that a pressure-sensitive adhesive layer is situated inside and both edges are adhered each other by an adhesive to obtain a shrink label. The shrink label was temporarily fixed at a position of an outside of a polyethylene terephthalate-made bottle (hereinafter, occasionally referred to as merely "PET bottle"), and it was placed in an oven of 100°C for 3 minutes. As a result, the shrink label was able to be fixed at a desired position by a shrinking force of the shrink label and tackiness of the pressure-sensitive adhesive.

Example O2

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of bis(cis-3,3,5-trimethylcyclohexyl)phthalate and trimethylhydroquinone diacetate which are the water dispersion liquids O1 and O3 of a solid plasticizer prepared hereinabove in solid content ratio of 50:50 by weight, followed by agitating until attaining to a uniform liquid to obtain a thermally- and pressure-sensitive adhesive (a thermoplastic resin composition) having a solid concentration of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer.

The thermally- and pressure-sensitive adhesive prepared hereinabove was coated on a surface for printing of an polyethylene-made shrink film having one printed surface and the thickness of 30 μm by gravure coating in a stripe-state of the width of 1 mm-interval, followed by drying at 40°C. The film was cut into the width of 7 cm and the length of 29 cm, and it was cylindrically formed so that the thermally- and pressure-sensitive adhesive layer is situated inside and both edges are adhered each other by heat sealing to obtain a shrink label. The shrink label was temporarily fixed at a position of an outside of a PET bottle, and it was placed in an oven of 120°C for 3 minutes. As a result, the shrink label was able to be fixed at a desired position by a shrinking force of the shrink label and tackiness of the pressure-sensitive adhesive.

Example O3

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of bis(cis-3,3,5-trimethylcyclohexyl)phthalate, resorcinol bis[di(2,6-dimethylphenyl)phosphate], and trimethylhydroquinone diacetate which are the water dispersion liquids O1-O3 of a solid plasticizer prepared hereinabove in solid content ratio of 35:35:35 by weight, followed by agitating until attaining to a uniform liquid to obtain a thermally- and pressure-sensitive adhesive (a thermoplastic resin composition) having a solid concentration of 48% by weight.

Formulating ratio herein is 17 parts by weight of the thermoplastic resin (the acrylic-based polymer) and 26 parts by weight of the tackifier (the terpene resin) based on 100 parts by weight of the solid plasticizer.

The thermally- and pressure-sensitive adhesive prepared hereinabove was coated on opposite surface of a surface for printing of an polyethylene-made shrink film having one printed surface and the thickness of 30 μm by gravure coating in a dot-state, followed by drying at 40°C. The film was cut into the width of 7 cm and the length of 29 cm, and it was cylindrically formed so that the thermally- and pressure-sensitive adhesive layer is situated inside and both edges are adhered each other by heat sealing to obtain a shrink label.

The shrink label was temporarily fixed at a position of an outside of a PET bottle, and it was placed in an oven of 120°C for 3 minutes. As a result, the shrink label was able to be fixed at a desired position by a shrinking force of the shrink label and tackiness of the pressure-sensitive adhesive.

Example O4

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of bis(cis-3,3,5-trimethylcyclohexyl)phthalate, resorcinol bis[di(2,6-dimethylphenyl)phosphate], trimethylhydroquinone diacetate, and dicyclohexyl phthalate which are the water dispersion liquids O1-O4 of a solid plasticizer prepared hereinabove in solid content ratio of 30:30:30:10 by weight, followed by agitating until attaining to a uniform liquid to obtain a thermally- and pressure-sensitive adhesive (a thermoplastic resin composition) having a solid content of 45% by weight. Formulating ratio herein is 17 parts by weight of the thermoplastic resin (the acrylic-based polymer) and 26 parts by weight of the tackifier (the terpene resin) based on 100 parts by weight of the solid plasticizer.

The thermally- and pressure-sensitive adhesive prepared hereinabove was coated on a surface for printing of an polyethylene-made shrink film having one printed surface and the thickness of 25 μm by gravure coating at 1 $cm^2$-portion alone in a range of the width of 7 cm and the length of 29 cm, followed by drying at 40°C. The film was cut into the width of 7 cm and the length of 29 cm, and it was cylindrically formed so that the thermally- and pressure-sensitive adhesive layer is situated inside and both edges are adhered each other by heat sealing to obtain a shrink label. The shrink label was temporarily fixed at a position of an outside of a PET bottle, and it was placed in an oven of 120°C for 3 minutes. As a result, the shrink label was able to be fixed at a desired position by a shrinking force of the shrink label and tackiness of the thermally- and pressure-sensitive adhesive.

Comparative Example O1

A polyvinylchloride-made shrink film having the thickness of 25 μm was cut into the width of 7 cm and the length of 29 cm, and it was cylindrically formed so that both edges are adhered each other by an adhesive to obtain a shrink label. The shrink label was temporarily fixed at a position of an outside of a PET bottle, and it was placed in an oven of 100°C for 3 minutes. As a result, the shrink label was able to be fixed at a desired position by a shrinking force of the shrink label.

Comparative Example O2

A polyethylene-made shrink film having one printed surface and the thickness of 30 μm was cut into the width of 7 cm and the length of 29 cm, and it was cylindrically formed so that a printed surface becomes inside and both edges are adhered each other by heat-sealing to obtain a shrink label. The shrink label was temporarily fixed at a position of an outside of a PET bottle, and it was placed in an oven of 120°C for 3 minutes. As a result, the label was able to be fixed at a desired position by a shrinking force of the shrink label.

Comparative Example O3

A water-based emulsion of an acrylic-based polymer (2-ethylhexylacrylate-styrene-acrylic acid copolymer having a glass transition temperature Tg of 25°C) which is a thermoplastic resin, a water-based emulsion of a terpene resin which is a tackifier, and water were added to the water dispersion liquid of dicyclohexyl phthalate (the water dispersion liquid 4 of a solid plasticizer) prepared hereinabove, followed by agitating until attaining to a uniform liquid to obtain a thermally- and pressure-sensitive adhesive having a solid concentration of 50% by weight. Formulating ratio herein is 17 parts by weight of the thermoplastic resin (the acrylic-based polymer) and 26 parts by weight of the tackifier (the terpene resin) based on 100 parts by weight of the solid plasticizer (dicyclohexyl phthalate).

The thermally- and pressure-sensitive adhesive prepared hereinabove was coated on a surface for printing of an polyvinylchloride-made shrink film having one printed surface and the thickness of 25 μm using a barcoater so that a coating amount after drying becomes 10 $g/m^2$, followed by drying at 40°C for 2 minutes. The film was cut into the width of 7 cm and the length of 29 cm, and it was cylindrically formed so that the thermally- and pressure-sensitive adhesive layer is situated inside and both edges are adhered each other by heat sealing to obtain a shrink label.

The shrink label was temporarily fixed at a position of an outside of a PET bottle, and it was placed in an oven of 100°C for 3 minutes. As a result, the shrink label was able to be fixed at a desired position by a shrinking force of the shrink label and tackiness of the pressure-sensitive adhesive.

Performance test

(transparency)

A PET bottle on which a shrink label is stuck was placed under an atmosphere of 23°C and 50% RH, and transparency was visually evaluated after 1 day, 1 month, and 3 months. Results are shown in Table 18.

(Adhesive property)

There was repeated 10 times a cycle test that a PET bottle on which a shrink label is stuck was placed under a condition of -5°C for 10 hours, a condition of 23°C and 50% RH for 10 hours, a condition of 40°C and 80% RH for 10 hours, a condition of 23°C and 50% RH for 10 hours. The presence or the absence of fall of the label was confirmed, and the absence of fall was evaluated as "o", and the presence of fall was evaluated as "x". Results are shown in Table 18.

Table 18

| | Transparency | | | Adhesive property |
|---|---|---|---|---|
| | After | | | |
| | 1-day | 1-month | 3-months | o |
| Example 01 | Trans. | Trans. | Trans. | o |
| Example 02 | Trans. | Trans. | Trans. | o |
| Example 03 | Trans. | Trans. | Trans. | o |
| Example 04 | Trans. | Trans. | Trans. | o |
| Comparative Example 01 | Trans. | Trans. | Trans. | x |
| Comparative Example 02 | Trans. | Trans. | Trans. | x |
| Comparative Example 03 | Trans. | Opaque | Opaque | x |

In the Table 18, Trans. means "transparent".

From the results of the Table 18, it is evident that the labels in the Comparative Examples O1 and O2 were not able to follow deformation by a change of surroundings, and dropped. In the label of the Comparative Example O3, the solid plasticizer changed to "Opaque" by recrystallization after 1 month, and the printing portion became indistinct, and it dropped by decline of adhesive strength. On the other hand, the labels of the Examples O1-O4 maintained a high transparency even after 3-months and, did not also drop without decline of adhesive strength.

Example P1

2-liter reaction vessel equipped with an agitator, a reflux condenser, a dropping funnel, a tube for introducing nitrogen, and a thermometer was charged with 219 parts by weight of isopropylalcohol (hereinafter, abbreviated to "IPA"), and 0.62 part by weight of azobisisobutyronitrile (hereinafter, abbreviated as "AIBN") was added while agitating to dissolve, followed by heating to 80°C. As copolymerizable components, there were mixed 135.7 parts by weight of methylmethacrylate (MMA), 86.3 parts by weight of n-butylacrylate (BA), 7.39 parts by weight of acrylic acid (AA), 4.94 parts by weight of 3-methacryloxypropyl trimethoxy silane (A-174 manufactured by Nihon Unicar, Ltd.), and 12.3 parts by weight of an α-(3-methacryloxypropyl)polydimethylsiloxane (FM-0711 manufactured by Chisso, Ltd.), followed by adding dropwise into the reaction vessel using the dropping funnel over approximately 4 hours. After the completion of the dropwise addition, 0.25 part by weight of AIBN which is an additional catalyst was dissolved in 25 parts by weight of IPA, and it was added dropwise into the reaction vessel, and reaction was further continued for 2 hours.

After the completion of the polymerization, 6.95 parts by weight of 25 wt%-aqueous ammonia was added into the reaction vessel, and 705 parts by weight of water was added dropwise into the reaction vessel over approximately 2 hours while agitating to emulsify.

After being emulsified, a desired water-based resin composition was obtained by evaporating IPA using a rotary evaporator. In the water-based resin composition, solid content was 40% by weight.

Example P2

The same polymerization reaction and emulsifying were carried out as in the Example P1 except that the amount of n-butylacrylate was changed to 74.0 parts by weight and the amount of the α-(3-methacryloxypropyl)polydimethylsiloxane (FM-0711) was changed to 24.7 parts by weight as copolymerizable components to obtain a water-based resin composition.

Example P3

The same polymerization reaction and emulsifying were carried out as in the Example P1 except that the amount of n-butylacrylate was changed to 49.3 parts by weight and the amount of the α-(3-methacryloxypropyl)polydimethylsiloxane (FM-0711) was changed to 49.3 parts by weight as copolymerizable components to obtain a water-based resin composition.

Example P4

The same polymerization reaction and emulsifying were carried out as in the Example P1 except that n-butylacrylate was not employed and the amount of the α-(3-methacryloxypropyl) polydimethylsiloxane (FM-0711) was changed to 98.7 parts by weight as copolymerizable components to obtain a water-based resin composition.

Example P5

The same polymerization reaction and emulsifying were carried out as in the Example P1 except that 12.3 parts by weight of the α-(3-methacryloxypropyl)polydimethyl siloxane (FM-0725 manufactured by Chisso, Ltd.) was employed in place of FM-0711 as copolymerizable components to obtain a water-based resin composition.

Example P6

The same polymerization reaction and emulsifying were carried out as in the Example P5 except that the amount of n-butylacrylate was changed to 74.0 parts by weight and the amount of the α-(3-methacryloxypropyl)polydimethylsiloxane (FM-0725) was changed to 24.7 parts by weight as copolymerizable components to obtain a water-based resin composition.

Example P7

The same polymerization reaction and emulsifying were carried out as in the Example P5 except that the amount of n-butylacrylate was changed to 49.3 parts by weight and the amount of the α-(3-methacryloxypropyl)polydimethylsiloxane (FM-0725) was changed to 49.3 parts by weight as copolymerizable components to obtain a water-based resin composition.

Example P8

The same polymerization reaction and emulsifying were carried out as in the Example P5 except that the amount of n-butylacrylate was not employed and the amount of the α-(3-methacryloxypropyl) polydimethylsiloxane (FM-0725) was changed to 98.7 parts by weight as copolymerizable components to obtain a water-based resin composition.

Example P9

The same polymerization reaction and emulsifying were carried out as in the Example P1 except that 12.3 parts by weight of a polymethyl(3-methacryloxypropyl)siloxane (F3-009-05 manufactured by Nihon Unicar, Ltd.) was employed in place of the FM-0711 as copolymerizable components to obtain a water-based resin composition.

Comparative Example P1

The same polymerization reaction and emulsifying were carried out as in the Example P1 except that 3-methacryloxypropyl trimethoxy silane (A-174) was not employed as a copolymerizable component to obtain a water-based resin composition.

Comparative Example P2

The same polymerization reaction and emulsifying were carried out as in the Example P1 except that the α-(3-methacryloxypropyl) polydimethylsiloxane (FM-0711) was not employed as a copolymerizable component to obtain a water-based resin composition.

Comparative Example P3

The same polymerization reaction and emulsifying were carried out as in the Example P9 except that the 3-methacryloxypropyl trimethoxy silane (A-174) was not employed as a copolymerizable component to obtain a water-based resin composition.

Comparative Example P4

The same polymerization reaction and emulsifying were carried out as in the Example P1 except that the 3-methacryloxypropyl trimethoxy silane (A-174) and the α-(3-methacryloxypropyl) polydimethylsiloxane (FM-0711) were not employed as copolymerizable components to obtain a water-based resin composition.

Composition of the water-based resin compositions obtained in the Examples P1-P9 and the Comparative Examples P1-P4 was collectively shown in Table 19.

Table 19

Table for Resin composition

| | Example | | | | | | | | | Comparative Example | | | |
|---|---|---|---|---|---|---|---|---|---|---|---|---|---|
| | P1 | P2 | P3 | P4 | P5 | P6 | P7 | P8 | P9 | P1 | P2 | P3 | P4 |
| MMA | 135.7 | 135.7 | 135.7 | 135.7 | 135.7 | 135.7 | 135.7 | 135.7 | 135.7 | 135.7 | 135.7 | 135.7 | 135.7 |
| BA | 86.3 | 74.0 | 49.3 | — | 86.3 | 74.0 | 49.3 | — | 86.3 | 86.3 | 86.3 | 86.3 | 86.3 |
| AA | 7.39 | 7.39 | 7.39 | 7.39 | 7.39 | 7.39 | 7.39 | 7.39 | 7.39 | 7.39 | 7.39 | 7.39 | 7.39 |
| A-174 | 4.94 | 4.94 | 4.94 | 4.94 | 4.94 | 4.94 | 4.94 | 4.94 | 4.94 | — | 4.94 | — | — |
| FM-0711 | 12.3 | 24.7 | 49.3 | 98.7 | — | — | — | — | — | 12.3 | — | — | — |
| FM-0725 | — | — | — | — | 12.3 | 24.7 | 49.3 | 98.7 | — | — | — | — | — |
| F3-009-05 | — | — | — | — | — | — | — | — | 12.3 | — | — | 12.3 | — |

(Formulation of a water-based coating)

From the water-based resin compositions obtained in the Examples P1-P9 and the Comparative Examples P1-P4, a water-based coating agent was obtained according to the formulation shown in Table 20 described below.

Table 20

| | |
|---|---|
| Titanium oxide(R630 manufactured by Ishihara Sangyo) | 31.34 parts by weight |
| Hydroxyethyl cellulose (SP600 manufactured by Daicel Kagaku Kogyo) | 0.27 parts by weight |
| Deionized water | 7.73 parts by weight |
| 4% sodium tripolyphosphate | 3.40 parts by weight |
| Defoaming agent | 0.43 parts by weight |
| Anti-bacterial agent | 0.43 parts by weight |
| Primal 850 (manufactured by Roam & Haas, Ltd.) | 0.68 parts by weight |
| Water-based resin composition (solid content) | 53.32 parts by weight |

(Test Example)

In relation to the water-based resin compositions obtained in the Examples P1-P9 and the Comparative Examples P1-P4 and the water-based coating agents, performance evaluations were carried out as described below.

1. Water resistance test

Water-based resin composition in which the solid content was adjusted to 20% by weight was coated on an acrylic resin plate using a No. 12 barcoater, and it was dried by curing at 105°C for 5 minutes. After that, the acrylic resin plate was immersed in a water tank at 20°C for 7 days to visually evaluate a change in a coating layer.

◎: no changed, o: partially whitened, △: whitened, x: no coating layer (dissolved)

2. Hot water resistance test

Water-based resin composition in which the solid content was adjusted to 20% by weight was coated on an acrylic resin plate using a No. 14 barcoater, and it was dried by curing at 105°C for 5 minutes. After that, the acrylic resin plate was immersed in a water tank at 80°C for 2 hours to visually evaluate a change in a coating layer.

◎: no changed, o: partially whitened, △: whitened, x: no coating layer (dissolved)

3. Solvent resistance test

In relation to a coating layer formed on an acrylic resin plate likewise prepared as in the water resistance test, a rubbing test was conducted using a cotton swab containing methanol. There was measured the number of times requiring until dissolving of a coating layer.

4. Adhesion test

Water-based resin composition in which the solid content was adjusted to 20% by weight was coated on a polyethylene terephthalate plate (a PET plate) using a No. 14 barcoater, and it was dried by curing at 105°C for 5 minutes. After that, a cross-hatched test was conducted using a cellophane tape in relation to the PET plate to visually evaluate a residual condition of the coating layer. There is shown the number of residual coating layer in 100 pieces.

5. Weatherability test

The water-based coating agent which is modified into a water-based coating composition was coated on an aluminum plate using the No. 12 barcoater, followed by drying by curing at 105°C for 5 minutes to prepare test pieces.

The test pieces were set in a QUV accelerating weatherability test machine, an accelerating weatherability test was conducted for 1500 hours, and gloss retention ratio was quantitatively measured with a gloss meter.

6. Staining resistance test

The same pieces as in the weatherability test were placed in an outside to conduct a natural exposure test for 1 month, and staining conditions were visually evaluated.

◎: no stained, o: partially stained, △: stained, x: deterioration in the coating layer

Results in the above tests are shown in Table 21.

Table 21

| | | water resistance | hot water resistance | solvent resistance | adhesion | weatherability gloss retention ratio (%) | staining resistance |
|---|---|---|---|---|---|---|---|
| Example | P1 | ◎ | ○ | ≥30 times | 100/100 | 85 | ◎ |
| | P2 | ◎ | ○ | ≥30 times | 100/100 | 90 | ◎ |
| | P3 | ◎ | ○ | ≥30 times | 100/100 | 92 | ◎ |
| | P4 | ◎ | ○ | ≥30 times | 100/100 | 96 | ◎ |
| | P5 | ◎ | ◎ | ≥30 times | 100/100 | 87 | ◎ |
| | P6 | ◎ | ◎ | ≥30 times | 100/100 | 90 | ◎ |
| | P7 | ◎ | ◎ | ≥30 times | 100/100 | 94 | ◎ |
| | P8 | ◎ | ◎ | ≥30 times | 100/100 | 98 | ◎ |
| | P9 | ◎ | ◎ | ≥30 times | 100/100 | 94 | ◎ |
| Comparative Example | P1 | △ | △ | 5 times | 74/100 | 75 | ○ |
| | P2 | ○ | △ | 20 times | 93/100 | 60 | △ |
| | P3 | △ | △ | 10 times | 76/100 | 77 | ○ |
| | P4 | × | × | 2 times | 21/100 | deterioration of coating layer | × |

From the Table 21, the water-based coating agents in the Examples P1-P9 are more excellent in water resistance, solvent resistance, and adhesion, and also in weatherability and staining resistance. On the other hand, the coating agent in the Comparative Example P2 is poorer in weatherability and staining resistance, and the coating agents in the Comparative Examples P1 and P3 is particularly poorer in water resistance, solvent resistance, and adhesion.

Preparation Example Q1

Synthesis of a copolymer (Polymeric dispersant) for a shell component

2-liter reaction vessel equipped with an agitator, a reflux condenser, a dropping funnel, a tube for introducing nitrogen, and a thermometer was charged with 220 parts by weight of isopropylalcohol (hereinafter, abbreviated to "IPA"), and 2.6 part by weight of azobisisobutyronitrile (hereinafter, abbreviated as "AIBN") was added while agitating to dissolve, followed by heating to 80°C. As copolymerizable components, there were mixed 137.5 parts by weight of methylmethacrylate (hereinafter, abbreviated as "MMA"), 75.0 parts by weight of n-butylacrylate (hereinafter, abbreviated as "BA"), 25.0 parts by weight of acrylic acid (hereinafter, abbreviated as "AA"), and 12.5 parts by weight of Blemmer PE200 (manufactured by Nihon yushi), followed by adding dropwise a mixture of the copolymerizable components into the reaction vessel using the dropping funnel over approximately 3 hours. After the completion of the dropwise addition, 1.0 part by weight of AIBN which is an additional catalyst was dissolved in 25 parts by weight of IPA, and it was added dropwise into the reaction vessel, and reaction was further continued for 2 hours. After the completion of the polymerization, 23.6 parts by weight of 25 wt%-aqueous ammonia was added into the reaction vessel, and 875 parts by weight of water was added dropwise into the reaction vessel over approximately 1 hour while agitating to emulsify. After having been emulsified, a desired shell component was obtained by evaporating IPA using a rotary evaporator. In the shell component (a polymeric dispersant), solid concentration was 28.5% by weight, and Tg (a calculated value) was 35°C.

Preparation Examples Q2-Q7

The same preparation was likewise conducted as in the Preparation Example Q1 except that monomer composition as shown in Table 22 was applied to synthesize a copolymer for shell components (a polymeric dispersant).

Table 22

| Copolymer for shell components | | | | | | | |
|---|---|---|---|---|---|---|---|
| | Preparation Example | | | | | | |
| | Q1 | Q2 | Q3 | Q4 | Q5 | Q6 | Q7 |
| Monomer composition (part by weight) | | | | | | | |
| MMA | 137.5 | 0 | 37.5 | 200.0 | 212.5 | 160.0 | 25.0 |
| BA | 75.0 | 212.5 | 175.0 | 12.5 | 0 | 75.0 | 75.0 |
| AA | 25.0 | 25.0 | 25.0 | 25.0 | 25.0 | 2.5 | 137.5 |
| Blemmer PE200 | 12.5 | 12.5 | 12.5 | 12.5 | 12.5 | 12. 5 | 12.5 |
| Total | 250.0 | 250.0 | 250.0 | 250.0 | 250.0 | 250.0 | 250.0 |
| solid concentration (% by weight) | 28.5 | 29.1 | 29.0 | 29.3 | 29.1 | 29.2 | 29.0 |
| T g (°C) (calculated value) | 35 | -41.4 | -24.6 | 88.9 | 102.1 | 34.8 | 35.2 |

Example Q1

Synthesis of a core/shell type water-based emulsion

210.8 parts by weight (solid content by weight: 60.1 parts by weight) of Polymeric dispersant 2 synthesized in the Preparation Example Q1 was dissolved in 87.9 parts by weight of a deionized water, and then, 28.8 parts by weight of styrene (hereinafter, abbreviated as "ST"), 7.2 parts by weight of 2-ethylhexylacrylate (hereinafter, abbreviated as "EHA"), 24.0 parts by weight of Epikote 828 (manufactured by Yuka Shell Epoxy), and 0.6 part by weight of t-dodecyl mercaptan (hereinafter, abbreviated as "TDM") were added to prepare a pre-emulsion with a homogenizer.

The pre-emulsion was charged in a 2-liter reaction vessel equipped with an agitator, a reflux condenser, a

dropping funnel, a tube for introducing nitrogen, and a thermometer, followed by heating to 60°C. When the reaction vessel attained to 60°C, a polymerization was initiated by dropping an aqueous solution in which 0.34 part by weight of Perbutyl H69 (manufactured by Nihon Yushi, Ltd.) was dissolved in 14 parts by weight of a deionized water and an aqueous solution in which 0.34 part by weight of Redol C (manufactured by Sumitomo Seika) was dissolved in 3.5 parts by weight of a deionized water. After having polymerized for 1.5 hour, there were added dropwise an aqueous solution in which 0.14 part by weight of Perbutyl H69 was added to 6 parts by weight of a deionized water and an aqueous solution in which 0.14 part by weight of Redol C was added to 1.5 parts by weight of a deionized water which are an additional catalyst, and aging was further conducted for 1.5 hour to prepare a water-based emulsion. The water-based emulsion has a solid concentration of 29% by weight, pH of 8.5, and viscosity at 30°C by a B-type viscometer of 11.0 cp.

Synthesis of a water-based coating composition

Subsequently, 384 parts by weight of a Na silicate (x=4, concentration of 30% by weight) was mixed with 99.3 parts by weight of the water-based emulsion, and diluted by 454.8 parts by weight of a deionized water to prepare a target water-based coating composition. The water-based coating composition has a solid concentration of 15% by weight, pH of 11, and viscosity at 30°C by a B-type viscometer of 3 cp. In relation to the water-based coating composition, storage stability test and adhesion test were conducted as described below.

(Storage stability test)

The water-based coating composition was placed in a closed vessel, and the closed vessel was placed in a hot air circulating dryer at 50°C for 7 days. Conditions of the composition after having placed was visually evaluated.

o: no changed

△: slight increase in viscosity

x: generation of grits

(Adhesion test)

A calcium silicate plate having 1 m x 1 m was cut to prepare a gap having the width of 1 cm and the depth of 4 mm at interval of 10 cm. The calcium silicate plate which is a base plate was preheated at 100°C for 8 minutes, followed by coating the water-based coating composition by a sprayer at 80 g/$m^2$ (amount in wet). After having placed for 40 seconds, there was coated a water-diluted product having concentration of 20% of Ales Aqua Gloss (a water-based acrylic coating for a wall manufactured by Kansai Paint) at 110 g/$m^2$ (amount in wet), followed by drying at 100°C for 4 minutes.

After having placed a coating material obtained at room temperatures for 24 hours, the adhesion test of a coating layer which is regulated according to JIS A 5422 was conducted to measure a peeled ratio (%) of the coating layer as an evaluation of adhesion. Also, there was conducted an adhesion test after being immersed in warm water at 60°C.

Examples Q2-Q15

Core/shell type water-based emulsions were prepared by the same operations as in the Example Q1 except that there were employed copolymers for shell components in the respective preparation Examples shown in Table 23, and respective monomers shown in Table 23 were employed as core components.

Subsequently, respective target water-based coating compositions were obtained by mixing respective water-based emulsions with a Na silicate (x=4, concentration of 30% by weight) or a Li silicate (x=4.5, concentration of 22.2% by weight: Example Q6) at the silicate weight ratio with respect to the emulsions shown in Table 23 according to the same operations as in the Example Q1.

In relation to the respective water-based coating compositions obtained, the same storage stability test and adhesion test were conducted as in the Example Q1.

Examples Q16-Q21 and Comparative Examples Q1-Q4

Core/shell type water-based emulsions were synthesized by the same operations as in the Example Q1 except that the polymers in the respective Preparation Examples shown in Table 24 were employed as copolymers for shell components, and the respective monomers shown in Table 24 were employed as core components.

Subsequently, respective water-based coating compositions were obtained by mixing the respective water-based emulsions with a Na silicate (x=4, concentration of 30% by weight) at the silicate weight ratio with respect to the emulsions shown in Table 24 according to the same operations as in the Example Q1.

In relation to the water-based coating compositions obtained, the same storage stability test and adhesion test were conducted as in the Example Q1.

Comparative Example Q5

In relation to the core/shell type water-based emulsion alone prepared in the Example Q1, the same storage stability test and adhesion test were conducted as in the Example Q1.

Comparative Example Q6

In relation to the Na silicate alone employed in the Example Q1, the same storage stability test and adhesion test were conducted as in the Example Q1.

Comparative Example Q7

In a 1-liter flask, 3.15 parts by weight of Emulgen 935 (manufactured by Kao) was dissolved in 35.0 parts by weight of a deionized water while agitating. Further, 28.2 parts by weight of ST, 7.2 parts by weight of EHA, 24.0 parts by weight of Epikote 828, and 0.6 part by weight of TDM were fed into a homogenizer to prepare a pre-emulsion.

51.3 parts by weight of a deionized water was charged into a 2-liter reaction vessel equipped with an agitator, a reflux condenser, a dropping funnel, a tube for introducing nitrogen, and a thermometer, followed by heating to 60°C while agitating. When the reaction vessel attained to 60°C, there were added dropwise an aqueous solution in which 0.21 part by weight of Perbutyl H69 was dissolved in 12.3 parts by weight of a deionized water, an aqueous solution in which 0.21 part by weight of Resol C was dissolved in 12.3 parts by weight of a deionized water, and the above-described pre-emulsion from the dropping funnel over 3 hours to conduct a polymerization.

After the completion of the dropwise addition, aging was further continued for 3 hours and, after cooling, neutralization was conducted until attaining to pH of 8.5 by 25%-aqueous ammonia to prepare core components. The core components have a solid concentration of 35% by weight and pH of 8.5.

Subsequently, a 2-liter reaction vessel equipped with an agitator, a reflux condenser, a dropping funnel, a tube for introducing nitrogen, and a thermometer was charged with 171.4 parts by weight of the core components and 104.19 parts by weight of a deionized water, followed by heating to 60°C. When the reaction vessel attained to 60°C, there were added dropwise an aqueous solution in which 0.46 part by weight of Perbutyl H69 was dissolved in 32.2 parts by weight of a deionized water, an aqueous solution in which 0.46 part by weight of Resol C was dissolved in 32.2 parts by weight of a deionized water, and a mixture composed of 33.0 parts by weight of MMA, 18.0 parts by weight of BA, 3.0 parts by weight of AA, and 1.5 part by weight of Blemmer PE200 from the dropping funnel over 2 hours to conduct a polymerization. After the completion of the dropwise addition, aging was further continued for 3 hours and, after cooling, neutralization was conducted until attaining to pH of 8.5 by 25%-aqueous ammonia to obtain a water-based emulsion. The water-based emulsion has a solid concentration of 29% by weight, pH of 8.5, and a viscosity by a B-type viscometer of 9 cp at 30°C.

Further, according to the same operations as in the Example Q1, the water-based emulsion was mixed with a Na silicate (x=4, concentration of 30% by weight) in the mixing ratio by weight of the emulsion/the silicate of 2:8. By mixing the Na silicate, gelation was caused.

In the Example, since acrylic acid was added after synthesis of the copolymer for core components, it is thought that acrylic acid having a slow polymerization rate is not completely polymerized in the shell portion and a polyacrylic acid is relatively produced in a water phase, resulting in that a target core/shell type structure is not formed. It is thought that the emulsion becomes unstable by mixing of the Na silicate because of the polyacrylic acid in the water phase, resulting in that gelation is caused.

Table 23

| | Example | | | | | | | | | | | | | | |
|---|---|---|---|---|---|---|---|---|---|---|---|---|---|---|---|
| | Q1 | Q2 | Q3 | Q4 | Q5 | Q6 | Q7 | Q8 | Q9 | Q10 | Q11 | Q12 | Q13 | Q14 | Q15 |
| Shell Components | Preparation Example | | | | | | | | | | | | | | |
| Amount (part by weight) | Q1 60 | Q1 60 | Q1 60 | Q1 60 | Q1 60 | Q1 60 | Q1 60 | Q1 60 | Q1 60 | Q1 60 | Q1 60 | Q3 60 | Q4 60 | Q1 24 | Q1 96 |
| Monomer for core components (part by weight) | | | | | | | | | | | | | | | |
| ST | 28.2 | 28.2 | 28.2 | 28.2 | 28.2 | 28.2 | 28.2 | 28.2 | 24.2 | 39.4 | 49.4 | 28.2 | 28.2 | 45.1 | 17.6 |
| EHA | 7.2 | 7.2 | 7.2 | 7.2 | 7.2 | 7.2 | 7.2 | 7.2 | 11.2 | — | — | 7.2 | 7.2 | 11.5 | 4.5 |
| EP828 | 24 | — | — | — | — | 24 | 24 | 24 | 24 | 20 | 10 | 24 | 24 | 38.4 | 15 |
| GMA | — | 24 | — | — | — | — | — | — | — | — | — | — | — | — | — |
| M-GMA | — | — | 24 | — | — | — | — | — | — | — | — | — | — | — | — |
| CYM | — | — | — | 24 | — | — | — | — | — | — | — | — | — | — | — |
| CHPMA | — | — | — | — | 24 | — | — | — | — | — | — | — | — | — | — |
| TDM | 0.6 | 0.6 | 0.6 | 0.6 | 0.6 | 0.6 | 0.6 | 0.6 | 0.6 | 0.6 | 0.6 | 0.6 | 0.6 | 0.97 | 0.38 |
| core components Tg (℃) | -24.6 | 42.2 | 62.6 | 69.3 | 47.7 | -24.6 | -24.6 | -24.6 | -35.0 | 10.0 | 50.2 | -24.6 | -24.6 | -24.6 | -24.6 |
| Core/shell ratio | 5:5 | 5:5 | 5:5 | 5:5 | 5:5 | 5:5 | 5:5 | 5:5 | 5:5 | 5:5 | 5:5 | 5:5 | 5:5 | 8:2 | 2:8 |
| Solid concentration (% by weight) | 29 | 29 | 29 | 29 | 29 | 29 | 29 | 29 | 29 | 29 | 29 | 29 | 29 | 29 | 29 |
| Viscosity (c p) | 11 | 10 | 10 | 11 | 11 | 11 | 11 | 11 | 11 | 11 | 11 | 11 | 11 | 15 | 19 |
| Water-soluble silicate | Na silicate | | | | | | | | | | | | | | |
| Emulsion/silicate ratio | 2:8 | 2:8 | 2:8 | 2:8 | 2:8 | 2:8 | 5:5 | 8:2 | 2:8 | 2:8 | 2:8 | 2:8 | 2:8 | 2:8 | 2:8 |
| Solid concentration (% by weight) | 15 | 15 | 15 | 15 | 15 | 15 | 15 | 15 | 15 | 15 | 15 | 15 | 15 | 15 | 15 |
| Viscosity (cp) | 3 | 2 | 2 | 2 | 2 | 3 | 3 | 3 | 3 | 3 | 3 | 3 | 3 | 3 | 3 |

In the Example Q6, a Li silicate is employed.

Table 24

| | Example | | Comp Example | | Example | | Comp Example | | Example | | Comparative Example | | |
|---|---|---|---|---|---|---|---|---|---|---|---|---|---|
| | Q16 | Q17 | Q1 | Q2 | Q18 | Q19 | Q3 | Q4 | Q20 | Q21 | Q5 | Q6 | Q7 |
| Shell Components | Preparation Example | | | | | | | | | | | | |
| | Q2 | Q5 | Q6 | Q7 | Q1 | Q1 | Q1 | Q1 | Q1 | Q1 | Q1 | — | — |
| Amount (part by weight) | 60 | 60 | 60 | 60 | 60 | 60 | 60 | 60 | 8 | 112 | 60 | | 60 |
| Monomer for core components (part by weight) | | | | | | | | | | | | | |
| ST | 28.2 | 28.2 | 28.2 | 28.2 | 20.2 | 39.4 | 28.2 | 28.2 | 52.6 | 3.8 | 28.2 | — | 28.2 |
| EHA | 7.2 | 7.2 | 7.2 | 7.2 | 15.2 | — | 7.2 | 7.2 | 13.4 | 1 | 7.2 | — | 7.2 |
| EP828 | 24 | 24 | 24 | 24 | 24 | 10 | 24 | 24 | 44.8 | 3.2 | 24 | — | 24 |
| GMA | — | — | — | — | — | — | — | — | — | — | — | — | — |
| M-GMA | — | — | — | — | — | — | — | — | — | — | — | — | — |
| CYM | — | — | — | — | — | — | — | — | — | — | — | — | — |
| CHPMA | — | — | — | — | — | — | — | — | — | — | — | — | — |
| TDM | 0.6 | 0.6 | 0.6 | 0.6 | 0.6 | 0.6 | 0.6 | 0.6 | 0.6 | 0.08 | 0.6 | — | 0.6 |
| core components Tg (℃) | -24.6 | -24.6 | -24.6 | -24.6 | -44.6 | 104.8 | -24.6 | -24.6 | -24.4 | -27.1 | -24.6 | — | -24.6 |
| Core/shell ratio | 5:5 | 5:5 | 5:5 | 5:5 | 5:5 | 5:5 | 5:5 | 5:5 | 15:1 | 1:15 | 5:5 | — | 5:5 |
| Solid concentration (% by weight) | 29 | 29 | 29 | 29 | 29 | 29 | 29 | 29 | gelation | 29 | 29 | — | 29 |
| Viscosity (cp) | 11 | 10 | 10 | 332 | 11 | 11 | 11 | 11 | — | 215 | 11 | — | 10 |
| Water-soluble silicate | Na silicate | | | | | | | | | | — | Na silicate | |
| Emulsion/silicate ratio | 2:8 | 2:8 | 2:8 | 2:8 | 2:8 | 2:8 | 1:15 | 15:1 | 2:8 | 2:8 | 10:0 | 0:10 | 2:8 |
| Solid concentration (% by weight) | 15 | 15 | gelation | 15 | 15 | 15 | 15 | 15 | — | 15 | 15 | 15 | gelation |
| Viscosity (cp) | 3 | 2 | — | 28 | 2 | 3 | 2 | 5 | — | 216 | 3 | 2 | — |

(Remarks of the Table 23 and Table 24)

Monomer abbreviations for the core components are as follows.

EP 828: Epikote 828

GMA: glycidylmethacrylate

M-GMA: methylglycidylmethacrylate

CYM: (3,4-epoxycyclohexyl)methylmethacrylate

CHPMA: 3-chloro-2-hydroxypropylmethacrylate

Table 25 shows the evaluation results in the Examples Q1-Q21 and Comparative Examples Q1-Q7.

From the Table 25, the emulsions in the Examples Q1-Q19 are excellent in the storage stability, and practically sufficient adhesion was obtained even in both of a plain portion and cutting portion (notches) of the calcium silicate base plate. Particularly, in the Examples Q1-Q15 which are preferred Examples, excellent results are obtained.

In the Example Q21, although the emulsion is excellent in the storage stability, adhesion in the cutting portion was slightly poor. In the Example Q20, a stable core/shell type emulsion was not obtained because the core components are too much compared to the shell components.

In the Comparative Examples Q2, Q3, Q4, Q5, and Q6, adhesion was poor. Further, in the Comparative Examples Q1 and Q7, evaluations were not able to be conducted because of gelation in mixing of the silicate.

Table 25

| | | Adhesion・Peeling ratio (%) of coating layer | | | | Storage stability |
|---|---|---|---|---|---|---|
| | | Room temperature after 24 hours | | 60℃-warm water after 24 hours immersion | | |
| | | Plain portion | Cutting portion (notch portion) | Plain portion | Cutting portion (notch portion) | |
| Example | Q1 | 0.2 | 2.1 | 0.3 | 2.5 | ○ |
| | Q2 | 0.3 | 1.9 | 0.2 | 2.3 | ○ |
| | Q3 | 0.2 | 2.1 | 0.2 | 2.3 | ○ |
| | Q4 | 0.3 | 2.0 | 0.2 | 2.3 | ○ |
| | Q5 | 0.4 | 2.6 | 0.3 | 2.5 | ○ |
| | Q6 | 0.2 | 1.7 | 0.3 | 3.1 | ○ |
| | Q7 | 0.6 | 3.7 | 0.7 | 3.6 | ○ |
| | Q8 | 0.9 | 4.2 | 0.8 | 4.4 | ○ |
| | Q9 | 0.3 | 2.3 | 0.4 | 2.6 | ○ |
| | Q10 | 0.2 | 2.4 | 0.2 | 2.7 | ○ |
| | Q11 | 0.3 | 2.8 | 0.2 | 2.6 | ○ |
| | Q12 | 0.4 | 3.0 | 0.5 | 3.3 | ○ |
| | Q13 | 0.5 | 3.3 | 0.4 | 3.7 | ○ |
| | Q14 | 0.4 | 2.9 | 0.6 | 3.2 | ○ |
| | Q15 | 0.6 | 3.4 | 0.9 | 4.1 | ○ |
| | Q16 | 1.5 | 4.9 | 1.7 | 5.0 | ○ |
| | Q17 | 2.0 | 5.2 | 2.3 | 5.3 | ○ |
| Comparative Example | Q1 | – | – | – | – | – |
| | Q2 | 2.1 | 5.6 | 10.5 | 36.2 | ○ |
| Example | Q18 | 1.3 | 4.5 | 1.5 | 4.7 | ○ |
| | Q19 | 1.7 | 4.6 | 1.9 | 4.8 | ○ |
| Comparative Example | Q3 | 4.9 | 29.4 | 16.1 | 43.1 | ○ |
| | Q4 | 18.4 | 69.1 | 19.9 | 74.5 | ○ |
| Example | Q20 | – | – | – | – | – |
| | Q21 | 1.9 | 5.1 | 3.1 | 6.9 | ○ |
| Comparative Example | Q5 | 90.8 | 97.2 | 98.6 | 99.1 | ○ |
| | Q6 | 13.5 | 59.6 | 18.2 | 72.9 | ○ |
| | Q7 | – | – | – | – | – |

## Claims

1. A thermoplastic resin composition containing a thermoplastic resin and a solid plasticizer, characterized in that said solid plasticizer is at least one compound selected from the group of three kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

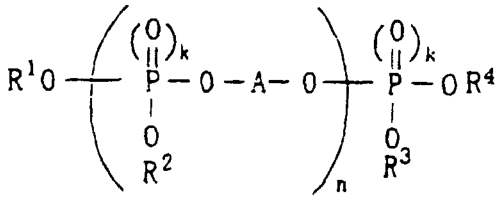

(1a)

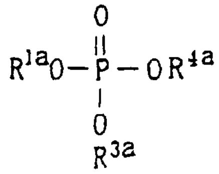

(1b)

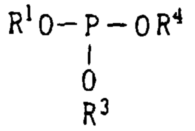

(1c)

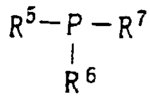

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or a heterocyclic group, respectively, A is a divalent hydrocarbon group or a heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by bonding of at least two groups, respectively.], and (iiia) a diester compound of (C) (c1) hydroquinone or lesorcinol wherein benzene ring may be substituted by an alkyl group, or (c2) catechol wherein benzene ring is substituted by an alkyl group with (D) an organic monobasic acid.

**2.** A thermoplastic resin composition containing a thermoplastic resin and a solid plasticizer, characterized in that said solid plasticizer is constructed by a combination of at least two compounds selected from the group of four kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

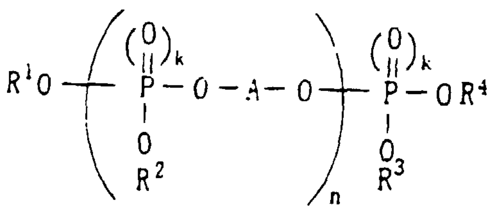

(1a)

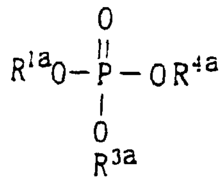

(1b)

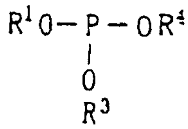

(1c)

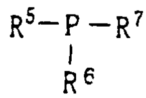

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or a heterocyclic group, respectively, A is a divalent hydrocarbon group or a heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by bonding of at least two groups, respectively.], and (iii) a dioxybenzene derivative, and (iv) dicyclohexyl phthalate.

3. A thermoplastic resin composition containing a thermoplastic resin and a solid plasticizer, characterized in that said solid plasticizer is constructed by a combination of the compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, and (ii) a phosphorus compound.

4. A thermoplastic resin composition as claimed in any one of claims 1-3, wherein said multiester compound (i) is a multiester compound of (A11) a substituted cyclohexanol substituted by at least one of an alkyl group and having at least 3 carbons in the alkyl group or (A21) an alcohol having a bridged ring containing at least one of a six-membered saturated carbon ring to which hydroxyl group or hydroxymethyl group is bonded with (B) a polybasic acid.

5. A thermoplastic resin composition as claimed in claim 4, wherein said substituted cyclohexanol is 3,3,5-trimethyl cyclohexanol.

6. A thermoplastic resin composition as claimed in claim 5, wherein said 3,3,5-trimethylcyclohexanol is selected from a cis-isomer, a trans-isomer, or a mixture thereof.

7. A thermoplastic resin composition as claimed in claim 4, wherein said multiester compound (i) is bis(3,3,5-trimethyl cyclohexyl)phthalate containing a trans-isomer and a cis-isomer in the ratio [trans-isomer/cis-isomer (weight ratio)] of 0/100-40/60.

8. A thermoplastic resin composition as claimed in claim 4, wherein said alcohol having a bridged ring is an alcohol having norbornane ring, norbornene ring, or adamantine ring.

9. A thermoplastic resin composition as claimed in claim 2, wherein said dioxybenzene derivative (iii) is a diester compound of (C) (c1) hydroquinone or lesorcinol wherein benzene ring may be substituted by an alkyl group, or (c2) catechol wherein benzene ring is substituted by an alkyl group with (D) an organic monobasic acid.

10. A thermoplastic resin composition containing a thermoplastic resin and a solid plasticizer, characterized in that said

solid plasticizer is a multi ester of a polybasic acid which does not bring about a morphological change to a testes of a rat when it is continuously given by an oral administration for 7 days in a dose of 1000 mg/kg.

**11.** A thermoplastic resin composition as claimed in claim 10, wherein said multi ester of a polybasic acid is a diester phthalate.

**12.** A thermoplastic resin composition as claimed in any one of claims 1-11, wherein the content of said solid plasticizer is 30-1000 parts by weight based on 100 parts by weight of said thermoplastic resin.

**13.** A thermoplastic resin composition as claimed in any one of claims 1-12, wherein a tackifier is further contained.

**14.** A thermoplastic resin composition as claimed in any one of claims 1-13, wherein said thermoplastic resin is a water-based composition dispersed in water.

**15.** A thermoplastic resin composition which contains a thermoplastic resin having a glass transition temperature of -10 to 25°C and a solid plasticizer, and said thermoplastic resin is a water-based thermoplastic resin composition dispersed in water, characterized in that said solid plasticizer is a phosphorus compound.

**16.** A thermally- and pressure-sensitive adhesive containing a thermoplastic resin composition as claimed in any one of claims 1-15.

**17.** A thermally- and pressure-sensitive adhesive containing a thermoplastic resin composition and a solid plasticizer, wherein said thermoplastic resin is constructed by an epoxy compound (E) and a polymer (F) of a polymerizable unsaturated compound.

**18.** A thermally- and pressure-sensitive adhesive as claimed in claim 17, wherein said thermoplastic resin is constructed by a polymer (F) and an epoxy compound (E) dispersed in the particle state in the polymer.

**19.** A thermally- and pressure-sensitive adhesive as claimed in claim 17 or 18, wherein said thermoplastic resin is contained in the form of a water-based emulsion in which there are dispersed in water polymer particles having a core-shell structure or a domain structure constructed by an epoxy compound (E) and a polymer (F) of a polymerizable unsaturated compound.

**20.** A thermally- and pressure-sensitive adhesive as claimed in any one of claims 17-19, wherein said epoxy compound (E) is an epoxy resin.

**21.** A thermally- and pressure-sensitive adhesive as claimed in any one of claims 17-20, wherein the content of said solid plasticizer is 15-200 parts by weight based on 100 parts by weight of said thermoplastic resin.

**22.** A thermally- and pressure-sensitive adhesive as claimed in any one of claims 17-21, wherein a tackifier is further contained.

**23.** A thermally- and pressure-sensitive adhesive containing a thermoplastic resin and a solid plasticizer, wherein that said solid thermoplastic resin is a polymer of a polymerizable unsaturated compound having a hydrolyzable silyl group.

**24.** A thermally- and pressure-sensitive adhesive as claimed in claim 23, wherein said thermoplastic resin is an acrylic-based polymer of a polymerizable unsaturated compound having a hydrolyzable silyl group.

**25.** A thermally- and pressure-sensitive adhesive as claimed in claim 23 or 24, wherein said thermoplastic resin is a polymer of monomer components containing 0.05-30% by weight of a polymerizable unsaturated compound having a hydrolyzable silyl group.

**26.** A thermally- and pressure-sensitive adhesive as claimed in any one of claims 23-25, wherein the content of said thermoplastic resin is 15-200 parts by weight based on 100 parts by weight of said solid plasticizer.

**27.** A thermally- and pressure-sensitive adhesive as claimed in any one of claims 23-26, wherein a tackifier is further contained.

**28.** A thermally- and pressure-sensitive adhesive as claimed in any one of claims 23-27, wherein said thermoplastic resin is a water-based composition dispersed in water.

**29.** A thermally- and pressure-sensitive adhesive containing a thermoplastic resin and a solid plasticizer, wherein a weight average molecular weight (Mw) of said thermoplastic resin is 100,000-500,000.

**30.** A thermally- and pressure-sensitive adhesive as claimed in claim 29, wherein said thermoplastic resin is an acrylic-based polymer.

**31.** A thermally- and pressure-sensitive adhesive as claimed in claim 29 or 30, wherein the content of said thermoplastic resin is 15-200 parts by weight based on 100 parts by weight of said solid plasticizer.

**32.** A thermally- and pressure-sensitive adhesive as claimed in any one of claims 29-31, wherein a tackifier is further contained.

**33.** A thermally- and pressure-sensitive adhesive as claimed in any one of claims 29-32, wherein said thermoplastic resin is a water-based composition dispersed in water.

**34.** A water-based thermally- and pressure-sensitive adhesive containing a thermoplastic resin and a solid plasticizer, characterized in that a decline of a melting point in said solid plasticizer versus a melting point of said solid plasticizer in a thermally- and pressure-sensitive adhesive layer formed by heating said water-based thermally- and pressure-sensitive adhesive at 40°C for 2 minutes on a base sheet is less than 3°C.

**35.** A water-based thermally- and pressure-sensitive adhesive as claimed in claim 34, wherein an average particle diameter is 1-10 microns in said water-based thermally- and pressure-sensitive adhesive.

**36.** A water-based thermally- and pressure-sensitive adhesive as claimed in claim 34 or 35, wherein said thermoplastic resin is an acrylic-based polymer.

**37.** A water-based thermally- and pressure-sensitive adhesive as claimed in any one of claims 34-36, wherein said solid plasticizer is dicyclohexylphthalate.

**38.** A thermally- and pressure-sensitive adhesive sheet, wherein a pressure-sensitive adhesive layer composed of a thermally- and pressure-sensitive adhesive as claimed in any one of claims 16-37 is coated on at least one surface of a base material.

**39.** A method for the preparation of a thermally- and pressure-sensitive adhesive sheet which comprises forming a pressure-sensitive adhesive layer composed of a thermally- and pressure-sensitive adhesive as claimed in any one of claims 16-37 by coating on at least one surface of a base material.

**40.** A thermally- and pressure-sensitive adhesive sheet, wherein a thermally- and pressure-sensitive adhesive layer containing a thermoplastic resin, a tackifier, and a solid plasticizer is coated on at least one surface of a base material, characterized in that an adhesive strength when being stuck to a body to be stuck after manifestation of tackiness by heating said thermally- and pressure-sensitive adhesive sheet is from 100 gf/25mm to 600 gf/25mm at a period of 6 months-lapse.

**41.** A thermally- and pressure-sensitive adhesive sheet as claimed in claim 40, characterized in that said thermally- and pressure-sensitive adhesive layer is formed by coating a water-based dispersed product of a thermally- and pressure-sensitive adhesive containing a thermoplastic resin, a tackifier, and a solid plasticizer over at least one surface of a base material sheet, followed by drying.

**42.** A thermally- and pressure-sensitive adhesive sheet as claimed in claim 40 or 41, wherein said thermoplastic resin is an acrylic-based polymer.

**43.** A thermally- and pressure-sensitive adhesive sheet as claimed in any one of claims 40-42, wherein said solid plasticizer is dicyclohexylphthalate.

**44.** A thermally- and pressure-sensitive adhesive sheet wherein a thermally- and pressure-sensitive adhesive layer

containing a thermoplastic resin, a tackifier, and a solid plasticizer is coated on at least one surface of a base material, characterized in that a coating amount of said thermally- and pressure-sensitive adhesive is less than 5 g/$m^2$, and an adhesive strength when being stuck to a body to be stuck after manifestation of tackiness by heating said thermally- and pressure-sensitive adhesive sheet is not less than 100 gf/25mm.

**45.** A thermally- and pressure-sensitive adhesive sheet as claimed in claim 44, characterized in that said thermally- and pressure-sensitive adhesive layer is formed by coating a water-based dispersed product of a thermally- and pressure-sensitive adhesive containing a thermoplastic resin, a tackifier, and a solid plasticizer over at least one surface of a base material sheet, followed by drying.

**46.** A thermally- and pressure-sensitive adhesive sheet as claimed in claim 44 or 45, wherein said adhesive strength when being stuck to a body to be stuck at a period of 5 minutes lapse after manifestation of tackiness by heating said thermally- and pressure-sensitive adhesive sheet is not less than 100 gf/25mm.

**47.** A thermally- and pressure-sensitive adhesive sheet as claimed in any one of claims 44-46, wherein said thermoplastic resin is an acrylic-based polymer.

**48.** A thermally- and pressure-sensitive adhesive sheet as claimed in any one of claims 44-47, wherein said solid plasticizer is dicyclohexylphthalate.

**49.** A recording sheet wherein an ink-absorbing layer composed of an acrylic-based polymer containing 5-50% by mol of a hydrophilic monomer which is a constructing monomer and a solid plasticizer is formed over at least one surface of a base material.

**50.** A recording sheet as claimed in claim 49, wherein said hydrophilic monomer is at least one selected from a monomer containing carboxylic group, a monomer containing hydroxyl group, and a monomer containing a polyoxyalkylene unit.

**51.** A recording sheet as claimed in claim 49, wherein said solid plasticizer is at least one compound selected from the group of three kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

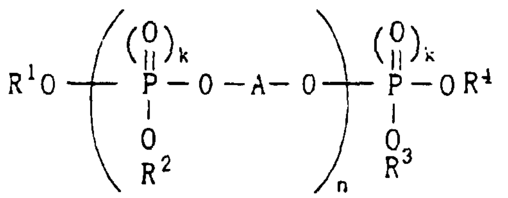

(1a)

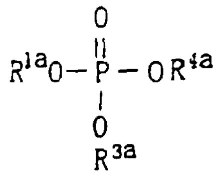

(1b)

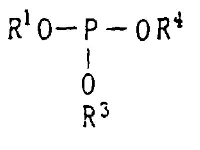

(1c)

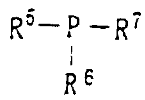

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or heterocyclic group, respectively, A is a divalent hydrocarbon group or heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$,

and $R^7$ in the formula (2) may form a ring containing phosphorus atom by a combination of at least two groups, respectively.], and (iiia) a diester compound of (C) (c1) hydroquinone or lesorcinol wherein benzene ring may be substituted by an alkyl group, or (c2) catechol wherein benzene ring is substituted by an alkyl group with (D) an organic monobasic acid.

**52.** A recording sheet as claimed in claim 51, wherein said multiester compound (i) is a multiester compound of (A11) a substituted cyclohexanol substituted by at least one of an alkyl group and having at least 3 carbons in the alkyl group or (A21) an alcohol having a bridged ring containing at least one of a six-membered saturated carbon ring to which hydroxyl group or hydroxymethyl group is bonded with (B) a polybasic acid.

**53.** A recording sheet as claimed in any one of claims 49-52, wherein the content of said solid plasticizer is 30-1000 parts by weight based on 100 parts by weight of said acrylic-based polymer.

**54.** A recording sheet as claimed in any one of claims 49-53, wherein said ink-absorbing layer further contains a tackifier.

**55.** A method for the preparation of a recording sheet wherein an ink-absorbing layer composed of an acrylic-based polymer containing 5-50% by mol of a hydrophilic monomer which is a constructing monomer and a solid plasticizer is formed over at least one surface of a base material.

**56.** A method for the preparation of a recording sheet as claimed in claim 55, which comprises forming an ink-absorbing layer by coating a water-based composition in which an acrylic-based polymer is dispersed in water over at least one surface of a base material.

**57.** A recording sheet wherein an ink-absorbing layer is formed over at least one surface of a base material and a delayed-tack layer composed of a thermoplastic resin, a solid plasticizer, and a tackifier is formed over another surface of a base material, said solid plasticizer is at least one compound selected from the group of three kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

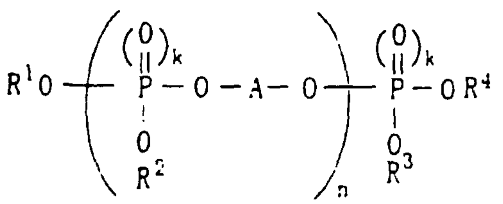

(1a)

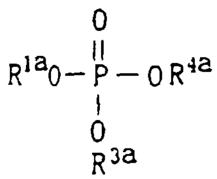

(1b)

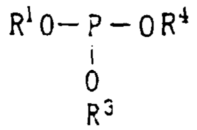

(1c)

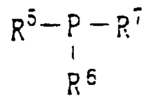

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or heterocyclic group, respectively, A is a divalent hydrocarbon group or heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by a combination of at least two groups, respectively.], and (iiia) a diester compound of (C) (c1) hydroquinone or lesorcinol in which benzene ring may be substituted by an alkyl group or (c2) catechol in which benzene ring may be substituted by an alkyl group with (D) an organic monobasic acid.

**58.** A recording sheet as claimed in claim 57, wherein said multiester compound (i) is a multiester compound of (A11) a substituted cyclohexanol substituted by at least one of an alkyl group and having at least 3 carbons in the alkyl group or (A21) an alcohol having a bridged ring containing at least one of a six-membered saturated carbon ring to which hydroxyl group or hydroxymethyl group is bonded with (B) a polybasic acid.

**59.** A recording sheet as claimed in claim 57 or 58, wherein the content of said solid plasticizer is 30-1000 parts by weight based on 100 parts by weight of said thermoplastic resin.

**60.** A recording sheet as claimed in any one of claims 57-59, wherein said ink-absorbing layer is constructed by a cationic monomer having a crosslinkable group and a hydrophilic polymer.

**61.** A recording sheet as claimed in any one of claims 57-59, wherein a most outside layer in said ink-absorbing layer is formed by a porous layer.

**62.** A shrink label, over which a delayed-tack layer composed of a thermoplastic resin, a solid plasticizer, and a tackifier is formed, wherein said solid plasticizer is constructed by the combination of at least two compound groups selected from the group of four kinds of compounds (i) a multiester compound of (A) (A1) an alcohol having a substituted cyclohexane ring or a substituted cyclohexene ring substituted by at least one of an alkyl group and having at least 3 carbons in the alkyl group, or (A2) an alcohol having a bridged ring containing at least one of a six-membered carbon ring with (B) a polybasic acid, (iia) a phosphorus compound having a melting point of 55-100°C or a phosphorus compound represented by the following formulae (1a), (1b), (1c) or (2)

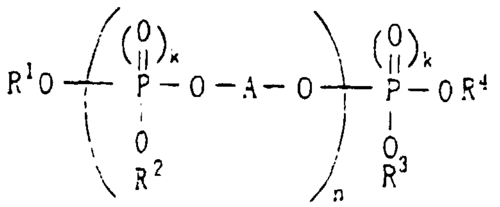

(1a)

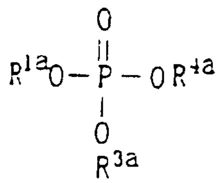

(1b)

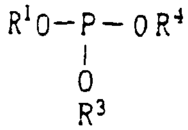

(1c)

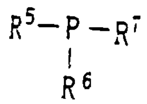

(2)

[in the formulae, $R^1$, $R^2$, $R^3$, $R^4$, $R^{1a}$, $R^{3a}$, $R^{4a}$, $R^5$, $R^6$, and $R^7$ are a hydrocarbon group or heterocyclic group, respectively, A is a divalent hydrocarbon group or heterocyclic group, k is 0 or 1, n is an integer of 1-3, however, $R^{1a}$, $R^{3a}$, and $R^{4a}$ are not simultaneously a phenyl group or 4-t-butylphenyl group, $R^1$, $R^2$, and A in the formula (1a), $R^3$, $R^4$, and A in the formula (1a), $R^{1a}$, $R^{3a}$, and $R^{4a}$ in the formula (1b), $R^1$, $R^3$, and $R^4$ in the formula (1c), $R^5$, $R^6$, and $R^7$ in the formula (2) may form a ring containing phosphorus atom by a combination of at least two groups, respectively.], and (iiia) a diester compound of (C) (c1) hydroquinone or lesorcinol wherein benzene ring may be substituted by an alkyl group, or (c2) catechol wherein benzene ring is substituted by an alkyl group with (D) an organic monobasic acid, and (iv) dicyclohexylphthalate.

**63.** A shrink label as claimed in claim 62, wherein said multiester compound (i) is a multiester compound of (A11) a substituted cyclohexanol substituted by at least one of an alkyl group and having at least 3 carbons in the alkyl

group or (A21) an alcohol having a bridged ring containing at least one of a six-membered saturated carbon ring to which hydroxyl group or hydroxymethyl group is bonded with (B) a polybasic acid.

**64.** A shrink label as claimed in claim 62 or 63, wherein the content of said solid plasticizer in said delayed-tack layer is 30-1000 parts by weight based on 100 parts by weight of said thermoplastic resin.

**65.** A shrink label as claimed in any one of claims 62-64, wherein said delayed-tack layer contains a thermoplastic resin, a solid plasticizer, and a tackifier and, moreover, it is coated by coating a water-based composition in which said thermoplastic resin is dispersed in water.

**66.** A shrink label as claimed in any one of claims 62-65, wherein a printed layer is formed on at least one surface of a shrink film.

**67.** A shrink label as claimed in any one of claims 62-66, wherein a layer is formed between a shrink film and a delayed-tack layer.

**68.** A water-based resin composition obtained by emulsifying while adding water to a resin solution obtained through a solution polymerization of 0.5-50% by weight of (G) a polymerizable unsaturated monomer having a hydrolyzable silyl group, 1-20% by weight of at least one of (H) a polymerizable unsaturated monomer having an ion-formable group, 1-40% by weight of (I) a polymerizable unsaturated monomer having a polydimethylsiloxane structure, and {100-[total amount of (G)+(H)+(I)]}% by weight of (J) other polymerizable unsaturated monomers.

**69.** A water-based resin composition as claimed in claim 68, wherein it is obtained by removing a polymerization solvent after emulsifying.

**70.** A water-based resin composition as claimed in claim 68 or 69, wherein said (I) a polymerizable unsaturated monomer having a polydimethylsiloxane structure is at least one kind selected from a polymerizable unsaturated monomer represented by general formula (11) or general formula (12),

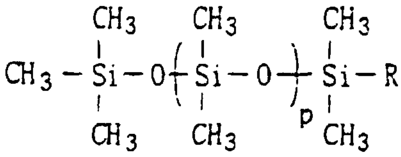

(11)

R: $-CH=CH_2$,

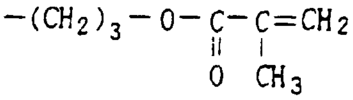

or

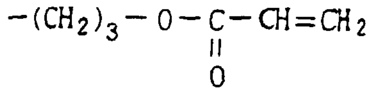

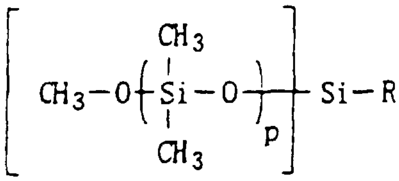

(12)

R: $-CH=CH_2$,

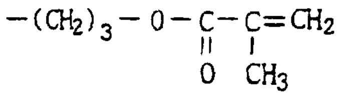

or

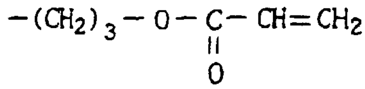

[in the general formula (11) or general formula (12), p represents an integer of 1-15].

**71.** A water-based coating agent wherein a water-based resin composition as claimed in any one of claims 68-70 is employed.

**72.** A water-based coating composition containing (O) a core/shell type water-based emulsion wherein core components are comprised a copolymer of 5-50% by weight of (K) a polymerizable unsaturated monomer represented by general formula (XXXI)

$$CH_2=C\ (R^{31})\ COOR^{32} \qquad \text{(XXXI)}$$

(in the formula, $R^{31}$ is a hydrogen or a methyl group, and $R^{32}$ is a substituted alkyl group having an epoxy group or a epoxy group-equivalent compound) and/or (L) a polyvalent epoxy compound having at least two epoxy groups in the molecule with 95-50% by weight of (M) other polymerizable unsaturated monomers which are copolymerizable with the (K) a polymerizable unsaturated monomer and the (L) a polyvalent epoxy compound and shell components are comprised a copolymer of 2-50% by weight of (N) a polymerizable unsaturated monomer having carboxylic group with 98-50% by weight of (M) other polymerizable unsaturated monomers which are copolymerizable with the (N) a polymerizable unsaturated monomer having carboxylic group, and a water-soluble silicate (P) represented by general formula (XXXII)

$$M_2O\text{-}xSiO_2 \qquad \text{(XXXII)}$$

(in the formula, M represents an alkali metal belonged to No. IA group in the periodic table, and x represents the number of 2.0-7.5) in a mixing proportion ratio of (O):(P)=10:1-1:10 by weight based on the solid content.

**73.** A water-based coating composition as claimed in claim 72, wherein $R^{32}$ in said (K) a polymerizable unsaturated monomer represented by the general formula (XXXI) is selected from the following alkyl group (31), (32), and (33)

containing an epoxy group or a epoxy group-equivalent compound,

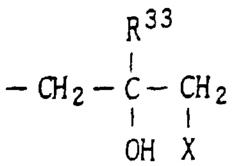

(31)

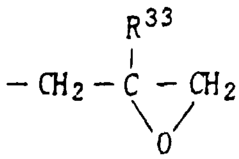

(32)

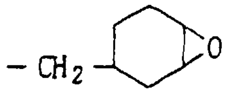

(33)

(in the formulae, $R^{33}$ represents a hydrogen or a methyl group, and X represents a halogen atom).

**74.** A water-based coating composition as claimed in claim 72 or 73, wherein said (L) a polyvalent epoxy compound is a compound selected from a bisphenol A diglycidylether, a bisphenol A di-βmethylglycidylether, a bisphenol F diglycidylether, and a bisphenol F di-βmethylglycidylether.

**75.** A water-based coating composition as claimed in any one of claims 72-75, wherein said (M) other polymerizable unsaturated monomers include at least one monomer selected from a (meth)acrylic ester, styrene or a styrene derivative, (meth)acrylonitrile, a vinyl monomer having amide bond, a vinyl monomer having hydroxyl group, and a vinyl monomer having silyl group.

**76.** A water-based coating composition as claimed in any one of claims 72-75, wherein said (O) a core/shell type water-based emulsion is a core/shell type water-based emulsion prepared by an emulsion polymerization with a radical polymerization initiator through emulsifying respective monomers for said copolymer to be constructed for into water using said shell components as a high molecular weight dispersant after polymerization of a copolymer to be constructed for said shell components

**77.** A water-based coating composition as claimed in any one of claims 72-76, wherein a core/shell weight ratio in said (O) a core/shell type water-based emulsion is core:shell=9:1-1:9.

**78.** A water-based coating composition as claimed in any one of claims 72-77, wherein Tg is -40 to 100°C in said copolymer to be constructed for said core components, and Tg is -40 to 100°C in said copolymer to be constructed for said shell components in said (O) a core/shell type water-based emulsion.

## INTERNATIONAL SEARCH REPORT

International application No.
PCT/JP99/01613

**A. CLASSIFICATION OF SUBJECT MATTER**
Int.Cl[6] C08L101/00, C08L57/06, C08K5/49, C08K5/10, C08K3/36, C09J201/00, C09J7/02, B41M1/30, B41M5/00, C08F246/00, C08F230/08,

According to International Patent Classification (IPC) or to both national classification and IPC

**B. FIELDS SEARCHED**

Minimum documentation searched (classification system followed by classification symbols)
Int.Cl[6] C08L1/00-101/10, C08K3/00-13/08, C09J1/00-201/10, B41M1/30, B41M5/00, C08F2/00-299/08

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 5-1079, A (Daihachi Chemical Industy Co.Ltd.), 8 January, 1993 (08. 01. 93), Claims ; page 5, Par. No. [0034] ; page 8 ; Table 2 & EP, 509506, B1 & DE, 69220532, A1 | 1 |
| X | JP, 7-304959, A (Toray Industries,Inc.), 21 November, 1995 (21. 11. 95), Claims & EP, 672717, A1 | 1 |
| X, Y | JP, 7-145352, A (The Nippon Synthetic Chemical Industry Co., Ltd.), 6 June, 1995 (06. 06. 95), Claims ; page 2, Par. No. [0011] ; page 4 ; Table 1 (Family: none) | 10-14, 16, 29-48 |
| X, Y | JP, 7-292344, A (Toyo Ink Manufacturing Co., Ltd.), 7 November, 1995 (07. 11. 95), Claims (Family: none) | 10-14, 16, 29-48 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 June, 1999 (23. 06. 99) | 6 July, 1999 (06. 07. 99) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP99/01613

A. (Continuation) CLASSIFICATION OF SUBJECT MATTER

C08F265/00, C08F291/10

Form PCT/ISA/210 (extra sheet) (July 1992)

**INTERNATIONAL SEARCH REPORT**

International application No.
PCT/JP99/01613

C (Continuation). DOCUMENTS CONSIDERED TO BE RELEVANT

| Category* | Citation of document, with indication, where appropriate, of the relevant passages | Relevant to claim No. |
|---|---|---|
| X, Y | JP, 8-20668, A (Dainippon Ink & Chemicals,Inc.), 23 January, 1996 (23. 01. 96), Claims (Family: none) | 10-14, 16, 29-48 |
| X, Y | JP, 8-60128, A (Toyo Ink Manufacturing Co., Ltd.), 5 March, 1996 (05. 03. 96), Claims (Family: none) | 10-14, 16, 17-22 |
| EX | JP, 10-268779, A (Mitsubishi Paper Mills Ltd.), 9 October, 1998 (09. 10. 98), Claims (Family: none) | 10-14, 16, 29-48 |
| EX | JP, 10-140117, A (Mitsubishi Paper Mills Ltd.), 26 May, 1998 (26. 05. 98), Claims (Family: none) | 10-14, 16, 29-48 |
| EA | JP, 10-101765, A (Nippon Gravure Kogyo K.K.), 21 April, 1998 (21. 04. 98), Claims (Family: none) | 68-69 |

Form PCT/ISA/210 (continuation of second sheet) (July 1992)

**INTERNATIONAL SEARCH REPORT**

International application No.
PCT/JP99/01613

**Box I Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

The subject matters of claims 68-71 and 72-78 and those of claims 1-67 do not have a main part common to both, and do not comply with the other requirements of unity of invention.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

Form PCT/ISA/210 (continuation of first sheet (1)) (July 1992)